# EUROPEAN PATENT APPLICATION

(11) **EP 4 382 586 A1**
(43) Date of publication of application: **12.06.2024**
(21) Application number: 23213858.6
(22) Date of filing: 04.12.2023
(51) Int. Cl.: C09K 19/30, C09K 19/06, C09K 19/34, C09K 19/12, C09K 19/04

(54) **LIQUID-CRYSTALLINE MEDIUM**

(30) Priority: 07.12.2022 EP 22212032
(71) Applicant: Merck Patent GmbH, 64293 Darmstadt (DE)
(72) Inventor: Han, Yeon-Jeong, 17956 PYEONGTAEK (KR); Kim, Dong-Hyun, 17956 PYEONGTAEK (KR); Park, Sang-Hyun, 17956 PYEONGTAEK (KR); Park, Sun-Mi, 17956 PYEONGTAEK (KR); Jin, Heui-Seok, 17956 PYEONGTAEK (KR)
(74) Representative: Merck Patent Association

(57) **Abstract**

The present invention relates to liquid-crystalline (LC) media having positive dielectric anisotropy and to liquid-crystal displays (LCDs) containing these media, especially to displays addressed by an active matrix and in particular to energy saving LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type. The media have an improved long-term stability against UV radiation and elevated temperatures.

## Description

The present invention relates to liquid-crystalline (LC) media having positive dielectric anisotropy and to liquid-crystal displays (LCDs) containing these media, especially to displays addressed by an active matrix and, in particular, to energy saving LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type.

LCDs are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which generated substantially perpendicular to the substrates and the LC layer.

Besides these modes, there are also electro-optical modes that utilise an electric field which is substantially parallel to the substrates or the LC layer. For example, WO 91/10936 discloses a LC display in which the electric signals are generated in such a way that the electric fields have a significant component parallel to the LC layer, and which has since then become known as in-plane switching IPS) display. The principles of operating such a display are described, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, *inter alia* S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern to energy saving desktop monitors, TV sets and multimedia applications. The LC media according to the present invention are preferably used in displays of this type. In general, dielectrically positive LC media having rather lower values of the dielectric anisotropy are used in FFS displays, but in some cases LC media having a dielectric anisotropy of only about 3 or even less are also used in IPS displays.

A further improvement has been achieved by the HB-FFS mode. One of the unique features of the HB-FFS mode in contrast to the traditional FFS technology is that it enables higher transmittance which allows operation of the panel with less energy consumption.

Another recently developed mode is the XB-FFS mode, wherein the LC medium additionally contains a polar liquid crystal compound with low dielectric anisotropy.

Liquid-crystal compositions which are suitable for LCDs and especially for FFS and IPS displays are known in prior art, for example, from JP 07-181 439 (A), EP 0 667 555, EP 0 673 986, DE 195 09 410, DE 195 28 106 and DE 195 28 107. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further LC media and the use thereof in a display having high transmission, a good black state and a high contrast ratio is a central challenge for modern FFS and IPS applications. In addition, modern applications also require good low-temperature stability and fast addressing times.

Matrix liquid crystal display (MFK) displays with full array LED backlighting, which have become increasingly common in recent years, include a large number of light-emitting diodes (LEDs) arranged directly behind the layer with the FK medium. Modern high-performance InGaN LEDs sometimes reach operating temperatures of more than 70 °C and, depending on the design, can also emit UV radiation. Direct contact between the LEDs and the FRP medium therefore places special demands on the UV stability and temperature resistance of the FRP medium. State-of-the-art MFK displays often do not meet today's requirements.

Recently, MFK displays have been increasingly used in outdoor applications such as PIDs (Public Information Displays) for displaying various types of information at train stations, roads, airports, hotels and shopping malls. Compared to conventional MFK displays, such as those used in TV applications, PIDs should have much higher long-term resistance to solar UV radiation and elevated temperatures, as well as a wider operating temperature range.

The present invention has the object of providing LC media, in particular for FFS and IPS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, an excellent long term stability against UV radiation and increased operating temperatures and enable high brightness.

Until now, it was not possible to design suitable LC media having a sufficient longtern stability against increased temperatures and solar UV radiation as well as a high contrast ratio e.g. high elastic constant Kₐᵥ , low temperature stability and low response times.

The invention has the object of providing suitable LC media, in particular for FFS and IPS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness. Additionally, the media need to have an improved long-term stability against UV radiation and elevated temperatures.

This was achieved by providing LC media as described and claimed hereinafter.

US 2021/189241 A1 describes a LC medium, which comprises compounds of the Formulae T and L

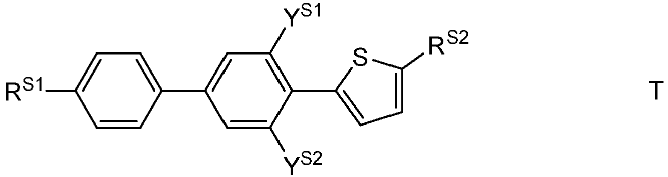

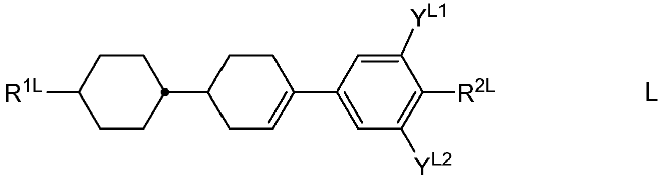

However, for many outdoor applications in LC displays, the known LC media comprising compounds such as those of the Formulae T and L are not sufficiently stable. In particular, a long-term exposure to UV solar radiation, but also even irradiation with the usual backlighting, may result in an impairment, in particular of the electrical properties. Thus, for example, the conductivity of the LC medium increases significantly.

WO 2020/245081 A1 discloses examples of LC media comprising 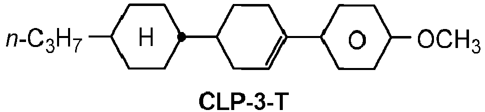 and a combination of a hindered amine type stabilizer (HALS) and a hindered phenol type antioxidant. The LC media described in WO 2020/245081 A1 have a relatively good long term UV and thermal stability. Nevertheless, a further stability improvement of the media of WO 2020/245081 A1 would enable their use in even a broader variety of outdoor applications.

Furthermore, in case of FFS displays there is a need for further optimization of response time, contrast, brightness and reliability, in particular of the voltage holding ratio (VHR) and reduction of flickering. However, it was found that the LC materials of the prior art do often not achieve all these requirements at the same time.

It has now been surprisingly found that LC media according to the present invention which contain a combination of compounds of the Formula LP1 and/or LP2 and two or more compounds of the Formula ST 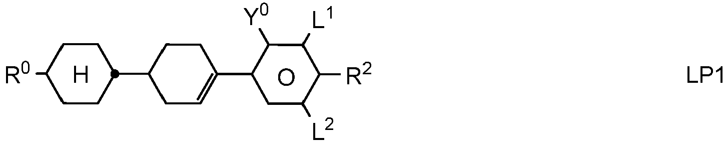 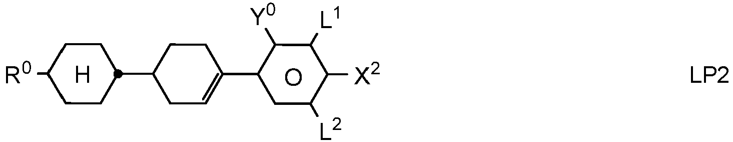 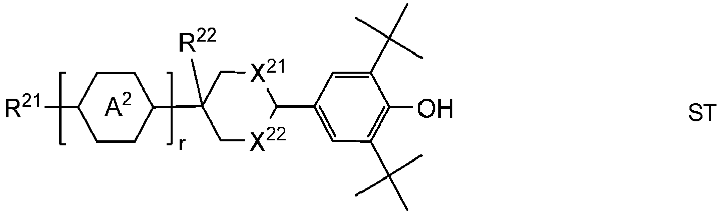 in which the individual radicals are specified in Claim 1,
show several improvements, especially when being used in FFS mode displays, like an excellent long term stability against increased temperatures and UV radiation, good solubility, improved reliability, in particular, VHR, reduced flickering and enable fast response times.

Additionally, the LC media according to the present invention have high clearing points, an excellent low temperature stability (LTS) and provide a best motion picture quality and an improved overall image quality, in particular a high contrast.

### Compounds of the Formulae LP1 and LP2

The present invention relates to a LC medium, characterised in that it comprises one or more compounds selected from Formula LP1 and LP2, 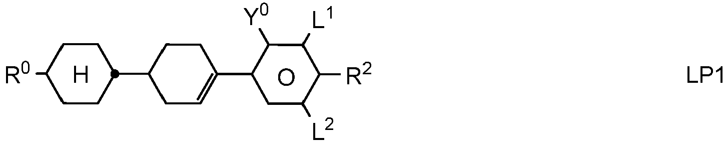 in which the individual radicals, on each occurrence identically or differently, and each, independently of one another, have the following meaning:
- R⁰: an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 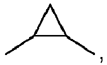 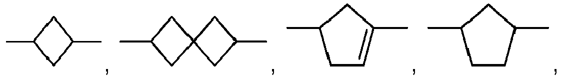 -O-, -CO-O- or -O-CO- in such a way that O atoms are not linked directly to one another, and in which one or more H atoms may be replaced by a halogen atom,
- R²: an alkyl group having 1 to 6 C atoms, or an alkenyl group having 2 to 6 C atoms, in which one or more CH₂ groups are optionally substituted by -C≡C-, -CF₂O-, -OCF₂-, -CH=CH-, 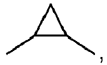 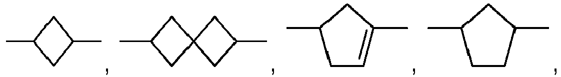 -O-, -CO-O- or -O-CO- in such a way that O atoms are not linked directly to one another, and in which one or more H atoms may be replaced by a halogen atom,
- L¹ and L²: H, F or Cl,
- Y⁰: H or CH₃ ; 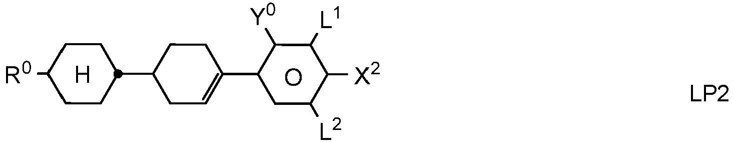 in which the individual radicals, on each occurrence identically or differently, and each, independently of one another, have the following meaning:
- R⁰: an alkyl group having 1 to 12 C atoms or an alkenyl group having 2 to12 C atoms in which one or more CH₂ groups are optionally substituted by -C≡C-, -CF₂O-, -OCF₂-, -CH=CH-, 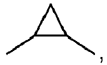 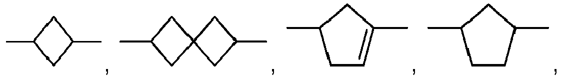 -O-, -CO-O- or -O-CO- in such a way that O atoms are not linked directly to one another, and in which one or more H atoms may be replaced by a halogen atom,
- L¹ and L²: H, F or Cl,
- X²: a F atom or an alkyl or an alkoxy group having 1 to 6 C atoms or an alkenyl or an alkenyloxy group having 2 to 6 C atoms in which one or more H atoms are replaced by a F atom, preferably F, CF₃ or OCF₃ , and
- Y⁰: H or CH₃.

The LC media according to the present invention are especially suitable for use in LC displays of the FFS, HB-FFS, XB-FFS and IPS mode based on dielectrically positive liquid crystals, and polymer stabilised variants thereof.

The invention further relates to the use of a LC medium as described above and below for electro-optical purposes, in particular for the use in LC displays, shutter glasses, LC windows, 3D applications, preferably in TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA and positive PS-VA displays, very preferably in FFS, HB-FFS, IPS, PS-HB-FFS and PS-IPS displays.

The invention further relates to an electro-optical LC display containing a LC medium as described above and below, in particular a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FFS, polymer stabilised SA-HB-FFS, polymer stabilised SA-XB-FFS, positive VA or positive PS-VA display, preferably a FFS, HB-FFS, IPS, PS-HB-FFS or PS-IPS display.

In the present application, all atoms also include their isotopes. In some embodiments one or more hydrogen atoms (H) may be optionally substituted by deuterium (D); a high degree of deuteration enables or simplifies analytical determination of compounds, in particular in the case of low concentrations.

In the Formulae LP1, LP2 and ST R⁰, R², R²¹ and R²² preferably denote an alkyl radical and/or an alkoxy radical, this may be straight-chain or branched. It is preferably straight-chain, has 2, 3, 4, 5, or 6 C atoms and accordingly preferably denotes ethyl, propyl, butyl, pentyl, hexyl, ethoxy, propoxy, butoxy, pentoxy, or hexyloxy, furthermore methyl, methoxy. R⁰ preferably denotes straight-chain alkyl having 1 to 6 C atoms or an alkoxy radical having 1 to 6 C atoms.

Oxaalkyl preferably denotes straight-chain 2-oxapropyl (= methoxymethyl), 2-(= ethoxymethyl) or 3-oxabutyl (= 2-methoxyethyl), 2-, 3- or 4-oxapentyl, 2-, 3-, 4- or 5-oxahexyl.

If R⁰, R², R²¹ and R²² denotes an alkoxy or oxaalkyl group it may also contain one or more additional oxygen atoms, provided that oxygen atoms are not linked directly to one another.

In another preferred embodiment, one or more of R⁰, R², R²¹ and R²² are selected from the group consisting of 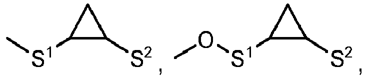 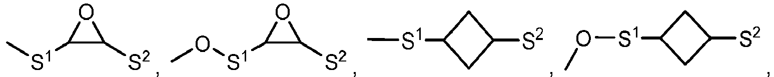 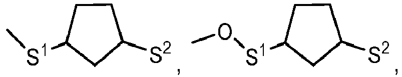 -S¹-F, -O-S¹-F, -O-S₁-O-S₂, wherein S¹ is C₁₋₁₂-alkylene or C₂₋₁₂-alkenylene and S² is H, C₁₋₁₂-alkyl or C₂₋₁₂-alkenyl, and very preferably one or more of R⁰ and R² are selected from the group consisting of 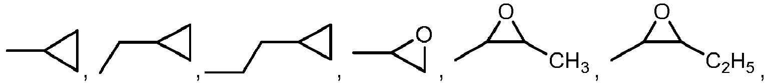 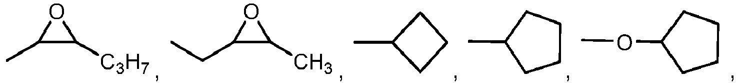 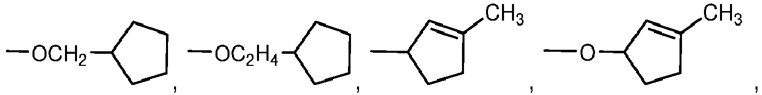 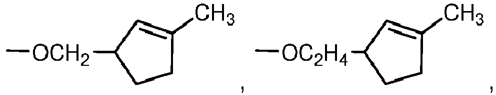 -OCH₂OCH₃, -O(CH₂)₂OCH₃, -O(CH₂)₃OCH₃, -O(CH₂)₄OCH₃, -O(CH₂)₂F, -O(CH₂)₃F, -O(CH₂)₄F.

If R⁰, R², R²¹ and R²² denotes an alkenyl radical, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1- , -2-, -3-, -4-, -5-, -6-, -7-, -8- or -9-enyl.

If R⁰, R², R²¹ and R²² denotes an alkyl or alkenyl radical which is at least monosubstituted by halogen, this radical is preferably straight-chain, and halogen is preferably F or CI. In the case of polysubstitution, halogen is preferably F. The resultant radicals also include perfluorinated radicals. In the case of monosubstitution, the fluorine or chlorine substituent may be in any desired position, but is preferably in the ω-position.

In the Formula LP2, X² is preferably F or a mono- or polyfluorinated alkyl or alkoxy radical having 1, 2 or 3 C atoms or a mono- or polyfluorinated alkenyl radical having 2 or 3 C atoms. X² is particularly preferably F, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCH=CF₂ or CH=CF₂, very particularly preferably F or OCF₃, furthermore CF₃, OCF=CF₂, OCHF₂ or OCH=CF₂.

In a particularly preferred embodiment, the compounds of general Formulae LP1 and LP2 can be represented by one of the following: 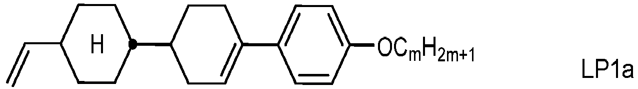 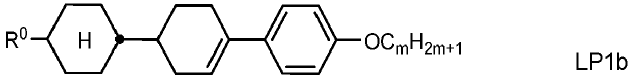 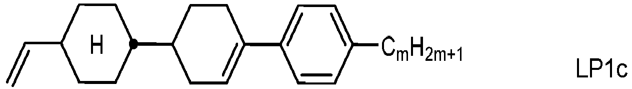 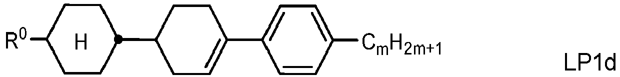 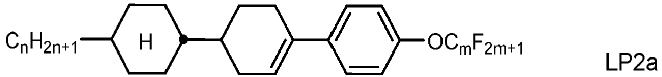 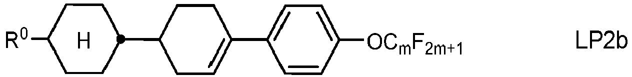 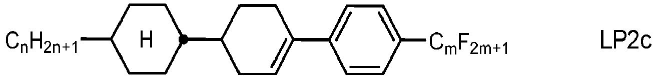 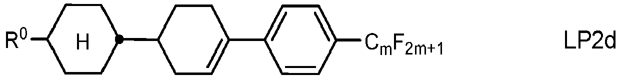 in which
- R⁰: is an alkyl group having 1 to 12 C atoms in which one or more CH₂ groups are optionally substituted by -C≡C-, -CF₂O-, -OCF₂-, 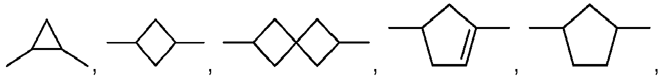 -O-, -CO-O- or -O-CO- in such a way that O atoms are not linked directly to one another, and in which one or more H atoms may be replaced by a halogen atom, preferably an alkyl group having 1 to 4 C atoms, alkenyl or an alkenyloxy group having 2 to 6 C atoms or a cycloalkyl or a cycloalkyloxy group having 3 to 6 C atoms, wherein vinyl, allyl or cyclopentyl are particularly preferable,

- n: denotes 1, 2, 3, 4 or 5, and
- m: denotes 1, 2, 3 or 4.

In a further embodiment, the one or more compounds of the Formulae LP1 and LP2 are described by the Formulae LP1-1 and LP2-1: 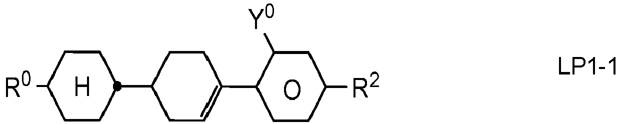 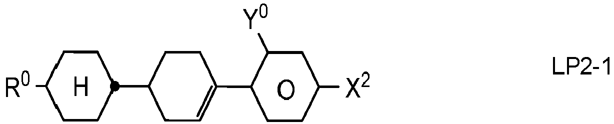 in which
- R⁰: an alkyl group having 1 to 6 C atoms or an alkenyl group having 2 to 6 C atoms in which one or more CH₂ groups are optionally substituted by -C≡C-, -CF₂O-, -OCF₂-, -CH=CH-, 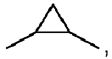 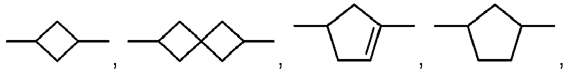 -O-, -CO-O- or -O-CO- in such a way that O atoms are not linked directly to one another, and in which one or more H atoms may be replaced by a halogen atom,
- R²: an alkyl group having 1 to 6 C atoms, in which one or more CH₂ groups are optionally substituted by -C≡C-, -CF₂O-, -OCF₂-, -CH=CH-, 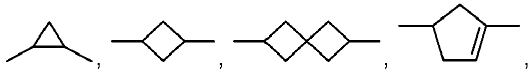 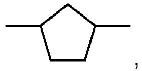 -O-, -CO-O- or -O-CO- in such a way that O atoms are not linked directly to one another, and in which one or more H atoms may be replaced by a halogen atom,

- X²: a F atom or an alkyl or an alkoxy group having 1 to 3 C atoms or an alkenyl or an alkenyloxy group having 2 or 3 C atoms in which one or more H atoms are replaced by a F atom, and
- Y⁰: H or CH₃.

Very preferred compounds of the Formula LP1 are those selected from the group consisting of the following subformulae: 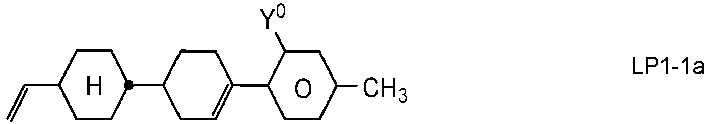 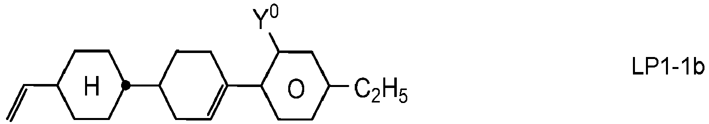 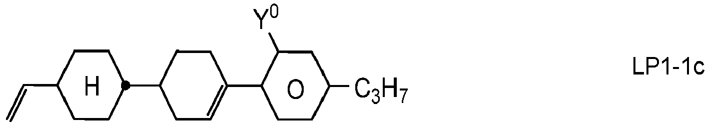 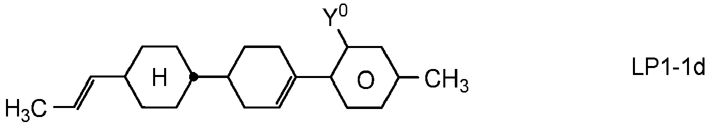 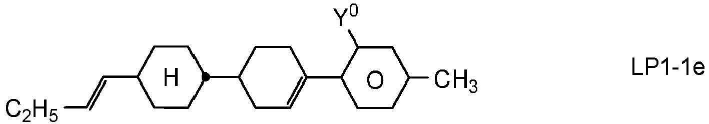 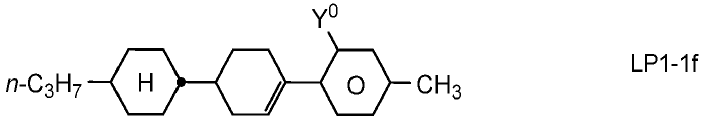 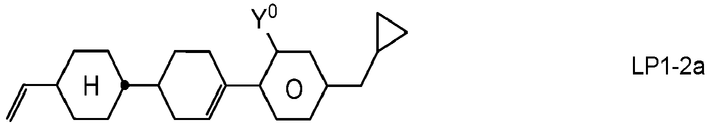 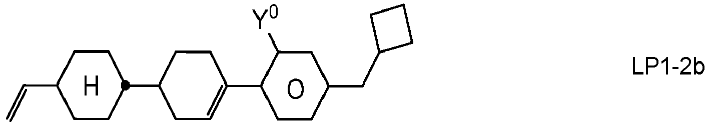 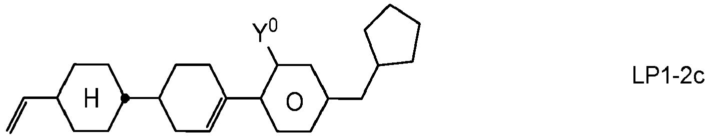 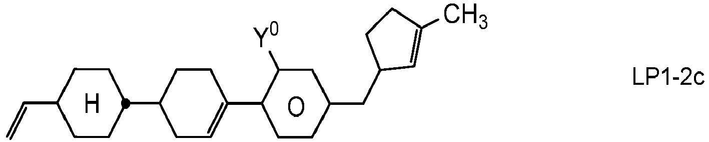 wherein Y⁰ is H or CH₃, preferably H.

Very preferred are the compounds of the Formulae LP1-1a, LP1-1b and LP1-1c, most preferred is the compound Formula LP1-1a.

Particularly preferred compounds of the Formula LP2 are those selected from the group consisting of the following subformulae: 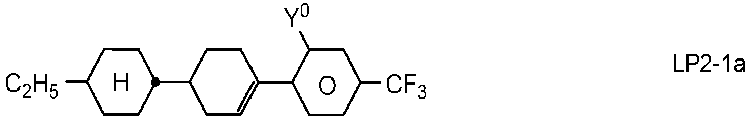 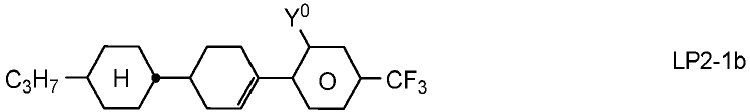 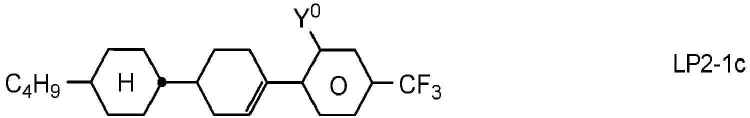 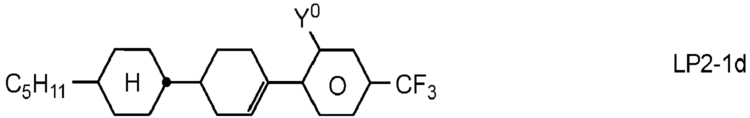 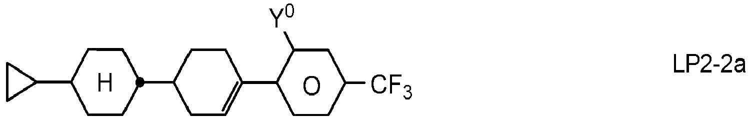 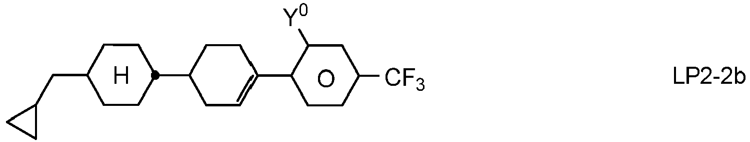 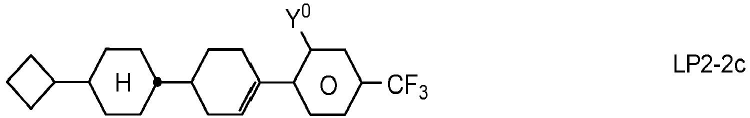 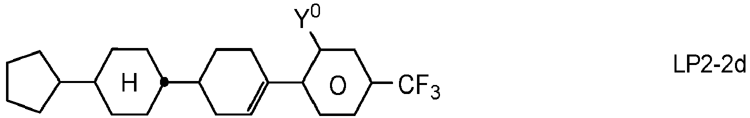 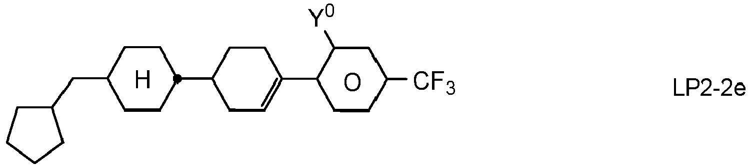 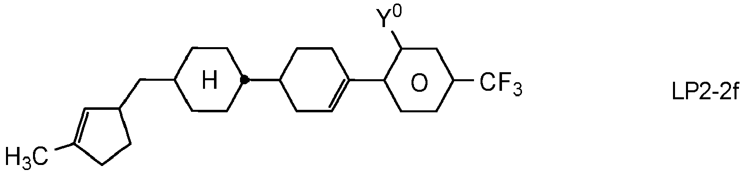 wherein Y⁰ is H or CH₃, preferably H.

Very preferred are the compounds of the Formulae LP2-1a, LP2-1a, LP2-1c, and LP2-1d, most preferred is the compound Formula LP2-1b.

The proportion of the compounds of the Formula LP1 or LP2 or its subformulae in the LC medium is preferably from 2 to 35%, very preferably from 3 to 30%, most preferably from 4 to 20% by weight.

Preferably, the LC medium contains 1, 2 or 3 compounds of the Formulae LP1 or LP2 or their subformulae.

### Compounds of the Formula ST

In addition to compounds of the Formulae LP1 and /or LP2, the LC medium of the present invention comprises two or more compounds of general Formula ST: 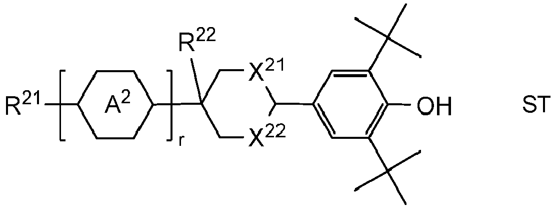 in which the individual substituents A², R²¹, R²², X²¹, X²² and r are specified in Claim 1.

In the compounds of the Formula ST and its subformulae R²¹ and R²² preferably denote straight-chain alkyl or alkoxy having 1 to 6 C atoms, very preferably methyl, ethyl or propyl, most preferably n-propyl. Preferred compounds of the Formula ST are those wherein X²¹ and X²² denote -O-, or -CH₂-.

LC media comprising compounds of the following sub-formulae ST-1, ST-2 and ST-3 show a particularly high long-term thermal and UV stability:

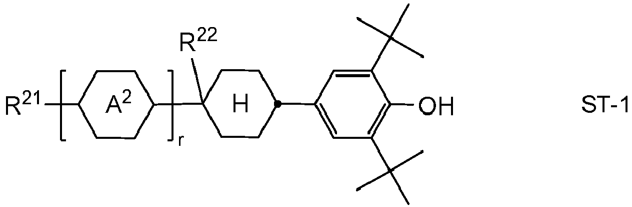

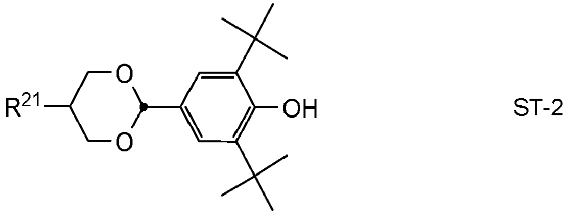

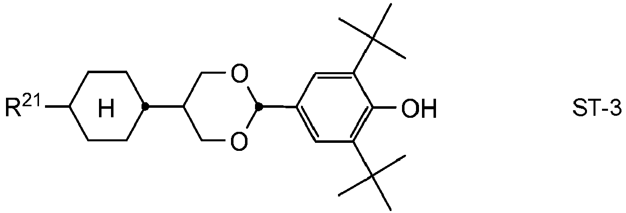

in which the individual substituents have the following meanings: 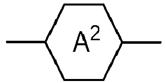 denotes 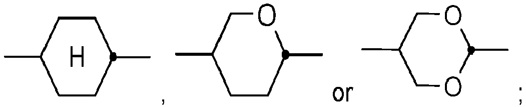
- R²¹ and R²²: each, independently of one another, denote a H atom or an alkyl or alkoxy group having 1 to 7 C atoms, and
- r: denotes 0 or 1.

In particularly preferred embodiments, the compounds of general Formula ST can be selected from the following specific structures:

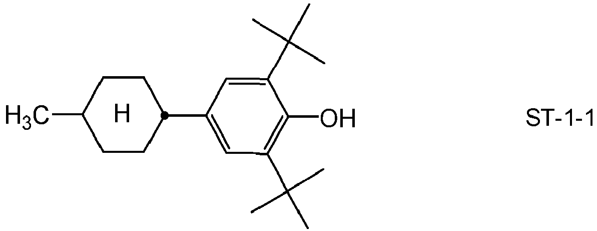

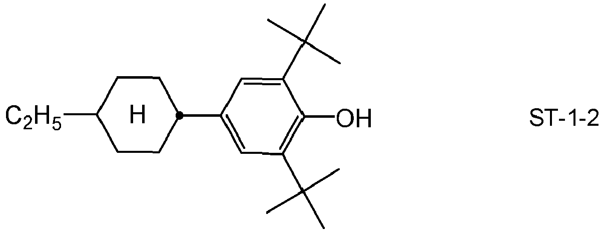

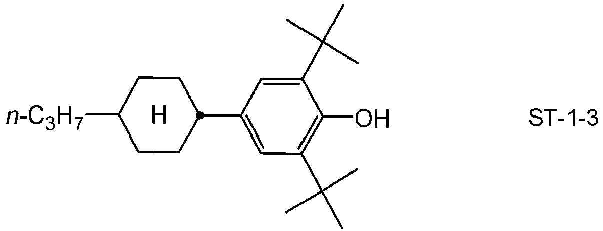

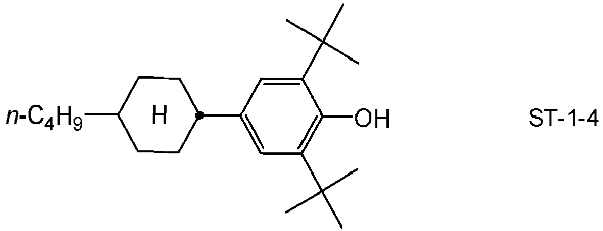

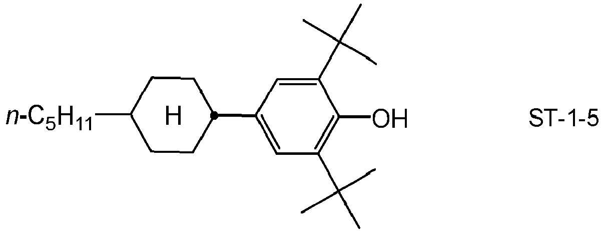

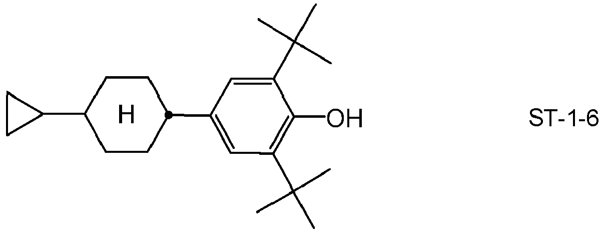

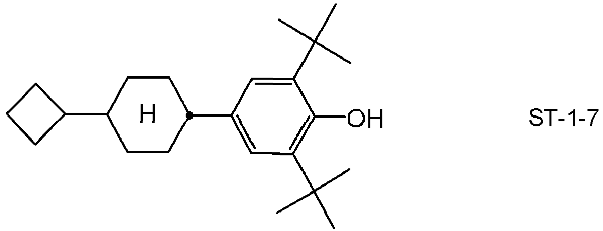

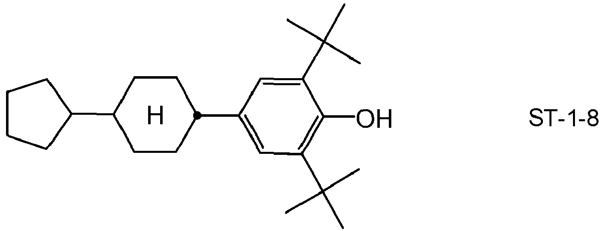

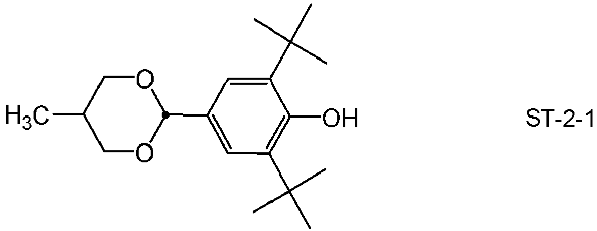

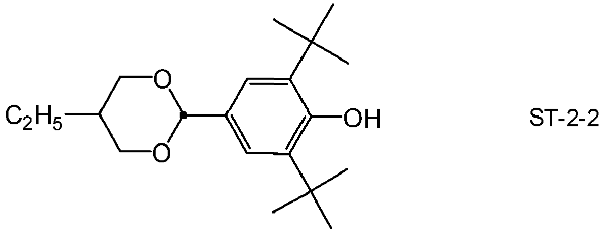

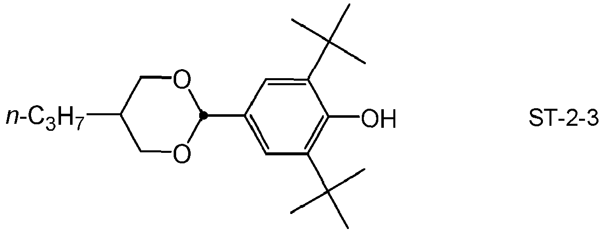

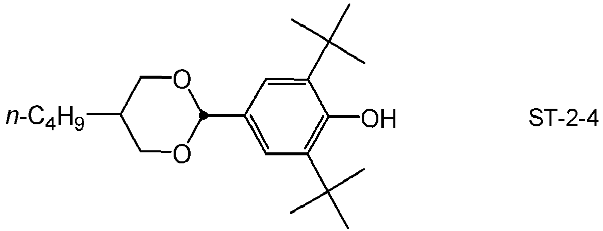

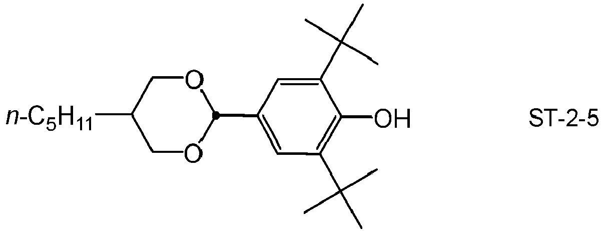

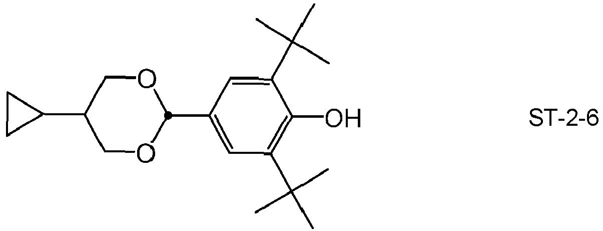

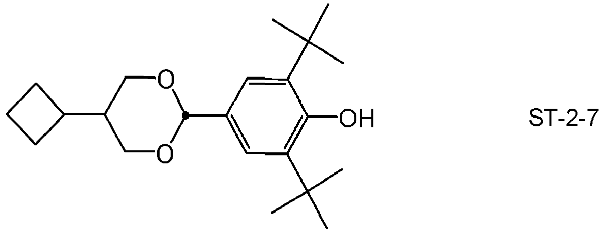

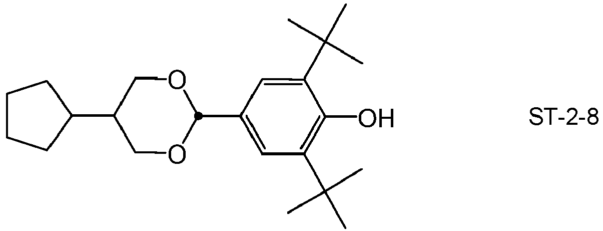

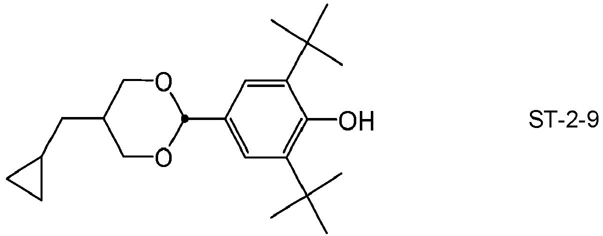

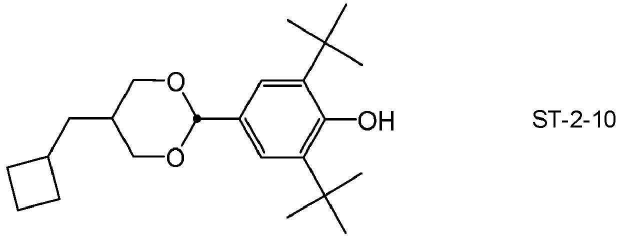

In a further preferred embodiment, the LC medium according to the present invention may comprise at least one further sterically hindered phenol, which is mentioned in Table B below.

### Compounds of the Formula H

In addition to compounds of the Formulae LP1 and/or LP2 and ST as defined above the LC medium may optionally comprise one or more compounds of the Formula H 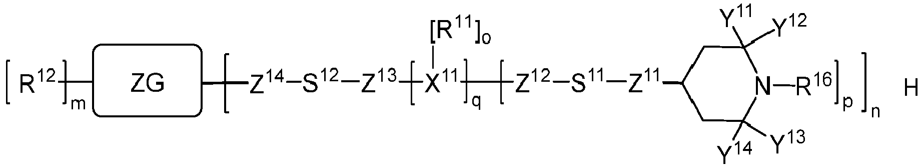 in which
- R¹¹: each, independently of one another, denotes a H atom, F, an alkyl group having 1 to 20 C atoms, in which one -CH₂- group or, if present, a plurality of -CH₂- groups may be replaced by -O- or -C(=O)-, but two adjacent -CH₂- groups cannot be replaced by -O-, and one or, if present, a plurality of -CH₂- groups may be replaced by-CH=CH- or -C=C-, and in which one H atom or a plurality of H atoms may be replaced by F, OR¹³, N(R¹³)(R¹⁴) or R¹⁵,
- R¹²: each, independently of one another, denotes a H atom, an alkyl group having 1 to 20 C atoms, in which one -CH₂- group or a plurality of -CH₂- groups may be replaced by -O- or -C(=O)-, but two adjacent -CH₂- groups cannot be replaced by -O-, a hydrocarbon radical which contains a cycloalkyl or alkylcycloalkyl unit and in which one -CH₂- group or a plurality of -CH₂- groups may be replaced by -O- or -C(=O)-, but two adjacent -CH₂- groups cannot be replaced by -O-, and in which one H atom or a plurality of H atoms may be replaced by F, OR¹³, N(R¹³)(R¹⁴) or R¹⁵, or an aromatic or heteroaromatic hydrocarbon radical, in which one H atom or a plurality of H atoms may be replaced by OR¹³, N(R¹³)(R¹⁴) or R¹⁵,
- R¹³ and R¹⁴: each, independently of one another, denotes an alkyl or acyl group having 1 to 10 C atoms or an aromatic hydrocarbon or carboxylic acid radical having 6 to 12 C atoms,
- R¹⁵: each, independently of one another, denotes an alkyl group having 1 to 10 C atoms, in which one -CH₂- group or a plurality of -CH₂-groups may be replaced by -O- or -C(=O)-, but two adjacent -CH₂-groups cannot be replaced by -O-,
- R¹⁶: each, independently of one another a H atom, an alkyl group or an alkoxy group having 1 to 10 C atoms, O-cycloalkyl group having 3 to 12 C atoms, O' or OH,
- S¹¹ and S¹²: each, independently of one another, denote an alkylene group having 1 to 20 C atoms, in which one -CH₂- group or, if present, a plurality of -CH₂- groups may be replaced by -O- or -C(=O)-, but two adjacent -CH₂- groups cannot be replaced by -O-, and in which one H atom or a plurality of H atoms may be replaced by F, OR¹³, N(R¹³)(R¹⁴) or R¹⁵, or denote a single bond,
- Y¹¹ to Y¹⁴: each, independently of one another, denote methyl or ethyl,
- X¹¹: denotes C,
- Z¹¹ to Z¹⁴: each, independently of one another, denote -O-, -(C=O)-, -O-(C=O)-, -(C=O)-O-, -O-(C=O)-O-, -(N-R¹³)-, -N-R¹³-(C=O)- or a single bond if S¹¹ is a single bond, both Z¹¹ and Z¹² do not simultaneously denote -O-; if S¹² is a single bond, both Z¹³ and Z¹⁴ do not simultaneously denote -O-; and, if q denotes 0, both Z¹² and Z¹³ do not simultaneously denote -O-,
- p: denotes 1 or 2,
- q: denotes 0 or 1,
- o: denotes (3-p),
- n: denotes an integer from 1 to 10,
- m: denotes an integer from 0 to 8, wherein
- n _{*} p: denotes an integer from 1 to 10, preferably from 3 to 8, and 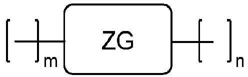
denotes an organic moiety having (m+n) bonding sites.

In some preferred embodiments of the present invention, in the compounds of the Formula H, 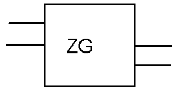 denotes 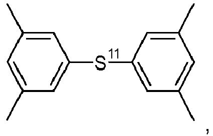 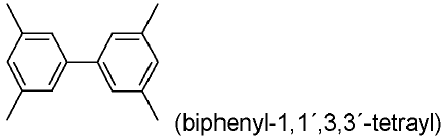 or 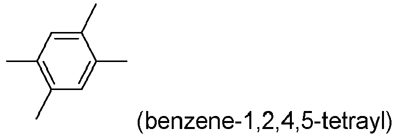 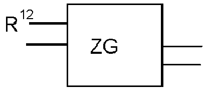 denotes 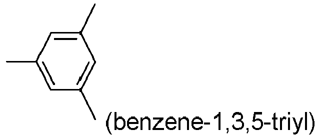 or 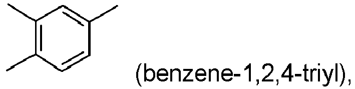 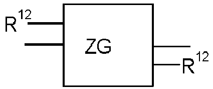 denotes -(CH₂-)₂, -(CH₂-)₃, -(CH₂-)₄, -(CH₂-)₅, -(CH₂-)₆, -(CH₂-)₇, -(CH₂-)₈, *i.e.* ethane-1,2-diyl, propane-1,3-diyl, butane-1,4-diyl, pentane-1,5-diyl, hexane-1,6-diyl, heptane-1,7-diyl, octane-1,8-diyl, 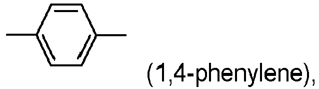 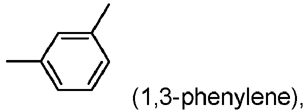 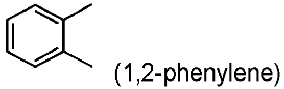 or 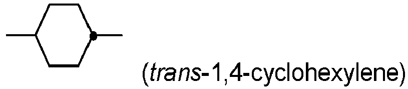 and/or wherein
- -Z¹²-S¹¹-Z¹¹-: on each occurrence, independently of one another, denotes -O-, S¹¹-O-, -O-S¹¹-O-, -(C=O)-O-S¹¹-O-, -O-(C=O)-S¹¹-O-, -O-(C=O)-S¹¹-( C=O)-O-, -O-S¹¹-(C=O)-O-, -(C=O)-O-S¹¹-C, -(C=O)-O-S¹¹-O-(C=O)- or -(N-R¹³)-S¹¹-O-, -(N-R¹³-C(=O)-S¹¹-(C=O)-O or a single bond, preferably -O-, -S¹¹-O-, -O-S¹¹-O-, -(C=O)-O-S¹¹-O-, -O-(C=O)-S¹¹-O- or -O-S¹¹-(C=O)-O-, and/or
- S¹¹: denotes an alkylene group having 1 to 20 C atoms, and/or
- R¹¹: if present, denotes alkyl, alkoxy or H, preferably H or alkyl, and/or
- R¹²: denotes H, methyl, ethyl, propyl, isopropyl or 3-heptyl, or cyclohexyl.

In a preferred embodiment of the present application, in the compounds of the Formula H, 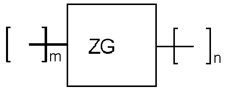 denotes a group selected from the group of the formulae

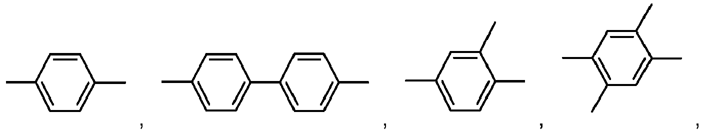

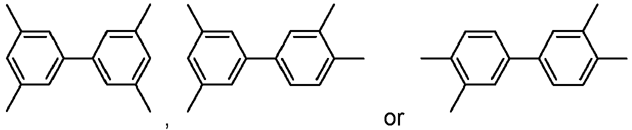

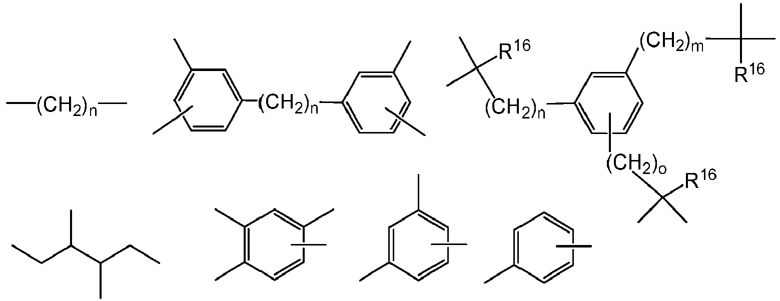

In a further preferred embodiment of the present application, in the compounds of the Formula H, 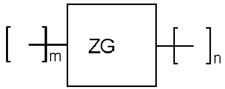 denotes a group selected from the group of the formulae 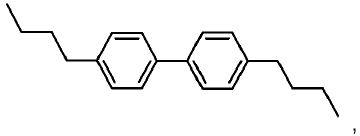 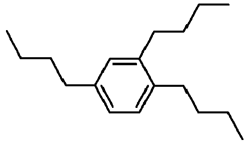 or

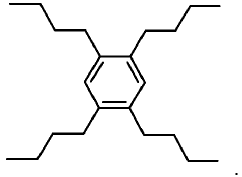

In yet a further preferred embodiment of the present invention, in the compounds of the Formula H in which p preferably denotes 1, the group 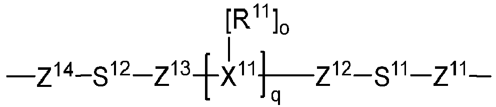 denotes 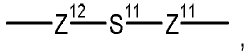 preferably -O-S^{1 1}-O-, -S¹¹-O- or -O-S¹¹-, particularly preferably -O-S¹¹-O- or -S¹¹-O-.

In a further preferred embodiment of the present invention, in the compounds of the Formula H, the group 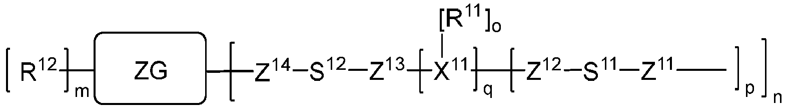 denotes a group selected from the group of the formulae 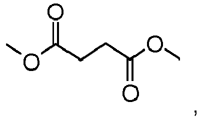 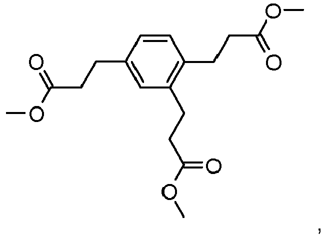 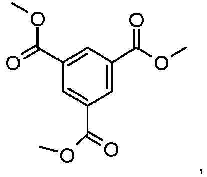 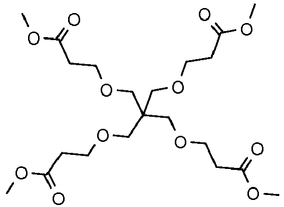 or

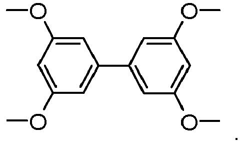

In a further preferred embodiment of the present invention in which p is 2, which may be identical to or different from those described above, in the compounds of the Formula H, 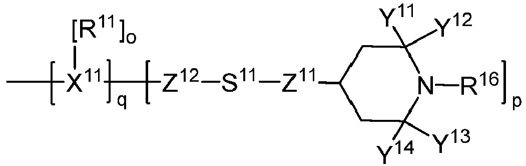 denotes a group selected from the group of the formulae 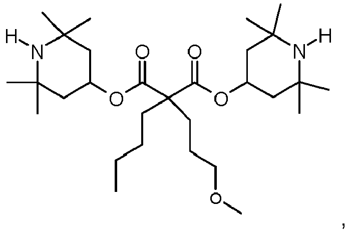 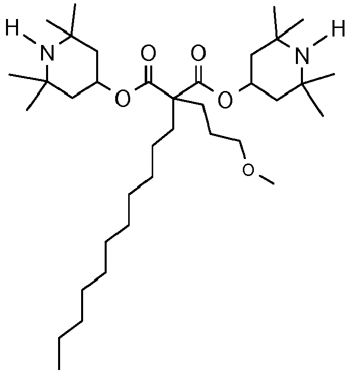 and

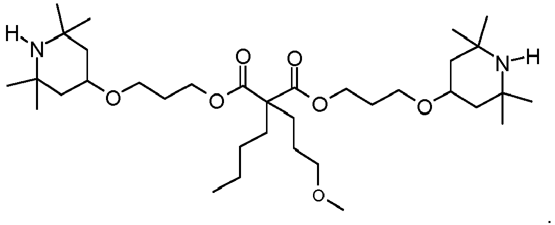

In yet a further preferred embodiment of the present invention, which may be identical to or different from those described above, in the compounds of the Formula H, the group 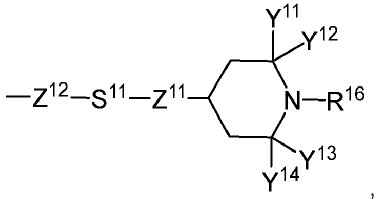 on each occurrence, independently of one another, denotes 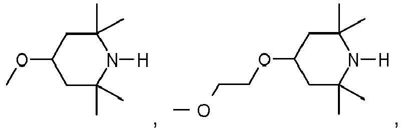 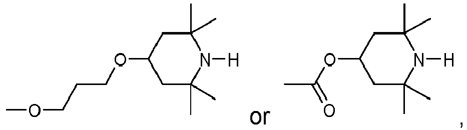 preferably

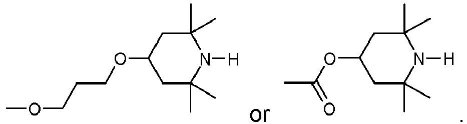

Compounds of the following general Formulae H-1-1, H-1-2 and H-1-3, showed to be particularly efficient UV stabilisers in LC mixtures, in particular, in terms of VHR stability: 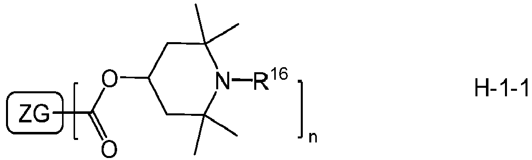 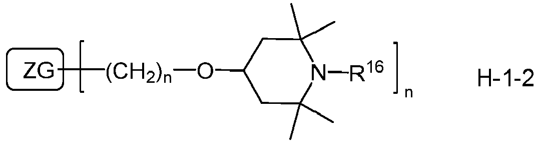 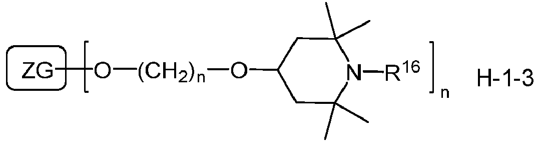 wherein ZG, R¹⁶ and n are as defined above and n denotes an integer from 1 to 8. These compounds are highly suitable as stabilisers in LC mixtures and stabilise the VHR of the mixtures upon a UV exposure.

In a particularly preferred embodiment, the one or more compounds of the Formula H may be selected from the group consisting of the compounds the following Formulae H-2-1 to H-2-6: 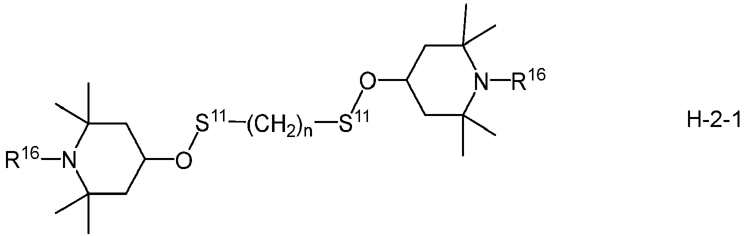 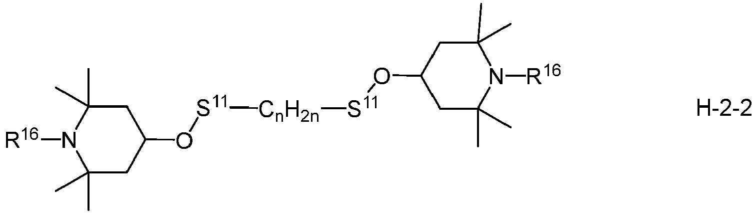 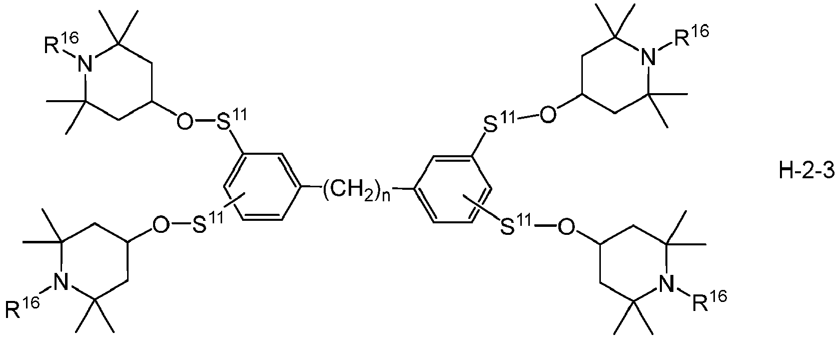 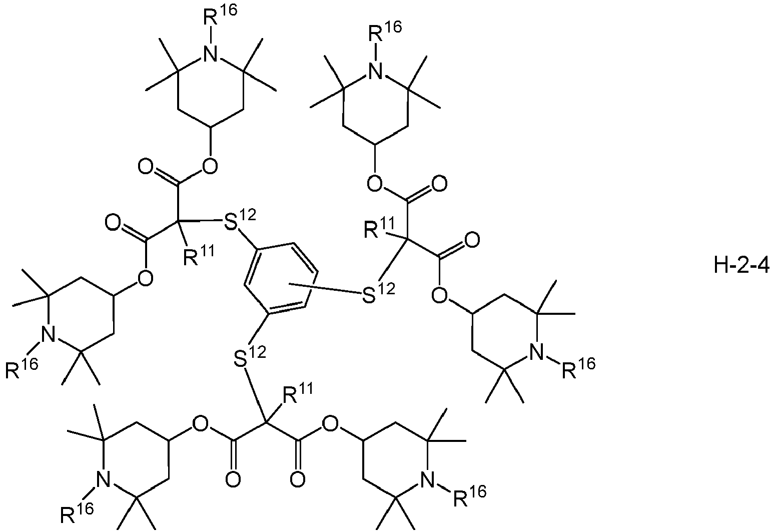 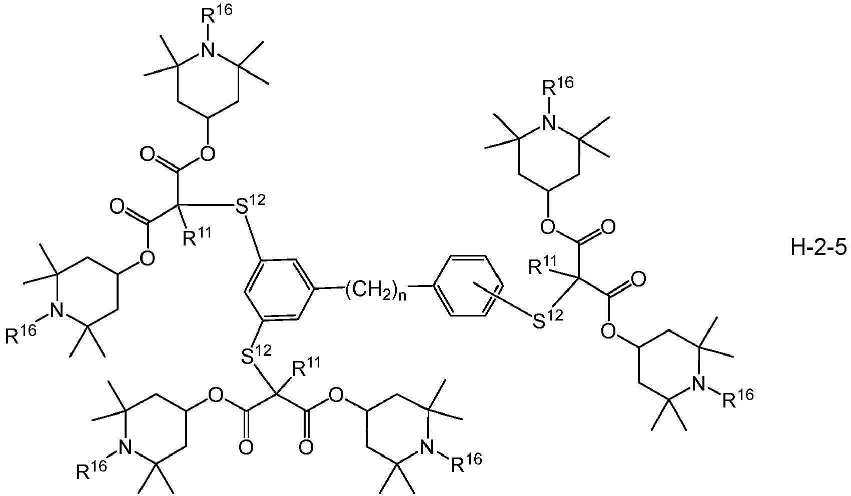 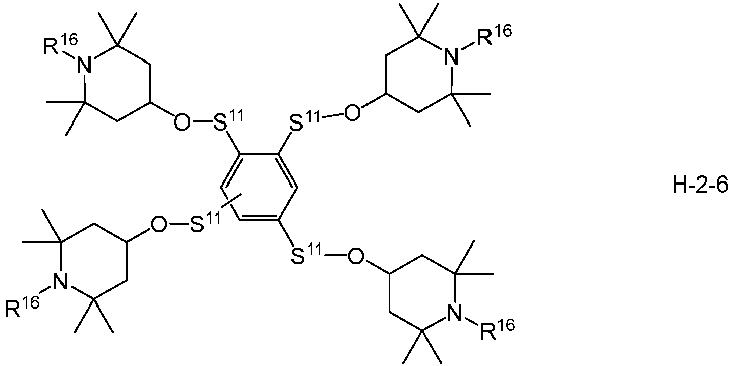 in which
- R¹¹: each, independently of one another, denotes an H atom, an alkyl group having 1 to 20 C atoms, in which one -CH₂- group or, if present, a plurality of -CH₂- groups may be replaced by -O- or -C(=O)-, but two adjacent -CH₂- groups cannot be replaced by -O-, and one or, if present, a plurality of -CH₂- groups may be replaced by-CH=CH- or -C=C-, and in which one H atom or a plurality of H atoms may be replaced by F, OR¹³, N(R¹³)(R¹⁴) or R¹⁵,
- R¹⁶: denotes a H atom or O^{•},
- S¹¹ and S¹²: each, independently of one another, denote an alkylene group having 1 to 20 C atoms, in which one -CH₂- group or, if present, a plurality of -CH₂- groups may be replaced by -O- or -C(=O)-, but two adjacent -CH₂- groups cannot be replaced by -O-, and in which one H atom or a plurality of H atoms may be replaced by F, OR¹³, N(R¹³)(R¹⁴) or R¹⁵, or denote a single bond, and
- n: denotes an integer from 0 to 12.

In a preferred embodiment of the present invention, the media according to the invention comprise in each case one or more compounds of the Formula H selected from the following group of the compounds of the formulae 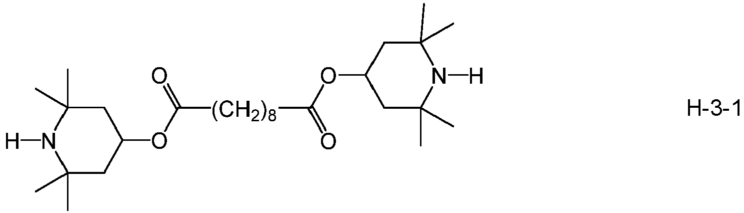 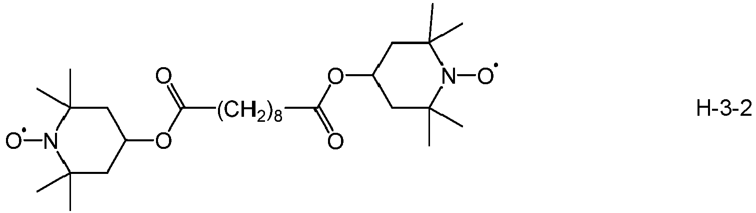 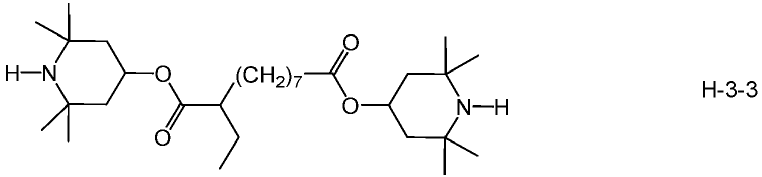 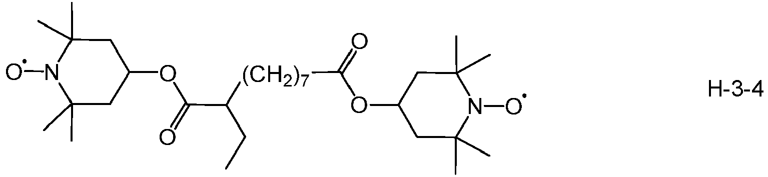 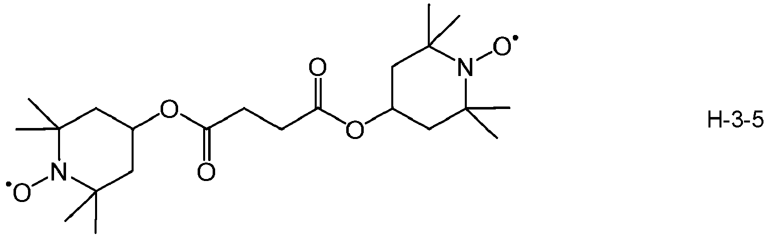 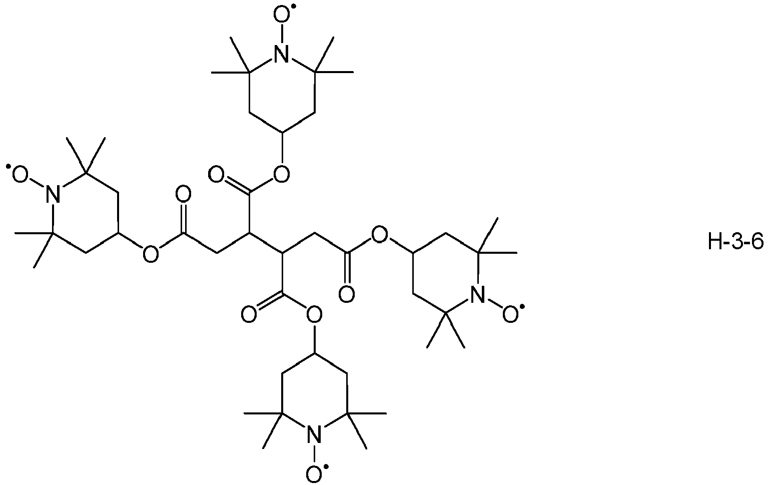 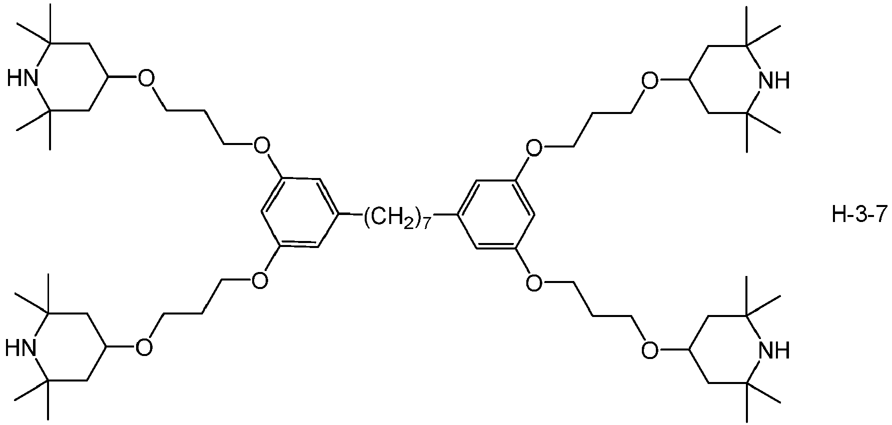 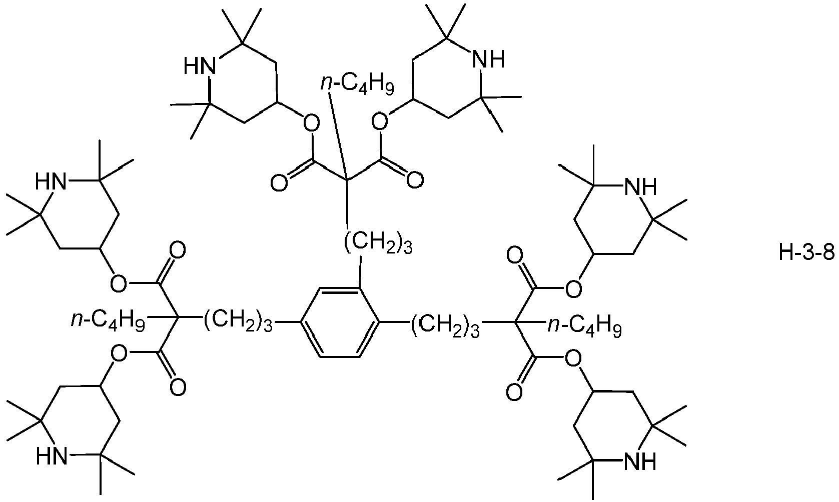 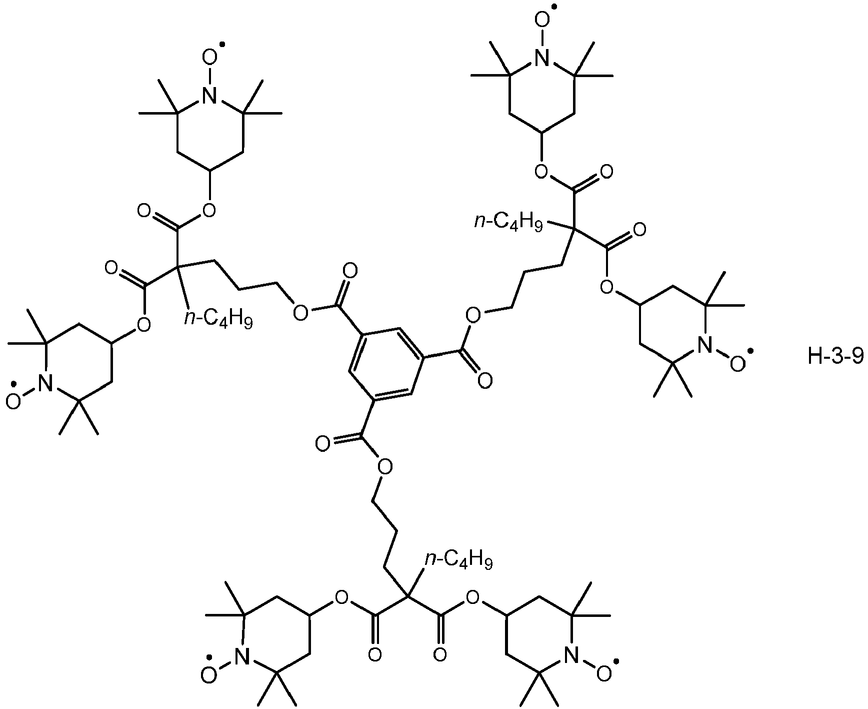 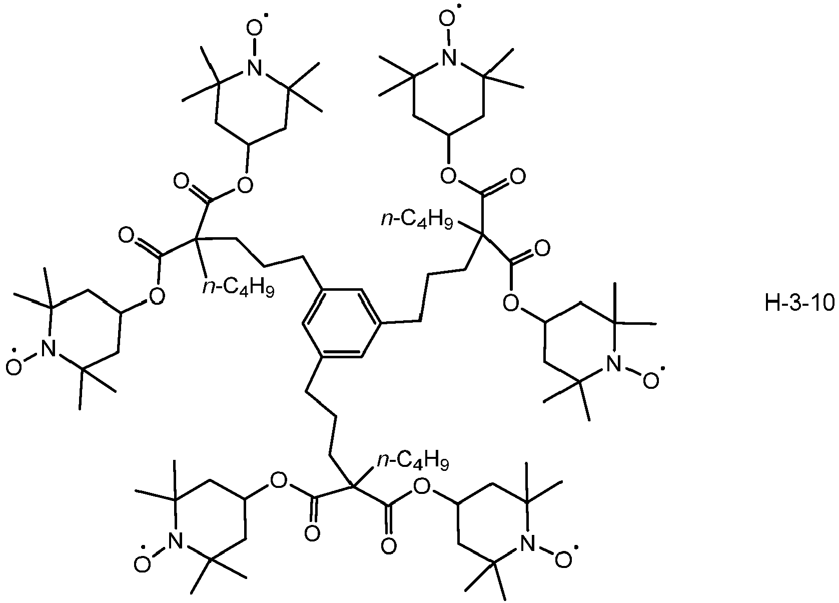 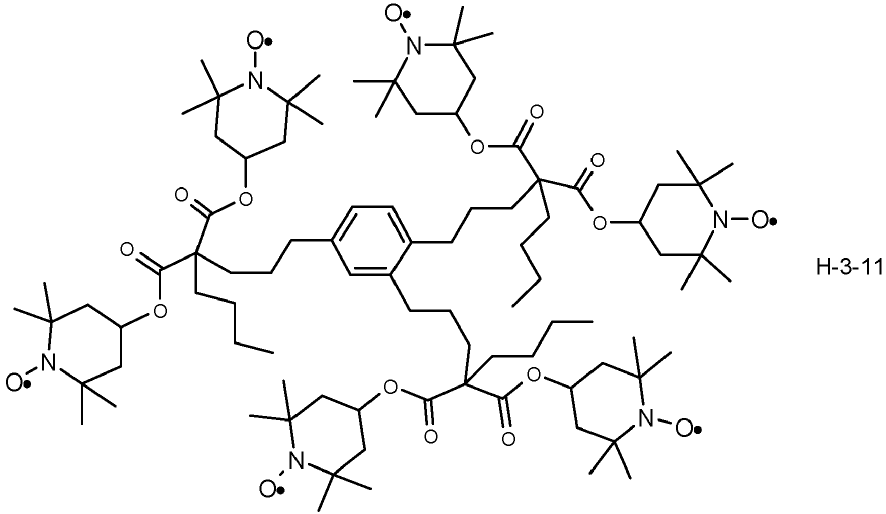 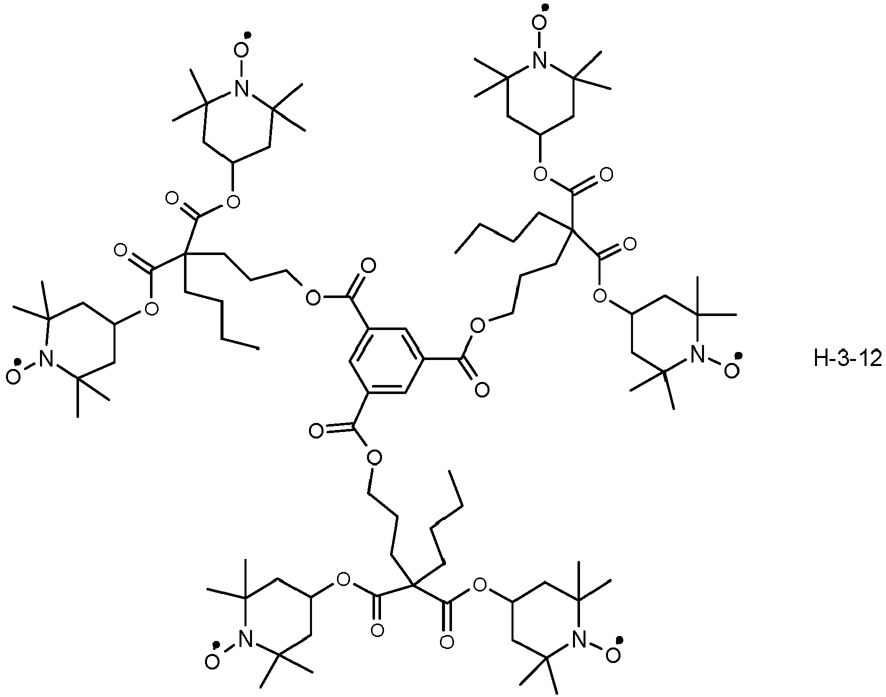 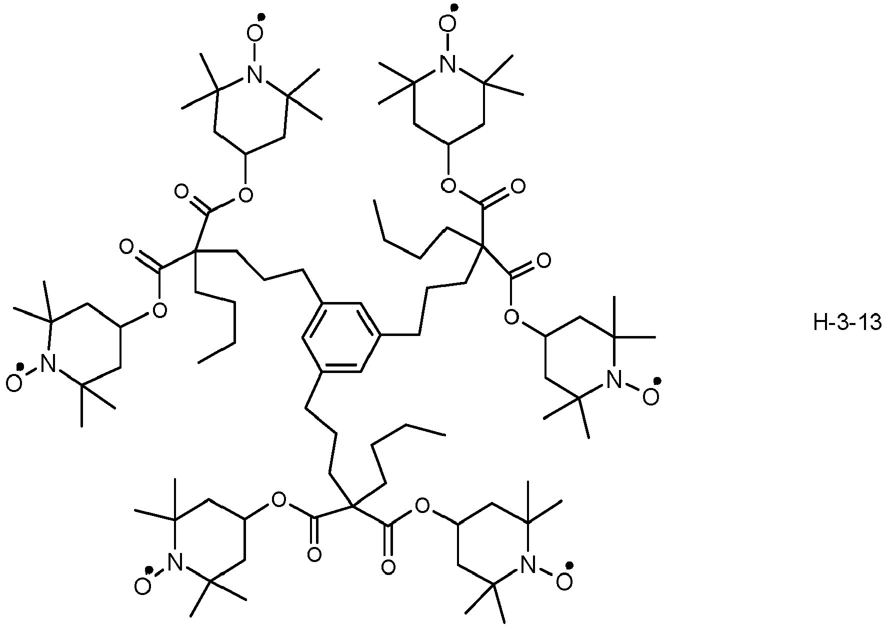 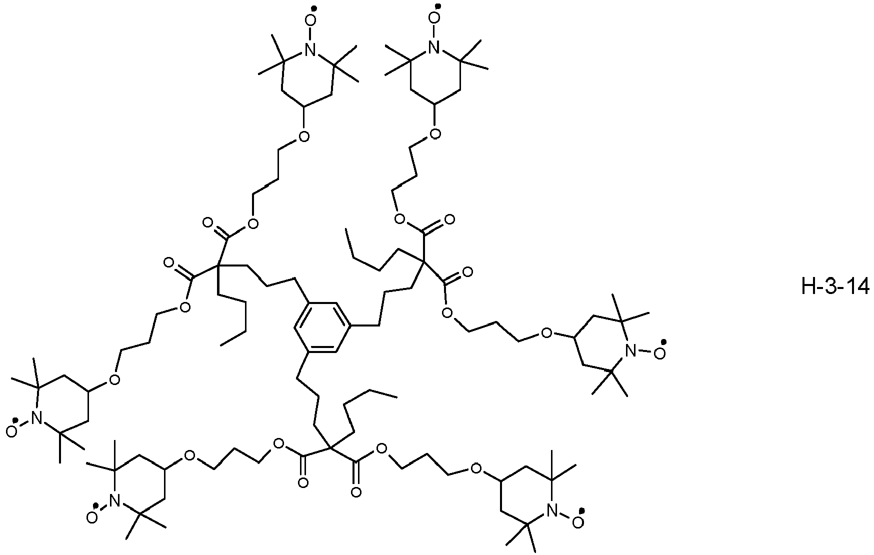 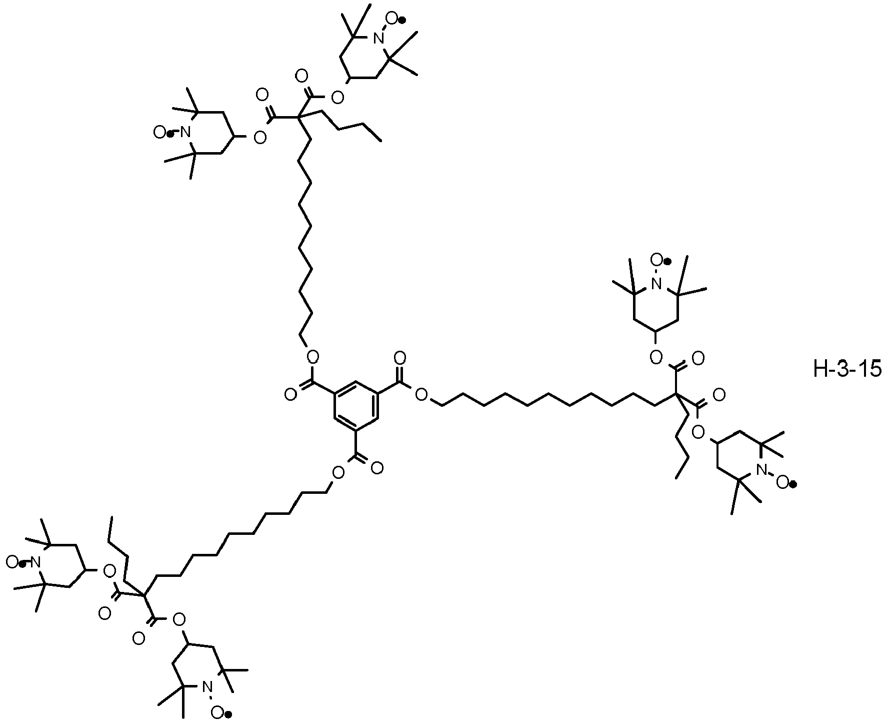 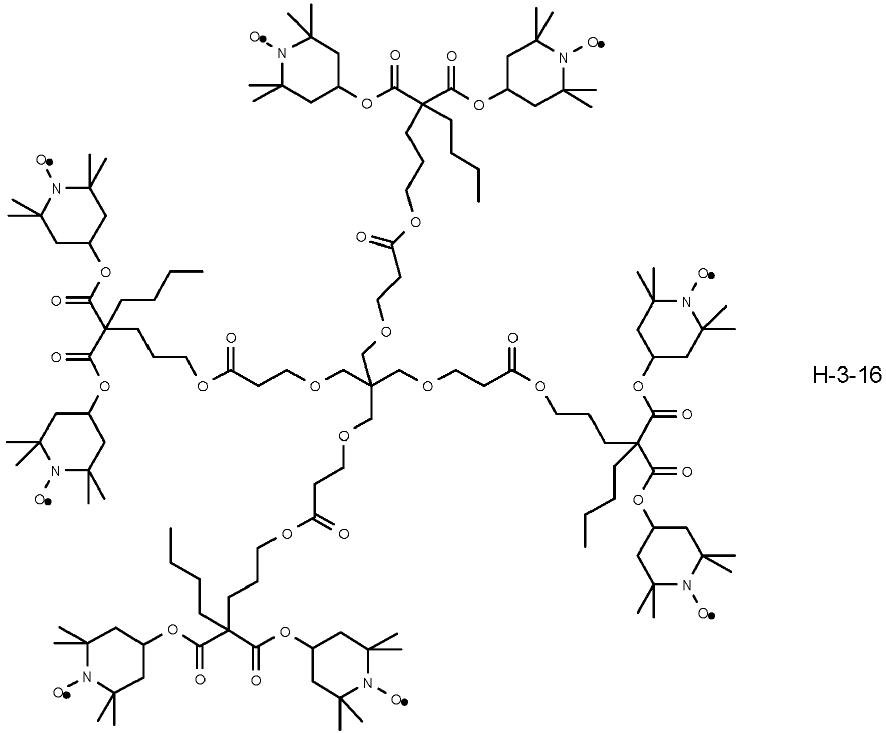 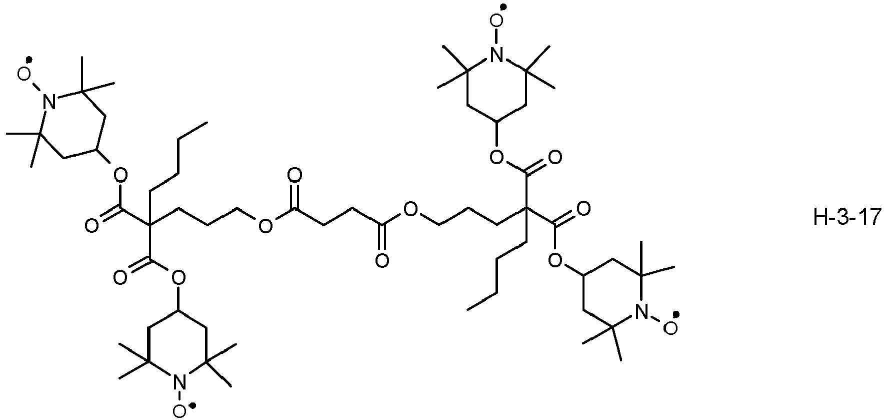 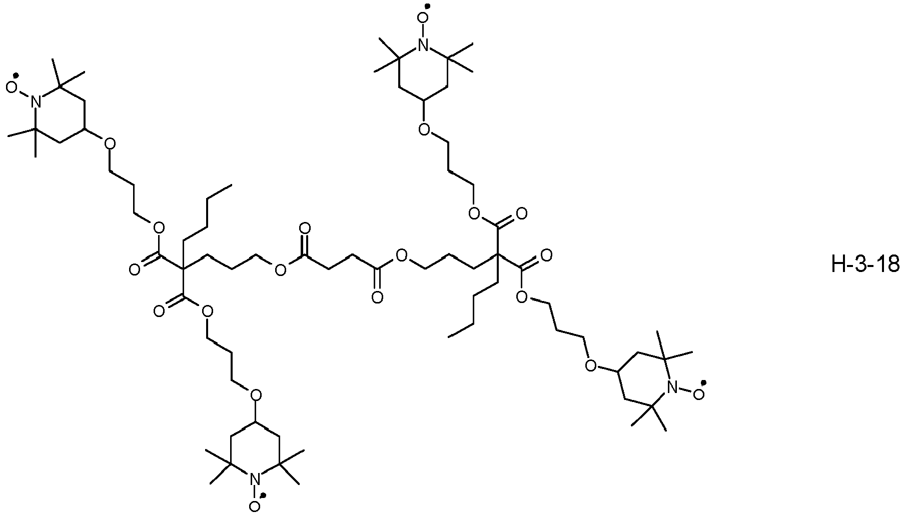 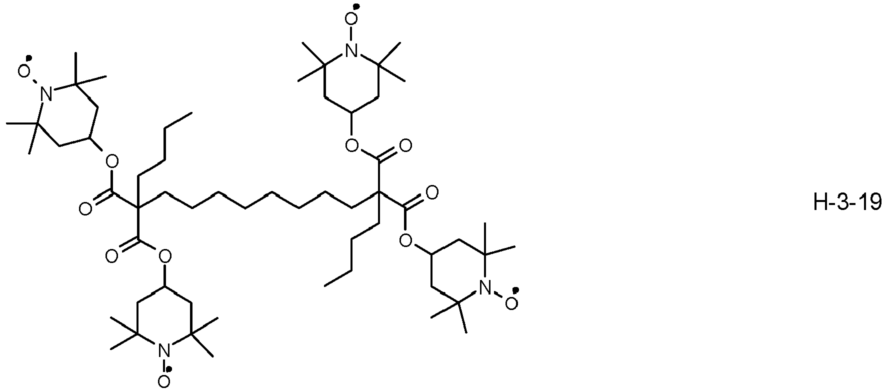 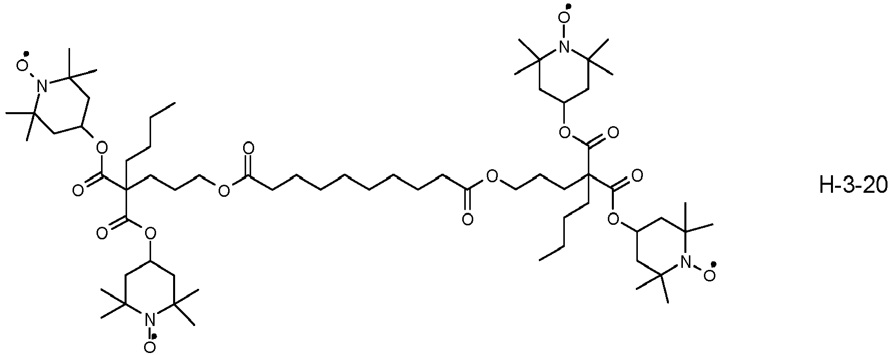 and

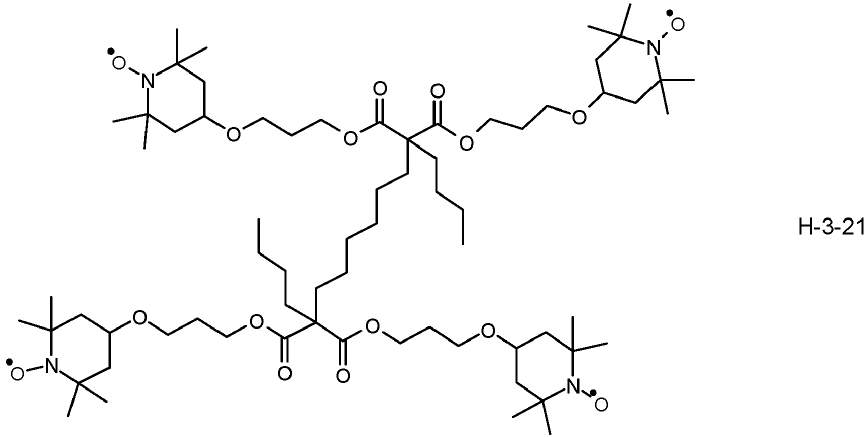

The preferred content of the one or more compounds of Formula H in the LC medium depends *inter alia* on the inherent chemical stability of the LC medium as well as on the nature of the compound of Formula H. Compounds of Formula H in which R¹⁶ denotes O•, which are known as NO radical type HALS are preferably used in proportion ranging from 50 ppm to 1000 ppm, based on the weight of the LC medium. Compounds of Formula H in which R¹⁶ denotes an H atom, which are known as NH radical type HALS are advantageously used in proportion ranging from 50 ppm to 2000 ppm, based on the weight of the LC medium.

### Further mesogenic components

In addition to the compounds of the Formulae LP1 and/or LP2 and ST, the LC medium may advantageously contain one or more compounds selected from the following formulae: 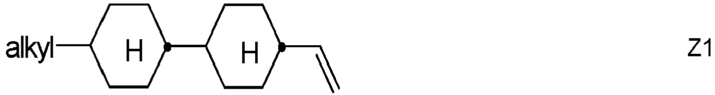 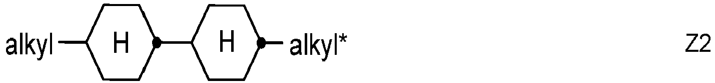 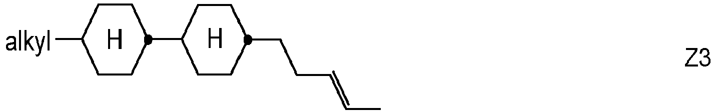 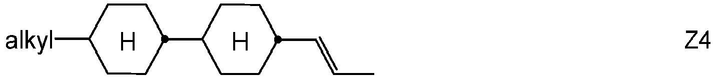 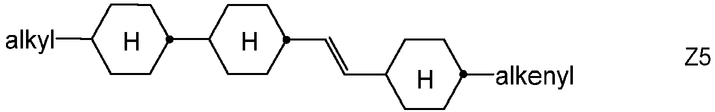 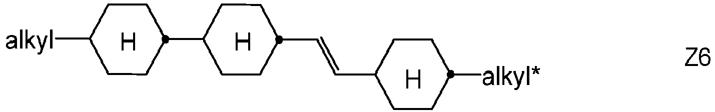 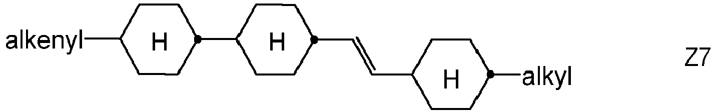 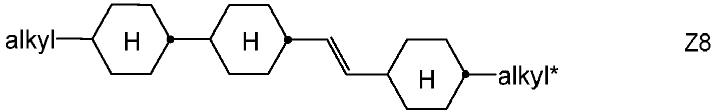 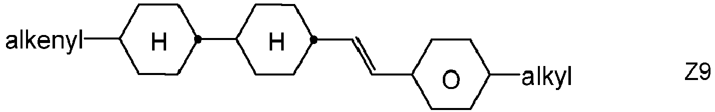 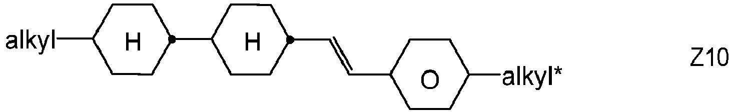 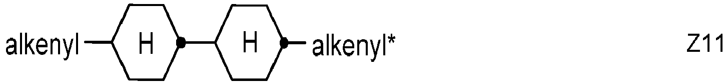 wherein
"*alkyl*" and *"alkyl*"* are, independently from one another, C₁₋₆-alkyl, and preferably denotes ethyl, propyl, butyl or pentyl, very preferably ethyl, propyl or butyl "*alkenyl*" and "*alkenyl**" preferably denote C₂₋₆-alkenyl. Very preferred are compounds of the Formula Z1 and Z2.

Preferred compounds of the Formula Z1 to Z6 are those selected from the following subformulae:

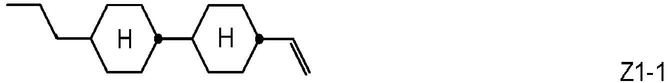

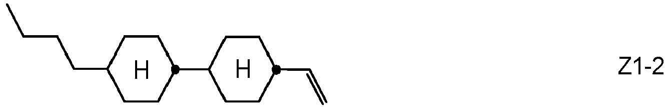

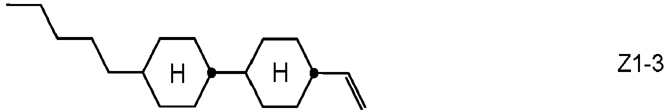

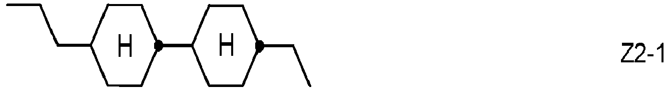

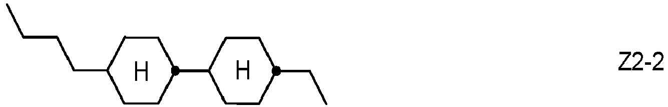

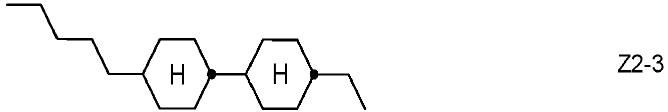

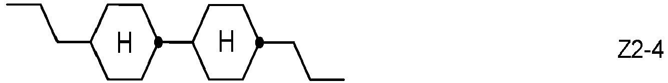

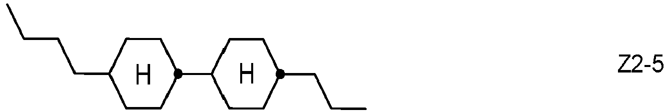

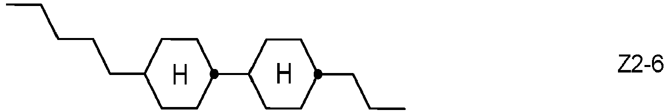

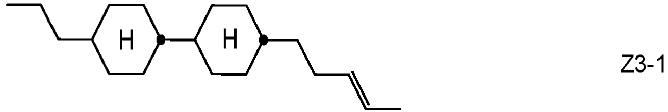

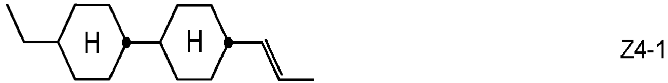

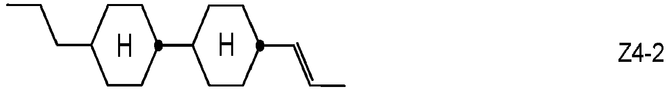

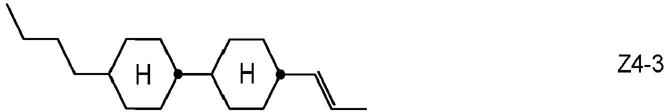

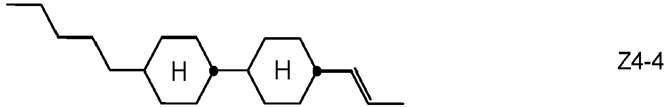

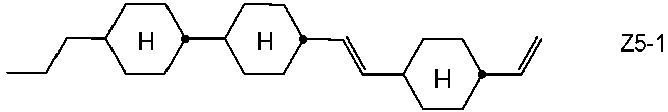

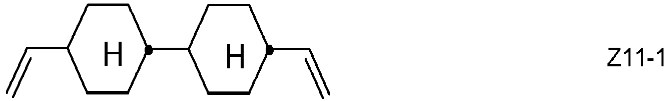

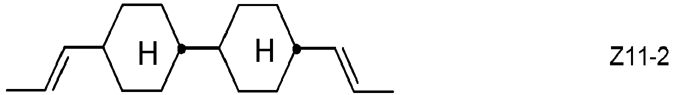

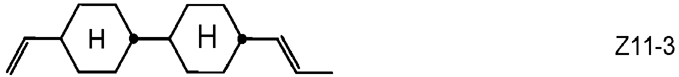

In another preferred embodiment, the LC medium contains one or more compounds of the Formula Z1 or its preferred subformulae and/or one or more compounds selected from Formulae Z2, Z3, Z4 and Z5 or their preferred subformulae.

Preferably, the total proportion of compounds of the Formula Z1, Z2, Z3, Z4, Z5 and Z6 or their subformulae, such as CC-3-V in the LC medium is from 10 to 65%, very preferably from 20 to 60%, most preferably from 25 to 55% by weight. In yet a more preferred embodiment, the compound of the Formula Z1-1 is used in concentrations ranging from 10 wt.-% to 60 wt.-%, more preferably 10 wt.-% to 40 wt.-%, based on the total weight of the LC medium.

Preferably, the LC medium contains 1, 2 or 3 compounds selected from the Formulae Z1, Z2, Z3 and Z4 or their subformulae.

The LC medium may additionally comprise one or more compounds of the following general formulae: 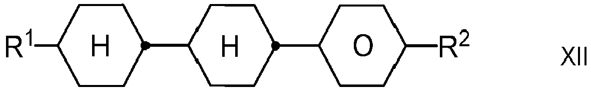 in which R¹ and R² each, independently of one another, denote n-alkyl, alkoxy, oxaalkyl, fluoroalkyl or alkenyl, each having up to 6 C atoms.

The compounds of the Formula XII are preferably selected from the following subformulae: 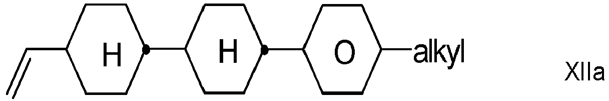 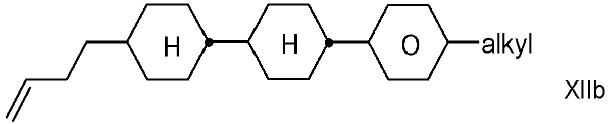 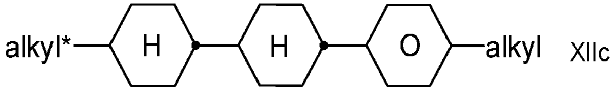 wherein "*alkyl*" and *"alkyl*"* each, independently of one another, denote methyl, butyl, pentyl or hexyl.

Particular preference is given to the compounds of the Formulae Xlla. In the Formula IXb, *"alkyl"* preferably, independently of one another, denotes *n*-C₃H₇, *n*-C₄H₉ or *n*-C₅H₁₁, in particular *n*-C₃H₇.

Preferred compound of subformula Xlla is Xlla-1:

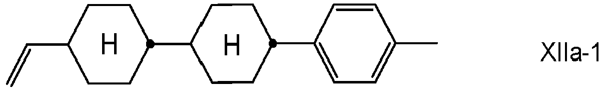

The LC medium may additionally comprise one or more compounds selected from the following formulae: 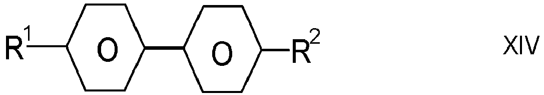 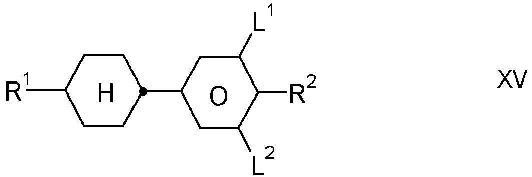 in which L¹ and L² have the meanings indicated in Formulae LP1 and LP2, and R¹ and R² each, independently of one another, denote n-alkyl, alkoxy, oxaalkyl, fluoroalkyl or alkenyl, each having up to 6 C atoms, and preferably each, independently of one another, denote alkyl having 1 to 6 C atoms; in the compound of the Formula XIV, at least one of the radicals R¹ and R² preferably denotes alkenyl having 2 to 6 C atoms.

The LC medium may further comprise one or more compounds of the Formula XIV in which at least one of the radicals R¹ and R² denotes alkenyl having 2 to 6 C atoms, preferably those selected from the following subformulae: 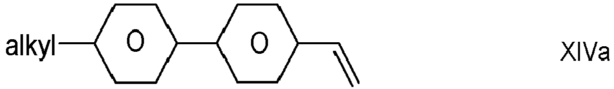 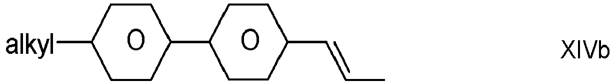 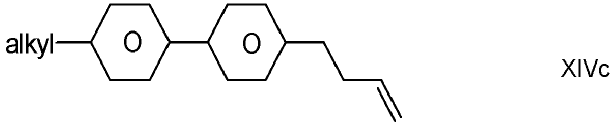 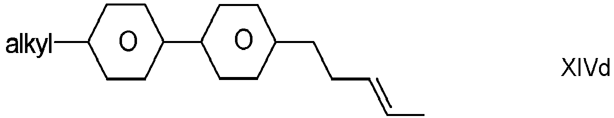 in which *"alkyl"* has the meaning indicated above, and preferably denotes methyl, ethyl or propyl;

The compounds of the Formulae XIV are preferably selected from the following subformulae: 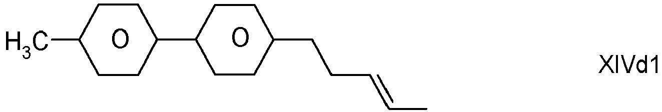 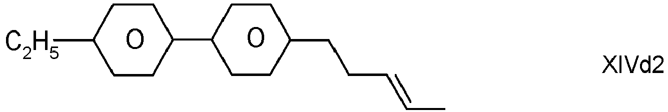 Very preferred are compounds of the Formula XIVd1;

In yet a further embodiment, the LC medium comprises one or more compounds of the Formula XVI, 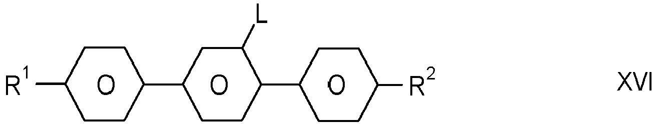 in which R¹ and R² have the meanings indicated for R⁰ in Formula LP1, respectively, and preferably each, independently of one another, denote alkyl having 1 to 6 C atoms. L denotes H or F.

Particularly preferred compounds of the Formula XVI are those of the subformulae 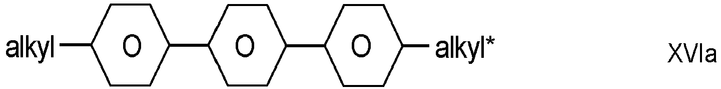 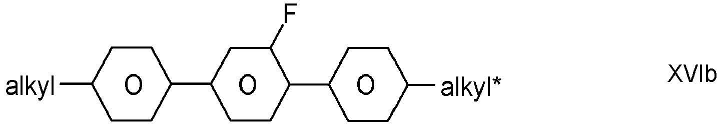 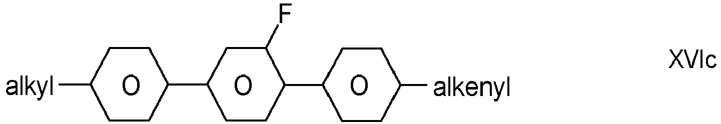 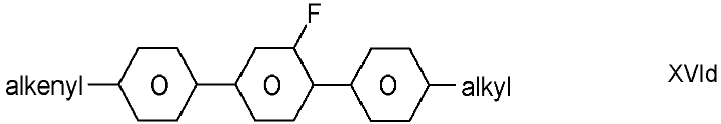 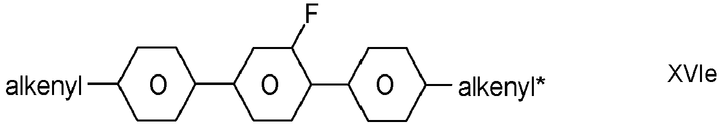 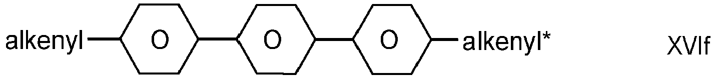 in which
- alkyl and alkyl*: each, independently of one another, denote a straight-chain alkyl radical having 1 to 6 C atoms, in particular ethyl, propyl or pentyl, and
- alkenyl and alkenyl*: each, independently of one another, denote a straight-chain alkenyl radical having 2 to 6 C atoms, in particular CH₂=CHC₂H₄, CH₃CH=CHC₂H₄, CH₂=CH and CH₃CH=CH.

Particular preference is given to the compounds of the Formulae XVIb and XVIc. Very particular preference is given to the compounds of the following subformulae 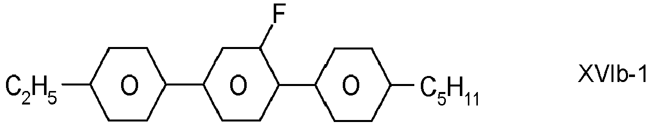 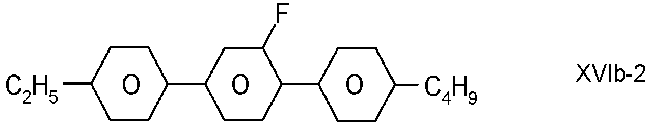 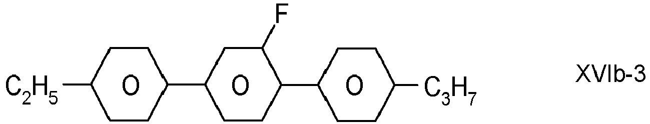 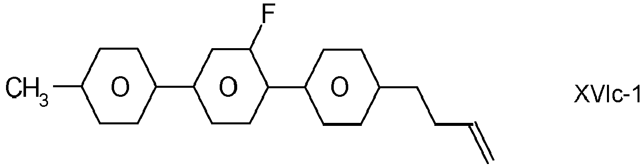 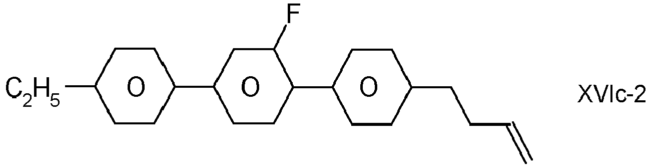 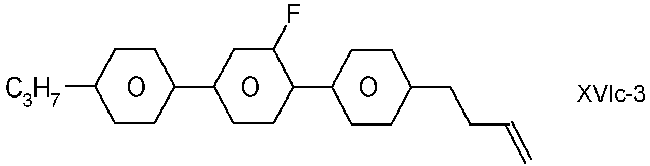 Very preferred are compounds of the Formula XVIc-2;
- The LC medium comprises one or more compounds of the following formulae: 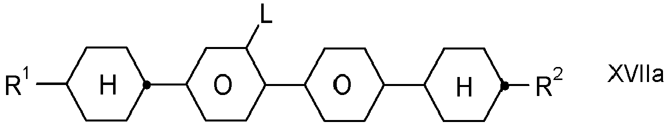 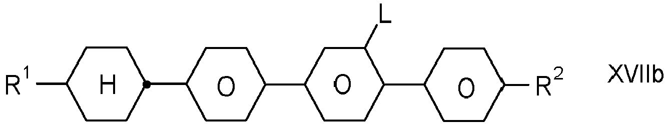 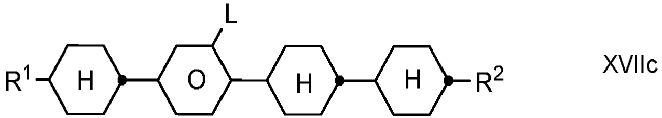 in which
   R¹ and R² have the meanings indicated for R⁰ in Formula LP1, respectively, and preferably each, independently of one another, denote alkyl having 1 to 6 C atoms. L denotes H or F.

Very preferred are compounds of the Formula XVlla wherein L is H. Very preferred are compounds of the Formula XVllb wherein L is F.

The LC medium may additionally comprise one or more compounds of the following formulae: 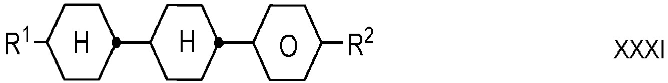 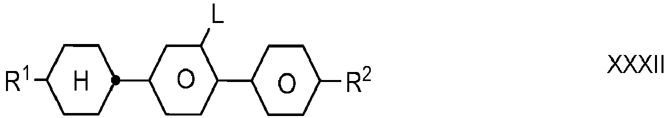 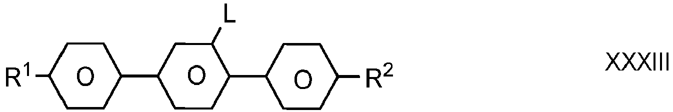 in which L, R¹ and R² have the meanings indicated in Formula LP1 for L¹, R⁰ and R², respectively. R¹ and R² preferably denote alkyl, alkoxy, oxaalkyl, fluoroalkyl or alkenyl, each having up to 6 C atoms.

In a further embodiment, the LC medium may comprise one or more compounds of the following formulae: 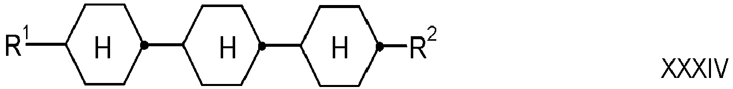 in which R¹ and R² have the meanings indicated for compound of the Formula XXXIII. Preferably, R¹ denotes alkyl or alkenyl having 1-6 or 2-6 C atoms respectively and R² denotes alkenyl having 2-6 C atoms.

Preferred compounds of the Formula XXXIV include, in particular, 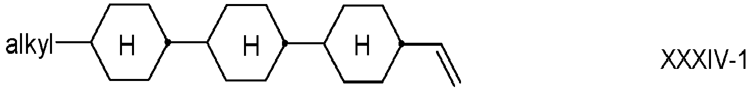 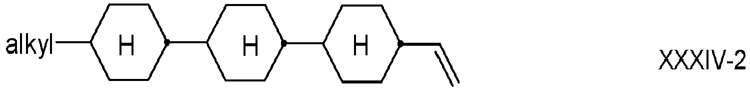 in which "*alkyl*" denotes an alkyl group having 1 to 6 C atoms.

In some further embodiments, the LC medium comprises one or more compounds of the following formulae: 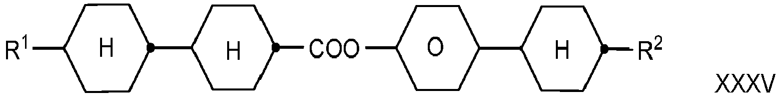 in which R¹ and R² have the meanings indicated in Formulae LP1 for R⁰ and R², respectively, and preferably each, independently of one another, denote alkyl having 1 to 6 C atoms.

In a further preferred embodiment, the LC medium comprises one or more compounds of the following Formula S: 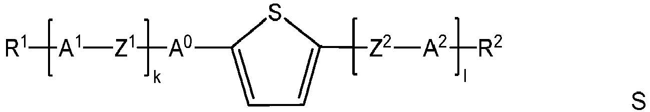 in which the individual substituents have the following meanings:
- R¹ and R²: each, independently of one another, a H atom, an alkyl or an alkoxy group having 1 to 12 C atoms or an alkenyl or an alkenyloxy group having 2 or 12 C atoms in which one or more non-adjacent CH₂ groups are optionally substituted by -C≡C-, -CF₂O-, -OCF₂-, -CH=CH- 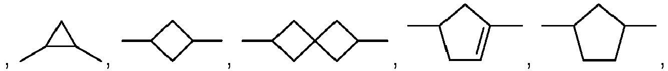 -O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom,
- A⁰, A 1, A²: each, independently of one another, denote phenylene-1,4-diyl, in which, in addition, one or two CH groups may be replaced by N and one or more H atoms may be replaced by halogen, CN, CH₃, CHF₂, CH₂F, CF₃, OCH₃, OCHF₂ or OCF₃, cyclohexane-1,4-diyl, in which, in addition, one or two non-adjacent CH₂ groups may be replaced, independently of one another, by O and/or S and one or more H atoms may be replaced by F, cyclohexene-1,4-diyl, bicyclo-[1.1.1]pentane-1,3-diyl, bicyclo[2.2.2]octane-1,4-diyl, spiro[3.3]-heptane-2,6-diyl, tetrahydropyran-2,5-diyl or 1,3-dioxane-2,5-diyl,
- Z¹ and Z²: each, independently of one another, denote -CF₂O-, -OCF₂-, -CH₂O-, -OCH₂-, -CO-O-, -O-CO-, -C₂H₄-, -C₂F₄-, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C≡C- or a single bond,
- k and I: each, independently of one another, denote 0, 1, 2 or 3.

Preference is given to compounds of the Formula S in which A⁰ denotes phenylene-1,4-diyl, in which, in addition, one or two CH groups may be replaced by N and one or more H atoms may be replaced by halogen, CN, CH₃, CHF₂, CH₂F, OCH₃, OCHF₂, CF₃ or OCF₃. Particularly preferred are compounds in which A⁰ denotes 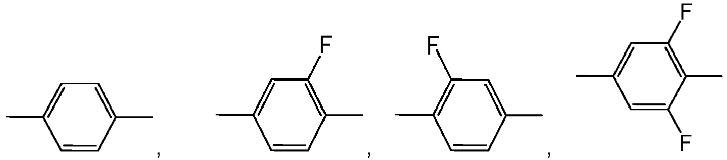 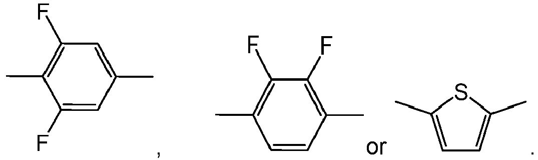 more preferably 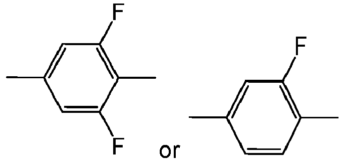 and very particularly preferably in which
- A⁰: denotes

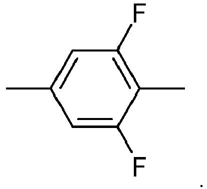

The preferred compounds of the Formula S result in media having a particularly high clearing point, low rotational viscosity, a broad nematic phase, high birefringence and an excellent thermal and UV stability.

Particularly preferred compounds of the Formula S are those selected from the following sub-formulae: 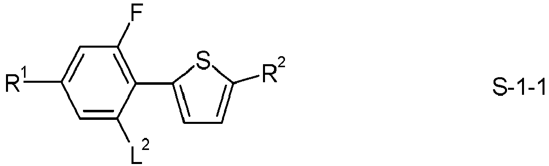 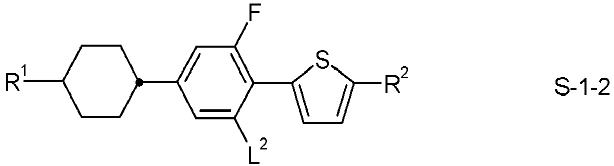 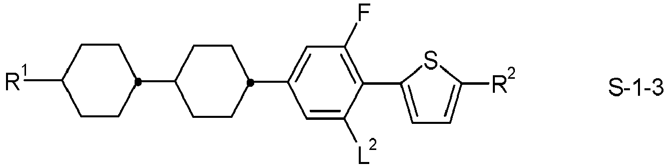 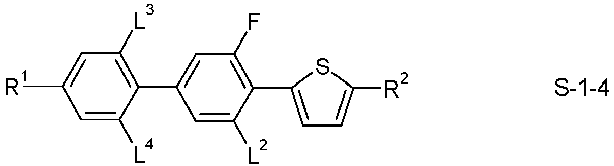 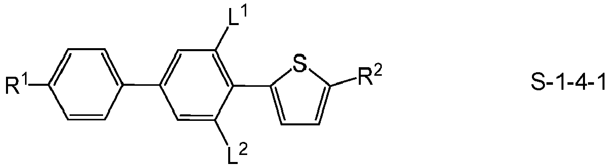 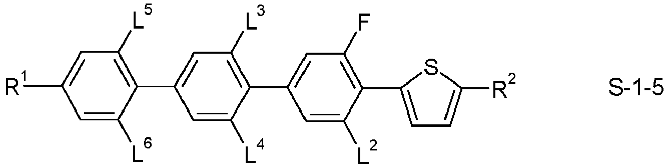 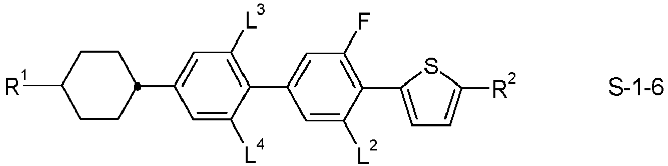 in which R¹ and R² have the meanings indicated in general Formula S, and L¹ to L⁶ independently denote H or F. R¹ and R² therein preferably denote optionally fluorinated alkyl or alkoxy having 1 to 12 C atoms, optionally fluorinated alkenyl or alkynyl having 2 to 12 C atoms, optionally fluorinated cycloalkyl having 3 to 12 C atoms.

Particularly preferred are optionally fluorinated alkyl having 1 to 5 C atoms, or alkenyl or alkynyl having 2 to 5 C atoms. L² in the Formulae S-1-1 to S-1-6 preferably denotes F. In the Formulae S-1-4 to S-1-6, L³ and L⁴ preferably denote H. In the Formulae S-1-4 to S-1-6 L³ and L⁴ preferably denote F.

In a particularly preferred embodiment, the compounds of the Formula S are represented by the following structure: 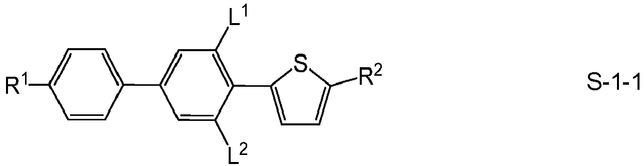 where R¹ has the same meaning as in the general Formula S and
R¹ and R² independently from one another, denote a straight-chain or branched alkyl or alkoxy group having 1 to 7 C atoms, or an akenyl, alkenyloxy, alkoxyalkyl group having 1 to 7 C atoms, or a cycloalkyl or a cycloalkoxy group having 3 to 12 C atoms, in which one or more non-adjacent CH₂ groups are optionally substituted by -C≡C-, -CF₂O-, -OCF₂-, -CH=CH-, 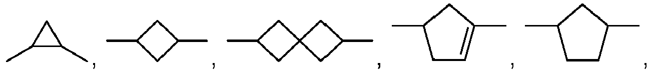 -O-, -CO-O- or -O-CO- in such a way that O atoms are not linked directly to one another, and in which one or more H atoms may be replaced by a halogen atom, in which one or more H atoms may be replaced by a halogen atom; and
L¹ and L² independently from one another, denote an H atom or F, preferably F.

In a further preferred embodiment, the LC medium additionally comprises one or more compounds selected from the following formulae: Formulae II and III: 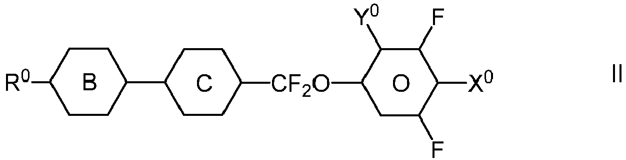 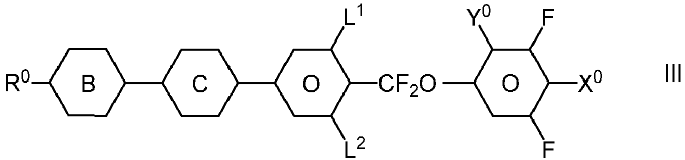 wherein the individual radicals, independently of each other and on each occurrence identically or differently, have the following meanings: 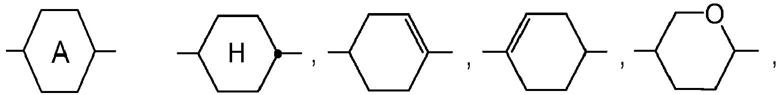 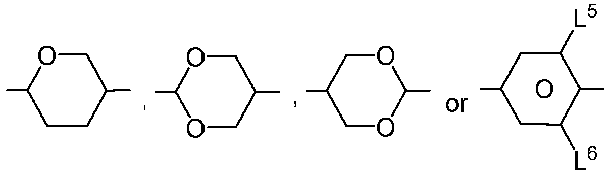 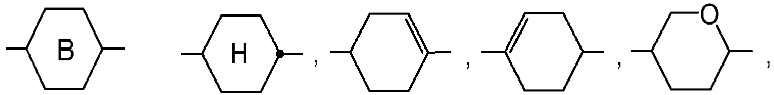 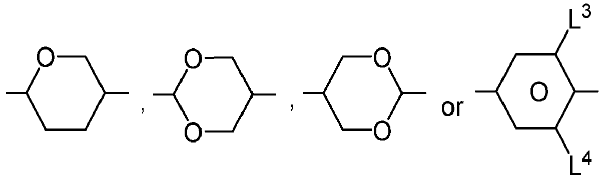 wherein
- R⁰: has one of the meanings given for R⁰ in Formula LP1,
- X⁰: independently of one another F, CI, CN, SF₅, SCN, NCS, a halogenated alkyl radical, a halogenated alkenyl radical, a halogenated alkoxy radical or a halogenated alkenyloxy radical having up to 6 C atoms,
- L¹⁻⁶: independently of one another H or F, and
- Y⁰: H or CH₃.

Preferred compounds of the Formula II and III are those wherein Y⁰ is H.

Further preferred compounds of the Formula II and III are those wherein R⁰ denotes alkyl having 1 to 6 C atoms, very preferably ethyl or propyl, and X⁰ denotes F or OCF₃, very preferably F.

The LC medium may comprise one or more compounds of the Formula II selected from the following subformulae: 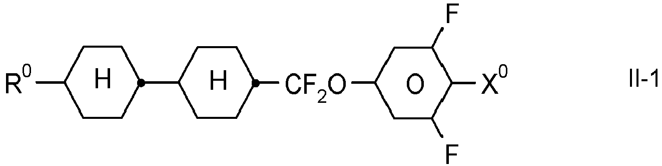 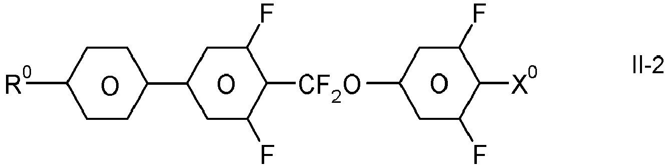 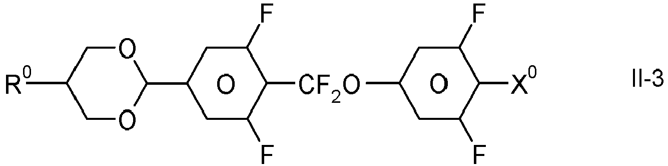 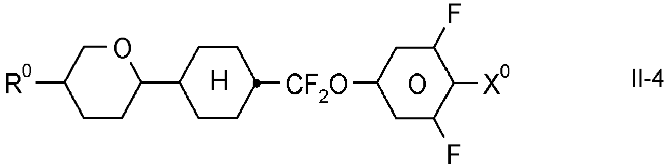 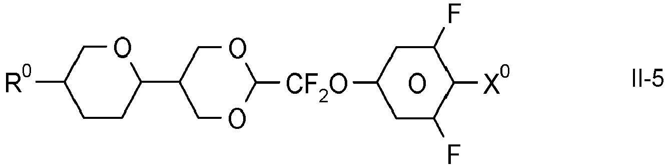 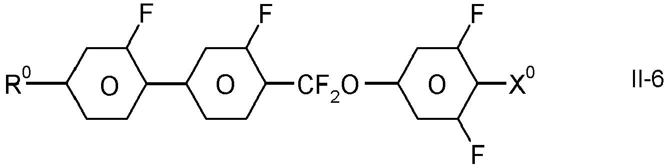 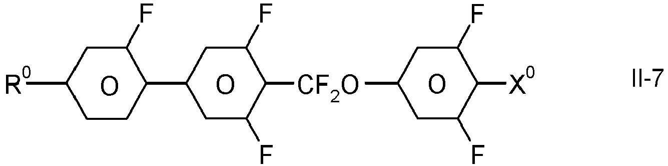 in which R⁰ and X⁰ have the meanings given in Formula II.

Preferred compounds are those of the Formula II-1, II-2 and II-3, very preferred those of the Formula II-1 and II-2.

In the compounds of the Formulae II-1 to II-7 R⁰ preferably denotes alkyl having 1 to 6 C atoms, very preferably ethyl or propyl, and X⁰ preferably denotes F or OCF₃, very preferably F.

The LC medium may contain one or more compounds of the Formula II or their subformulae as described above and below wherein Y⁰ is CH₃, Very preferably, the LC medium according to this preferred embodiment comprises one or more compounds of the Formula II selected from the following subformulae: 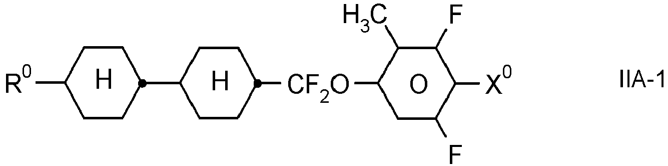 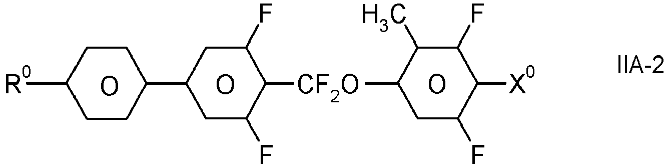 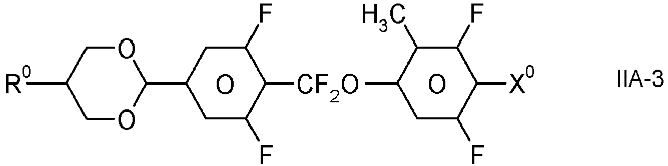 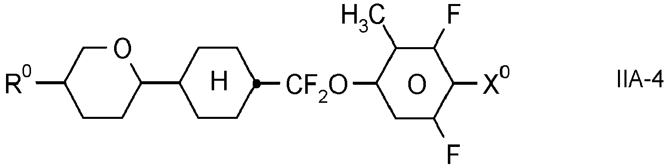 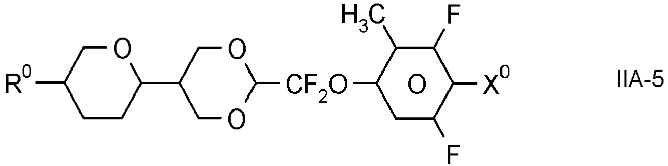 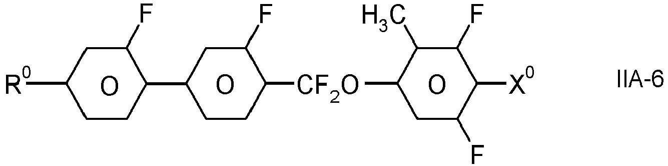 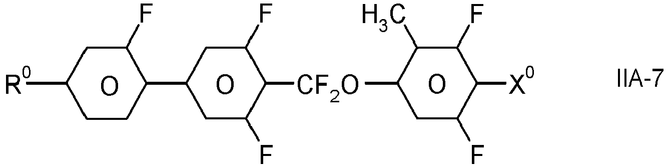 in which R⁰ and X⁰ have the meanings given in Formula II.

Preferred compounds are those of the Formula IIA-1, IIA-2 and IIA-3, very preferred those of the Formula IIA-1 and IIA-2.

In the compounds of the Formulae IIA-1 to IIA-7 R⁰ preferably denotes alkyl having 1 to 6 C atoms, very preferably ethyl or propyl, and X⁰ preferably denotes F or OCF₃, very preferably F.

The LC medium may comprise one or more compounds of the Formula III selected from the following subformulae: 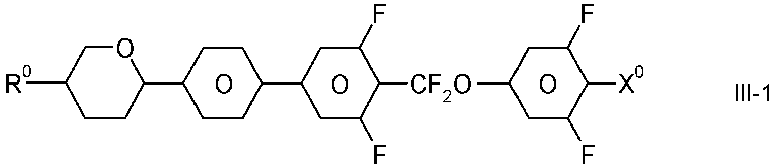 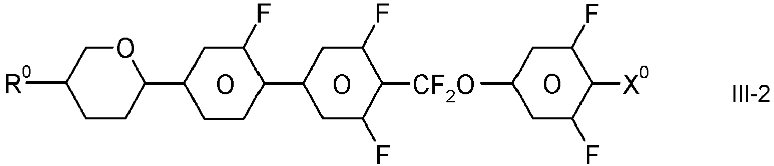 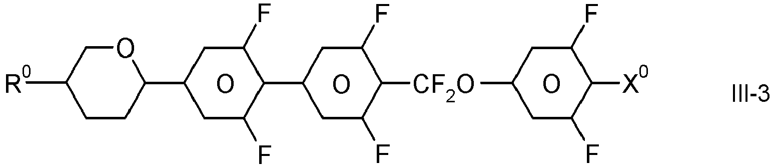 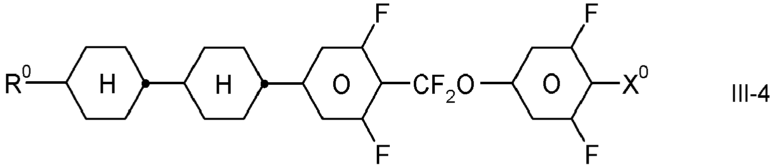 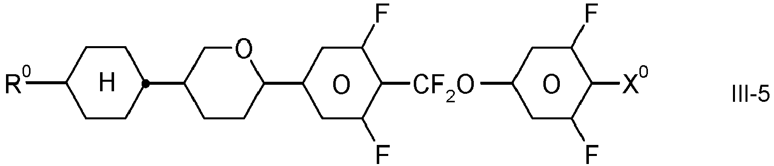 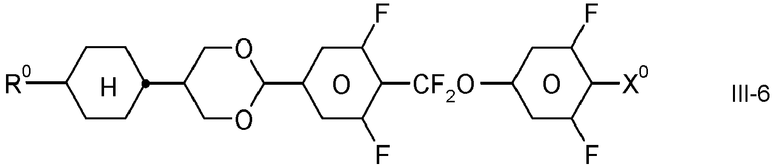 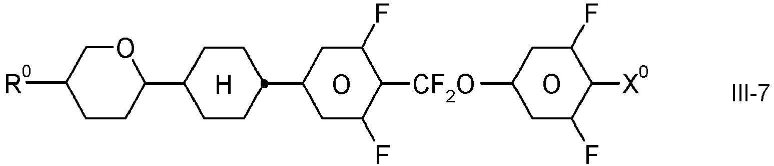 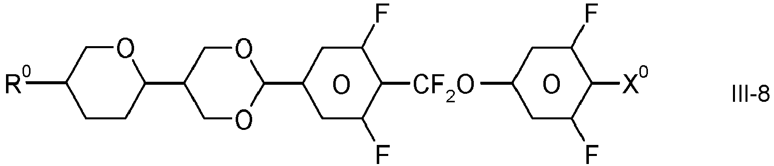 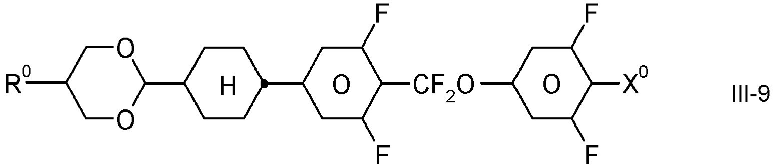 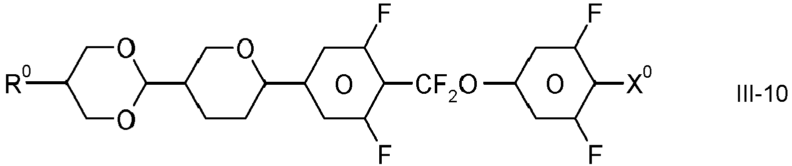 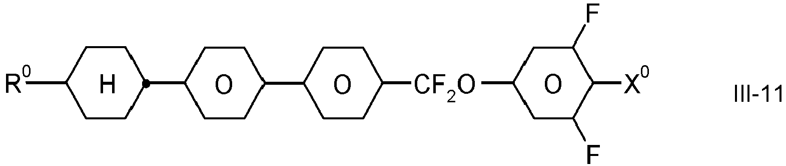 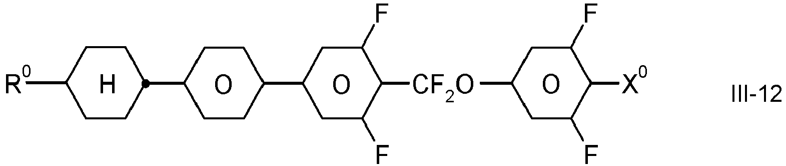 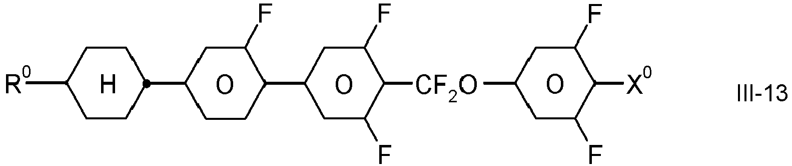 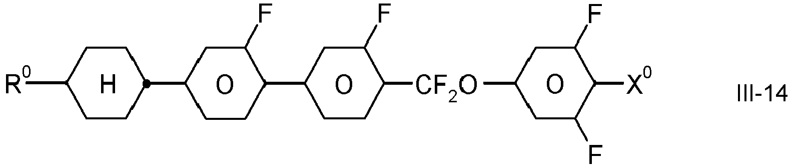 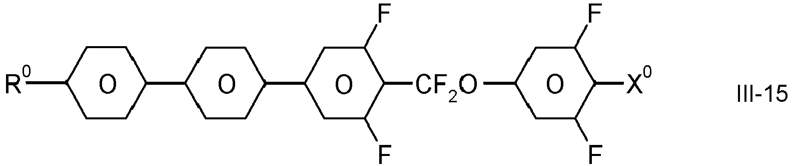 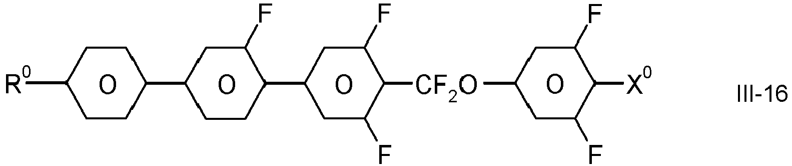 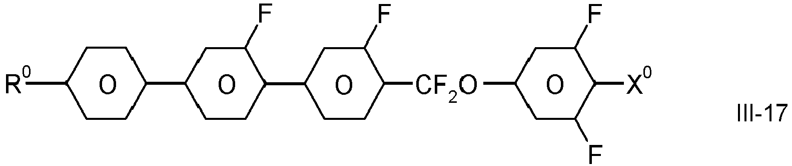 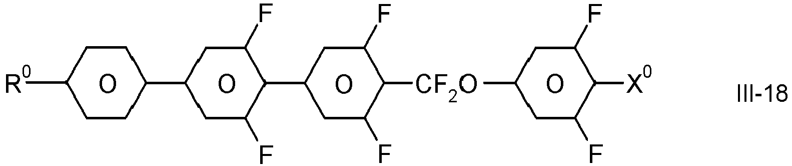 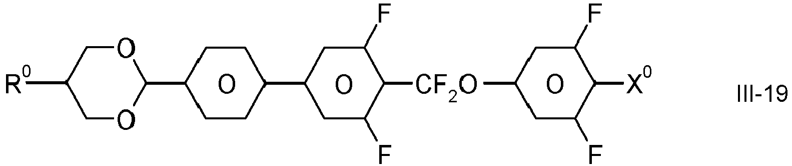 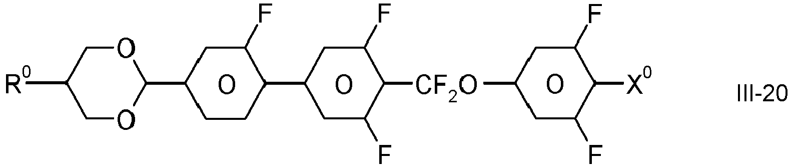 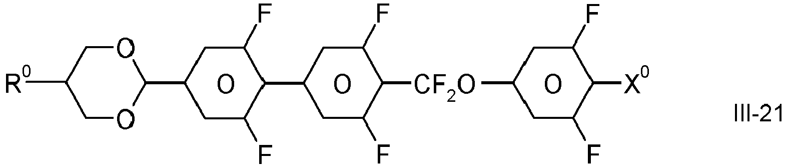 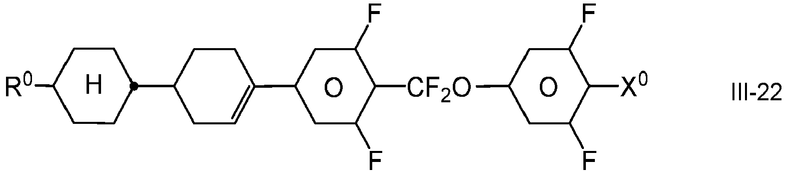 in which R⁰ and X⁰ have the meanings given in Formula II.

Preferred compounds are those of the Formula III-1, III-4, III-6, III-16, III-19 and III-20.

In the compounds of the Formulae III-1 to III-22 R⁰ preferably denotes alkyl having 1 to 6 C atoms, very preferably ethyl or propyl, X⁰ preferably denotes F or OCF₃, very preferably F, and Y² preferably denotes F.

The LC medium may contain one or more compounds of the Formula III or their subformulae as described above and below wherein Y⁰ is CH₃, Very preferably, the LC medium according to this preferred embodiment comprises one or more compounds of the Formula III selected from the following subformulae: 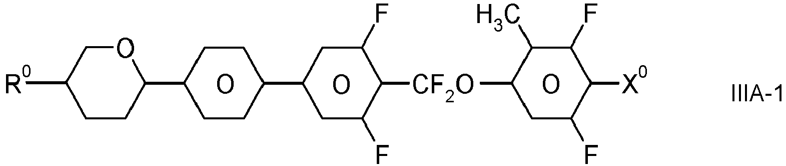 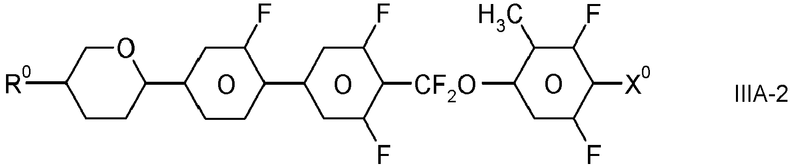 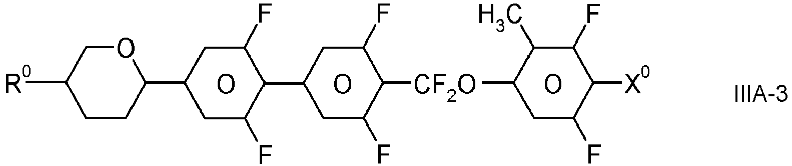 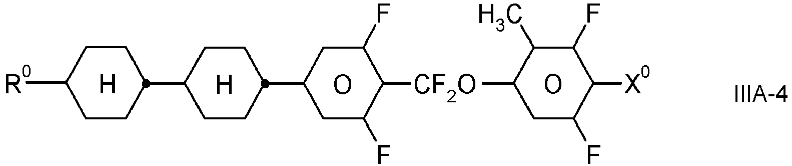 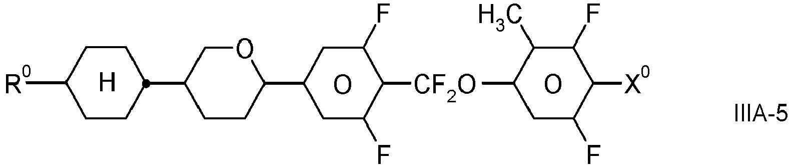 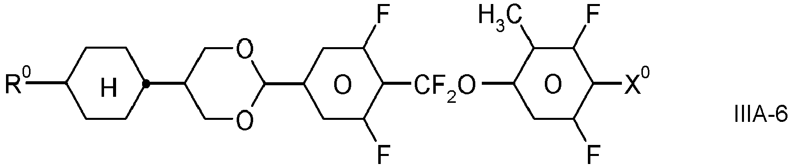 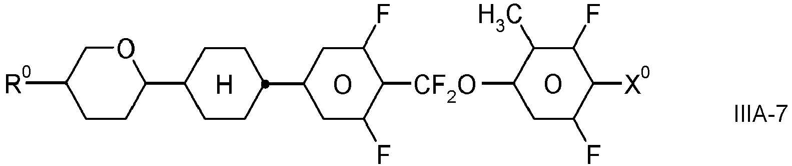 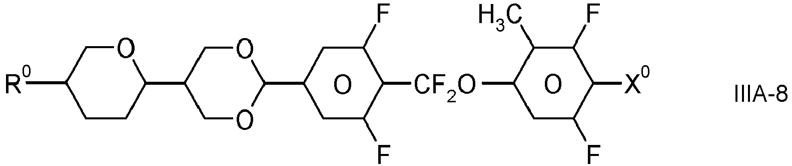 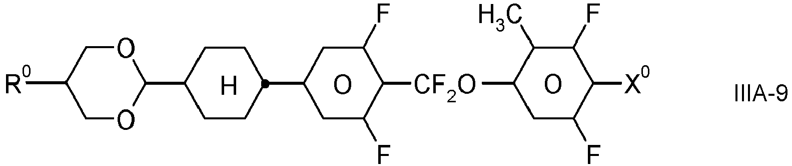 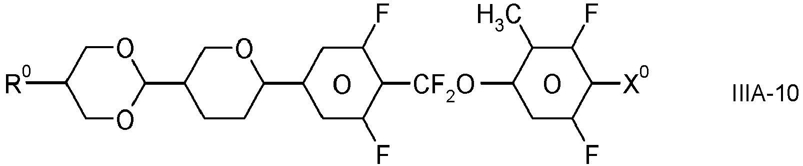 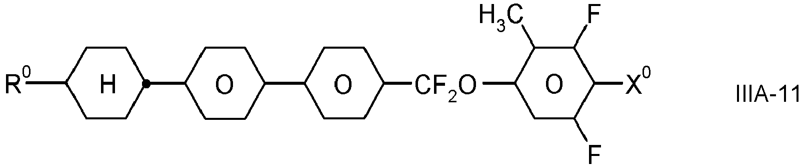 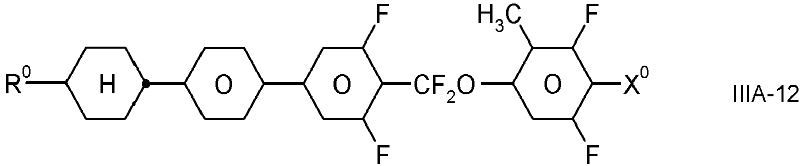 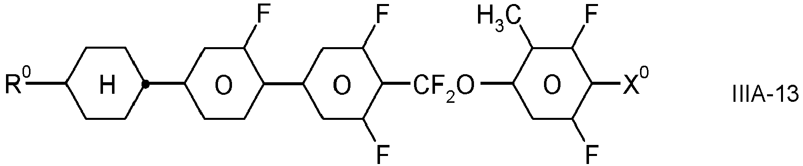 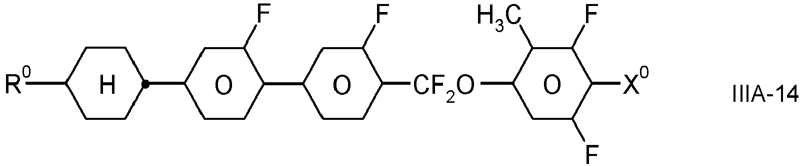 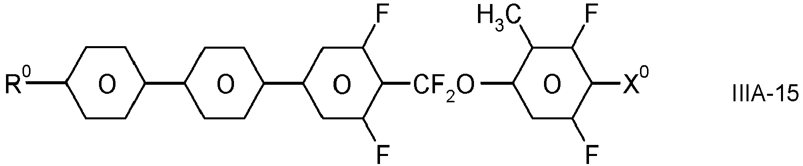 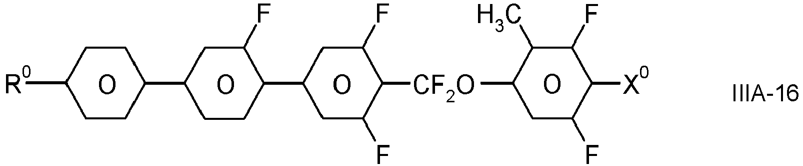 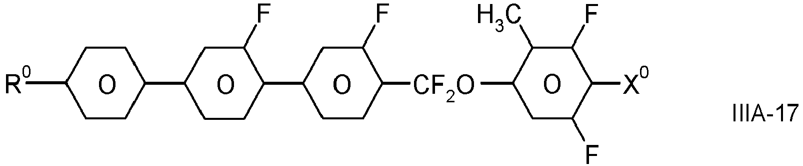 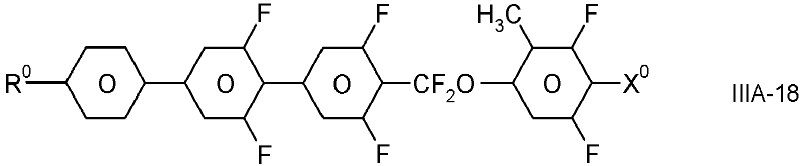 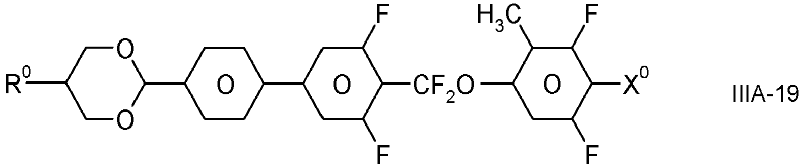 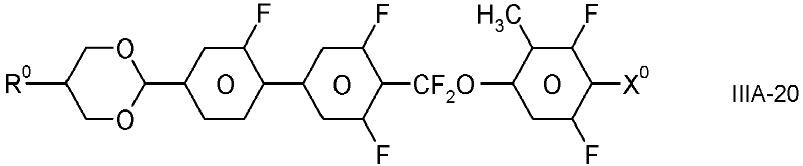 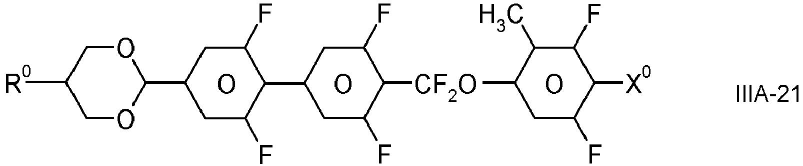 in which R⁰ and X⁰ have the meanings given in Formula III.

Preferred compounds are those of the Formula IIIA-1, IIIA-4, IIIA-6, IIIA-16, IIIA-19 and IIIA-20.

In the compounds of the Formulae IIIA-1 to IIIA-21 R⁰ preferably denotes alkyl having 1 to 6 C atoms, very preferably ethyl or propyl, X⁰ preferably denotes F or OCF₃, very preferably F, and Y² preferably denotes F.

The LC medium may additionally comprise one or more compounds selected from the following formulae: 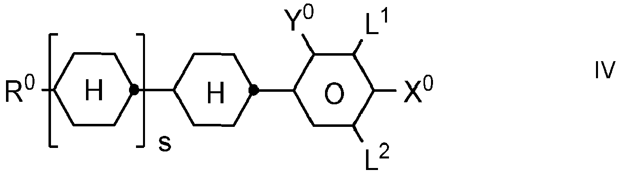 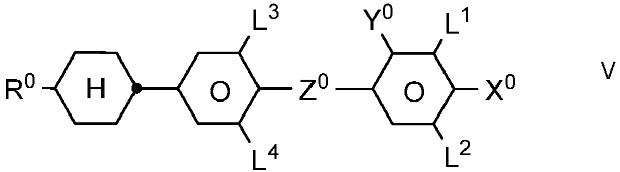 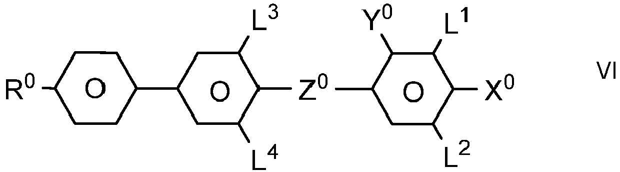 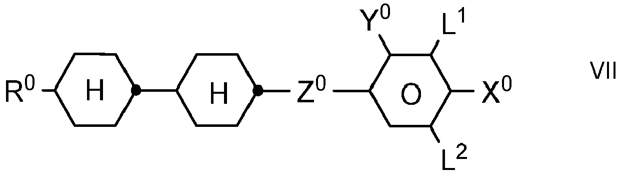 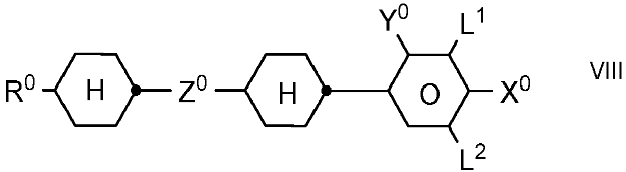 in which
- R⁰, X⁰ and L¹⁻⁵: have the meanings indicated in Formulae II and III,
- Z⁰: denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in Formulae V and VI also a single bond, in Formulae V and VIII also -CF₂O-, and
- s: denotes 0 or 1.

The compounds of the Formula IV are preferably selected from the following formulae: 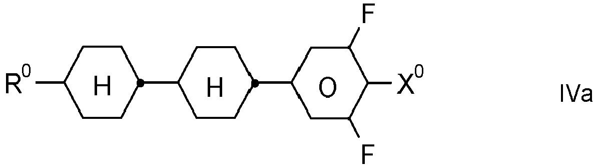 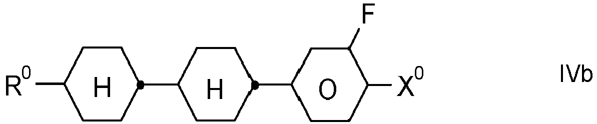 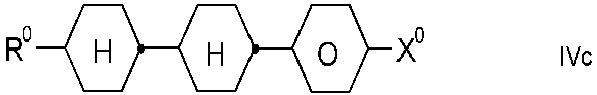 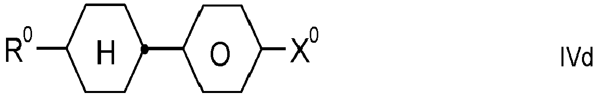 in which R⁰ and X⁰ have the meanings indicated in Formulae II and III.

R⁰ preferably denotes alkyl having 1 to 6 C atoms. X⁰ preferably denotes F or OCF₃, furthermore OCF=CF₂ or CI;

The compounds of the Formula IVa are preferably selected from the following subformula:

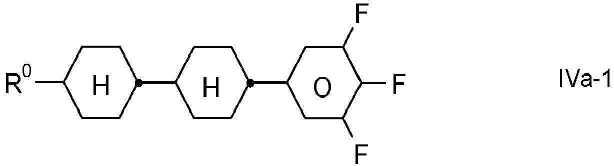

The compounds of the Formula IVb are preferably represented by the following formula:

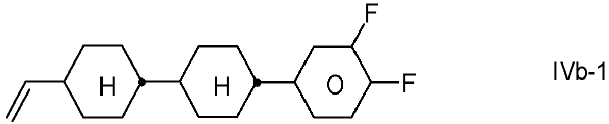

The compounds of the Formula IVc are preferably selected from the following subformula: 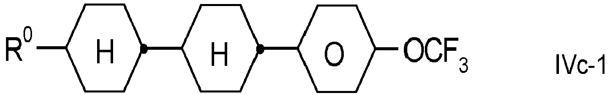 in which R⁰ has the meanings indicated in Formula II and is preferably propyl or pentyl.

The compound(s) of the Formula IVc, in particular of the Formula IVc-1, is (are) preferably employed in the mixtures according to the invention in amounts of 1-20% by weight, particularly preferably 2-15% by weight.

The compounds of the Formula V are preferably selected from the following subformulae: 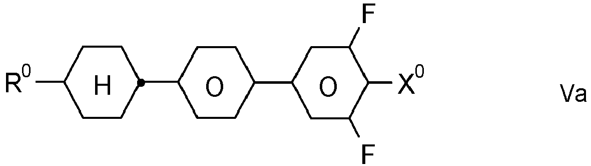 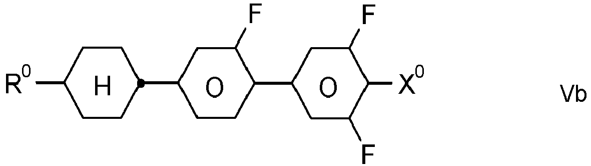 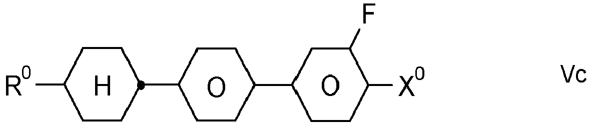 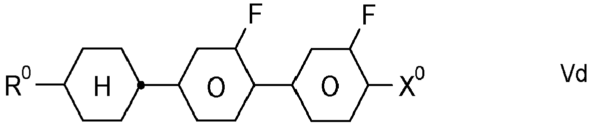 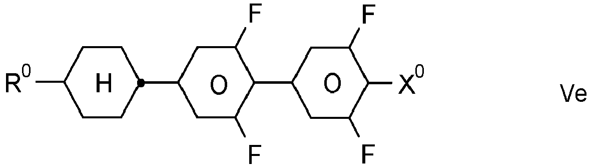 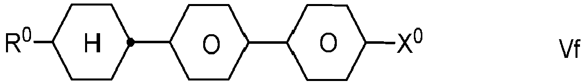 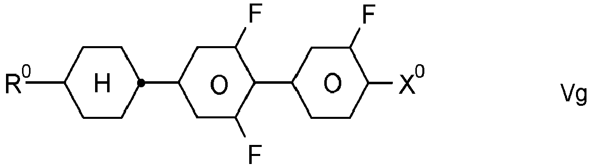 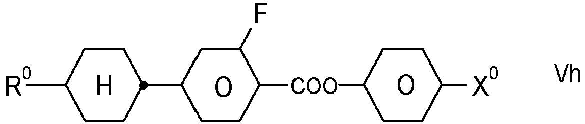 in which R⁰ and X⁰ have the meanings indicated in Formula II.

R⁰ preferably denotes alkyl having 1 to 6 C atoms. X⁰ preferably denotes F and OCF₃, furthermore OCHF₂, CF₃, OCF=CF₂ and OCH=CF₂;

The compounds of the Formula VI are preferably selected from the following subformulae: 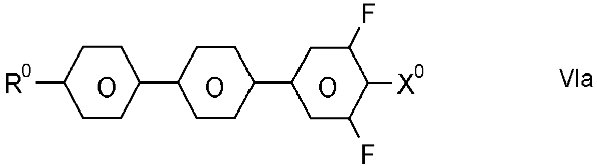 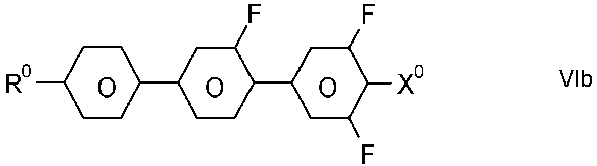 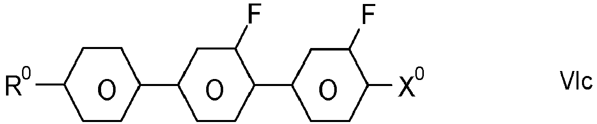 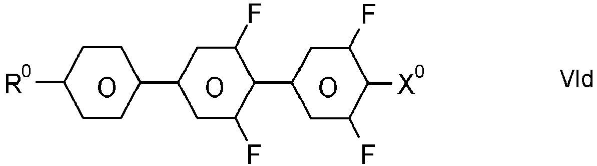 in which R⁰ and X⁰ have the meanings indicated in Formula II.

R⁰ preferably denotes alkyl having 1 to 6 C atoms. X⁰ preferably denotes F, furthermore OCF₃, CF₃, CF=CF₂, OCHF₂ and OCH=CF₂ .

The compounds of the Formula VII are preferably selected from the following subformulae: 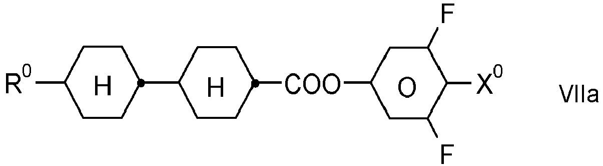 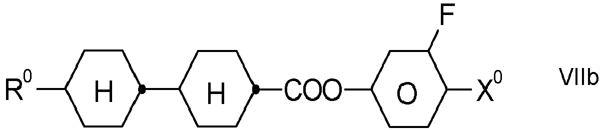 in which R⁰ and X⁰ have the meanings indicated in Formula II.

R⁰ preferably denotes alkyl having 1 to 6 C atoms. X⁰ preferably denotes F, furthermore OCF₃, OCHF₂ and OCH=CF₂ .

In some embodiments, the LC medium may additionally comprise one or more compounds selected from the following formulae: 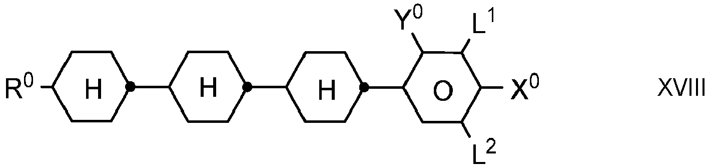 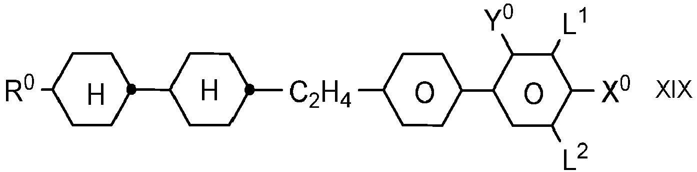 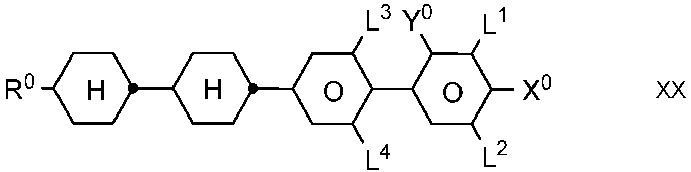 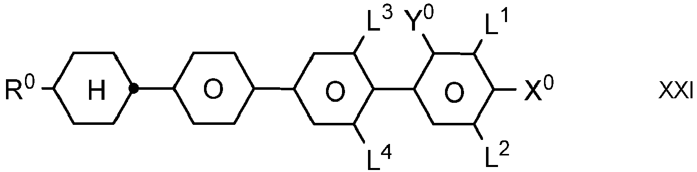 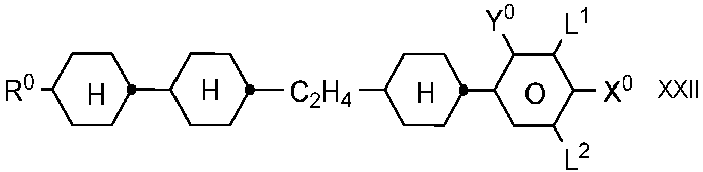 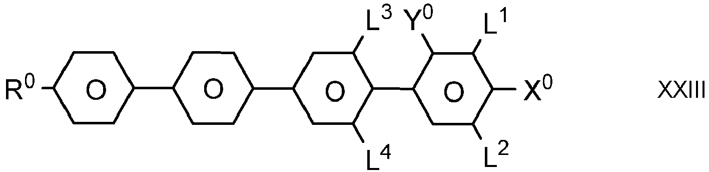 in which
- R⁰ and X⁰: each, independently of one another, have one of the meanings indicated in Formula II, wherein R⁰ preferably denotes alkyl, alkoxy, oxaalkyl, fluoroalkyl or alkenyl, each having up to 6 C atoms and X⁰ is preferably F, Cl, CF₃, OCF₃ or OCHF₂ ,
- L¹⁻⁴: each, independently of one another, denote H or F,
- Y⁰: denotes H or CH₃, preferably H.

Very preferably, the LC medium according to the invention comprises one or more compounds of the Formula XXa, 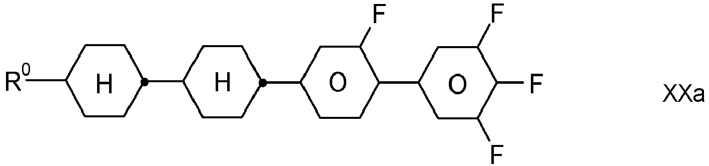 in which R⁰ has the meanings indicated in Formula LP1. R⁰ preferably denotes straight-chain alkyl, in particular ethyl, *n*-propyl, *n*-butyl or *n*-pentyl and very particularly preferably *n*-propyl.

The compound(s) of the Formula XX, in particular of the Formula XXa, is (are) preferably employed in the mixtures according to the invention in amounts of 0-15% by weight, particularly preferably 1-10% by weight.

Very preferably, the LC medium according to the invention comprises one or more compounds of the Formula XXla, 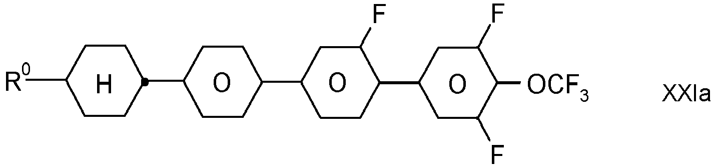 in which R⁰ has the meanings indicated in Formula LP1. R⁰ preferably denotes straight-chain alkyl, in particular ethyl, *n*-propyl, *n*-butyl or *n*-pentyl and very particularly preferably *n*-propyl.

The compound(s) of the Formula XXI, in particular of the Formula XXIa, is (are) preferably employed in the mixtures according to the invention in amounts of 1-15% by weight, particularly preferably 2-10% by weight.

Further preferably, the LC medium according to the invention comprises one or more compounds of the Formula XXllla, 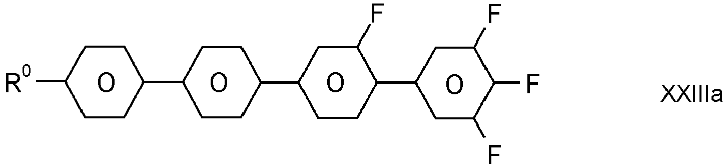 in which R⁰ has the meanings indicated in Formula LP1. R⁰ preferably denotes straight-chain alkyl, in particular ethyl, *n*-propyl, *n*-butyl or *n*-pentyl and very particularly preferably *n*-propyl.

The compound(s) of the Formula XXIII, in particular of the Formula XXllla, is (are) preferably employed in the mixtures according to the invention in amounts of 0.5-5% by weight, particularly preferably 0.5-2% by weight.

The LC medium additionally comprises one or more compounds of the Formula XXIV, 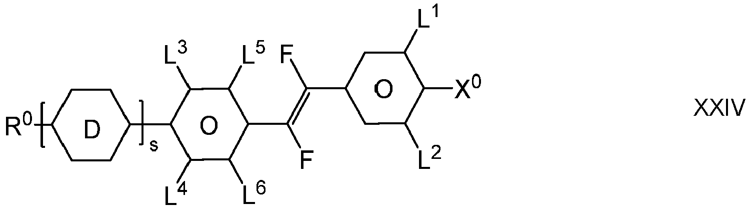 in which R⁰, X⁰ and L¹⁻⁶ have the meanings indicated in Formula III, s denotes 0 or 1, and

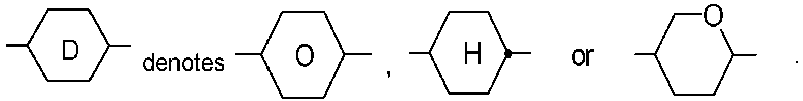

In the Formula XXIV, X⁰ may also denote an alkyl radical having 1 to 6 C atoms or an alkoxy radical having 1 to 6 C atoms. The alkyl or alkoxy radical is preferably straight-chain.

R⁰ preferably denotes alkyl having 1 to 6 C atoms. X⁰ preferably denotes F.

The compounds of the Formula XXIV are preferably selected from the following subformulae: 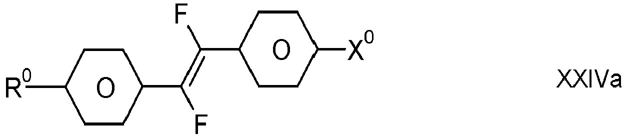 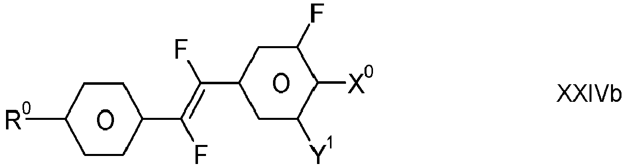 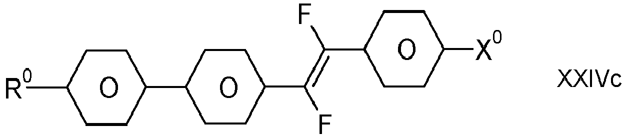 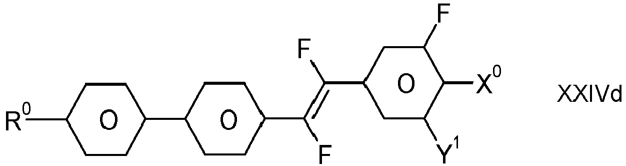 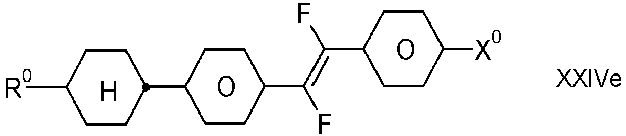 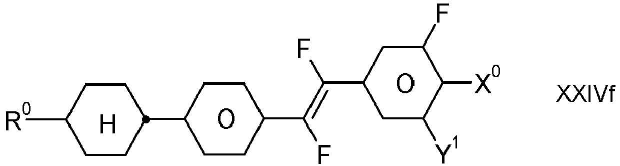 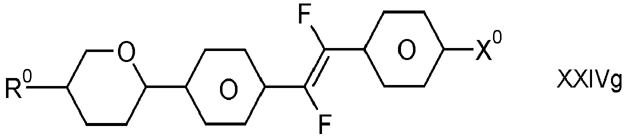 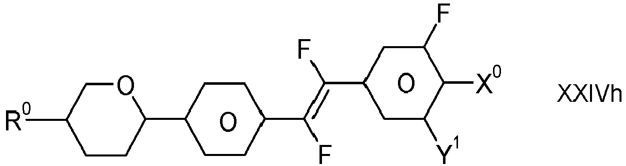 in which R⁰, X⁰ and Y¹ have the meanings indicated in Formula III. R⁰ preferably denotes alkyl having 1 to 6 C atoms. X⁰ preferably denotes F, and Y¹ is preferably F. 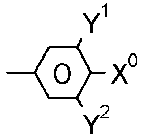 is preferably 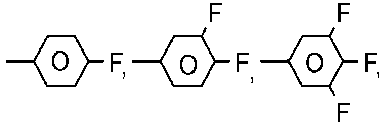 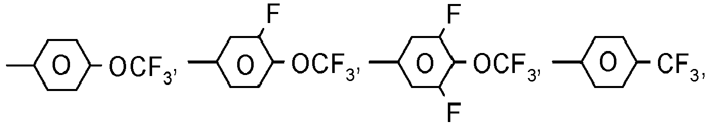 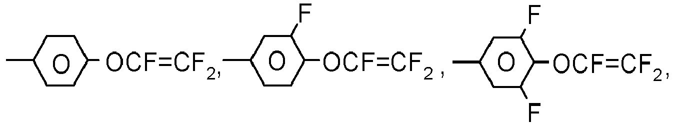 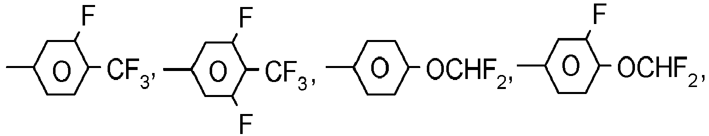 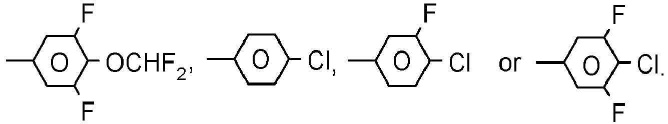 R⁰ is straight-chain alkyl having 1 to 6 C atoms or alkenyl having 2 to 6 C atoms.

The LC medium may further comprise one or more compounds of the following formulae: 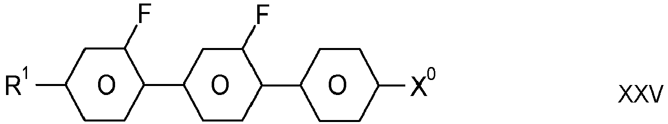 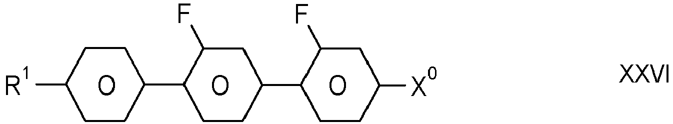 in which R¹ and X⁰ have the meanings indicated in Formula LP2 for R⁰ and X², respectively. R¹ preferably denotes alkyl having 1 to 6 C atoms. X⁰ preferably denotes F or CI. In the Formula XXIV, X⁰ very particularly preferably denotes Cl.

The LC medium may also comprise one or more compounds of the following formulae: 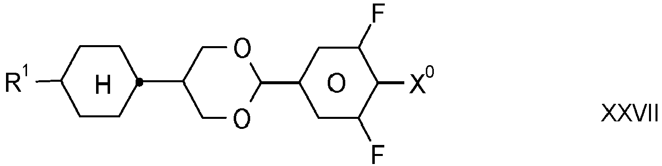 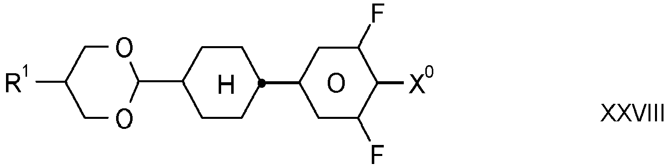 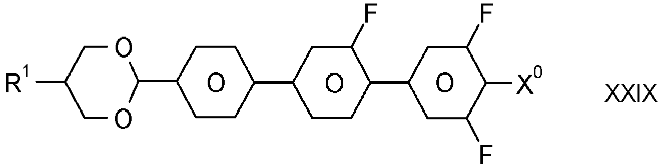 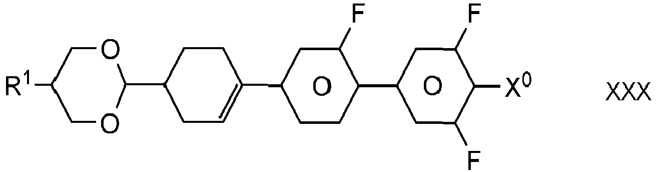 in which R¹ and X⁰ have the meanings indicated in Formula LP2 for R⁰ and X², respectively. R¹ preferably denotes alkyl having 1 to 6 C atoms. X⁰ preferably denotes F. The LC medium according to the invention particularly preferably comprises one or more compounds of the Formula XXIX in which X⁰ preferably denotes F.

The compound(s) of the Formulae XXVI - XXIX is (are) preferably employed in the LC medium according to the invention in amounts of 1-20% by weight, particularly preferably 1-15% by weight. Particularly preferred LC medium comprise at least one compound of the Formula XXIX.

Very preferably, the LC medium according to the invention comprises one or more compounds of the Formula XXIXa: 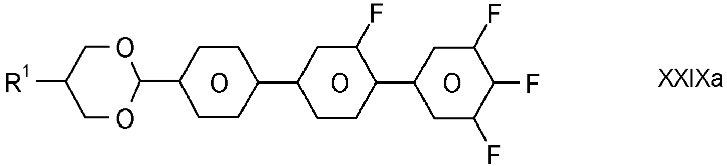 in which R¹ has the meanings indicated in Formula LP1 for R⁰, and preferably denotes straight-chain alkyl, in particular ethyl, *n*-propyl, *n*-butyl or *n*-pentyl and very particularly preferably *n*-propyl.

The compound(s) of the Formula XXIXa is (are) preferably employed in the LC medium according to the invention in amounts of 1-15% by weight, particularly preferably 2-10% by weight.

The LC medium may further comprise one or more compounds of the following pyrimidine or pyridine compounds of the formulae: 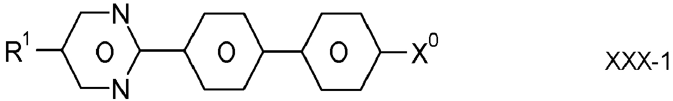 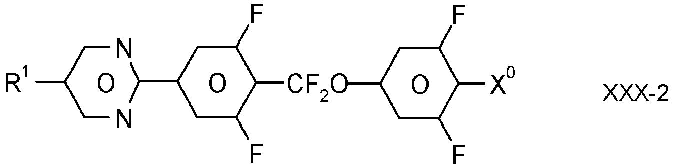 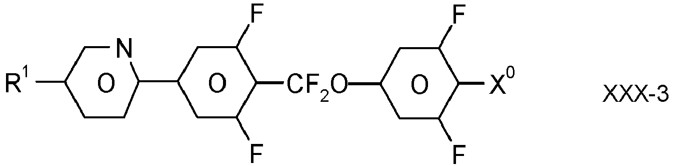 in which R¹ and X⁰ have the meanings indicated in Formula LP2 for R⁰ and X², respectively. R¹ preferably denotes alkyl having 1 to 6 C atoms. X⁰ preferably denotes F. The LC medium according to the invention particularly preferably comprises one or more compounds of the Formula XXX-1, in which X⁰ preferably denotes F. The compound(s) of the Formulae XXX-1 to XXX-3 is (are) preferably

employed in the mixtures according to the invention in amounts of 1-20% by weight, particularly preferably 1-15% by weight.

In one preferred embodiment according to the present invention, the LC medium contains, in addition to the compounds of the Formulae LP1 and/or LP2 and ST, one or more compounds selected from the Formulae Y and B: 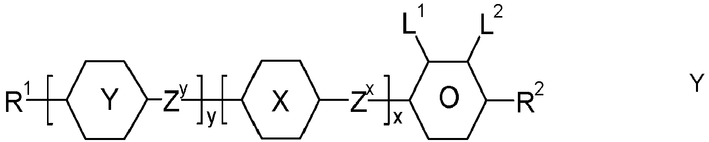 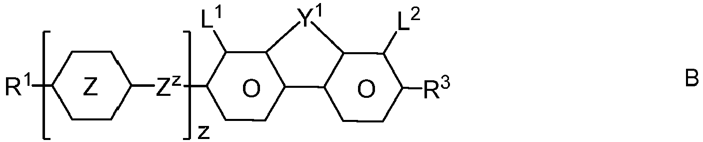 in which the individual radicals, on each occurrence identically or differently, and each, independently of one another, have the following meanings: 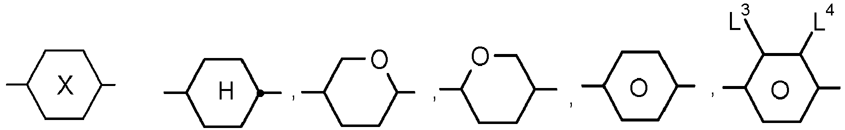 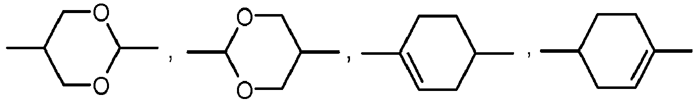 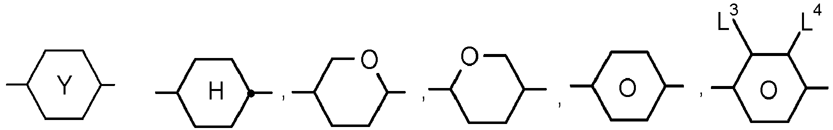 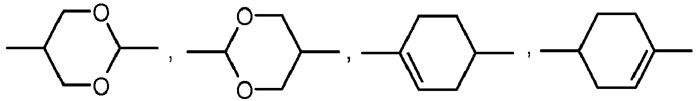 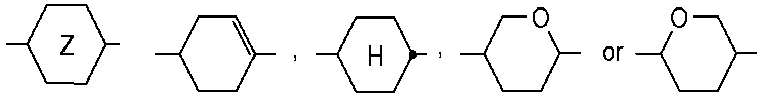
- R¹, R²: one of the meanings given for R⁰ in Formula LP1,
- R³: one of the meanings given for R¹,
- L¹⁻⁴: H, F or CI, preferably H or F, very preferably F,
- Y¹: O or S,
- Z^{x}, Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
- Z^{z}: CH₂O or a single bond,
- x, y: 0, 1 or 2, with x + y ≤ 3,
- z: 0 or 1,
wherein in Formula B the dibenzofuran or dibenzothiophene group may also be further substituted by a methyl or methoxy group, and
wherein the compounds of the Formula Y contain at least one substituent L¹⁻⁴ that is F or CI, preferably F.

Preferably, the LC medium according to this first preferred embodiment contains one or more compounds of the Formulae LP1 and/or LP2 and ST, one or more compounds selected from Formulae Z1, Z2 and Z3, and one or more compounds selected from Formulae Y and B.

The LC media according to this first preferred embodiment are especially suitable for use in LC displays of the HB-FFS or PS-HB-FFS mode.

In a second preferred embodiment according to the present invention, the LC medium does not contain a compound of the Formulae Y or B.

In the compounds of the Formula Y and its subformulae, R¹ and R² preferably denote straight-chain alkyl or alkoxy having 1 to 6 C atoms, furthermore alkenyl having 2 to 6 C atoms, in particular vinyl, 1E-propenyl, 1E-butenyl, 3-butenyl, 1E-pentenyl, 3E-pentenyl or 4-pentenyl.

In the compounds of the Formula Y and its subformulae, preferably both radicals L¹ and L² denote F. In another preferred embodiment of the present invention, in the compounds of the Formula Y and its subformulae one of the radicals L¹ and L² denotes F and the other denotes Cl.

In a preferred embodiment of the present invention, the LC medium contains one or more compounds of the Formula Y selected from the following subformulae: 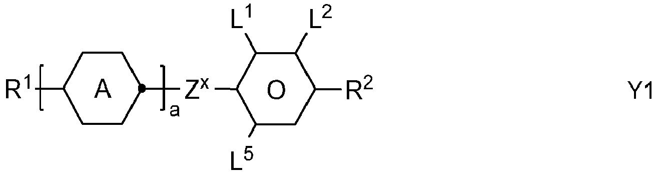 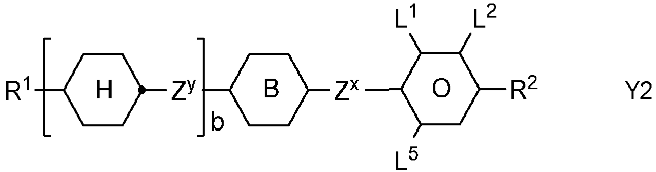 wherein L¹, L², R 1, R², Z^{x}, Z^{y} have the meanings given in Formula Y or one of the preferred meanings given above in Formula LP1,
L³, L⁴ denote F or CI, preferably F, and
L⁵ denotes a H atom or CH₃ , 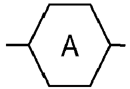 denotes 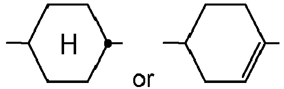 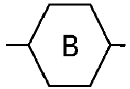 denotes 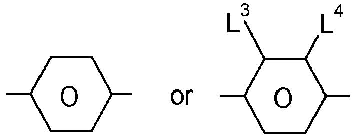
a denotes 1 or 2,
b denotes 0 or 1,

Preferably, in the compounds of the Formula Y1 and Y2 both L¹ and L² denote F or one of L¹ and L² denotes F and the other denotes C!, or both L³ and L⁴ denote F or one of L³ and L⁴ denotes F and the other denotes Cl.

Preferably, the LC medium comprises one or more compounds of the Formula Y1 selected from the group consisting of the following subformulae: 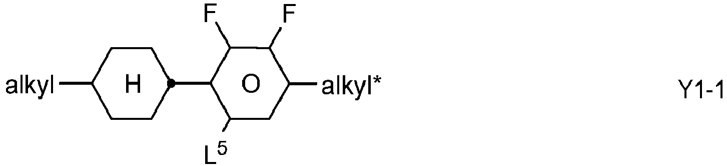 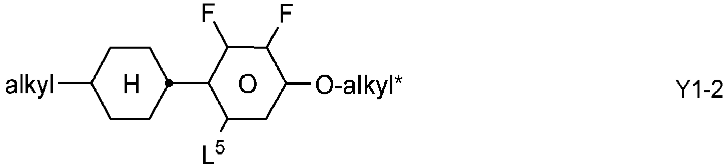 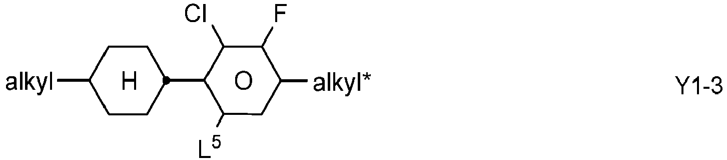 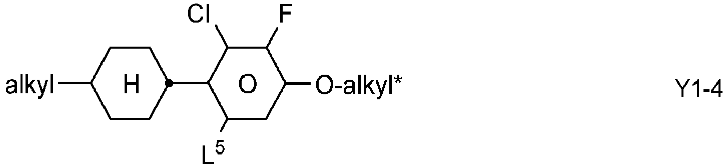 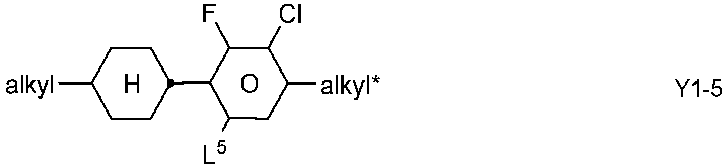 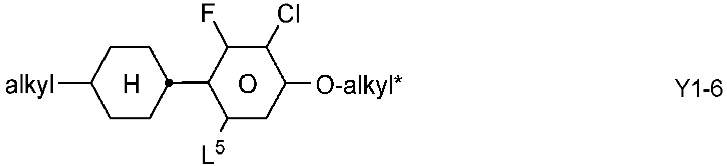 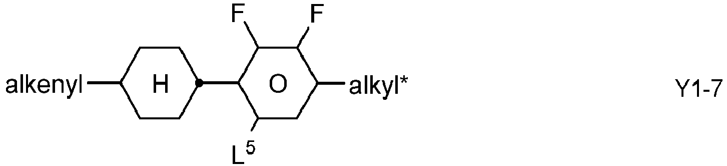 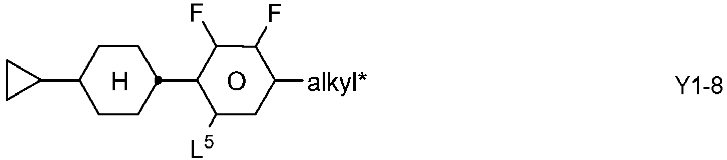 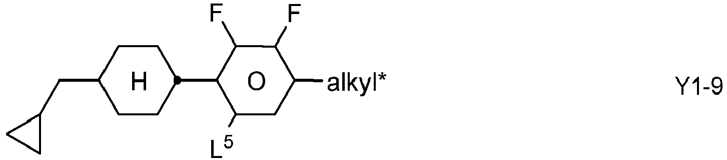 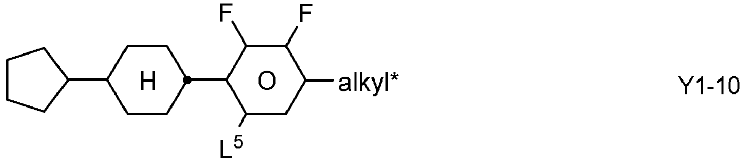 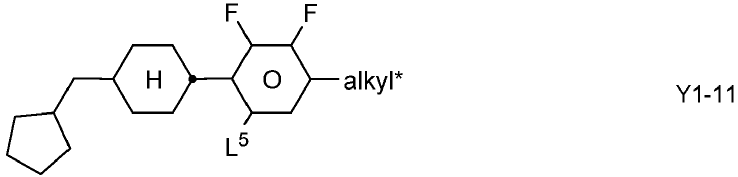 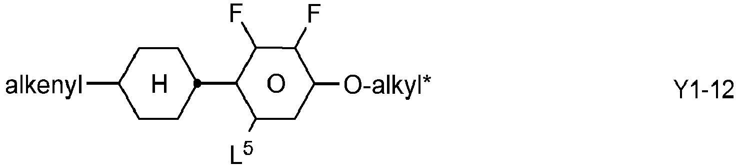 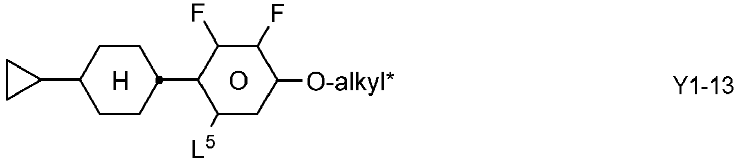 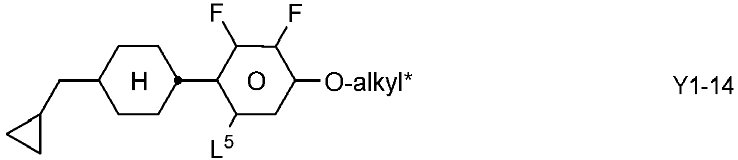 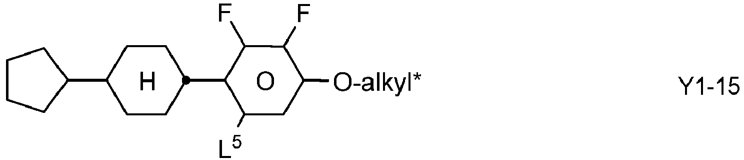 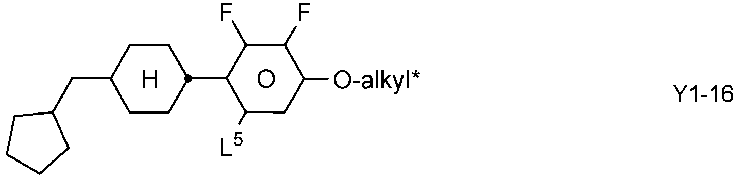 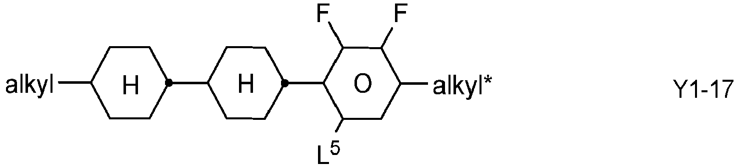 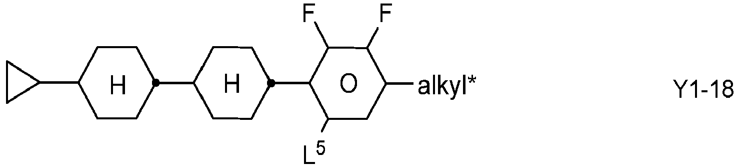 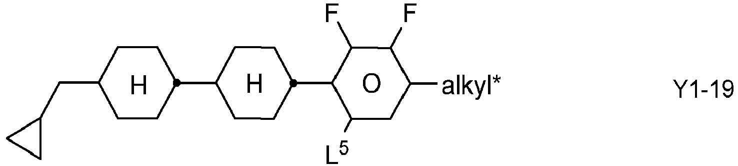 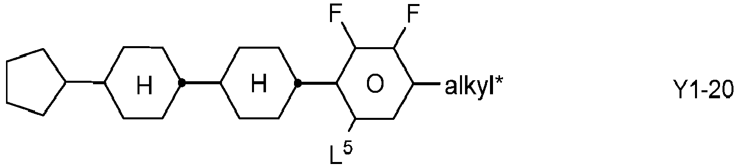 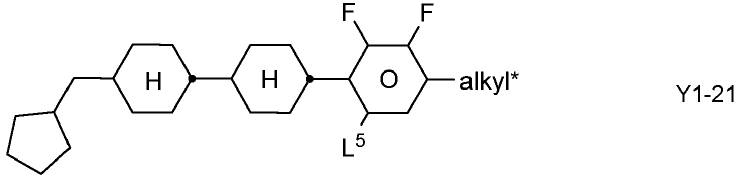 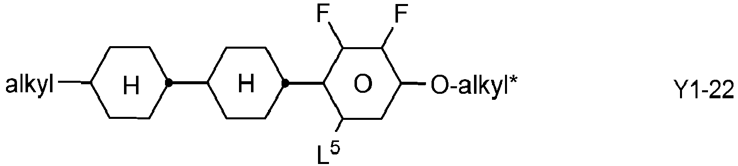 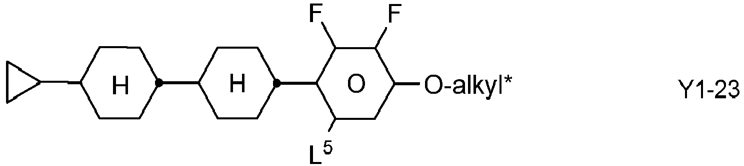 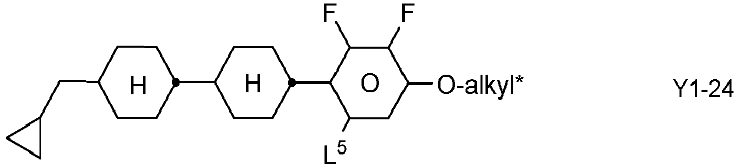 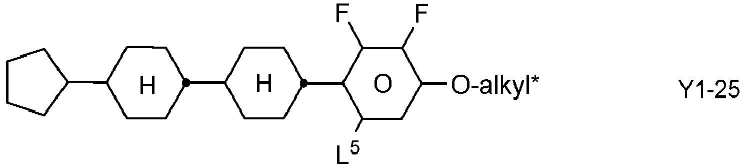 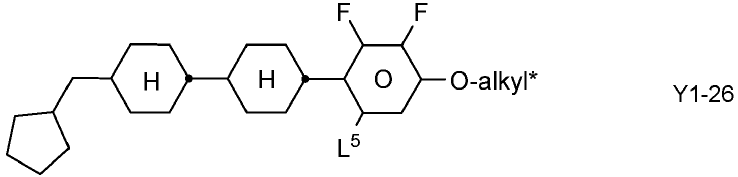 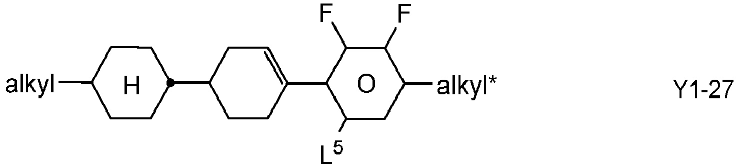 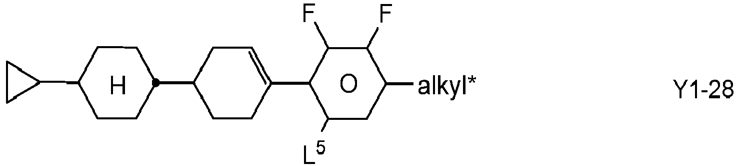 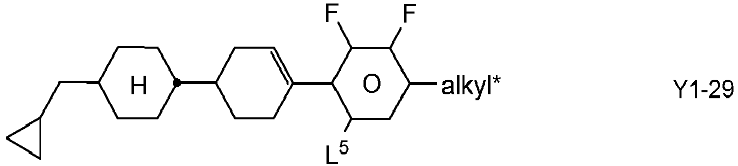 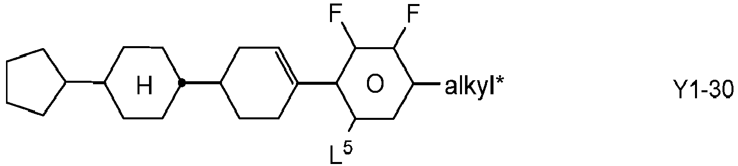 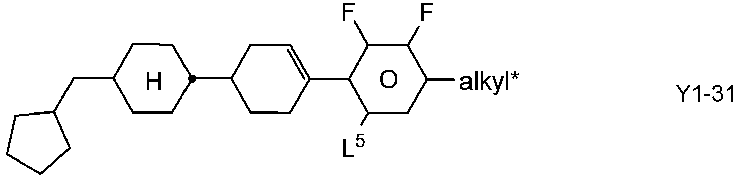 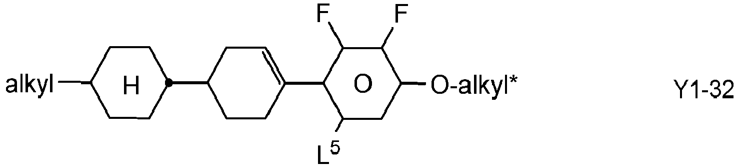 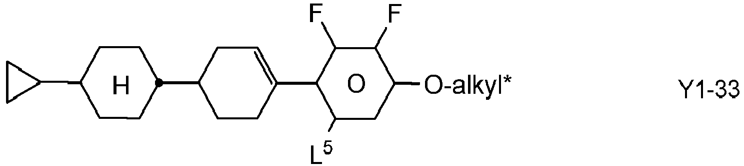 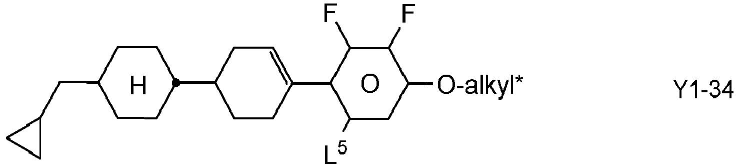 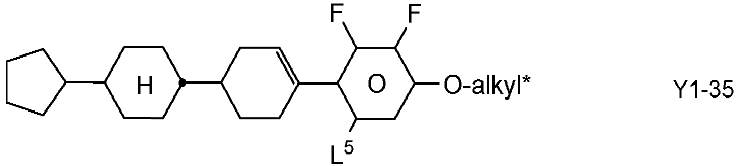 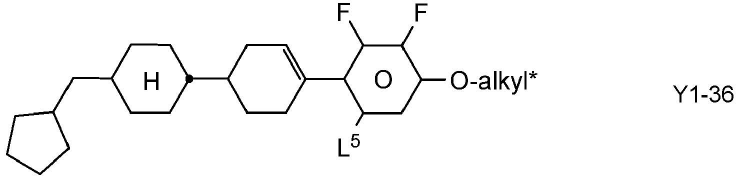 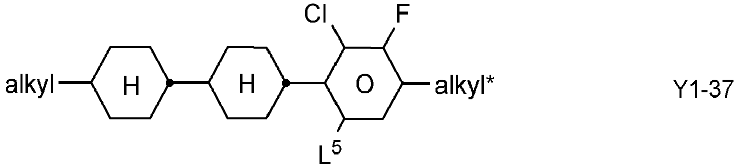 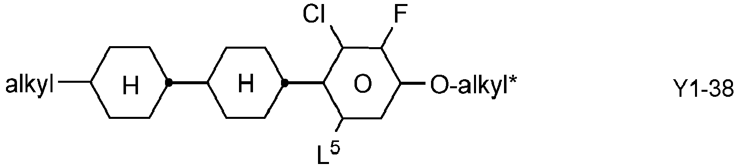 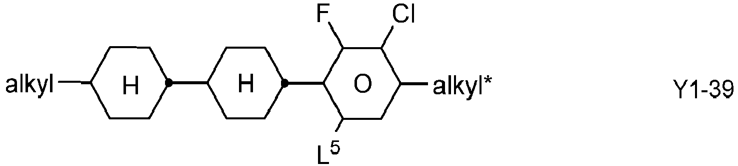 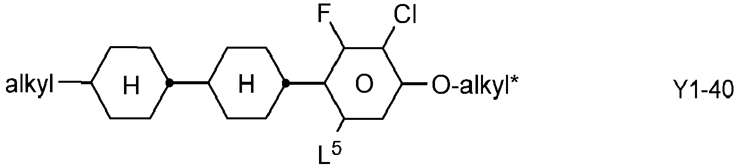 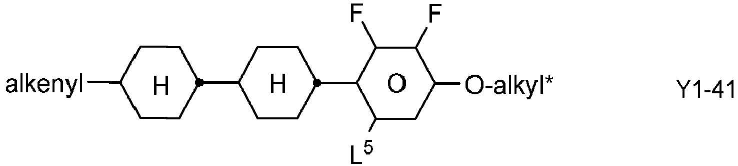 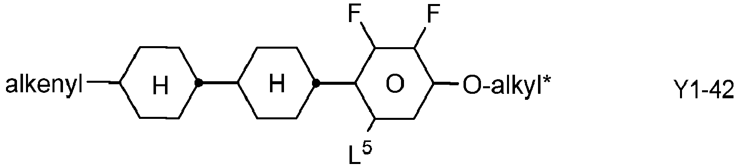 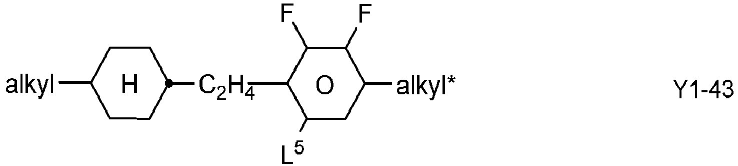 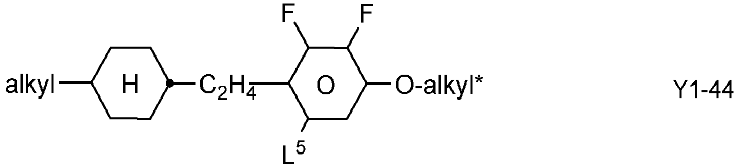 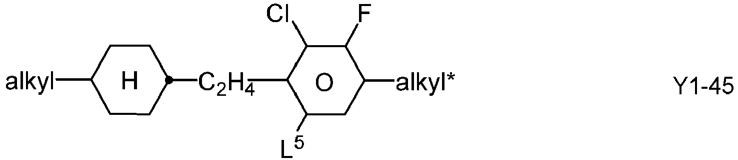 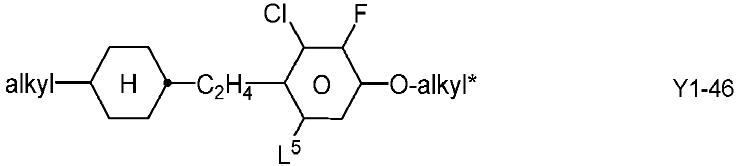 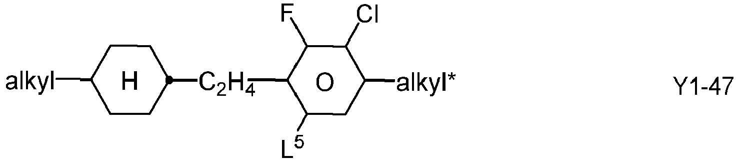 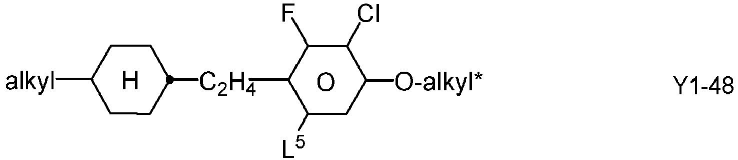 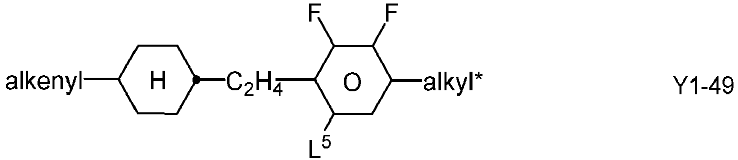 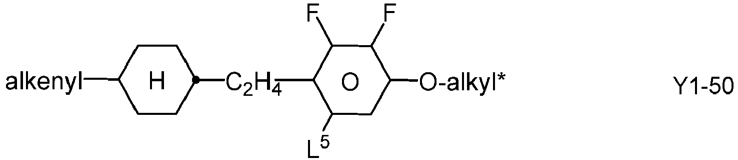 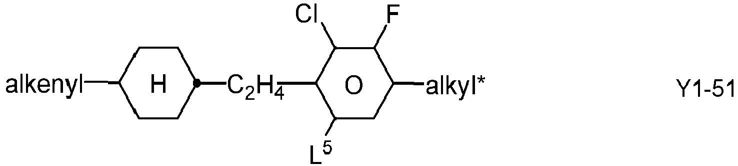 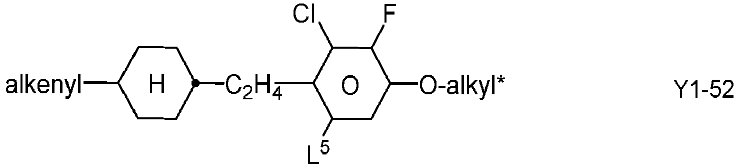 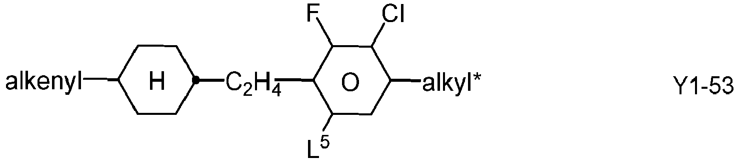 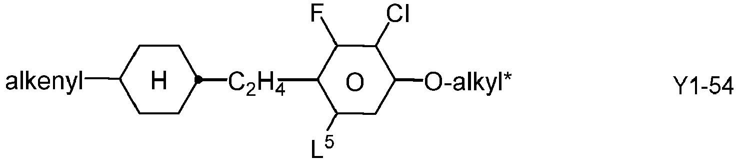 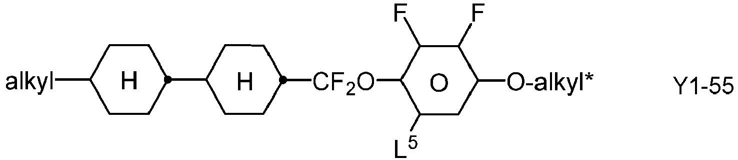 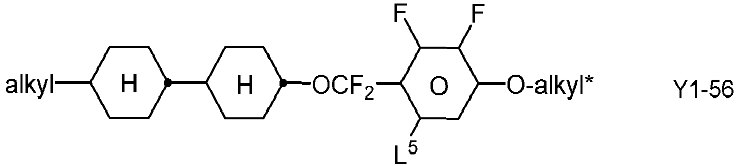 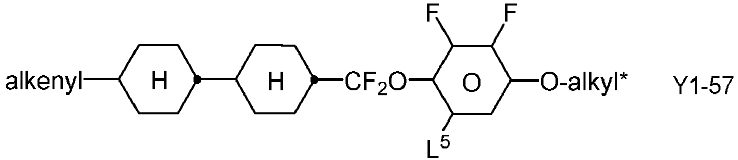 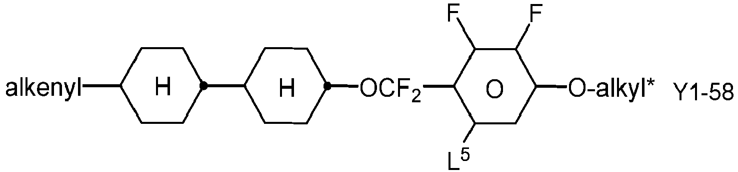 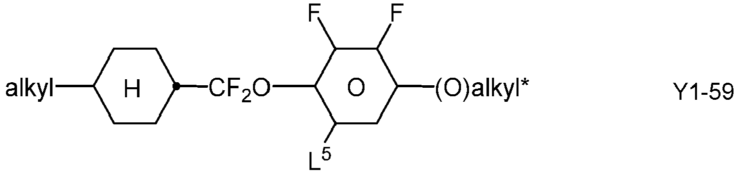 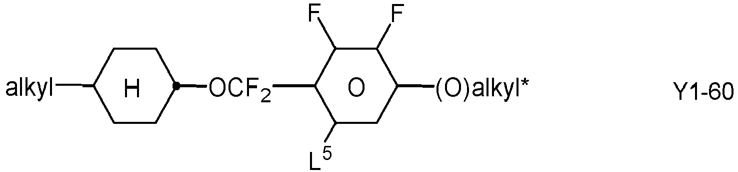 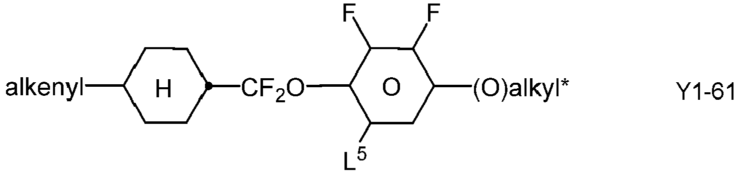 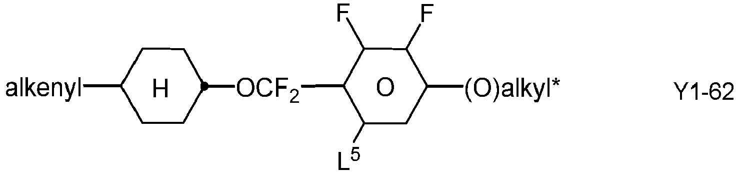 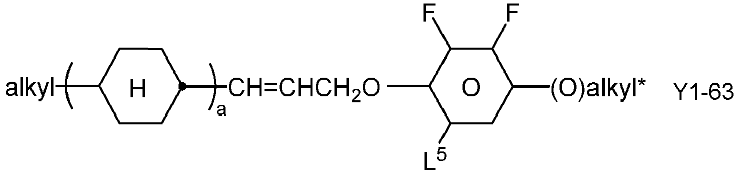 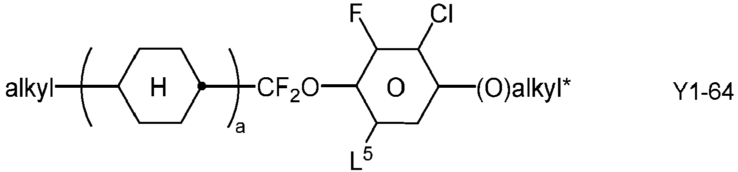 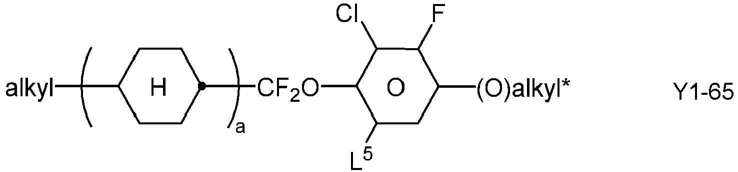 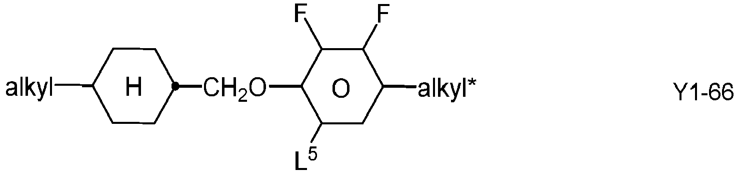 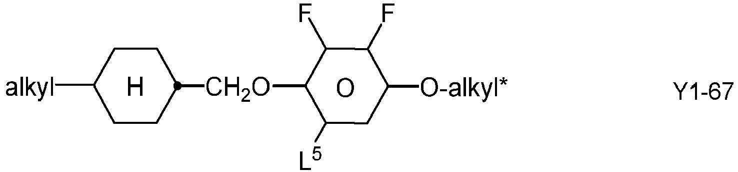 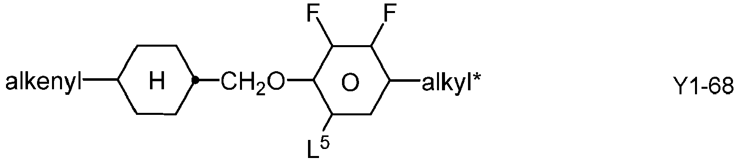 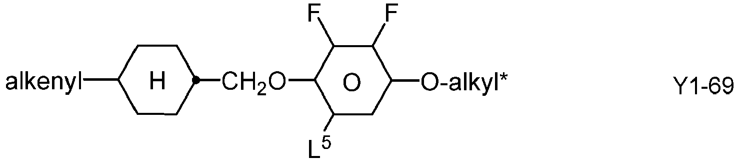 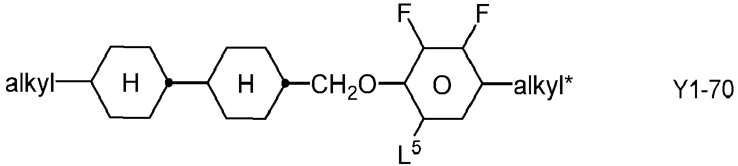 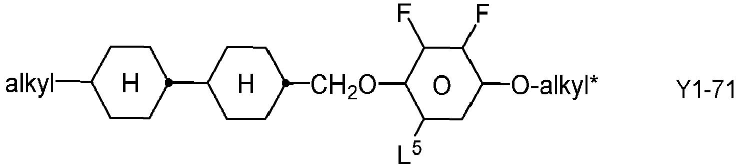 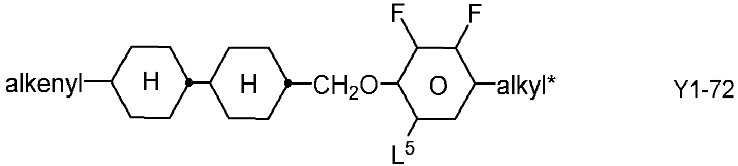 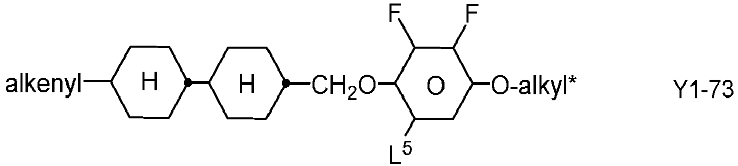 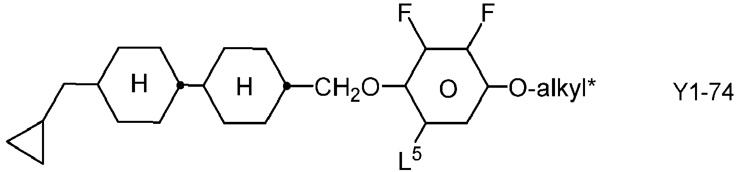 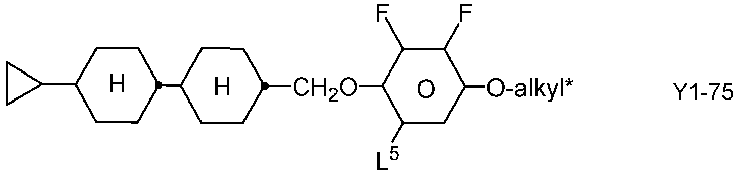 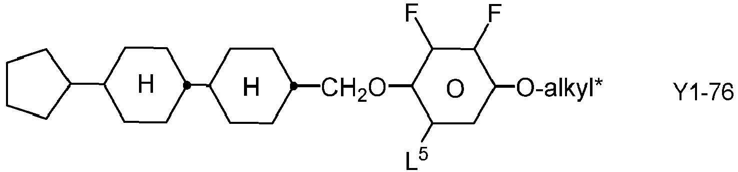 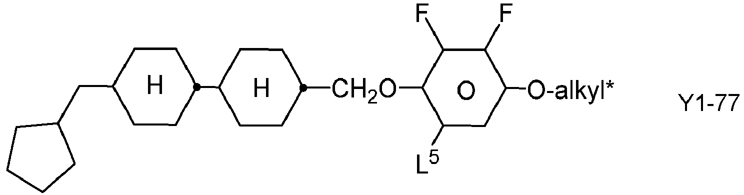 in which
a denotes 1 or 2,
*"alkyl"* and *"alkyl*"* each, independently of one another, denote a straight-chain alkyl radical having 1 to 6 C atoms,
*"alkenyl"* denotes a straight-chain alkenyl radical having 2 to 6 C atoms, and L⁵ denotes a H atom or CH₃ .
*"alkenyl"* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂- .

Very preferably, the LC medium contains one or more compounds of the Formula Y1 selected from Formulae Y1-1, Y1-2, Y1-7, Y1-12, Y1-17, Y1-22, Y1-40, Y1-41, Y1-42, Y1-44, Y1-50 and Y1-68. L⁵ preferably denotes a H atom.

Further preferably, the LC medium comprises one or more compounds of the Formula Y2 selected from the group consisting of the following subformulae: 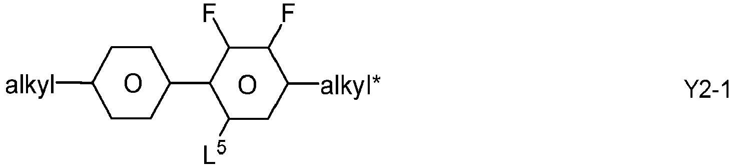 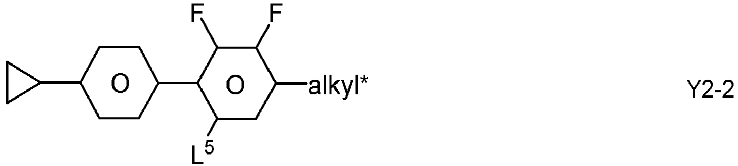 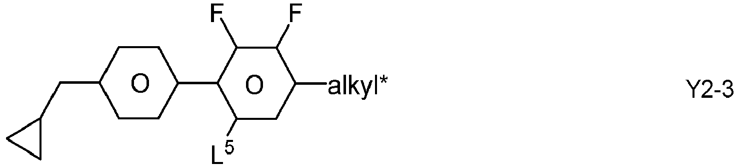 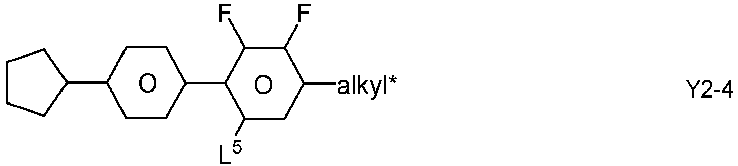 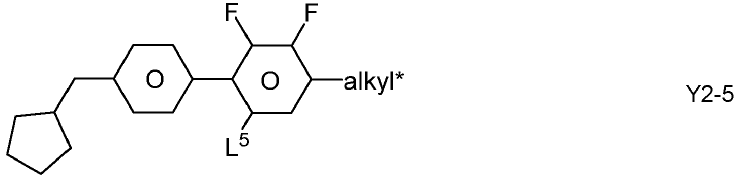 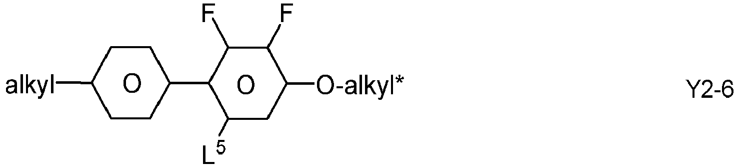 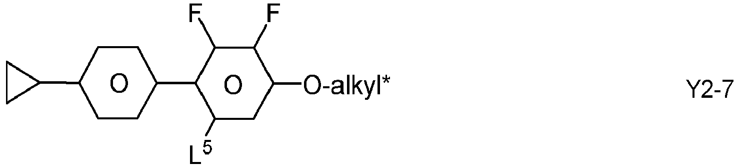 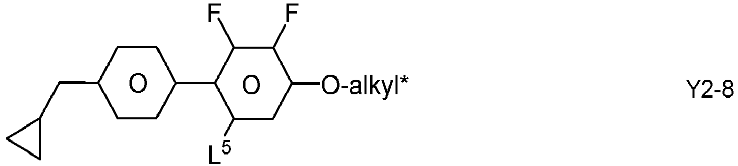 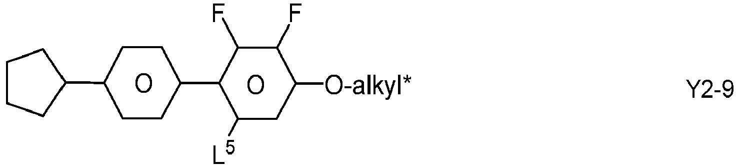 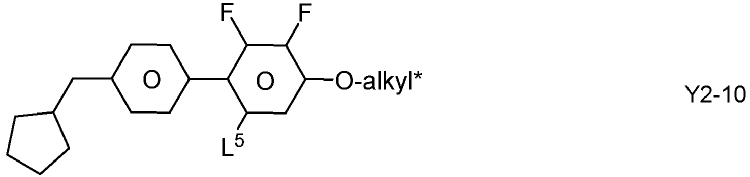 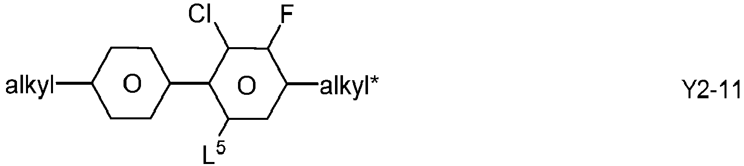 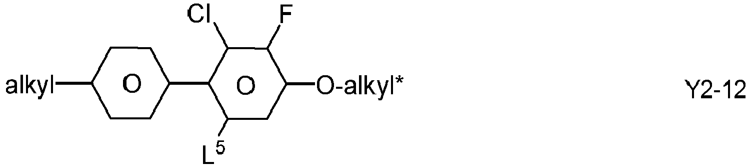 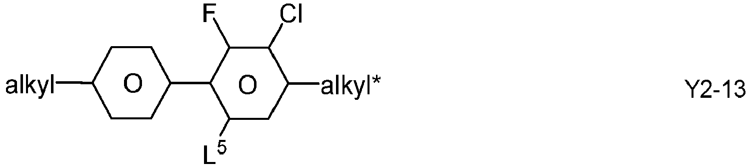 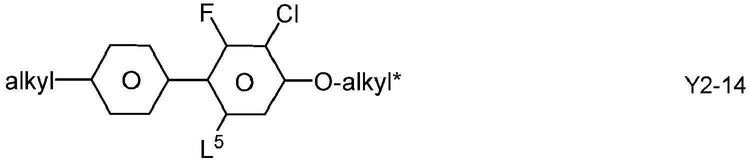 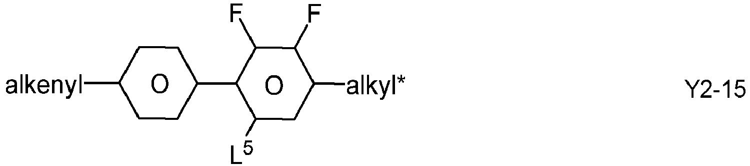 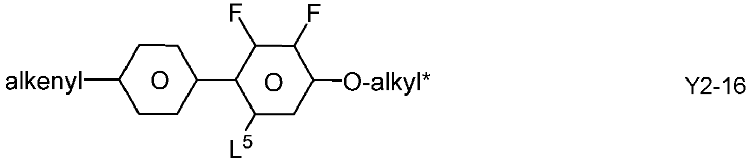 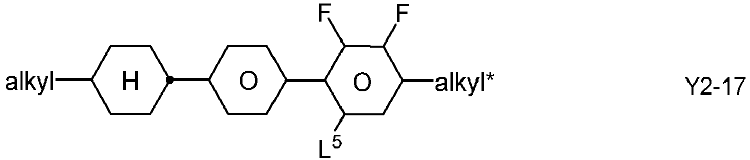 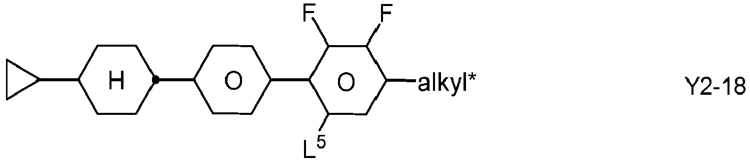 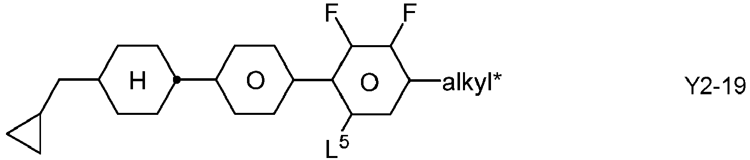 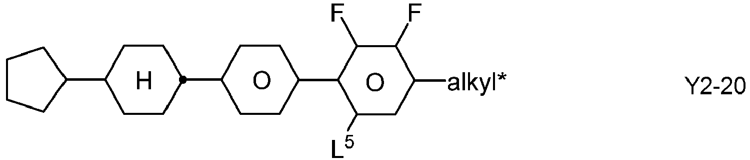 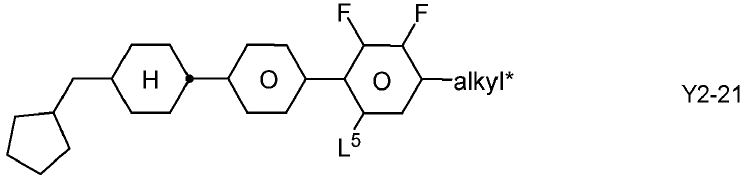 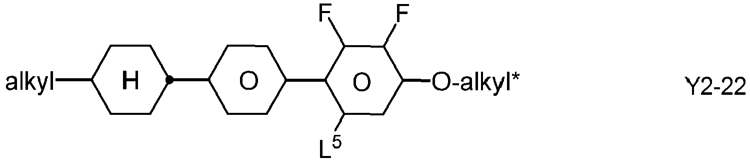 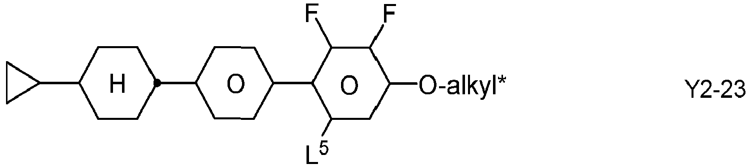 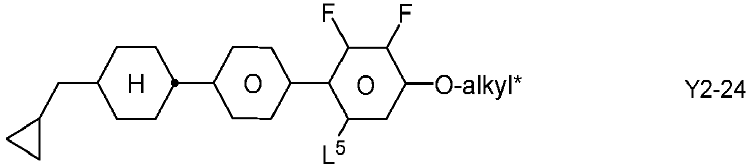 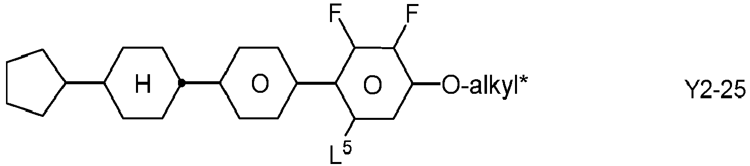 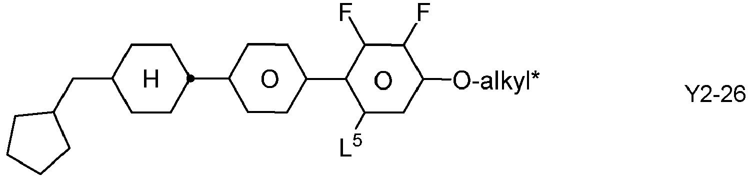 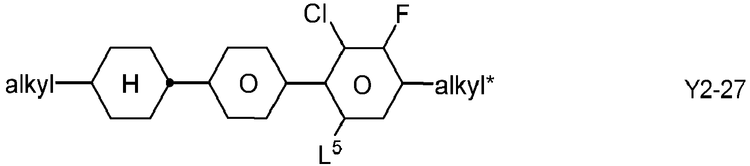 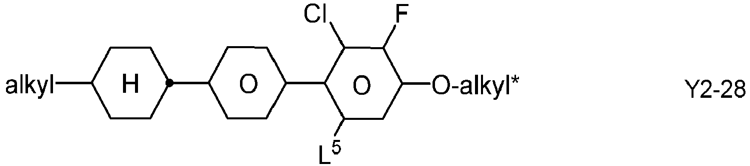 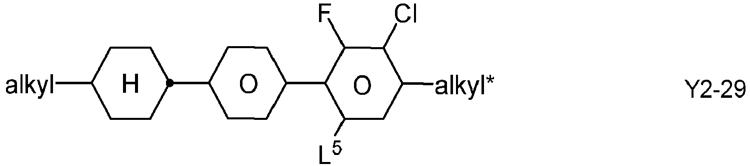 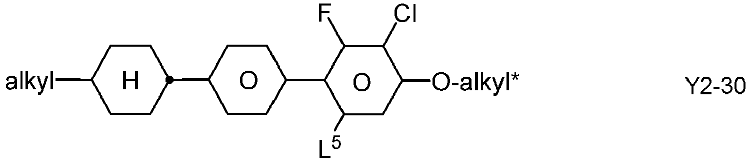 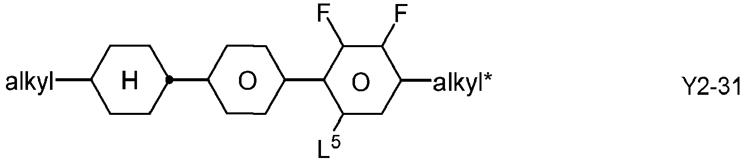 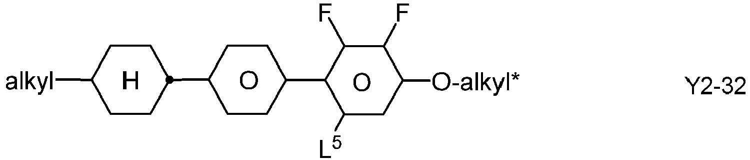 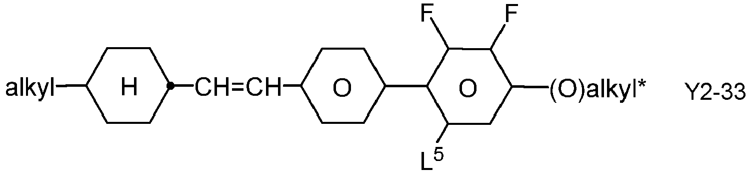 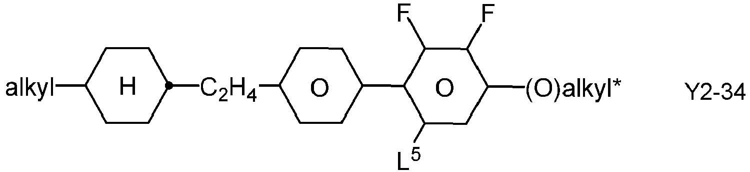 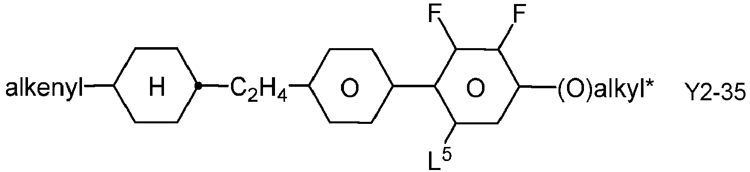 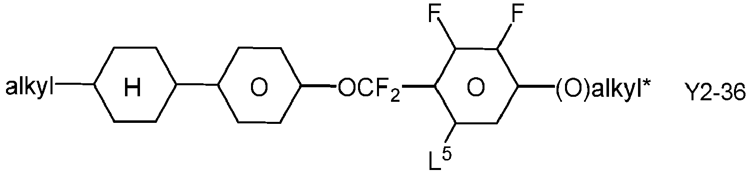 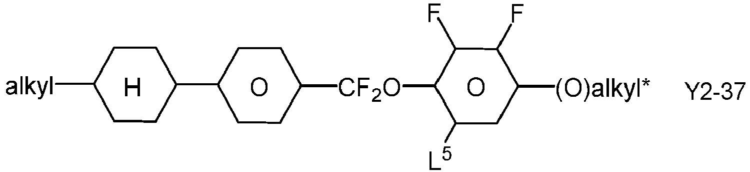 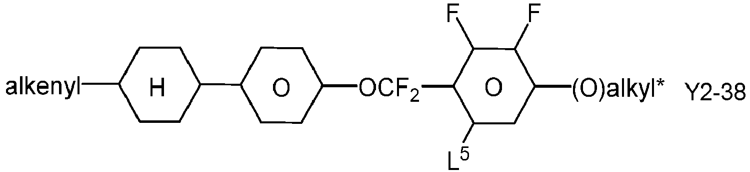 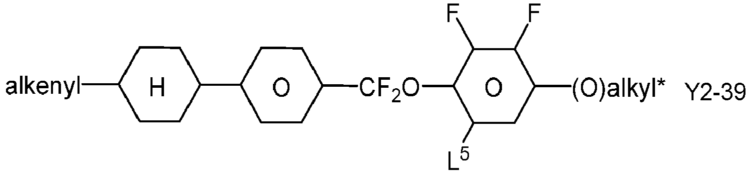 in which
*"alkyl"* and *"alkyl*"* each, independently of one another, denote a straight-chain alkyl radical having 1 to 6 C atoms, and
*"alkenyl"* denotes a straight-chain alkenyl radical having 2 to 6 C atoms, and (O) denotes an oxygen atom or a single bond, and
L⁵ denotes a H atom or CH₃, preferably a H atom.
*"alkenyl"* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably, the LC medium contains one or more compounds of the Formula Y2 selected from Formulae Y2-2 and Y2-10.

The proportion of the compounds of the Formula Y1 or its subformulae in the LC medium is preferably from 0 to 10% by weight.

The proportion of the compounds of the Formula Y2 or its subformulae in the LC medium is preferably from 0 to 10% by weight.

The total proportion of the compounds of the Formula Y1 and Y2 or their subformulae in the LC medium is preferably from 1 to 20%, very preferably from 2 to 15% by weight.

Preferably, the LC medium contains 1, 2 or 3 compounds of the Formula Y1 and Y2 or their subformulae, very preferably selected from Formulae Y1-2, Y1-22, Y1-66, Y1-70, Y2-6 and Y2-22.

In another preferred embodiment of the present invention, the LC medium contains one or more compounds of the Formula Y selected from the following subformula 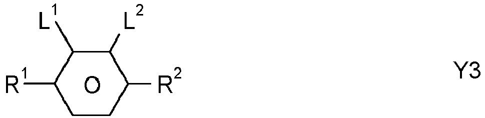 wherein L¹, L², R¹ and R² have one of the meanings given in Formula Y.

Preferred compounds of the Formula Y3 are selected from the group consisting of the following subformulae 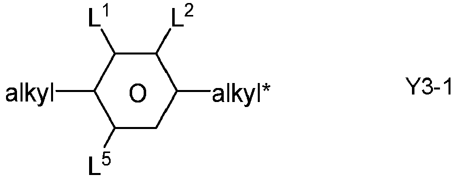 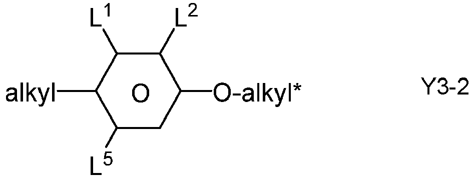 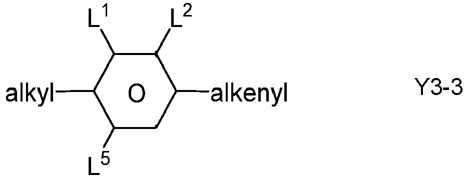 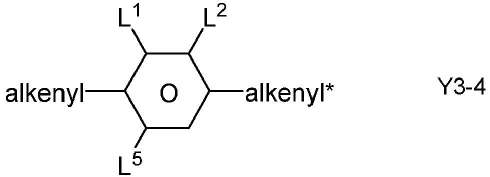 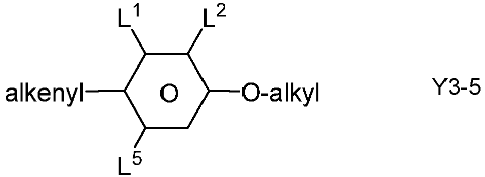 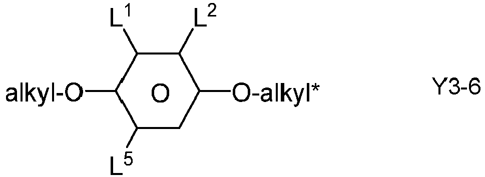 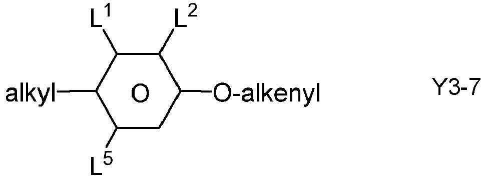 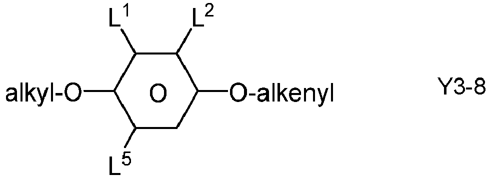 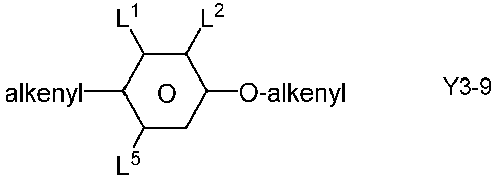 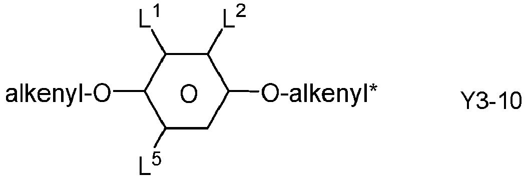 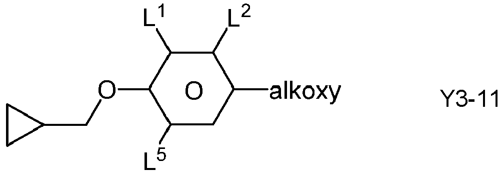 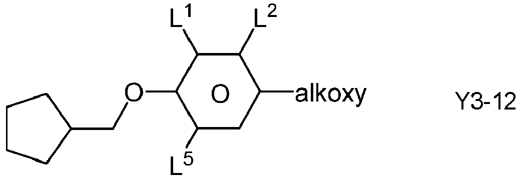 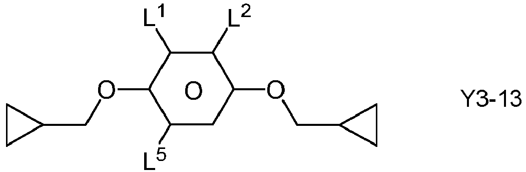 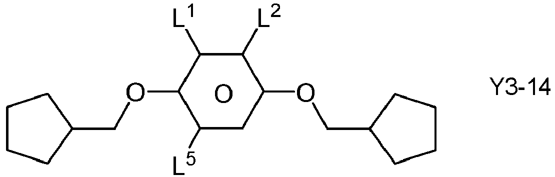 in which,
*"alkyl"* and *"alkyl*"* each, independently of one another, denote a straight-chain alkyl radical having 1 to 6 C atoms,
*"alkenyl"* and *"alkenyl*"* each, independently of one another, denote a straight-chain
alkenyl radical having 2 to 6 C atoms, and
O denotes an oxygen atom or a single bond.
*"alkenyl"* and *"alkenyl*"* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the Formula Y3 are selected from the group consisting of following subformulae: 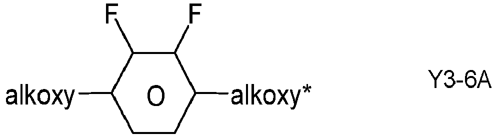 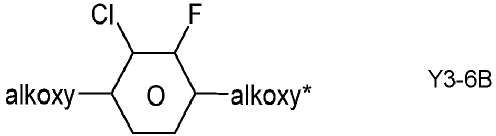 wherein *"alkoxy"* and *"alkoxy*"* each, independently of one another, preferably denote straight-chain alkoxy with 3, 4, or 5 C atoms.

Preferably, in the compounds of the Formula Y3 and its subformulae both L¹ and L² denote F. Further preferably in the compounds of the Formula Y3 one of the radicals L¹ and L² denotes F and the other denotes CI.

The proportion of the compounds of the Formula Y3 or its subformulae in the LC medium is preferably from 1 to 10%, very preferably from 1 to 6% by weight.

Preferably, the LC medium contains 1, 2 or 3 compounds of the Formula Y3 or its subformulae, preferably of the Formula Y3-6, very preferably of the Formula Y3-6A.

In another preferred embodiment the present invention, the LC medium contains one or more compounds of the Formula Y selected from the subformula Y4: 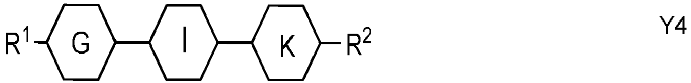 in which R¹ and R² each, independently of one another, have one of the meanings indicated above in Formula Y, and 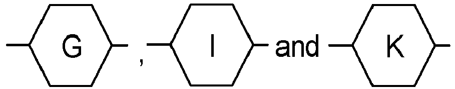 each, independently of one another, denote 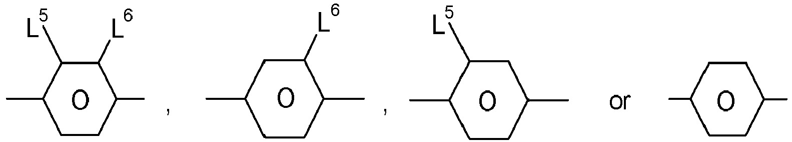 in which L⁵ denotes F or CI, preferably F, and L⁶ denotes F, Cl, OCF₃, CF₃, CH₃, CH₂F or CHF₂, preferably F, and preferably at least one of the rings G, I and K is different from unsubstituted 1,4-phenylene.

Preferred compounds of the Formula Y4 are selected from the group consisting of the following subformulae: 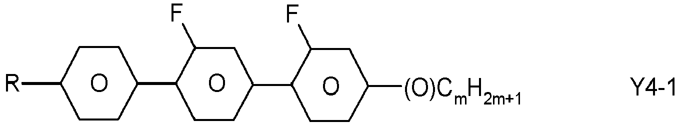 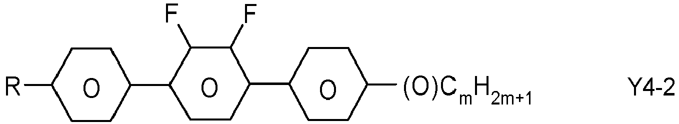 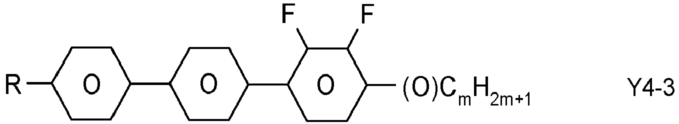 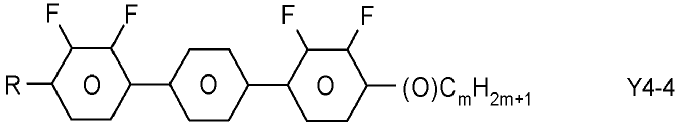 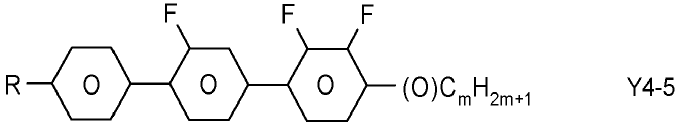 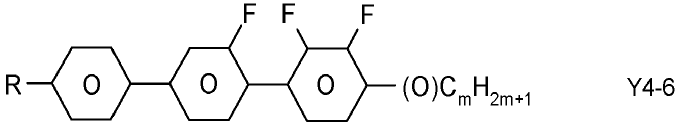 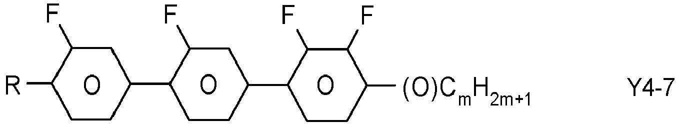 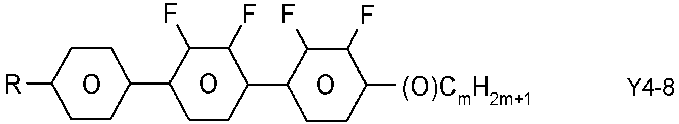 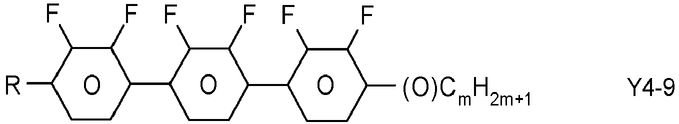 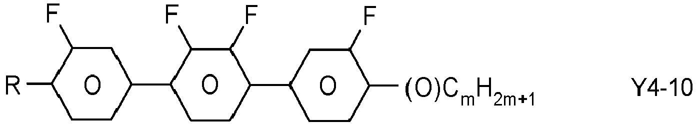 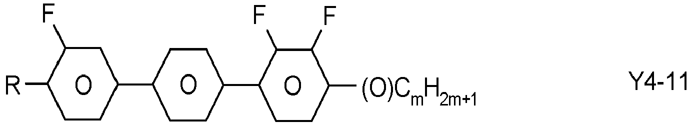 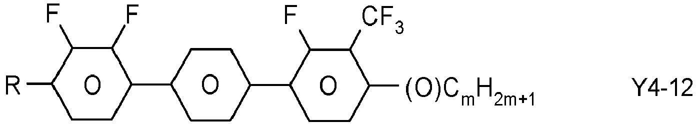 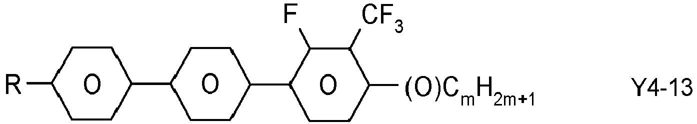 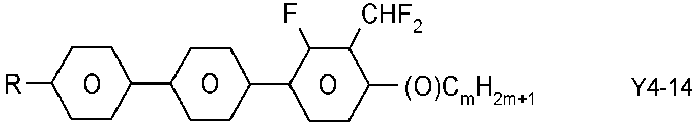 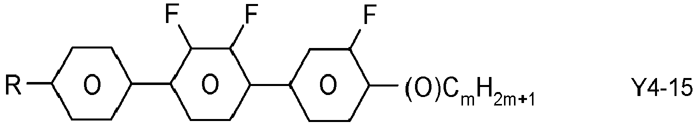 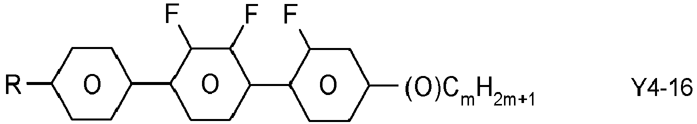 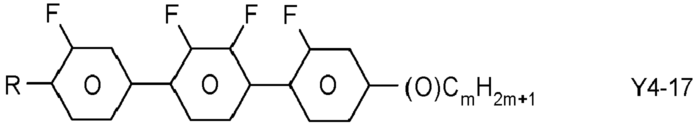 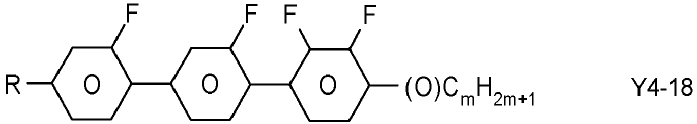 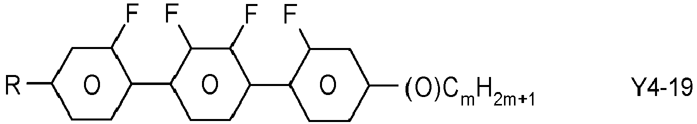 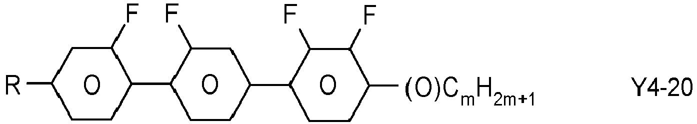 in which
- R: denotes a straight-chain alkyl or alkoxy radical having 1-7 C atoms,
- (O): denotes an oxygen atom or a single bond, and
- m: denotes an integer from 1 to 6.

R preferably denotes methyl, ethyl, propyl, butyl, pentyl, hexyl, methoxy, ethoxy, propoxy, butoxy or pentoxy.

The proportion of the compounds of the Formula Y4 or its subformulae in the LC medium is preferably from 1 to 10%, very preferably from 1 to 6% by weight.

Particularly preferred compounds are those of the subformulae: 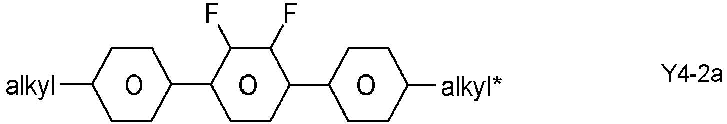 in which
- alkyl and alkyl*: each, independently of one another, denote a straight-chain alkyl radical having 1 to 6 C atoms, in particular ethyl, propyl or pentyl.

Use of the following compounds is particularly advantageous:

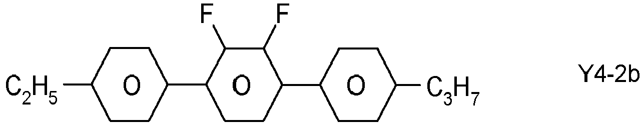

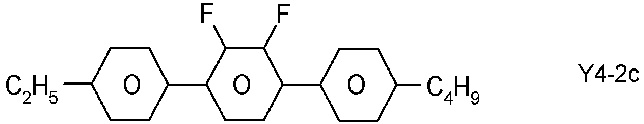

In another preferred embodiment the present invention, the LC medium contains one or more compounds of the Formula Y selected from the group consisting of the following subformulae: 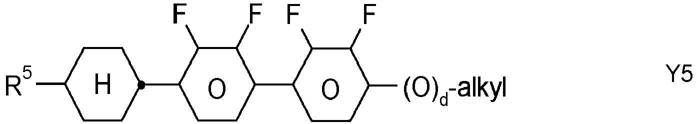 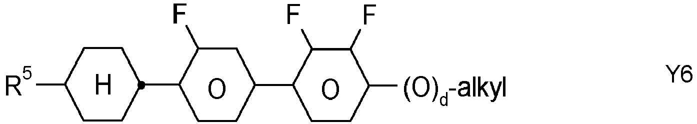 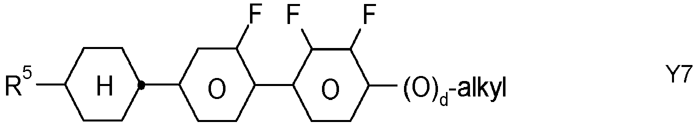 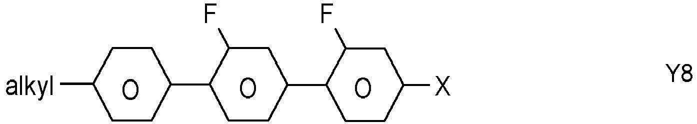 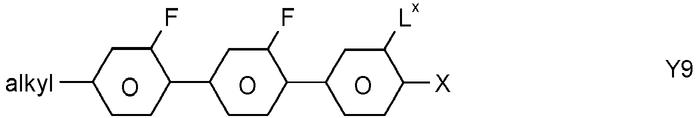 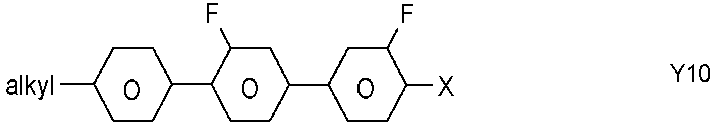 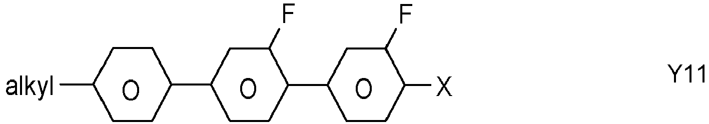 in which R⁵ has one of the meanings indicated above in Formula Y for R¹, "*alkyl*" denotes a straight-chain alkyl radical having 1 to 6 C atoms,
L^{x} denotes H or F,
X denotes F, Cl, OCF₃, OCHF₂ or OCH=CF₂,
d denotes 0 or 1, and
z and m each, independently of one another, denote an integer from 1 to 6.
R⁵ in these compounds is particularly preferably C₂₋₆-alkyl or -alkoxy or C₂₋₆-alkenyl, d is preferably 1. X in these compounds is particularly preferably F. The LC medium according to the invention preferably comprises one or more compounds of the above-mentioned formulae in amounts of ≥ 5% by weight.

Further preferred embodiments are indicated below:
- The LC medium comprises one or more compounds of the Formula Y selected from the following subformula: 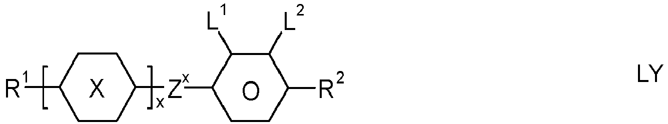
wherein R¹, R², L 1, L², X, x and Z^{x} have the meanings given in Formula Y, and wherein at least one of the rings X is cyclohexenylene.

Preferably, both radicals L¹ and L² denote F. Further preferably one of the radicals L¹ and L² denotes F and the other denotes Cl.

The compounds of the Formula LY are preferably selected from the group consisting of the following subformulae: 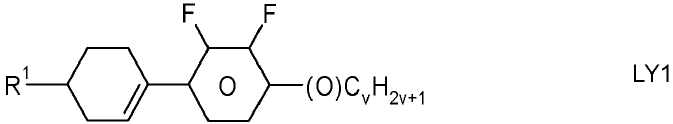 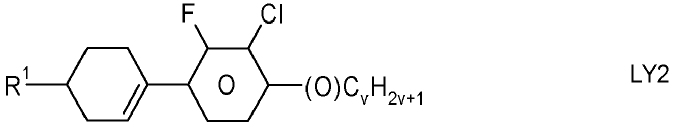 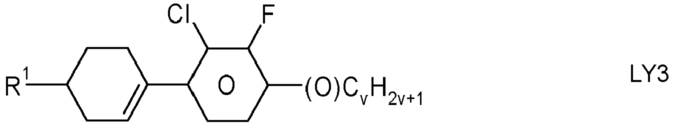 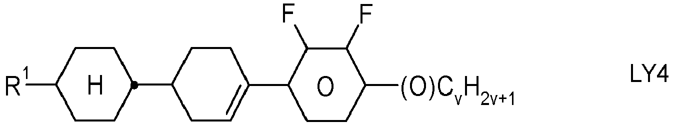 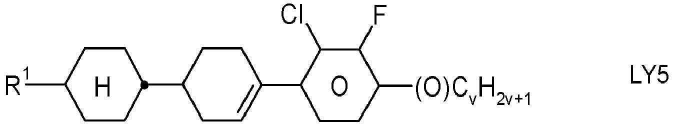 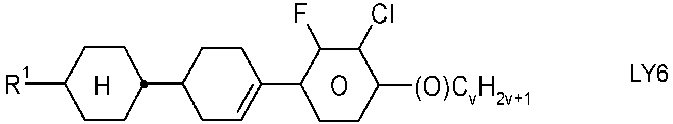 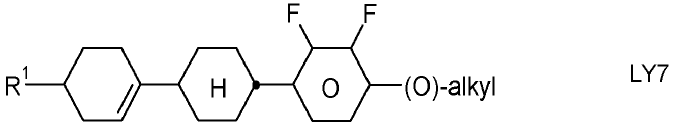 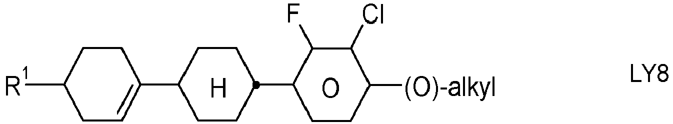 in which R¹ has the meaning indicated in Formula Y above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, *n*-C₃H₇, *n*-C₄H₉, *n*-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred are compounds of the Formula LY4.

Preferably, the LC medium contains 1, 2 or 3 compounds of the Formula LY, very preferably of the Formula LY4.

The proportion of the compounds of the Formula LY or its subformulae in the LC medium is preferably from 1 to 10% by weight.
- The LC medium comprises one or more compounds of the Formula Y selected from the following subformula: 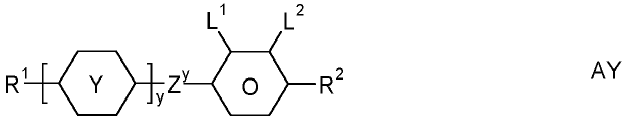
wherein R¹, R², L 1, L², Y, y and Z^{y} have the meanings given in Formula Y, and wherein at least one of the rings Y is tetrahydropyrane.

The compounds of the Formula AY are preferably selected from the group consisting of the following subformulae: 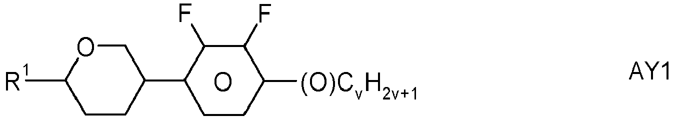 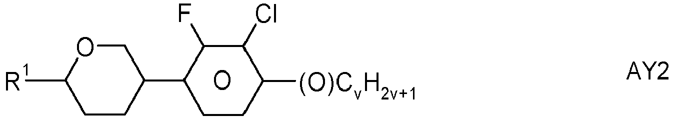 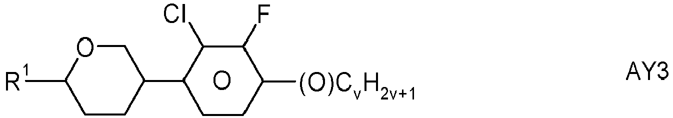 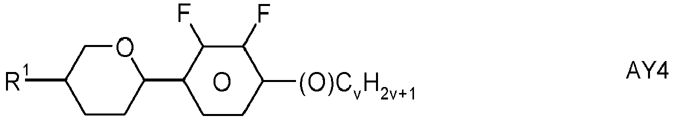 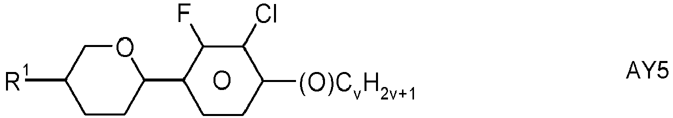 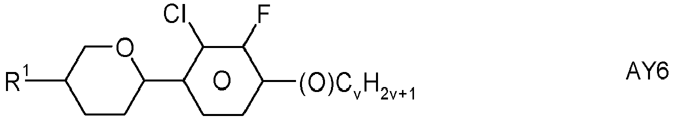 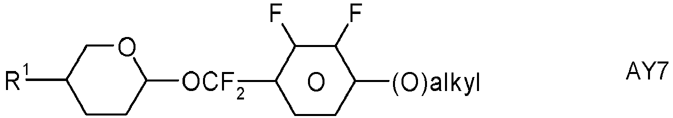 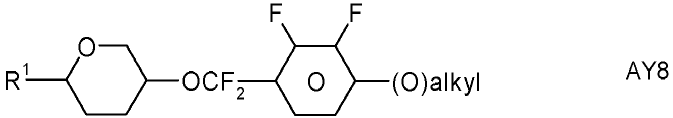 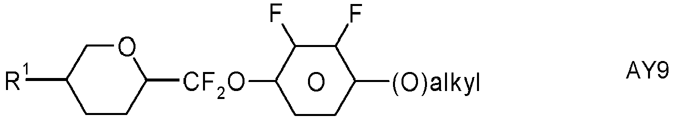 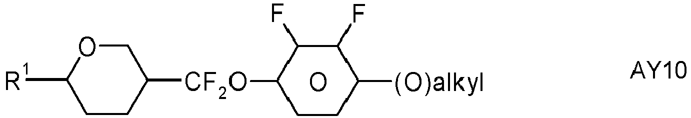 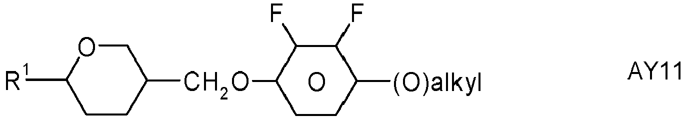 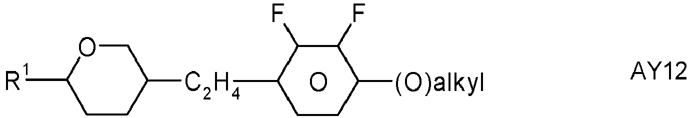 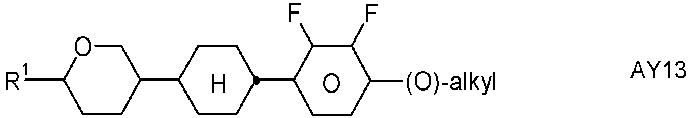 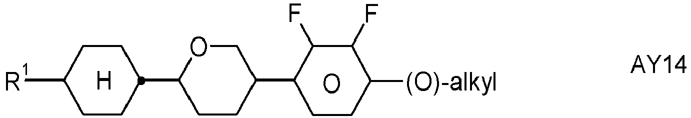 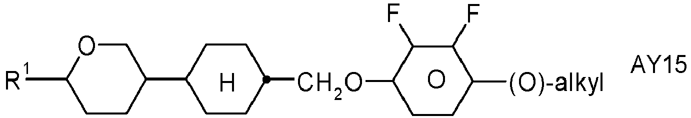 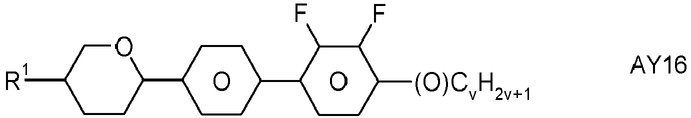 in which
R¹ has the meaning indicated above,
"*alkyl*" denotes a straight-chain alkyl radical having 1 to 6 C atoms,
(O) denotes an oxygen atom or a single bond, and
v denotes an integer from 1 to 6.
R¹ preferably denotes straight-chain alkyl having 1 to 6 C atoms or straight-chain alkenyl having 2 to 6 C atoms, in particular CH₃, C₂H₅, *n*-C₃H₇, *n*-C₄H₉, *n*-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

In the compounds of the Formula B and its subformulae, R¹ and R³ preferably denote straight-chain alkyl or alkoxy having 1 to 6 C atoms, in particular methoxy, ethoxy, propoxy or butoxy, furthermore alkenyl having 2 to 6 C atoms, in particular vinyl, 1E-propenyl, 1E-butenyl, 3-butenyl, 1E-pentenyl, 3E-pentenyl or 4-pentenyl.

In a preferred embodiment of the present invention, the LC medium contains one or more compounds of the Formula B selected from the following subformulae: 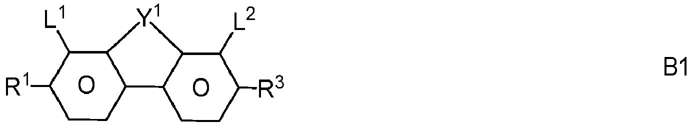 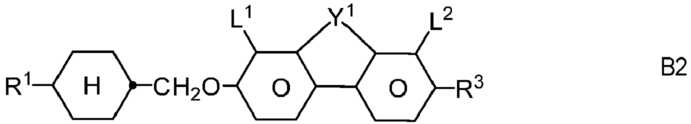 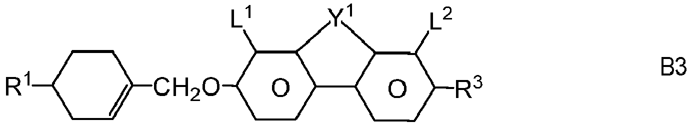 wherein L¹, L², R¹ and R³ have the meanings given in Formula B.

Preferred compounds of the Formula B1 are selected from the following subformulae: 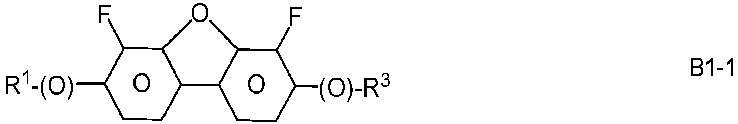 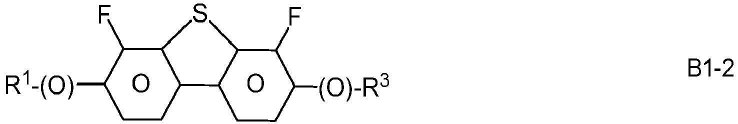 wherein R¹ and R³ independently denote a straight-chain alkyl radical having 1 to 6 C atoms, in which one or more CH₂ groups are optionally substituted by -C≡C-, -CF₂O-, -OCF₂-, -CH=CH-, 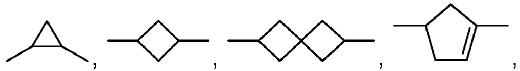 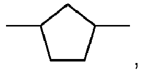 -O-, -CO-O- or -O-CO- in such a way that O atoms are not linked directly to one another, and in which one or more H atoms may be replaced by a halogen atom. Very preferred are compounds of the Formula B1-1 and B1-2 wherein both groups (O) denote an oxygen atom and R¹ and R³ independently denote an alkyl group being methyl, ethyl, propyl, butyl, pentyl or hexyl, which are preferably straight-chained. Very preferably, one *"alkyl"* is ethyl and the other *"alkyl"* is n-pentyl.

Very preferred are compounds of the Formula B1-2.

Preferably, the compounds of the Formula B1-1 are selected from the group of compounds of the Formulae B1-1-1 to B1-1-11, preferably of the Formula B1-1-6: 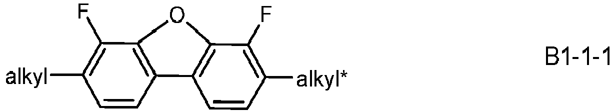 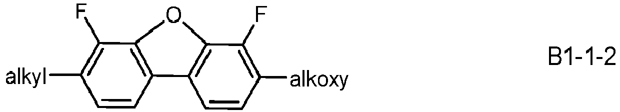 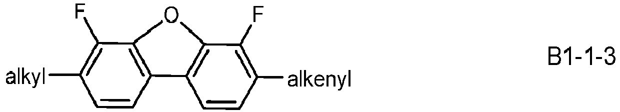 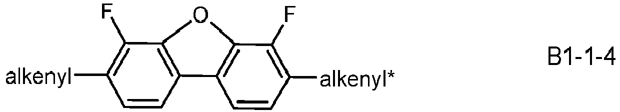 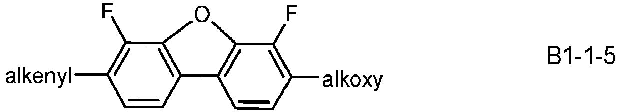 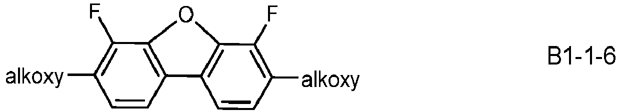 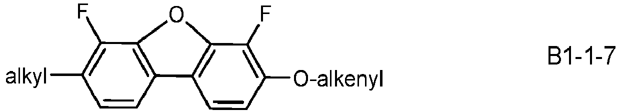 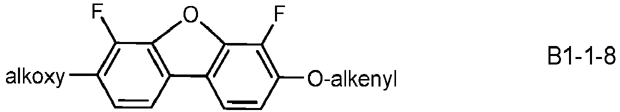 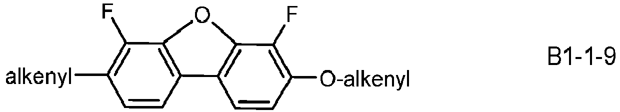 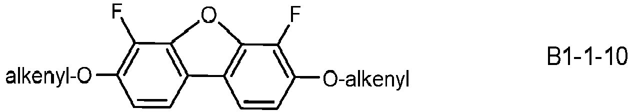 in which
*"alkyl"* and *"alkyl*"* each, independently of one another, denote a straight-chain alkyl radical having 1 to 6 C atoms,
*"alkenyl"* and *"alkenyl*"* each, independently of one another, denote a straight-chain alkenyl radical having 2 to 6 C atoms,
*"alkoxy"* and *"alkoxy*"* each, independently of one another, denote a straight-chain alkoxy radical having 1 to 6 C atoms.

Preferably, the compounds of the Formula B1-2 are selected from the group of compounds of the Formulae B1-2-1 to B1-2-10, preferably of the Formula B1-2-6: 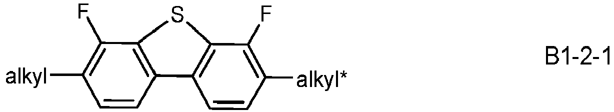 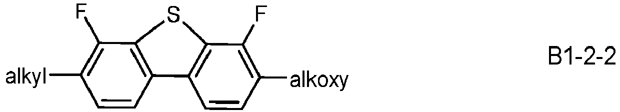 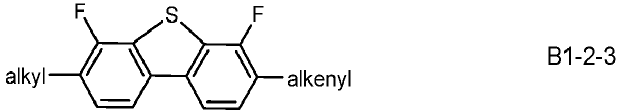 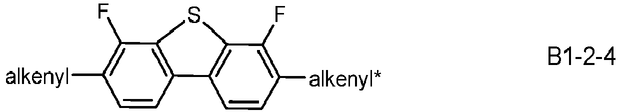 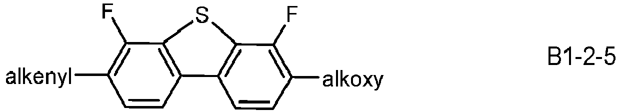 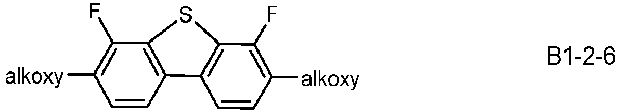 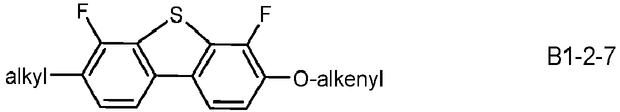 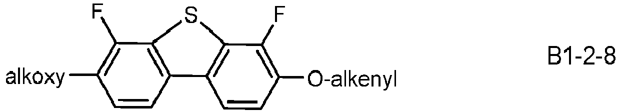 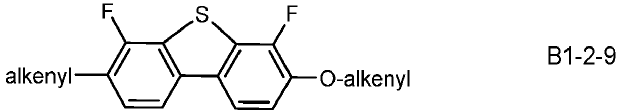 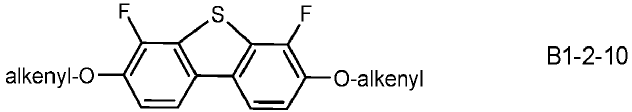 in which
*"alkyl"* and *"alkyl*"* each, independently of one another, denote a straight-chain alkyl radical having 1 to 6 C atoms,
*"alkenyl"* and *"alkenyl*"* each, independently of one another, denote a straight-chain alkenyl radical having 2 to 6 C atoms,
*"alkoxy"* and *"alkoxy*"* each, independently of one another, denote a straight-chain alkoxy radical having 1 to 6 C atoms.

Optionally, the LC medium comprises one or more compounds of the Formula B1-1A and/or B1-2A 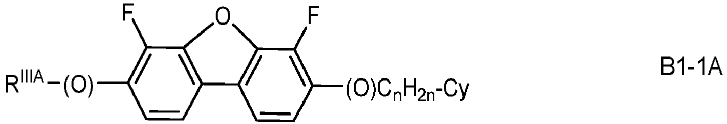 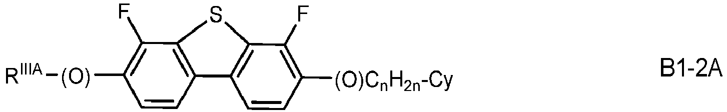 in which
- (O): denotes O or a single bond,
- R^{IIIA}: denotes alkyl or alkenyl having up to 7 C atoms or a group Cy-CₘH₂ₘ₊₁-,
- m and n: are, identically or differently, 0, 1, 2, 3, 4, 5 or 6, preferably 1, 2 or 3, very preferably 1,
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of the Formulae B1-1A and/or B1-2A are contained in the LC medium either alternatively or in addition to the compounds of the Formulae B1-1 and B1-2, preferably additionally.

Very preferred compounds of the Formulae B1-1A and/or B1-2A are the following: 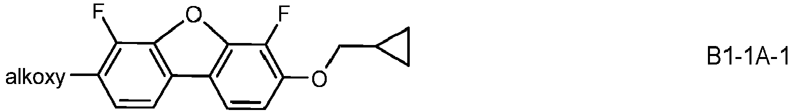 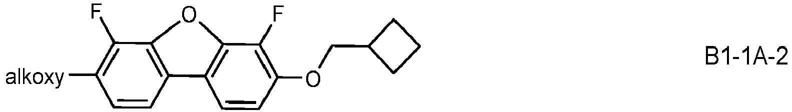 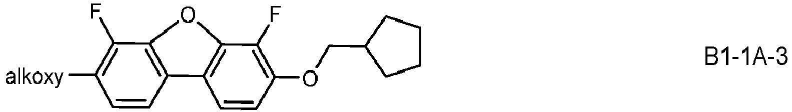 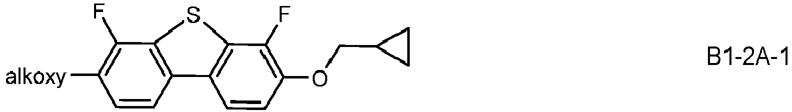 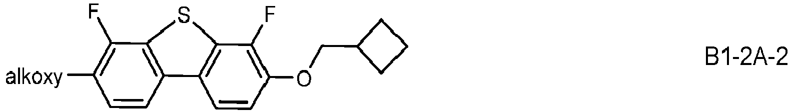 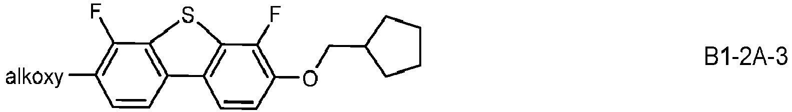 in which *"alkoxy"* denotes a straight-chain alkoxy radical having 1 to 6 C atoms or alternatively -(CH₂)ₙF in which n is 2, 3, 4, or 5, preferably C₂H₄F.

The proportion of the compounds of the Formula B1 or its subformulae in the LC medium is preferably from 1 to 20%, very preferably from 1 to 15% by weight.

Preferably, the LC medium contains 1, 2 or 3 compounds of the Formula B1 or its subformulae.

In a preferred embodiment of the present invention, the LC medium may comprise one or more compounds of the Formula B2-2 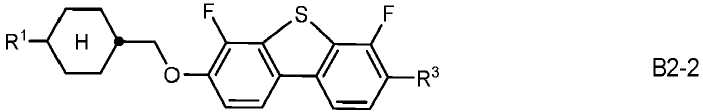 in which
R¹, R³ identically or differently, denote H, an alkyl or alkoxy radical having 1 to 6 C atoms, in which one or more CH₂ groups in these radicals are optionally replaced, independently of one another, by -C≡C-, -CF₂O-, -OCF₂-, -CH=CH-, 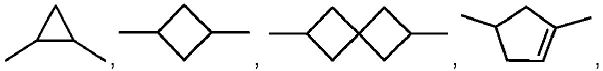 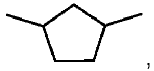 -O-, -CO-O- or -O-CO- in such a way that O atoms are not linked directly to one another, and in which, in addition, one or more H atoms may be replaced by halogen.

The compounds of the Formula B2-2 are preferably selected from the group of compounds of the Formulae B2-2-1 to B2-2-10: 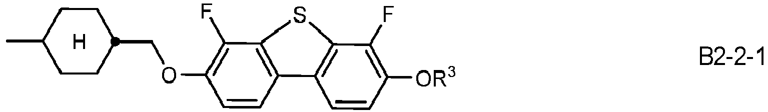 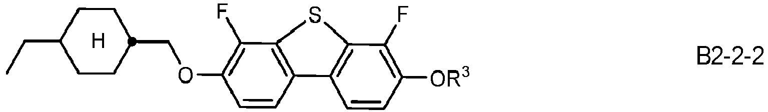 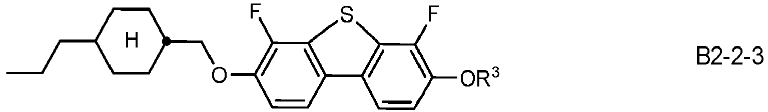 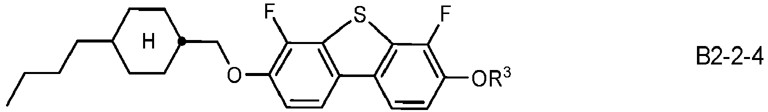 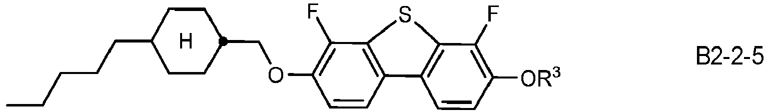 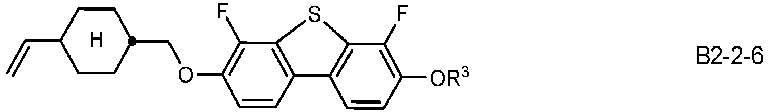 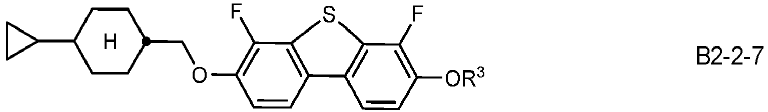 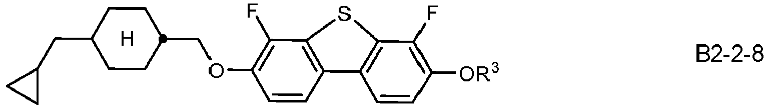 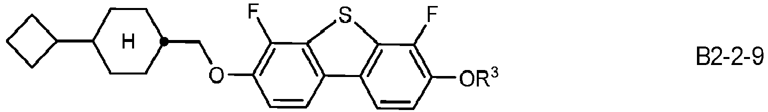 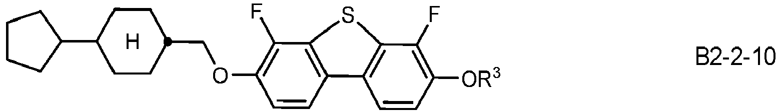 in which R³ denotes alkyl having 1 to 6 C-atoms, preferably ethyl, n-propyl or *n-*butyl, or alternatively cyclopropylmethyl, cyclobutylmethyl or cyclopentylmethyl or alternatively -(CH₂)ₙF in which n is 2, 3, 4, or 5, preferably C₂H₄F.

Particularly preferred compounds of the Formula B2 are selected from the following subformulae:

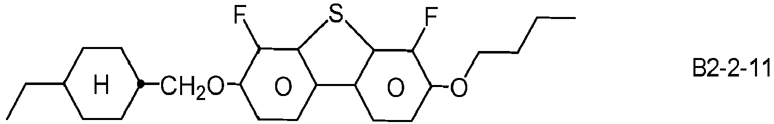

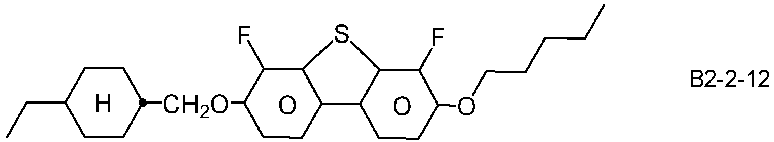

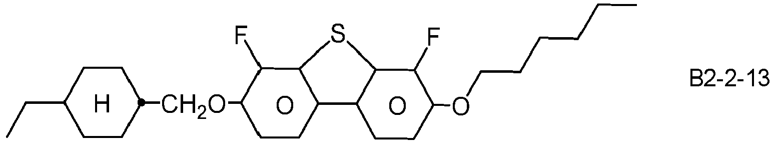

The proportion of the compounds of the Formula B2 or its subformulae in the LC medium is preferably from 1 to 20%, very preferably from 1 to 15% by weight.

Preferably, the LC medium contains 1, 2 or 3 compounds of the Formula B2 or its subformulae.

Preferred compounds of the Formula B3 are selected from the following subformulae: 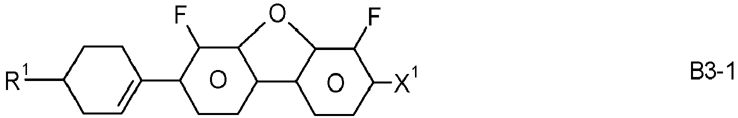 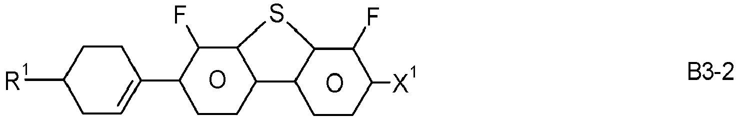 wherein R¹ has one of the meanings given in Formula B3 and preferably denotes straight-chain alkyl having 1 to 6 C atoms, very preferably methyl, ethyl, propyl, butyl, pentyl or hexyl, more preferably ethyl or propyl, most preferably propyl, and X¹ has one of the meanings given in Formula B3 and preferably denotes CF₃ or OCF₃.

Preferred compounds of the Formula B3 are selected from the following subformulae: 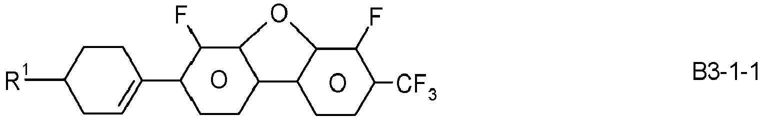 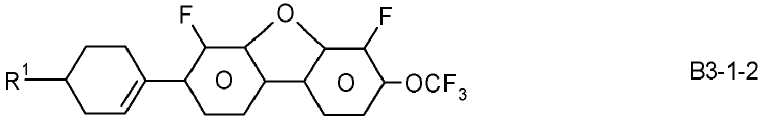 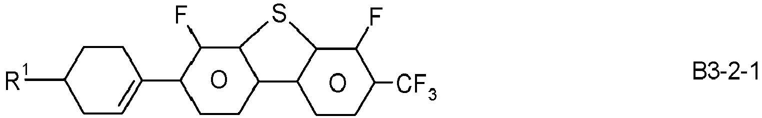 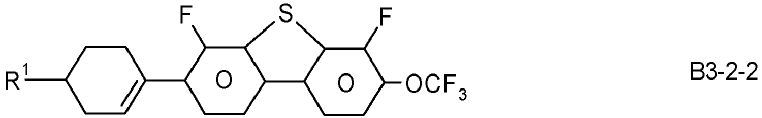 wherein R¹ has one of the meanings given in Formula B3 and preferably denotes straight-chain alkyl having 1 to 6 C atoms, very preferably methyl, ethyl, propyl, butyl, pentyl or hexyl, more preferably ethyl or propyl, most preferably propyl.

Most preferred are compounds of the Formulae B3-1-1 and B3-2-2.

In a preferred embodiment, the LC medium contains one or more compounds of the Formula B or its subformulae B1, B2, B3, B1-1, B1-2, B2-1, B2-2, B2-3, B3-1, B3-2, B3-1-1, B3-1-2, B3-2-1 and B3-2-2 wherein the dibenzofuran or dibenzothiophene group is substituted by a methyl or methoxy group, preferably by a methyl group, preferably in p-position to the substituent F, very preferably in p-position to the substituent F (*i*.*e*. in m-position to the terminal group R¹ or X¹).

The proportion of the compounds of the Formula B3 or its subformulae in the LC medium is preferably from 1 to 20%, very preferably from 1 to 10% by weight.

Preferably, the LC medium contains 1, 2 or 3 compounds of the Formula B3 or its subformulae.

Preferably, the total proportion of compounds of the Formula Y and B or their subformulae in the LC medium is from 2 to 25%, very preferably from 3 to 20% by weight.

Further preferred embodiments are indicated below:
- The LC medium does not contain a compound of the Formula Y, B, LY or AY.
- The LC medium does not contain a compound having a 1,4-phenylene group that is substituted in 2- and 3-position with F or CI.

Further preferred LC media are selected from the following preferred embodiments, including any combination thereof:
- a compound of the Formula LP1 in combination with two or more compounds of the Formula ST
- a compound of the Formula LP2 in combination with two or more compounds of the Formula ST
- a compound of the Formula LP1 in combination with two or more compounds of the Formula ST and a compound of the Formula Z1
- a compound of the Formula LP1 in combination with two or more compounds of the Formula ST and a compound of the Formula XII. The total content of the compounds of the Formulae LP1 and XII is preferably 1 to 50 % by weight, more preferably 2 to 40 % by weight, particularly preferred 5 to 30 % by weight.
- a compound of the Formula LP2 in combination with two or more compounds of the Formula ST and a compound of the Formula IV. The total content of the compounds of the Formulae LP2 and IV is preferably 1 to 50 % by weight, more preferably 2 to 40 % by weight, particularly preferred 5 to 30 % by weight.
- a compound of the Formula LP2 in combination with two or more compounds of the Formula ST and a compound of the Formula Z1
   - The LC medium comprises one or more compounds of the Formula LP1 and/or LP2, two or more compounds of the Formula ST and one or more compounds selected from the group consisting of Formulae Z1, Z2, Z3, Z4, Z5, Y, B, LY, AY, II, III, IV, V, VI, VII, VIII, XII, XIV, XV, XVI, XVlla, XVllb, XVllc, XVIII, XIX, XX, XXI, XXII, XXIII, XXIV, XXV, XXVI, XXVII, XXVIII, XXIX, XXX-1, XXX-2, XXX-3, XXXII, XXXIII and XXXIV and their subformulae.
   - The LC medium comprises one or more compounds of the Formulae LP1 and/or LP2, two or more compounds of the Formula ST and one or more compounds selected from the group consisting of the Formulae Z1, Z2, Z3, Z4, Z5, Y, B, II, III, IV, VI , XIV, XVI, XVlla, XVllb, XVllc, XX, XII, XXIII, XXIX and XXXIV and their subformulae.
   - The LC medium comprises one or more compounds of the Formula II, preferably selected from the group consisting of the Formula II-1, II-2 and II-3, very preferably from Formula II-1 and II-2. The individual concentration of each of these compounds is preferably from 2 to 15% by weight. The total concentration of these compounds is preferably from 5 to 25% by weight.
   - The LC medium comprises one or more compounds of the Formula III, preferably selected from the group consisting of the Formula III-1, III-4, III-6, III-16, III-19 and III-20, very preferably from the group consisting of the Formula III-1, III-6, III-16 and III-20. The individual concentration of each of these compounds is preferably from 2 to 15% by weight. The total concentration of these compounds is preferably from 5 to 30% by weight.
   - The LC medium comprises one or more compounds of the Formula IV, preferably selected from Formula IVa or IVc, very preferably from Formula IVa-1 or IVc-1, most preferably of the Formula IVc-1. The individual concentration of each of these compounds is preferably from 2 to 15% by weight. The total concentration of these compounds is preferably from 5 to 20% by weight.
   - The LC medium comprises one or more compounds of the Formula VI, preferably selected from Formula Vlb. The individual concentration of each of these compounds is preferably from 1 to 20% by weight. The total concentration of these compounds is preferably from 5 to 20% by weight.
   - The LC medium comprises one or more compounds of the Formula Z1, preferably selected from Formula Z1-1. The total concentration of these compounds is preferably from 1 to 25% by weight.
   - The LC medium comprises one or more compounds of the Formula Z2, preferably selected from Formulae Z2-1 and Z2-2. The total concentration of these compounds is preferably from 2 to 35%, very preferably from 3 to 25% by weight.
   - The LC medium comprises from 5 to 20% by weight of compounds of the Formula Z3, preferably of the Formula Z3-1.
   - The LC medium comprises from 5 to 20% by weight of compounds of the Formula Z4, preferably of the Formula Z4-1.
   - The LC medium comprises from 10 to 65%, very preferably from 20 to 60% by weight of compounds of the Formula Z5.
   - The LC medium comprises one or more compounds of the Formula XII, preferably of the Formula Xlla or Xllb, very preferably of the Formula Xlla, most preferably of the Formula Xlla1. The concentration of these compounds is preferably from 2 to 15% by weight.
   - The LC medium comprises from 1 to 15% by weight of compounds of the Formula Xllb.
   - The LC medium comprises one or more compounds of the Formula XIV, preferably of the Formula XlVd, very preferably of the Formula XIVd1. The concentration of these compounds is preferably from 2 to 10% by weight.
   - The LC medium comprises one or more compounds of the Formula XVlb, preferably of the Formula XVIb-1, XVIb-2 and/or XVIb-3. The concentration of these compounds is preferably from 2 to 15% by weight.
   - The LC medium comprises one or more compounds of the Formula XVIc, preferably of the Formula XVIc-1, XVIc-2 and/or XVIc-3. The concentration of these compounds is preferably from 2 to 20% by weight.
   - The LC medium comprises one or more compounds of the Formula XVlb, preferably of the Formula XVIb-1 and/or XVIb-2. The total concentration of these compounds is preferably from 5 to 25% by weight.
   - The LC medium comprises one or more compounds selected from the group consisting of the Formulae XVlla, XVllb and XVllc, very preferably of the Formula XVlla wherein L is H and of the Formula XVIIb wherein L is F. The total concentration of these compounds is preferably from 0.5 to 5% by weight.
   - The LC medium comprises one or more compounds of the Formula XX, preferably of the Formula XXa. The concentration of these compounds is preferably from 2 to 10% by weight.
   - The LC medium comprises one or more compounds of the Formula XXI, preferably of the Formula XXIa. The concentration of these compounds is preferably from 2 to 10% by weight.
   - The LC medium comprises one or more compounds of the Formula XXIII, preferably of the Formula XXllla. The concentration of these compounds is preferably from 0.5 to 5% by weight.
   - The LC medium comprises one or more compounds of the Formula XXIX, preferably of the Formula XXIXa. The concentration of these compounds is preferably from 2 to 10% by weight.
   - The LC medium comprises one or more compounds of the Formula XXX. The concentration of these compounds is preferably from 2 to 10% by weight.
   - The LC medium comprises one or more compounds of the Formula XXXIV. The concentration of these compounds is preferably from 1 to 5% by weight.
   - The LC medium comprises one or more compounds of the Formulae LP1 and/or LP2, two or more compounds of the Formula ST, one or more compounds selected from the group consisting of the Formulae Z1, Z2 and Z3 or their subformulae, one or more compounds selected from the group consisting of Formulae XIV or their subformulae, one or more compounds selected from the group consisting of Formulae II, III, IV, VI, XX, XXIII and XXIX or their subformulae, and one or more compounds selected from the group consisting of the Formulae XII, XVI, XVlla, XVllb, XVllc, XXXI and XXXIV or their subformulae.
   - The LC medium comprises one or more compounds of the Formulae LP1 and/or LP2, two or more compounds of the Formula ST, one or more compounds selected from the group consisting of the Formulae Z1, Z2, Z3, Z4 and Z5 or their subformulae, one or more compounds selected from the group consisting of the Formula XlVd or their subformulae, one or more compounds selected from the group consisting of Formulae II, III, IVc, Vlb, XXa, XXllla and XXIXa or their subformulae, and one or more compounds selected from the group consisting of the Formulae Xllb, XVlb, XVIc, XVlla, XVllb, XVllc, XXXI and XXXIV or their subformulae.
   - The LC medium comprises one or more compounds of the Formulae LP1 and/or LP2, two or more compounds of the Formula ST, one or more compounds selected from the group consisting of the Formulae Z1, Z2 and Z3 or their subformulae, one or more compounds of the Formula Y, preferably selected from the group consisting of the Formulae Y1 and Y2, one or more compounds selected from the group consisting of Formula XIV or their subformulae, one or more compounds selected from the group consisting of Formulae II, III, IV, VI, XX, XXIII and XXIX or their subformulae, and one or more compounds selected from the group consisting of the Formulae XII, XVI, XVlla, XVllb, XVllc, XXXI and XXXIV or their subformulae.
   - The LC medium comprises one or more compounds of the Formulae LP1 and/or LP2, two or more compounds of the Formula ST, one or more compounds selected from the group consisting of the Formulae Z1, Z2, Z3, Z4 and Z5 or their subformulae, one or more compounds of the Formula B, preferably selected from the group consisting of the Formulae B1, B2 and B3, one or more compounds of the Formula XlVd or their subformulae, one or more compounds selected from the group consisting of Formulae II, III, IVc, Vlb, XXa, XXllla and XXIXa or their subformulae, and one or more compounds selected from the group consisting of the Formulae Xllb, XVlb, XVIc, XVlla, XVllb, XVllc, XXXI and XXXIV or their subformulae.
   - Besides the compounds of Formulae LP1 and/or LP2 and two or more compounds of the Formula ST, the LC medium comprises further compounds selected from the group of the compounds of the Formula Z1, Z2, Z3, Y, B, IV, XII, XIV, XVI, XVlla, XVllb, XVllc, XXI, XXIII, XXIX, XXX, XXXI and XXIV or their subformulae.
   - Besides the compounds of the Formulae LP1 and/or LP2 and two or more compounds of the Formula ST, the LC medium comprises further compounds selected from the group of the compounds of the Formulae Z1, Z2, Z3, IV, XII, XIV, XVI, XVlla, XVllb, XVllc, XXI, XXIII, XXIX, XXX, XXXI and XXIV or their subformulae.
   - The proportion of compounds of the Formulae Z1, Z2, Z3, Z4 and Z5 or their subformulae in the mixture as a whole is from 10 to 65%, very preferably from 20 to 60%.
   - The proportion of compounds of the Formula Y or its subformulae in the mixture as a whole is from 1 to 20%, very preferably from 2 to 15%.
   - The proportion of compounds of the Formula B or its subformulae in the mixture as a whole is from 1 to 20%, very preferably from 2 to 18%.
   - The proportion of compounds of the Formulae II, III, IV-VIII, XVIII-XXIII and XXVII-XXX in the mixture as a whole is 30 to 60% by weight.
   - The proportion of compounds of the Formulae XII-XV in the mixture as a whole is 40 to 70% by weight.
   - The proportion of compounds of the Formulae XIV, XVlla-c and XXXI-XXXIII in the mixture as a whole is 0.5 to 15% by weight.

The term *"alkyl"* or *"alkyl*"* in this application encompasses straight-chain and branched alkyl groups having 1 to 6 carbon atoms, in particular the straight-chain groups methyl, ethyl, propyl, butyl, pentyl and hexyl. Groups having 2 to 5 carbon atoms are generally preferred.

The term *"alkenyl"* or *"alkenyl*"* encompasses straight-chain and branched alkenyl groups having 2 to 6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term *"fluoroalkyl"* preferably encompasses straight-chain groups having a terminal fluorine, *i.e.* fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term *"oxaalkyl"* or *"alkoxy"* preferably encompasses straight-chain radicals of the Formula CₙH₂ₙ₊₁-O-(CH₂)ₘ, in which n and m each, independently of one another, denote 1 to 6. m may also denote 0. Preferably, n = 1 and m = 1 to 6 or m = 0 and n = 1 to 3. Further preferably the alkoxy or oxaalkyl group can also contain one or more further O atoms such that oxygen atoms are not directly linked to one another.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants Kg (bend) and K₁ (splay) compared with alkyl and alkoxy radicals. 4-Alkenyl radicals, 3-alkenyl radicals and the like generally give lower threshold voltages and lower values of Kg / K₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the LC media according to the invention is not crucial. The LC medium can therefore comprise one or more further components for the purposes of optimisation of various properties. However, the observed effect on the desired improvement in the properties of the LC medium is generally greater, the higher the total concentration of compounds of the above-mentioned formulae.

In a particularly preferred embodiment, the LC medium according to the invention comprise compounds of the Formulae IV to VIII (preferably IV and V) in which X⁰ denotes F, OCF₃, OCHF₂, OCH=CF₂, OCF=CF₂ or OCF₂-CF₂H. A favourable synergistic action with the compounds of Formulae LP1 and/or LP2, two or more compounds of the Formula ST, II and III results in particularly advantageous properties. In particular, LC medium comprising compounds of the Formulae LP1 and/or LP2, two or more compounds of the Formula ST, II and III are distinguished by their low threshold voltage.

The individual compounds of the above-mentioned formulae and the subformulae thereof which can be used in the LC media according to the invention are either known or can be prepared analogously to the known compounds.

The invention also relates to a process for the preparation of a LC medium as described above and below, by mixing one or more compounds of the Formulae LP1 and/or LP2 with two or more compounds of the Formula ST, and, optionally, with Y1, Y2 or Y3, one or more compounds of the Formula B, and one or more compounds selected from the group consisting of the Formulae II, III, Z1, Z2, Z3, Z4, IV, VI, XIV, XII, XVI, XVlla, XVllb, XVllc, XX, XXIII, XXIX XXXI and XXXIV.

In another preferred embodiment of the present invention, the LC medium additionally comprises one or more polymerisable compounds. The polymerisable compounds are preferably selected from Formula M

R^{a}-B¹-(Z^{b}-B²)ₘ-R^{b} M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, C!, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
- P: a polymerisable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
- R⁰ and R⁰⁰: each, independently of one another, denote H or alkyl having 1 to 12 C atoms,
- m: denotes 0, 1, 2, 3 or 4,
- n1: denotes 1, 2, 3 or 4,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, CI, P or P-Sp-,
- P and Sp: have the meanings indicated in Formula M above,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, CI, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the Formula M are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined for the Formula M above. Particularly preferred compounds of the Formula M are those in which B¹ and B² each, independently of one another, denote 1,4-phenylene, 1,3-phenylene, naphthalene-1,4-diyl or naphthalene-2,6-diyl.

Very preferred compounds of the Formula M are selected from the following formulae: 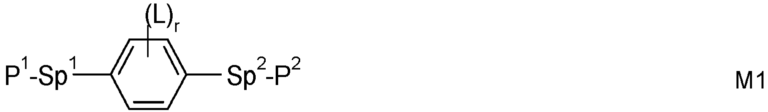 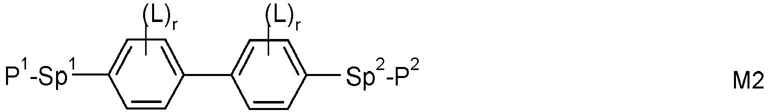 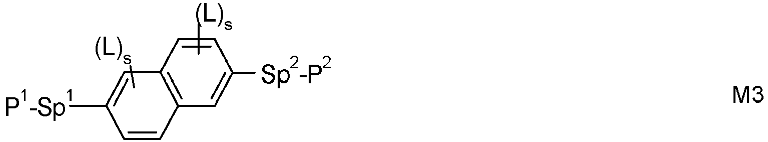 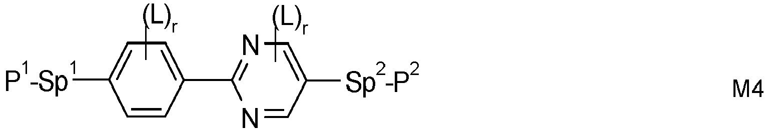 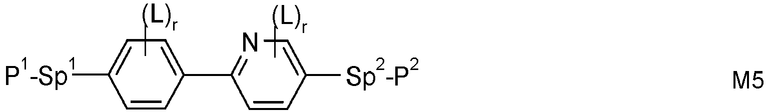 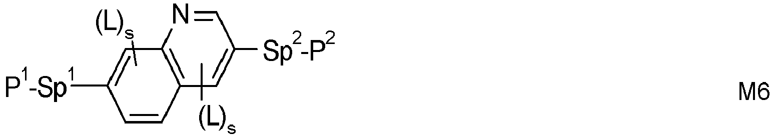 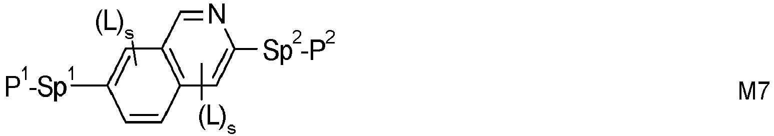 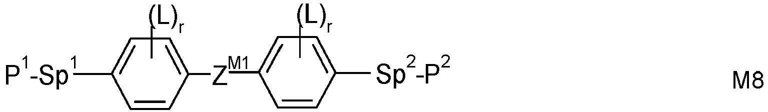 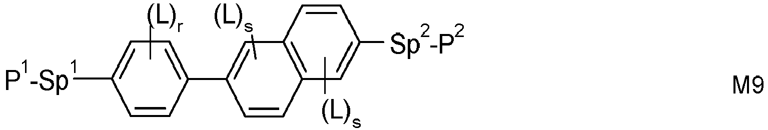 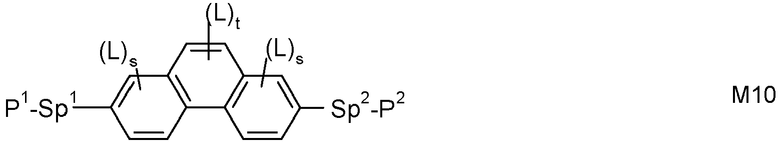 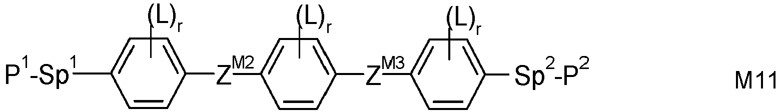 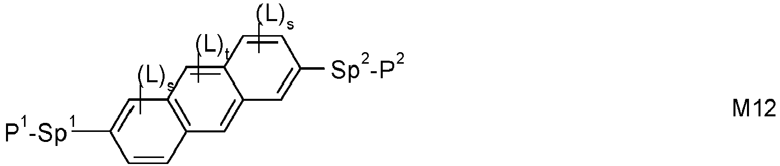 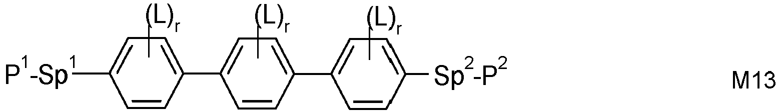 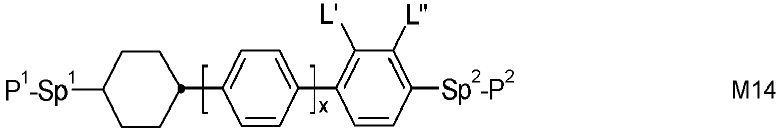 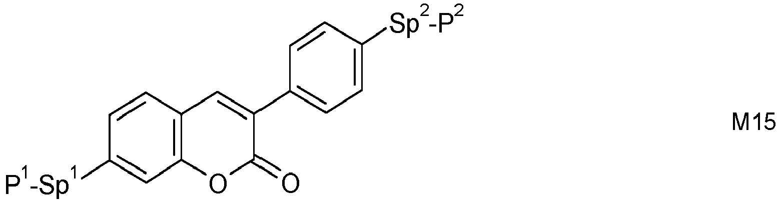 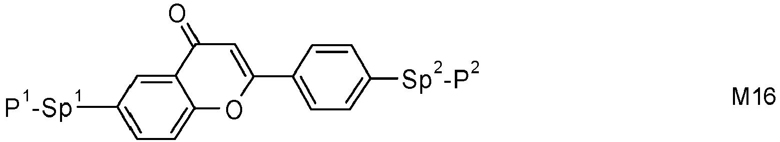 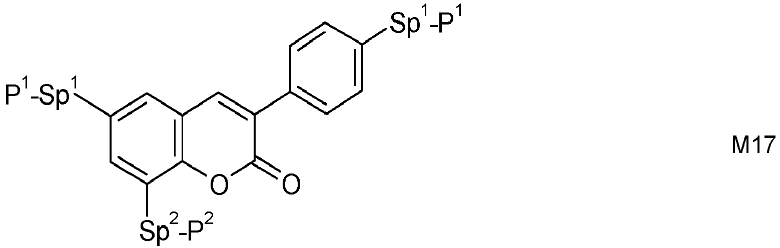 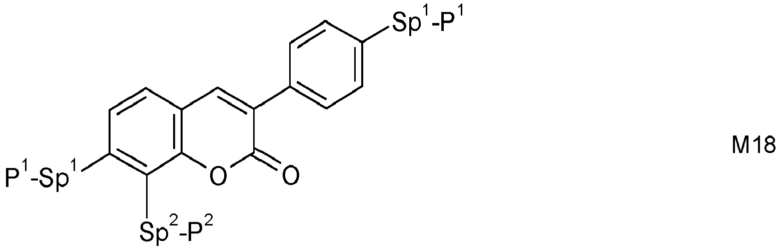 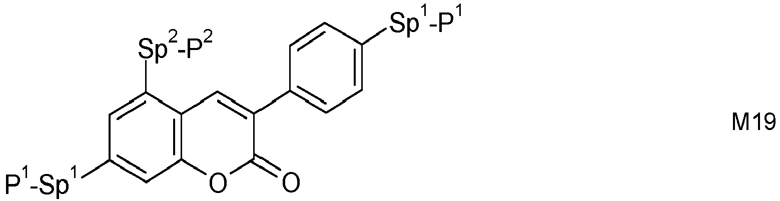 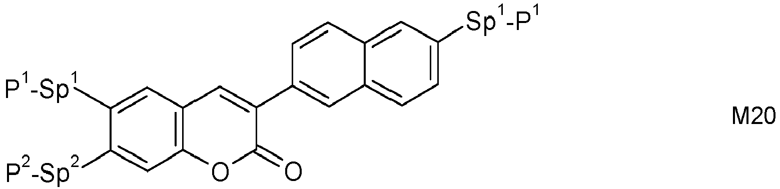 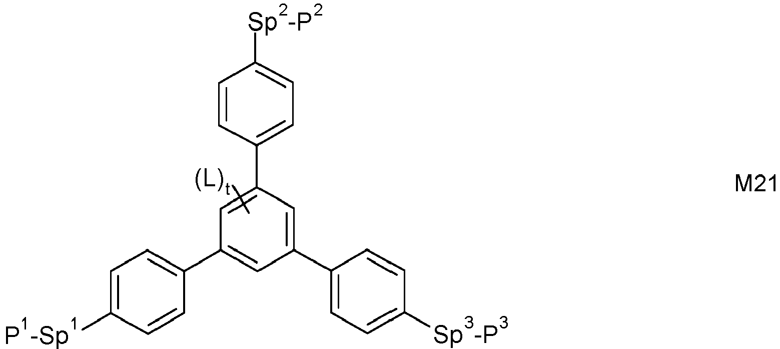 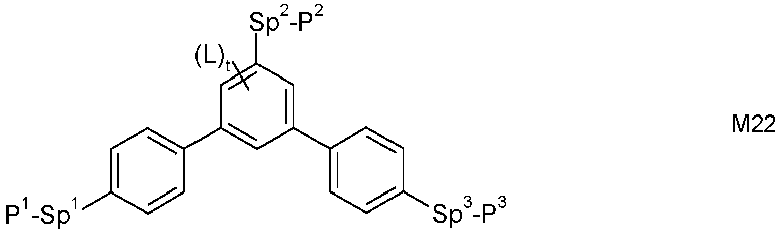 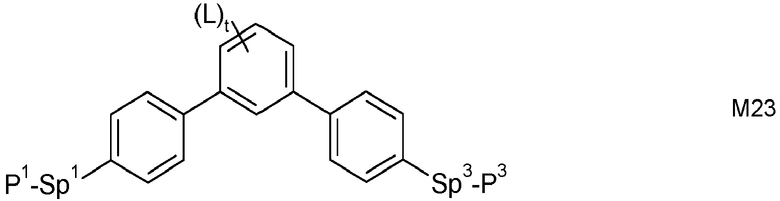 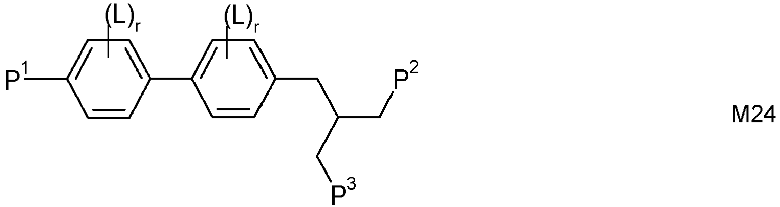 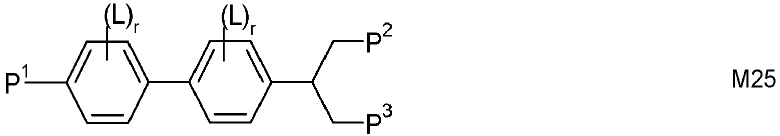 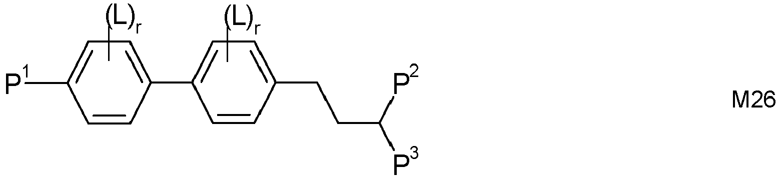 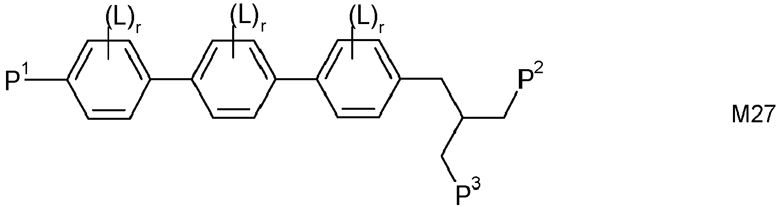 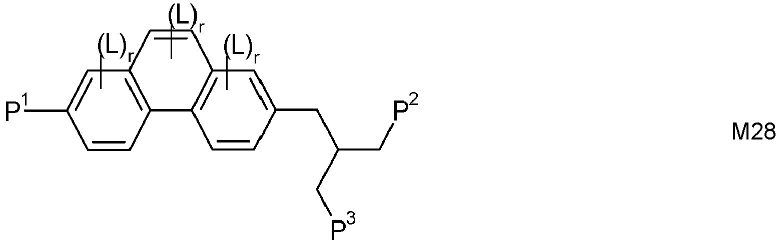 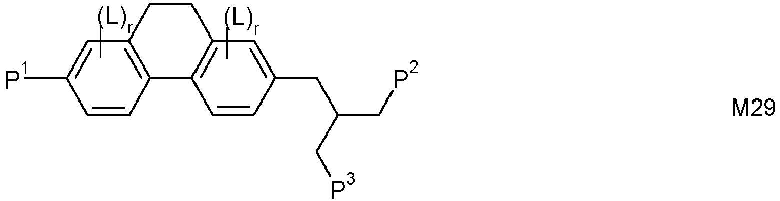 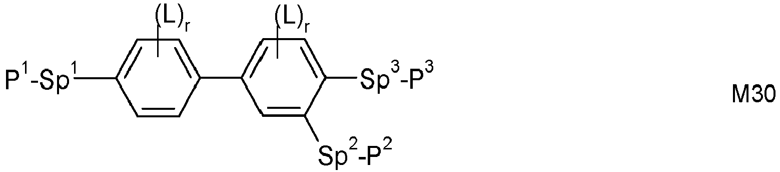 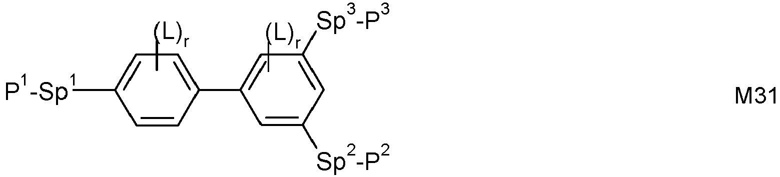 in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa}, preferably -(CH₂)ₚ₁-, -(CH₂)ₚ₁-O-, -(CH₂)ₚ₁-CO-O- or -(CH2)p1-O-CO-O-, wherein p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, CI, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- RY and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, For Cl,
- r: 0, 1, 2, 3 or 4,
- s: 0, 1, 2 or 3,
- t: 0, 1 or 2,
- x: 0 or 1.
Especially preferred are compounds of the Formulae M2 and M13.

Further preferred are trireactive compounds M15 to M31, in particular M17, M18, M19, M22, M23, M24, M25, M30 and M31.

In the compounds of the Formulae M1 to M31 the group 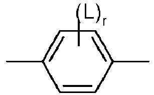 is preferably 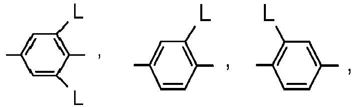 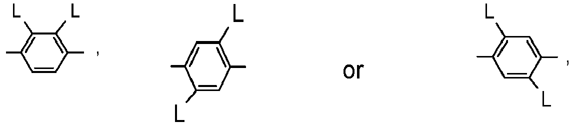 wherein L on each occurrence, identically or differently, has one of the meanings given for Formula M above or below, and is preferably F, CI, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, CI, CN, CH₃, C₂H₅, OCH₃, COCH₃, OCF₃ or P-Sp-, more preferably F, Cl, CH₃, OCH₃, COCH₃ or OCF₃, especially F or CH₃.

Preferred compounds of the Formulae M1 to M31 are those wherein P¹, P² and P³ denote an acrylate, methacrylate, oxetane or epoxy group, very preferably an acrylate or methacrylate group.

Further preferred compounds of the Formulae M1 to M31 are those wherein Sp¹, Sp² and Sp³ are a single bond.

Further preferred compounds of the Formulae M1 to M31 are those wherein one of Sp¹, Sp² and Sp³ is a single bond and another one of Sp¹, Sp² and Sp³ is different from a single bond.

Further preferred compounds of the Formulae M1 to M31 are those wherein those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to LC media comprising one, two or three polymerisable compounds of the Formula M, preferably selected from Formulae M1 to M31.

Further preferably, the LC media according to the present invention comprise one or more polymerisable compounds selected from Table E below.

Preferably, the proportion of polymerisable compounds in the LC medium, preferably selected from Formula M and Table E, is from 0.01 to 5%, very preferably from 0.05 to 1%, most preferably from 0.1 to 0.5%.

It was observed that the addition of one or more polymerisable compounds to the LC medium, like those selected from Formula M and Table E, leads to advantageous properties like fast response times. Such a LC medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the LC medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-CO-O-, CH₂=CW¹-CO-, 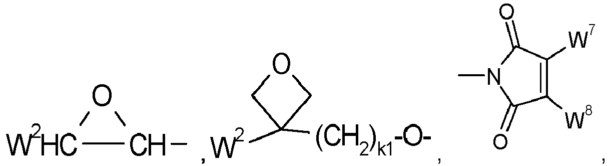 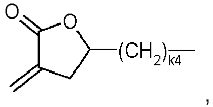 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined for Formula M above which are other than P-Sp-, k₁, k₂ and kg each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW-CO-, 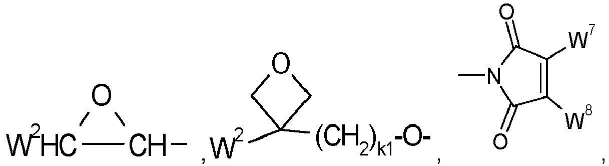 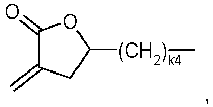 CH₂=CW²-O-, CH=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or *n-*propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and kg each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CHO-,

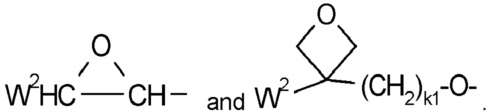

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the Formula Sp"-X", so that the respective radical P-Sp- conforms to the Formula P-Sp"-X"-, wherein
Sp" denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated in Formula M above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxy-butylene, ethylenethioethylene, ethylene-N-methyliminoethylene, 1-methylalkylene, ethenylene, propenylene and butenylene.

For the production of PSA displays, the polymerisable compounds contained in the LC medium are polymerised or crosslinked (if one compound contains two or more polymerisable groups) by *in-situ* polymerisation in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the LC media according to the invention at the same time as constantly high clearing points and high VHR values.

The use of LC media containing polymerisable compounds allows the rapid establishment of a particularly low pretilt angle in PSA displays. In particular, the LC media exhibit significantly shortened response times, in particular also the grey-shade response times, in PSA displays compared with the media from the prior art.

Preference is generally given to LC media which have a nematic LC phase, and preferably have no chiral liquid crystal phase.

The invention also relates to the use of a LC medium according to the present invention as described above and below for electro-optical purposes, in particular for the use is in shutter glasses, for 3D applications, in TN, PS-TN, STN, TN-TFT, OCB, IPS, PS-IPS, FFS, HB-FFS, XB-FFS, PS-FFS, positive VA and positive PS-VA displays, and to electro-optical displays, in particular of the aforementioned types, containing a LC medium according to the present invention as described above and below, in particular a TN, PS-TN, STN, TN-TFT, OCB, IPS, PS-IPS, FFS, HB-FFS, XB-FFS, PS-FFS, positive VA (vertically aligned) or positive PS-VA display.

The invention also relates to electro-optical displays, such as, for example, STN or MLC displays, having two plane-parallel outer plates, which, together with a frame, form a cell, integrated non-linear elements for switching individual pixels on the outer plates, and a nematic LC medium having positive dielectric anisotropy and high specific resistance located in the cell, wherein the a nematic LC medium is a LC medium according to the present invention as described above and below.

The LC media according to the invention enable a significant broadening of the available parameter latitude. The achievable combinations of clearing point, viscosity at low temperature, thermal and UV stability and high optical anisotropy are far superior to previous materials from the prior art.

In particular, the combination of compounds of the Formula LP1 and/or LP2 with two or more compounds of the Formula ST and, optionally, with compounds selected from Formulae II-XXXIII or their subformulae, leads to LC media which show a moderate positive dielectric anisotropy and at the same time an increased dielectric constant ε_{⊥} perpendicular to the longitudinal axes of the LC molecules, while maintaining a low rotational viscosity and a low value of the ratio γ₁ / K₁. This enables LC displays, especially of the FFS, HB-FFS, XB-FFS and IPS mode, with high brightness and transmission and low response times.

The LC media according to the invention are suitable for mobile applications and TFT applications, such as, for example, mobile telephones and PDAs. Furthermore, the LC media according to the invention are particularly suitably for use in FFS, HB-FFS, XB-FFS and IPS displays based on dielectrically positive liquid crystals.

The LC media according to the invention, while retaining the nematic phase down to -20 °C and preferably down to -30 °C, particularly preferably down to -40 °C, and the clearing point ≥ 85 °C, preferably ≥ 90 °C, at the same time allow rotational viscosities γ₁ of ≤ 120 mPa·s, particularly preferably ≤ 100 mPa·s, to be achieved, enabling excellent MLC displays having fast response times to be achieved. The rotational viscosities are determined at 20 °C.

The dielectric anisotropy Δε of the LC media according to the invention at 20 °C and 1 kHz is preferably ≥ +1.5, very preferably from +3 to +18.

The birefringence Δn of the LC media according to the invention at 20 °C is preferably from 0.08 to 0.12, very preferably from 0.09 to 0.11.

The rotational viscosity γ₁ of the LC media according to the invention is preferably ≤ 120 mPa s, more preferably ≤ 110 mPa s, very preferably ≤ 90 mPa s.

The ratio γ₁ / K₁ (wherein γ₁ is the rotational viscosity γ₁ and K₁ is the elastic constant for splay deformation) of the LC media according to the invention is preferably ≤ 7 mPa·s/pN, very preferably ≤ 6 mPa·s/pN, most preferably ≤ 5.5 mPa·s/pN.

The nematic phase range of the LC media according to the invention preferably has a width of at least 90 °C, more preferably of at least 100 °C, in particular at least 110 °C. This range preferably extends at least from -25 °C to +90 °C.

It goes without saying that, through a suitable choice of the components of the LC media according to the invention, it is also possible for higher clearing points (for example above 100 °C) to be achieved at higher threshold voltages or lower clearing points to be achieved at lower threshold voltages with retention of the other advantageous properties. At viscosities correspondingly increased only slightly, it is likewise possible to obtain LC media having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of LC media comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that LC media according to the invention comprising compounds of the Formulae ST-1, ST-2, RV, IA and IB exhibit a significantly smaller decrease in the HR on UV exposure than analogous mixtures comprising cyanophenyl-cyclohexanes of the Formula 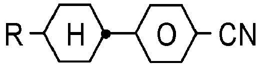 or esters of the Formula 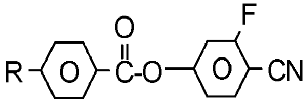 instead of the compounds of the Formulae I ST-1, ST-2, RV, IA and lB.

The light stability and UV stability of the LC media according to the invention are considerably better, *i.e.* they exhibit a significantly smaller decrease in the HR on exposure to light, heat or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the LC parameters of the LC layer.

The LC media which can be used in accordance with the invention are prepared in a manner conventional per se, for example by mixing one or more compounds of Claim 1 with one or more compounds of the Formulae II-XXXIV or with further LC compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The LC media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0 to 15% of pleochroic dyes or chiral dopants or initiators like Irgacure^{®} 651 or Irgacure^{®} 907 can be added. Suitable stabilisers and dopants are mentioned below in Tables C and D.

In a preferred embodiment, the LC medium comprises one or more stabilisers ST or H described above or those selected from Table D.

Preferably, the proportion of stabilisers, like those of the Formulae ST or H in the LC medium is from 10 to 2000 ppm, very preferably from 30 to 1000 ppm.

In another preferred embodiment, the LC medium according to the present invention contains a self-aligning (SA) additive, preferably in a concentration of 0.1 to 2.5 %. An LC medium according to this preferred embodiment is especially suitable for use in polymer stabilised SA-FFS, SA-HB-FFS or SA-XB-FFS displays.

In a preferred embodiment, the SA-FFS, SA-HB-FFS or SA-XB-FFS display according to the present invention does not contain a polyimide alignment layer. In another preferred embodiment, the SA-FFS, SA-HB-FFS or SA-XB-FFS display contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group or the polar anchor group. These polymerisable SA additives can be polymerised in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment, an LC medium or a polymer stabilised SA-FFS, SA-HB-FFS or SA-XB-FFS display according to the present invention contains one or more self-aligning additives selected from Table F below.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf. for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

For the present invention and in the following examples, the structures of the LC compounds are indicated by means of acronyms, with the transformation into chemical formulae taking place in accordance with Tables A to C below. All radicals CₘH₂ₘ₊₁, CₙH₂ₙ₊₁, and CₗH₂ₗ₊₁ or CₘH₂ₘ₋₁, CₙH₂ₙ₋₁ and CₗH₂ₗ₋₁ are straight-chain alkyl radicals or alkylene radicals, in each case having n, m and I C atoms respectively. Preferably, n, m and I are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| C | 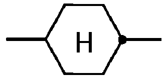 | | |
| D | 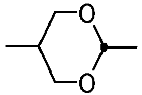 | DI | 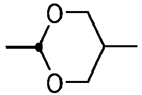 |
| A | 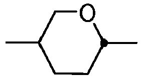 | AI | 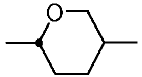 |
| P | 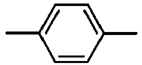 | | |
| G | 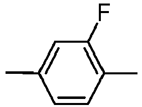 | GI | 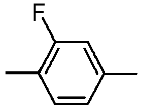 |
| U | 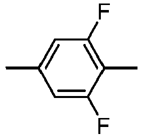 | UI | 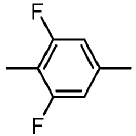 |
| U(1) | 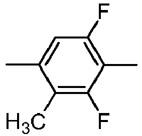 | Y | 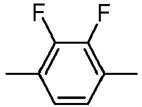 |
| P(F, CI)Y | 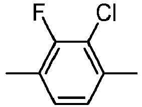 | P(CI,F)Y | 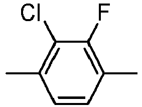 |
| np | 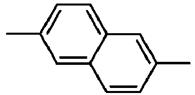 | | |
| n3f | 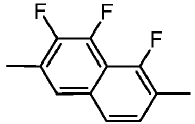 | nN3fl | 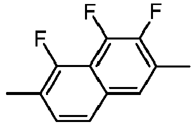 |
| th | 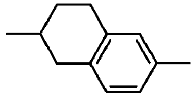 | **thl** | 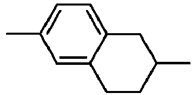 |
| tH2f | 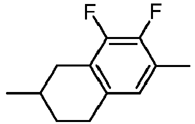 | tH2fl | 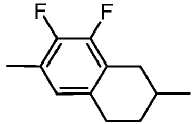 |
| o2f | 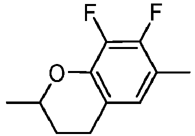 | **o2fl** | 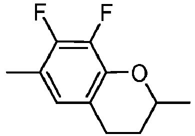 |
| dh | 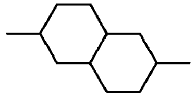 | | |
| B | 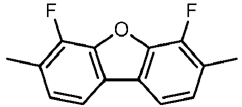 | B(S) | 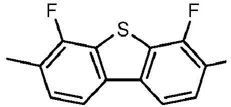 |
| O | 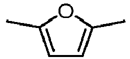 | S | 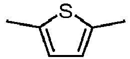 |
| K | 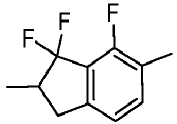 | KI | 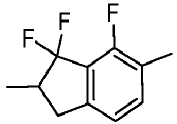 |
| L | 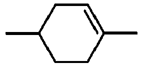 | LI | 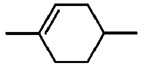 |
| F | 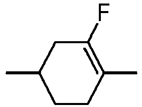 | FI | 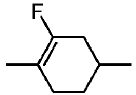 |
| Bh | 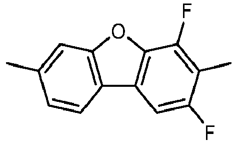 | Bh(S) | 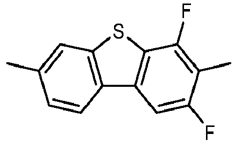 |
| Bf | 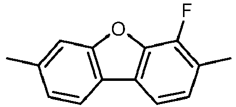 | Bf(S) | 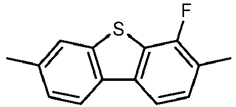 |
| Bfi | 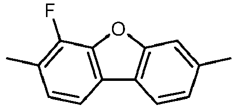 | Bfi(S) | 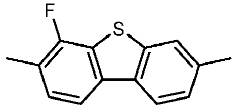 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH-CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | -CₙH₂ₙ-CH=CH-CₘH₂ₘ₊₁ |
| **N-** | N≡C- | **-N** | -C≡N |
| **S-** | S=C=N- | **-S** | -N=C=S |
| **F-** | F- | **-F** | -F |
| **CL-** | Cl- | **-CL** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O - | **-OM** | -OCFH₂ |
| **DO-** | CF₂HO - | **-OD** | -OCF₂H |
| **TO-** | CF₃O- | **-OT** | -OCF₃ |
| **A-** | H-C≡C- | **-A** | -C≡C-H |
| **nA-** | CₙH₂ₙ₊₁-C≡C- | **-An** | -C≡C-CₙH₂ₙ₊₁ |
| **NA-** | N≡C-C≡C- | **-AN** | -C≡C-C≡N |
| **(cn)-** | 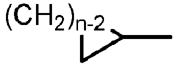 | **-(cn)** | 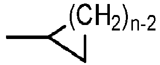 |
| **(cn)m-** | 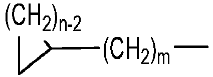 | **-m(cn)** | 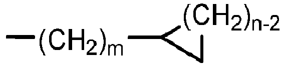 |
| | | | |

| **On the left only in combination** | | **On the right only in combination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...Zl...-** | -O-CO- | **-...Zl...** | -O-CO- |
| **-...K...-** | -CO- | **-...K...** | -CO- |
| **-...W...-** | -CF=CF- | **-...W...** | -CF=CF- |

in which n and m are each integers, and the three dots "... " are placeholders for other abbreviations from this table.

The following abbreviations are used:
(n, m, k and I are, independently of one another, each an integer, preferably 1 to 9 preferably 1 to 7, k and I possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

Preferred mixture components are shown in Tables D and E.

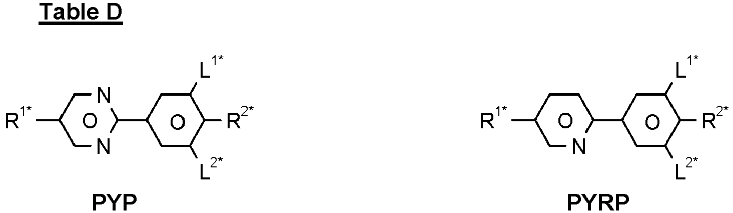

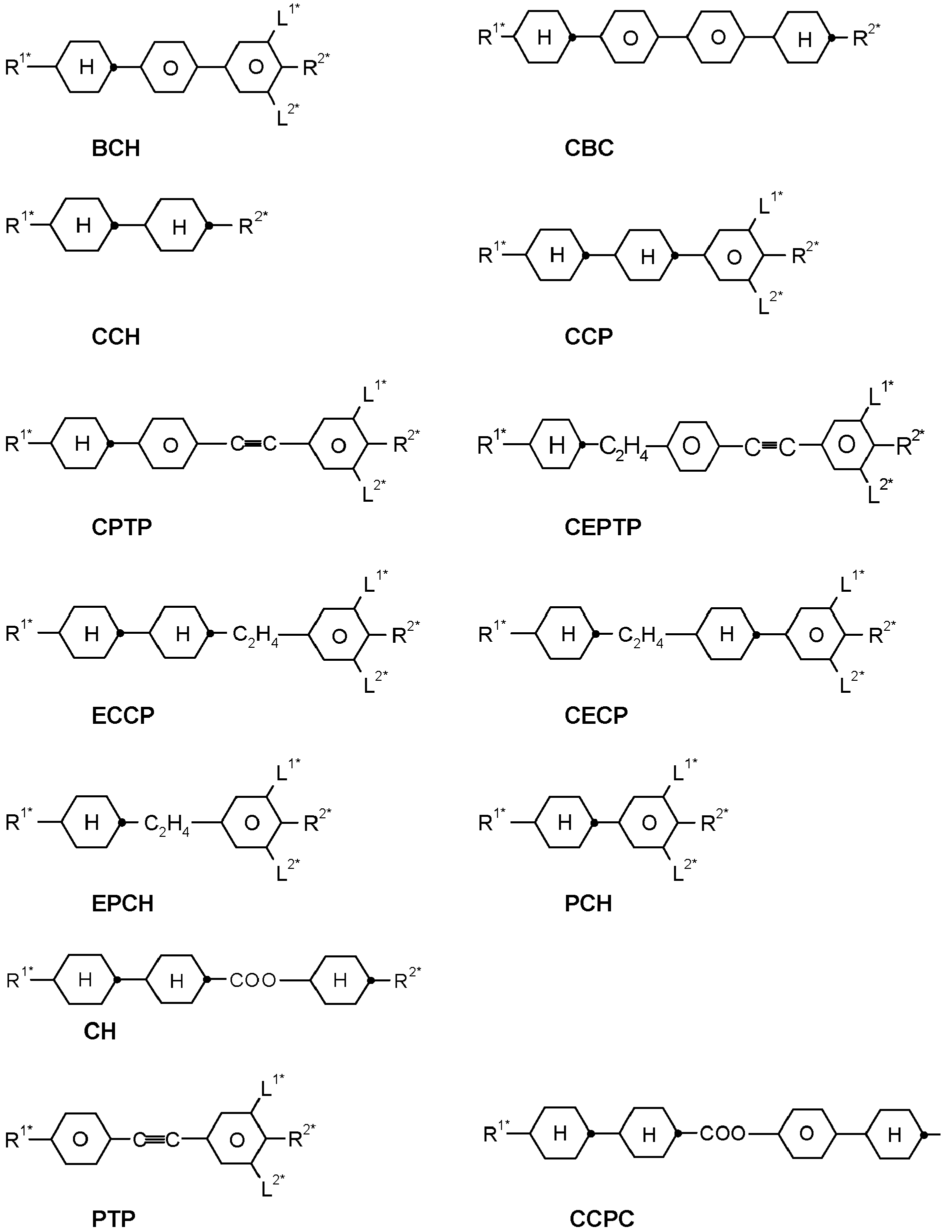

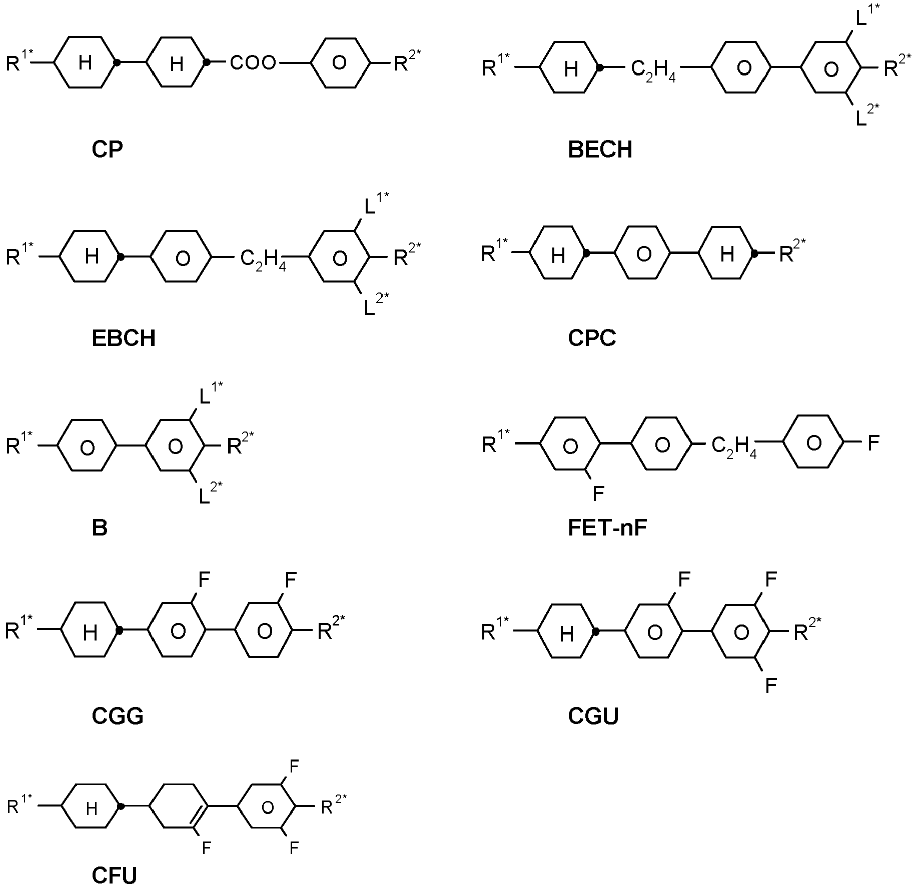

**Table E**

| In the following formulae, n and m each, independently of one another, denote 0, 1, 2, 3, 4, 5, 6, 7, 8, 9, 10, 11 or 12, in particular 2, 3, 5, furthermore 0, 4, 6. | |
|---|---|
| 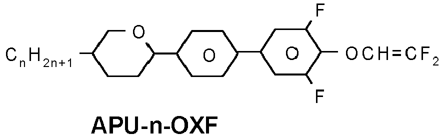 | |
| 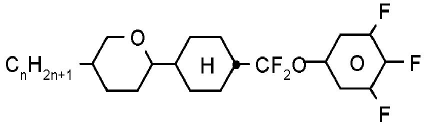 | |
| 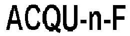 | |
| 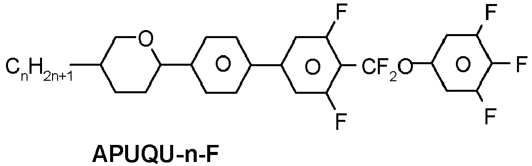 | |
| 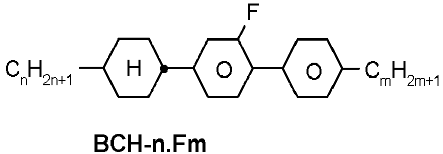 | 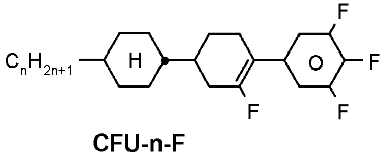 |
| 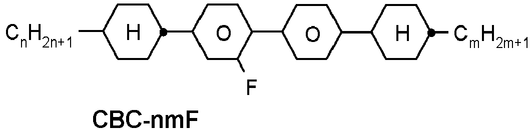 | |
| 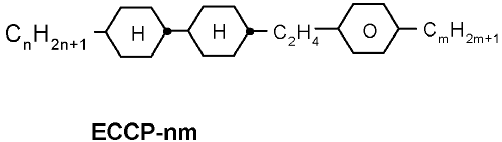 | 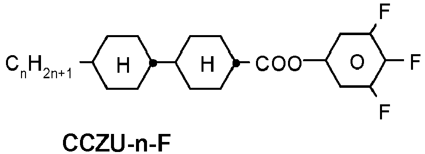 |
| 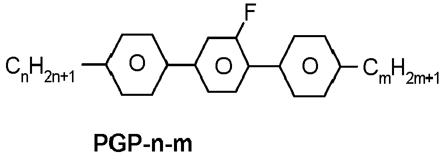 | 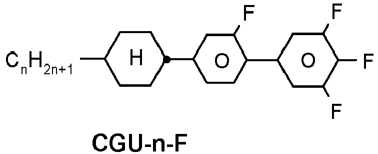 |
| 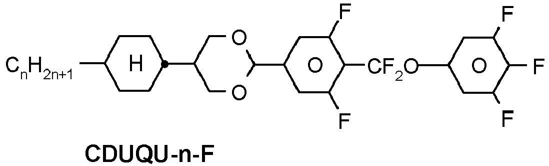 | |
| 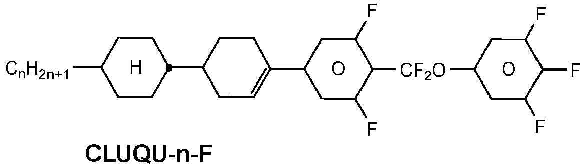 | |
| 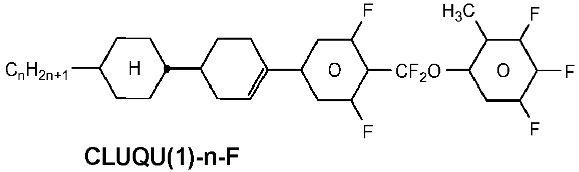 | |
| 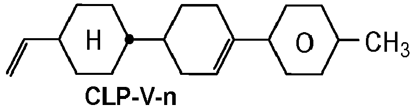 | |
| 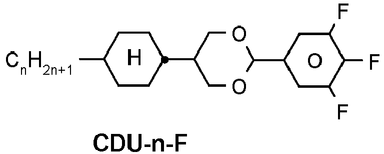 | 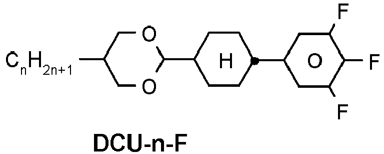 |
| 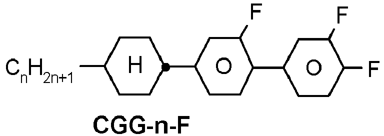 | 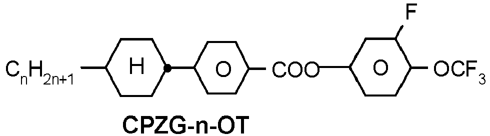 |
| 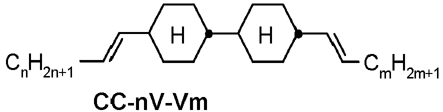 | |
| 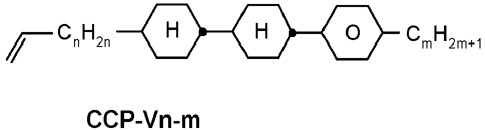 | 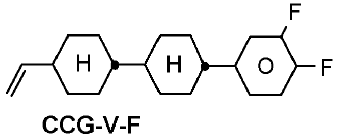 |
| 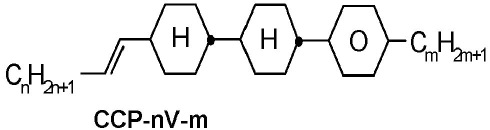 | 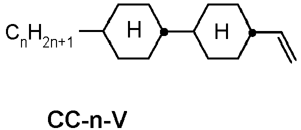 |
| 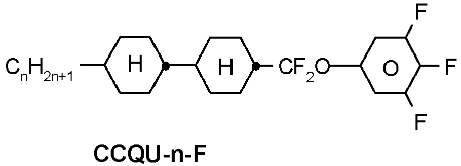 | 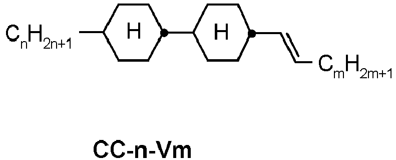 |
| 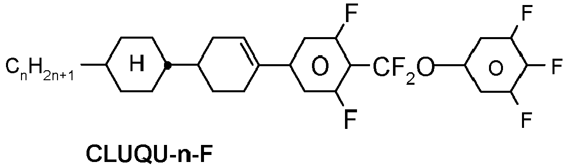 | |
| 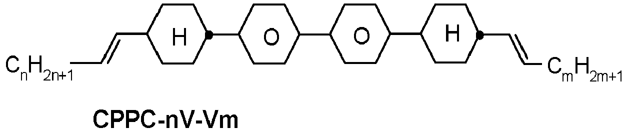 | |
| 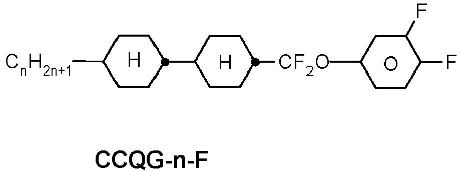 | 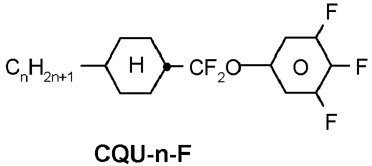 |
| 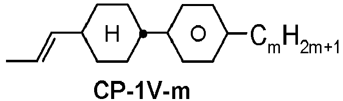 | 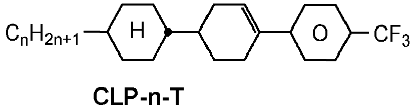 |
| 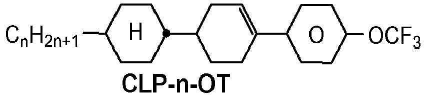 | |
| 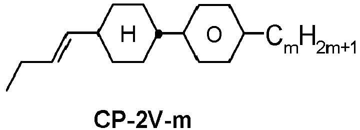 | 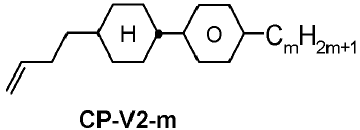 |
| 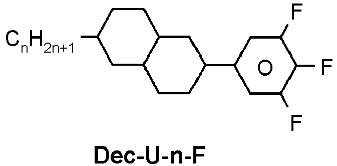 | 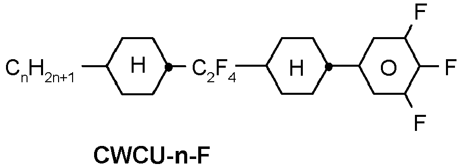 |
| 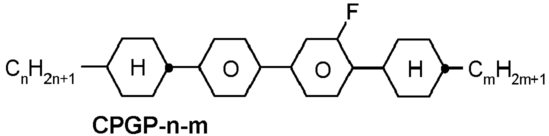 | |
| 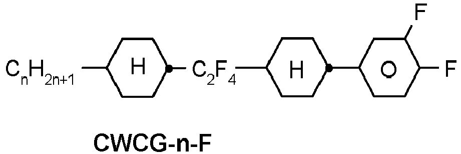 | 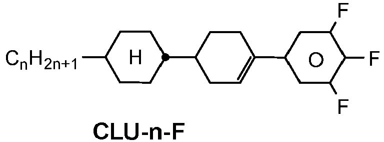 |
| 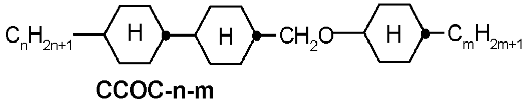 | |
| 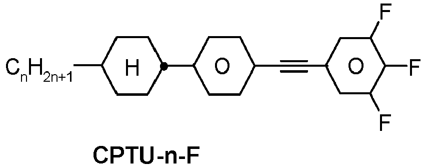 | 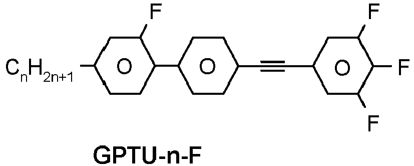 |
| 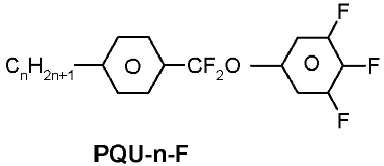 | 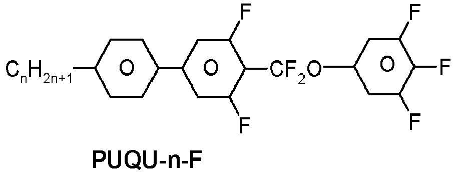 |
| 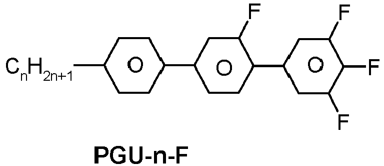 | 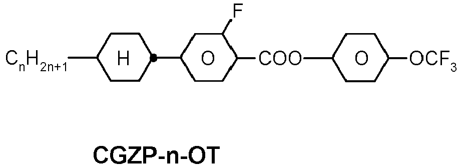 |
| 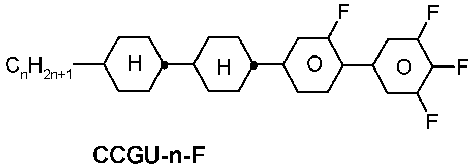 | 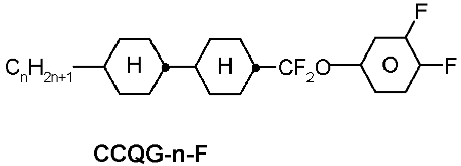 |
| 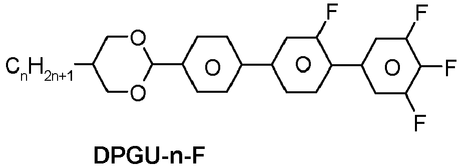 | 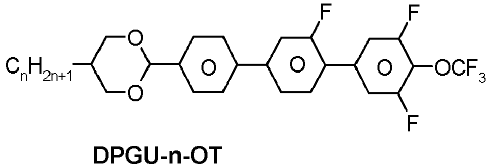 |
| 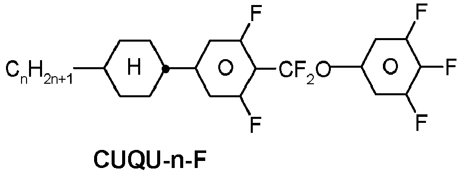 | |
| 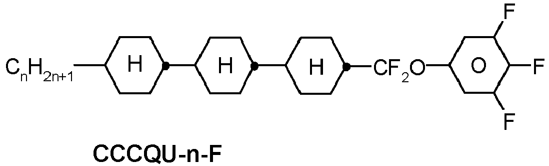 | |
| 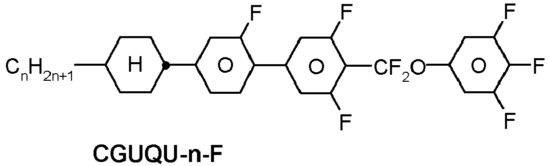 | |
| 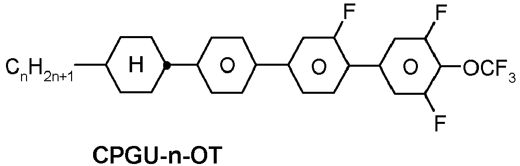 | |
| 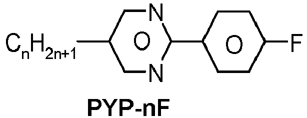 | |
| 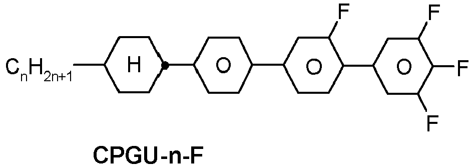 | |
| 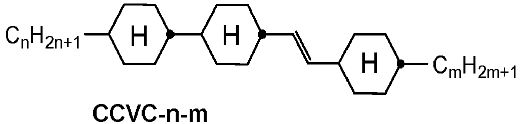 | |
| 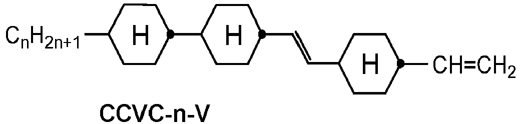 | |
| 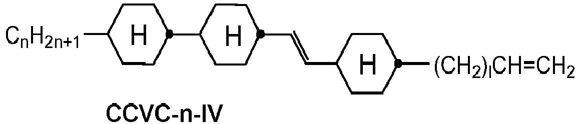 | |
| 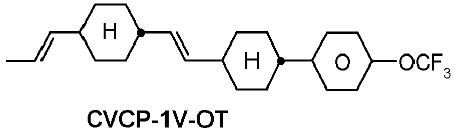 | 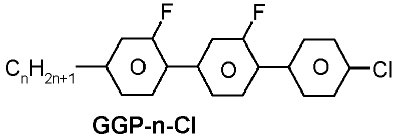 |
| 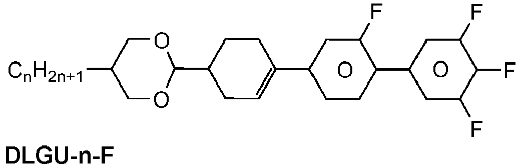 | |
| 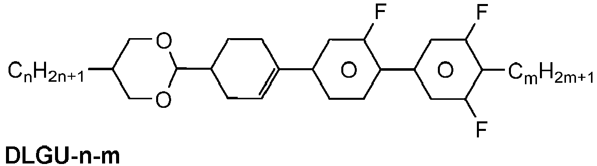 | |
| 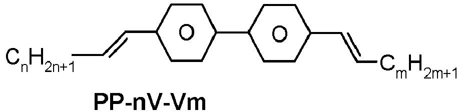 | 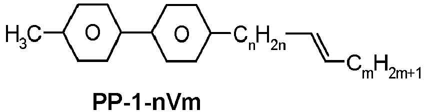 |
| 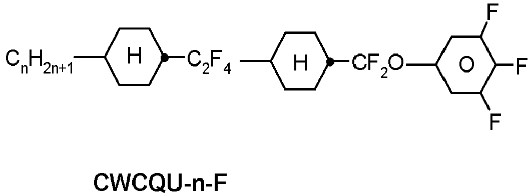 | |
| 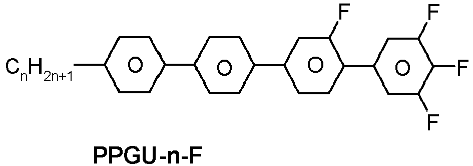 | |
| 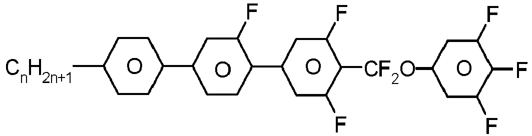 | |
| 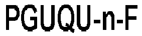 | |
| 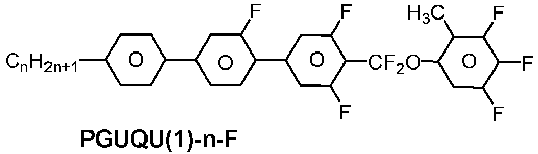 | |
| 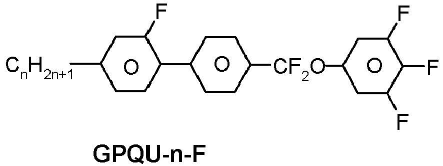 | 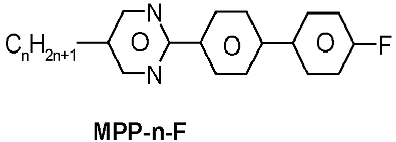 |
| 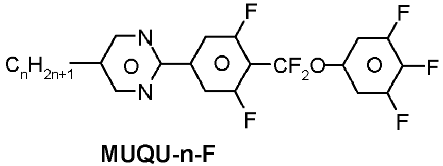 | 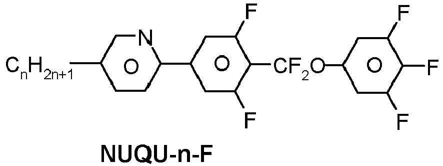 |
| 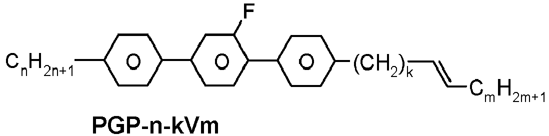 | |
| 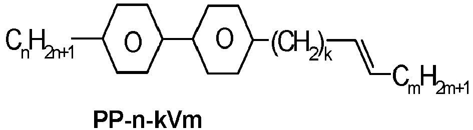 | |
| 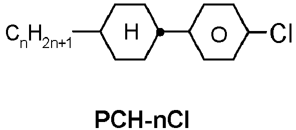 | 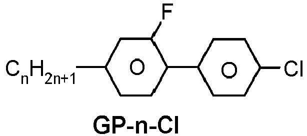 |
| 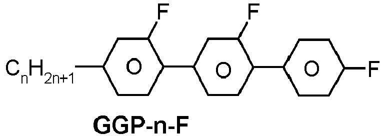 | 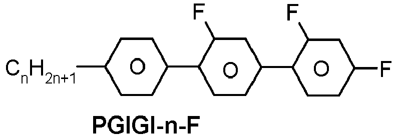 |
| 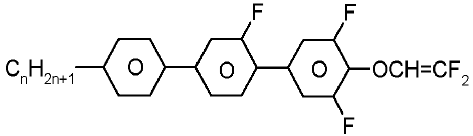 | 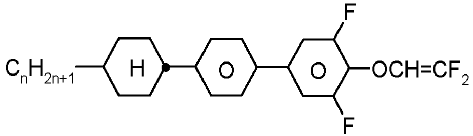 |
| 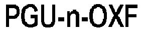 | 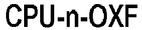 |
| 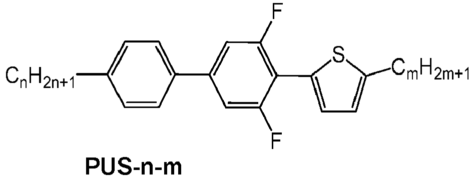 | 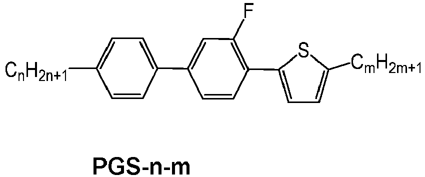 |
| 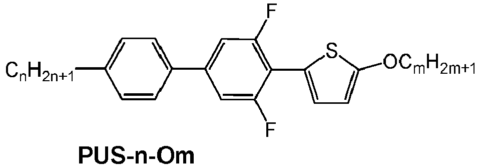 | 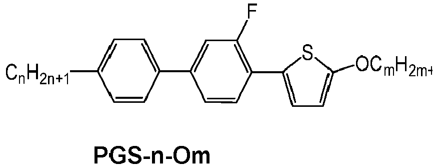 |
| 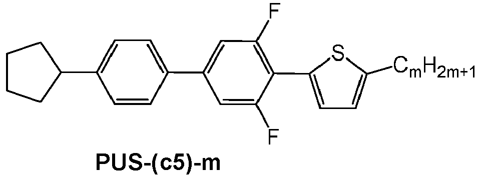 | 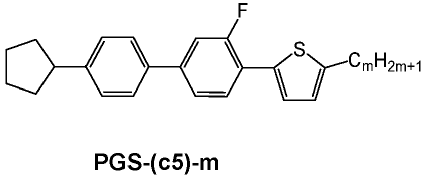 |
| 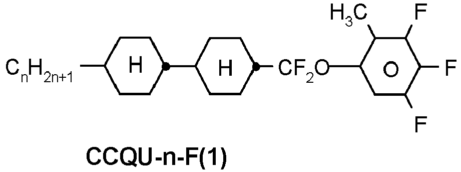 | |
| 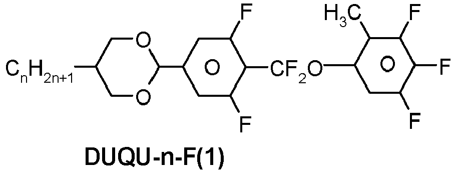 | |
| 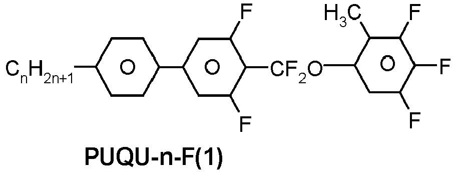 | |
| 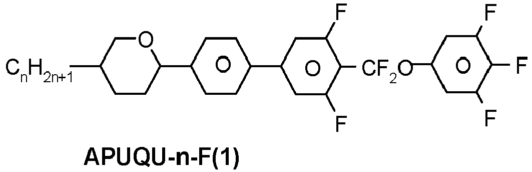 | |
| 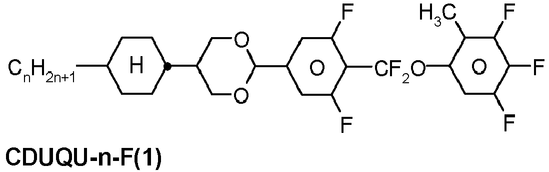 | |
| 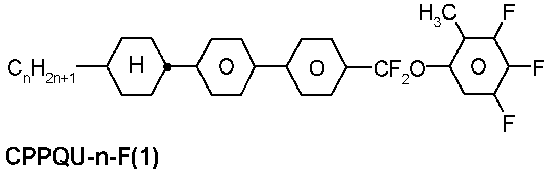 | |
| 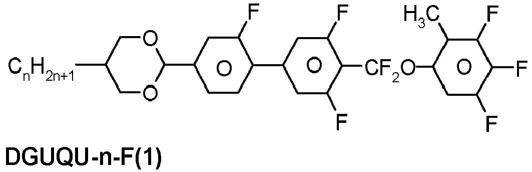 | |
| 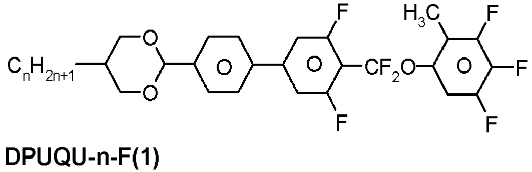 | |
| 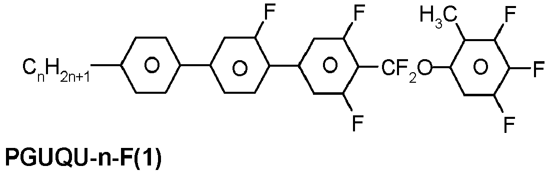 | |
| 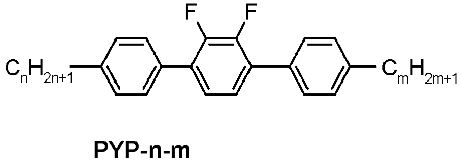 | |

Particular preference is given to LC media which, besides the compounds of the Formulae LP1 and/or LP2 and ST, comprise at least one, two, three, four or more compounds from Table E.

**Table F**

| Table F indicates possible dopants which are generally added to the LC media according to the invention. The LC media preferably comprise 0-10% by weight, in particular 0.01-5% by weight and particularly preferably 0.01-3% by weight of dopants. | |
|---|---|
| 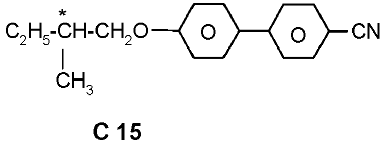 | 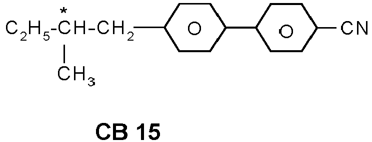 |
| 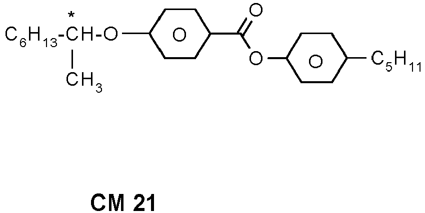 | 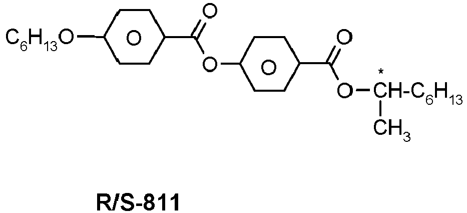 |
| 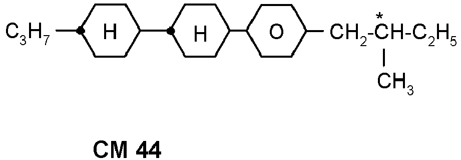 | 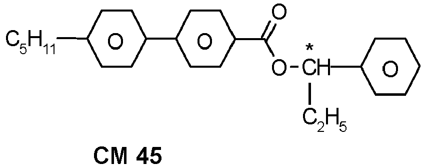 |
| 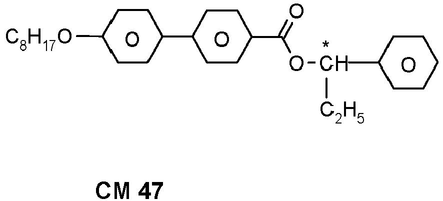 | 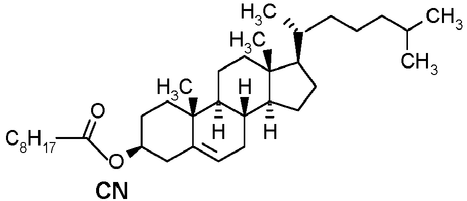 |
| 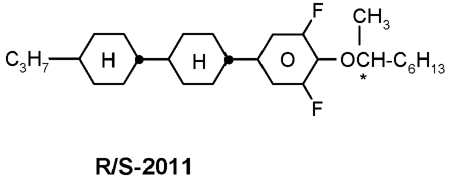 | 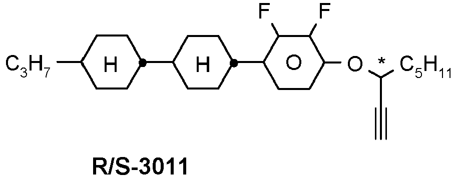 |
| 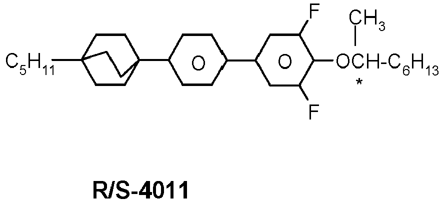 | 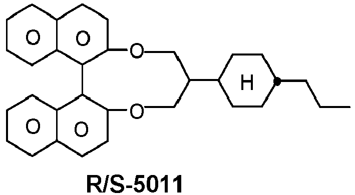 |
| 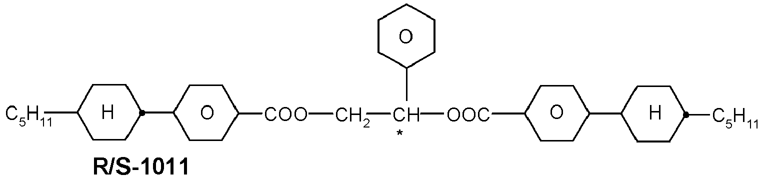 | |

**Table G**

| Stabilisers, which can additionally be added, for example, to the LC media according to the invention in amounts of 0 to 10% by weight, are mentioned below. | |
|---|---|
| 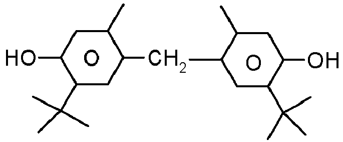 | 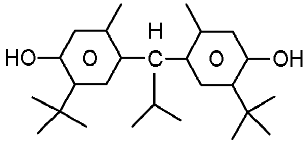 |
| 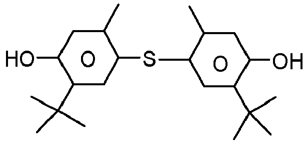 | 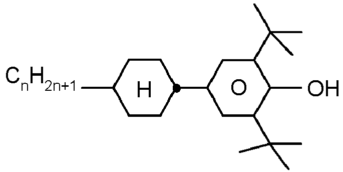 |
| | n = 1, 2, 3, 4, 5, 6 or 7 |
| 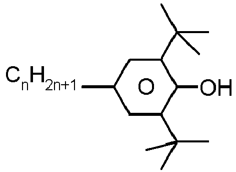 | 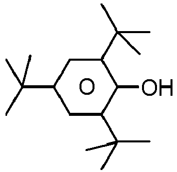 |
| n = 1, 2, 3, 4, 5, 6 or 7 | |
| 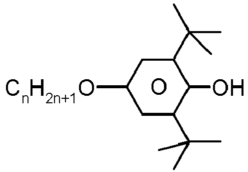 | 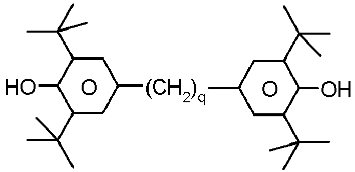 |
| n = 1, 2, 3, 4, 5, 6 or 7 | q = 1, 2, 3, 4, 5, 6 or 7 |
| 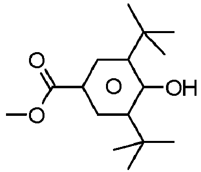 | 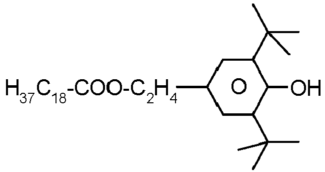 |
| 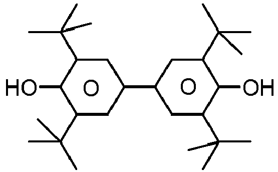 | 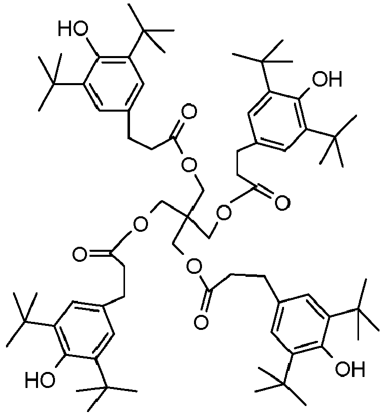 |
| 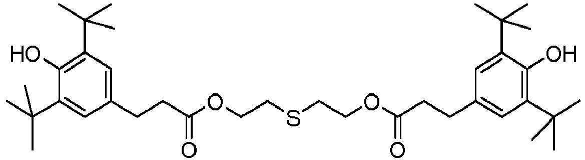 | |
| 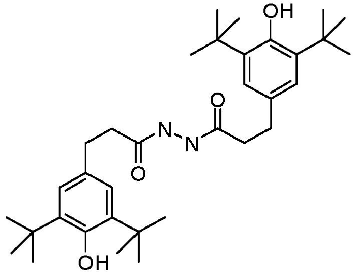 | 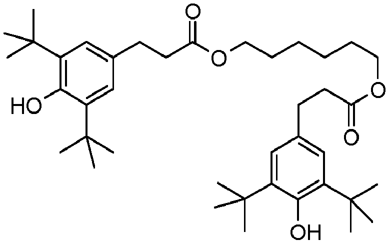 |
| 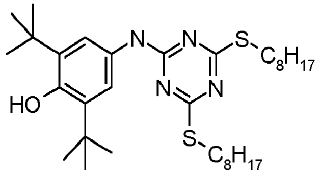 | 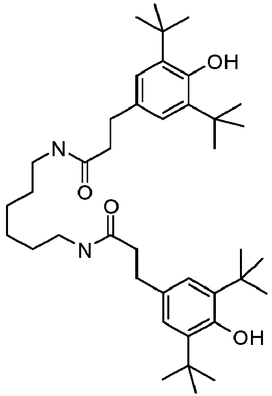 |
| 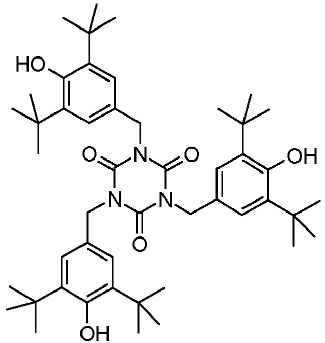 | 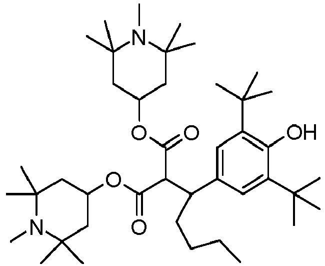 |
| 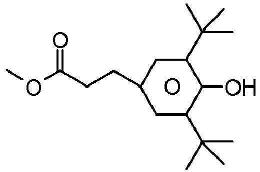 | 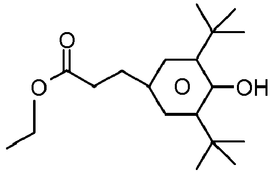 |
| 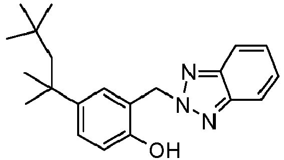 | 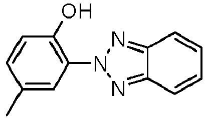 |
| 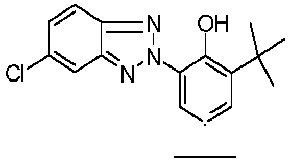 | 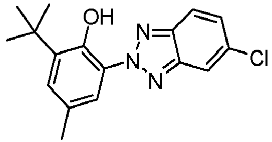 |
| 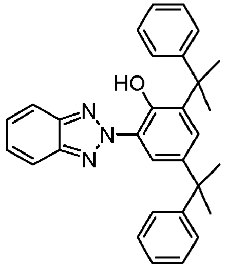 | 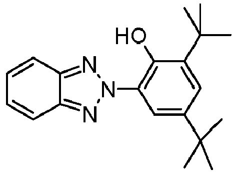 |
| 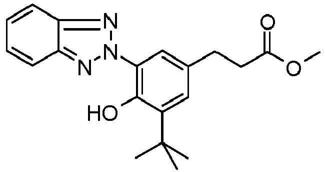 | 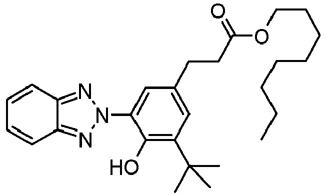 |
| 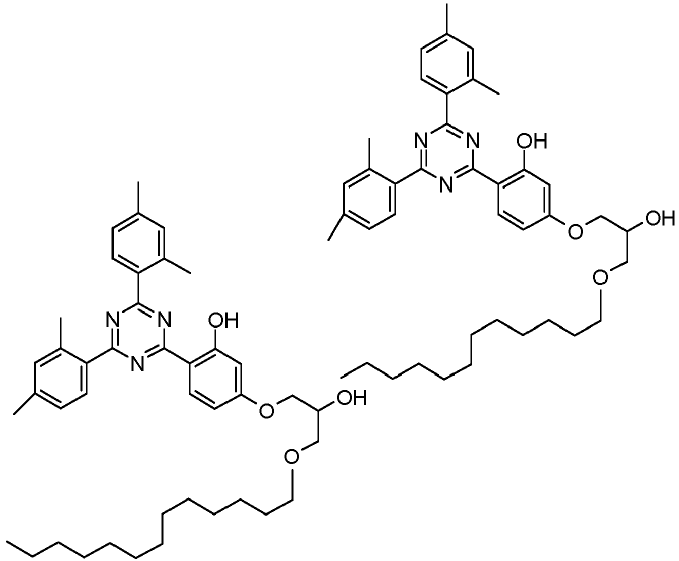 | |
| 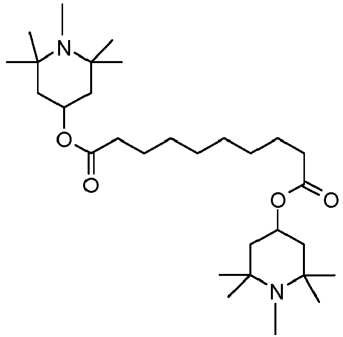 | |
| 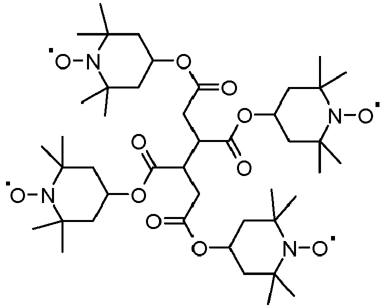 | |
| 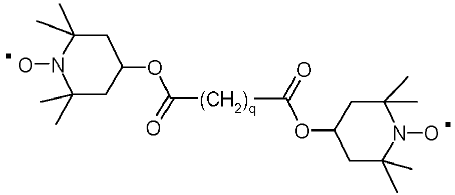 | |
| q = 1, 2, 3, 4, 5, 6, 7, 8, 9 or 10 | |

**Table H**

| | |
|---|---|
| Table H shows illustrative reactive mesogenic compounds (RMs) which can be used in the LC media in accordance with the present invention. | |
| 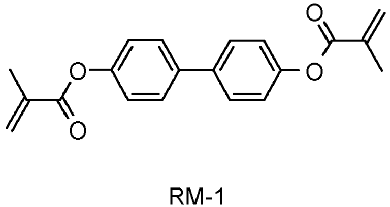 | 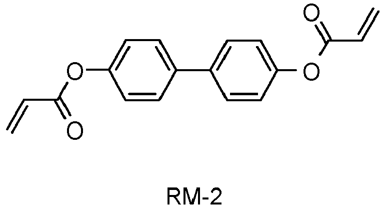 |
| 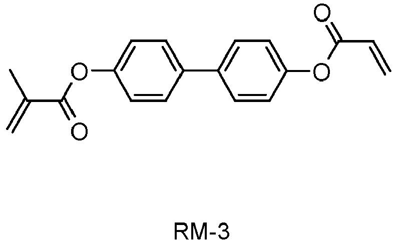 | 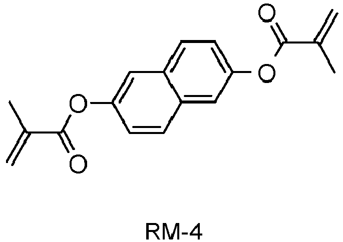 |
| 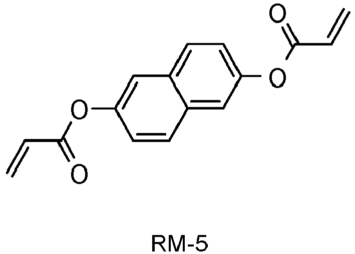 | 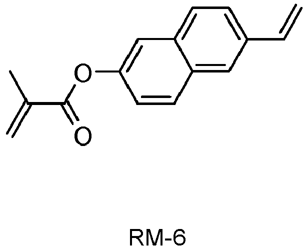 |
| 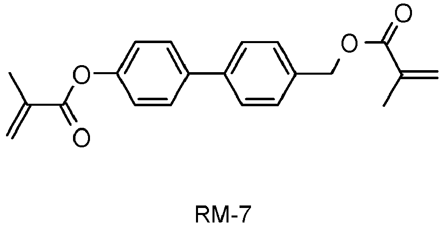 | 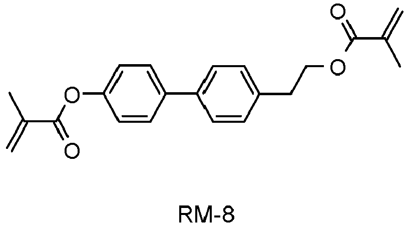 |
| 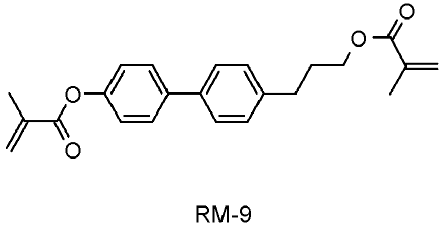 | 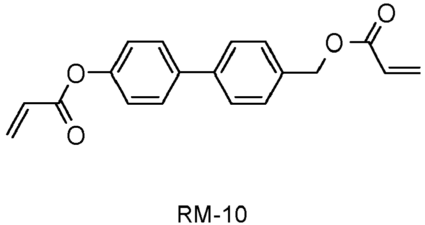 |
| 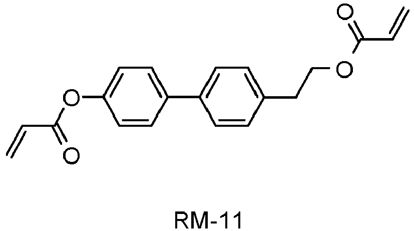 | 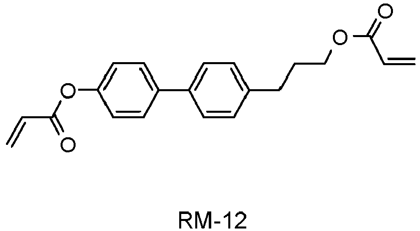 |
| 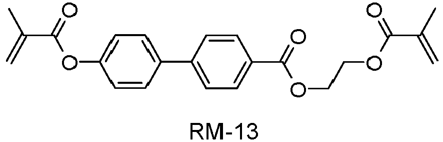 | 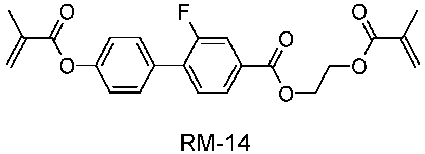 |
| 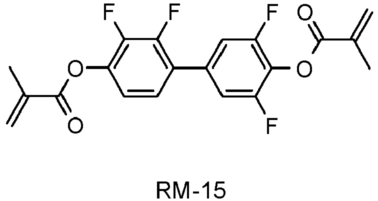 | 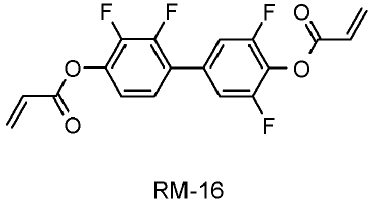 |
| 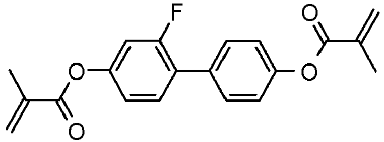 | 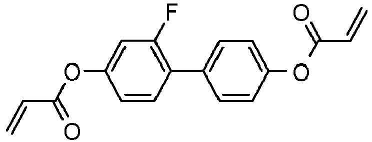 |
| 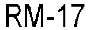 | 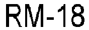 |
| 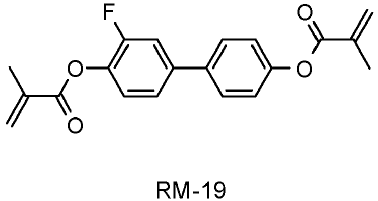 | 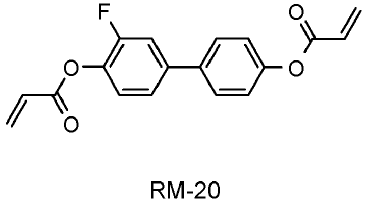 |
| 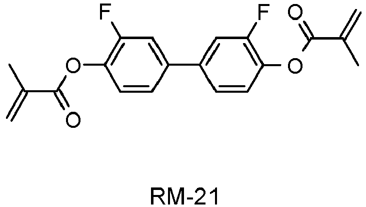 | 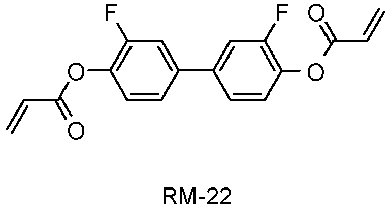 |
| 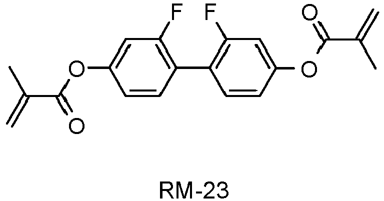 | 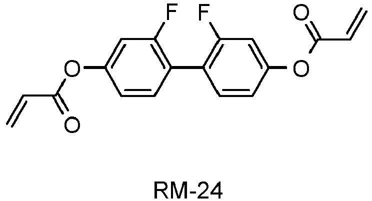 |
| 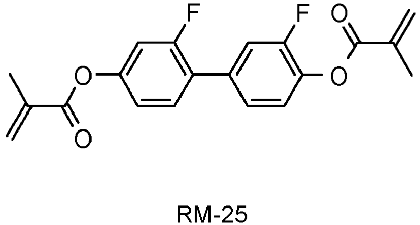 | 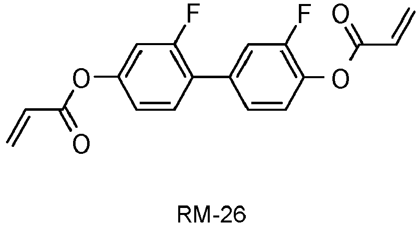 |
| 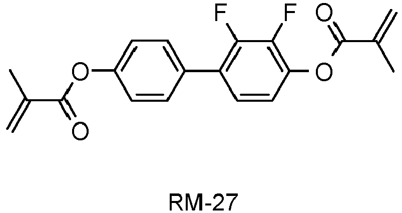 | 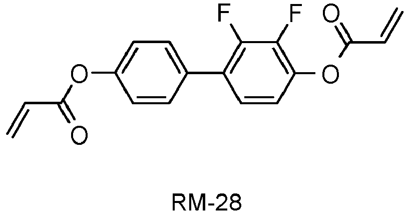 |
| 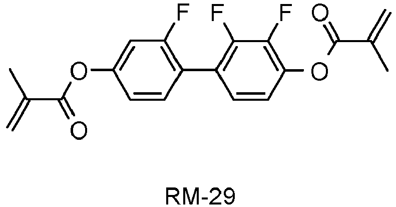 | 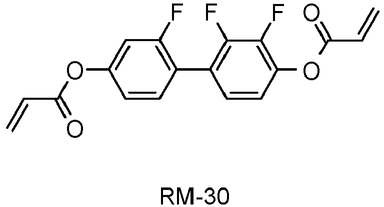 |
| 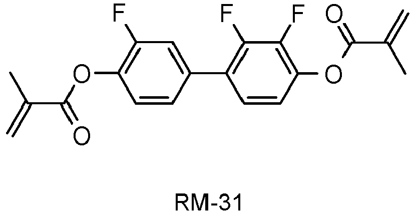 | 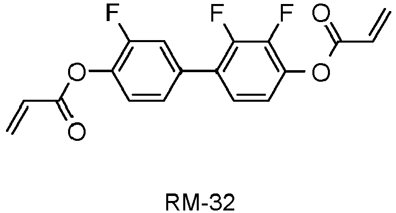 |
| 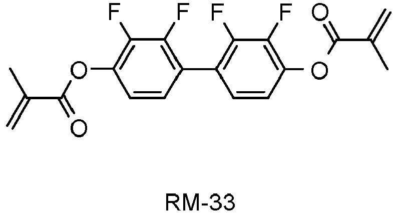 | 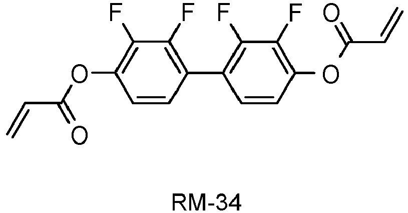 |
| 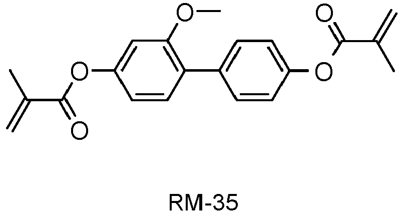 | 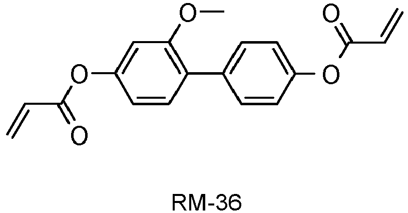 |
| 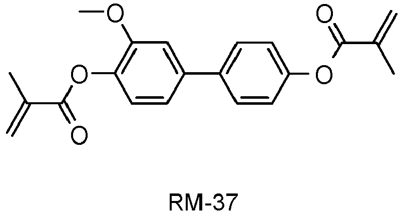 | 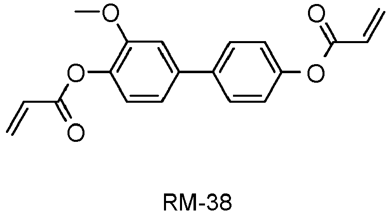 |
| 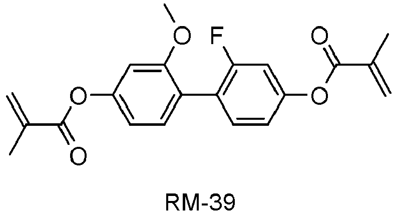 | 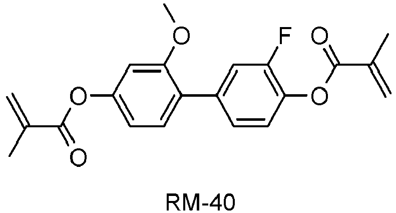 |
| 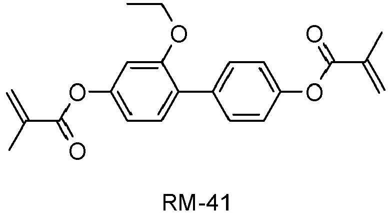 | 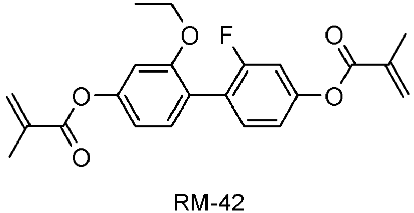 |
| 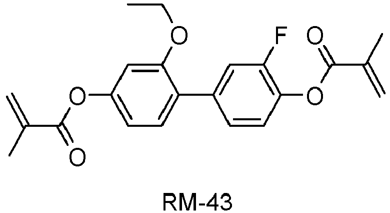 | 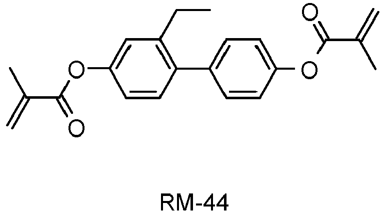 |
| 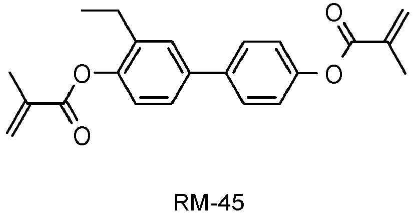 | 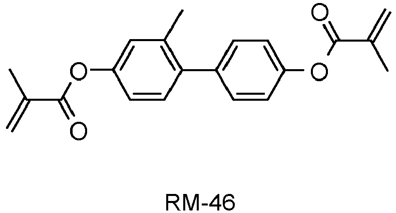 |
| 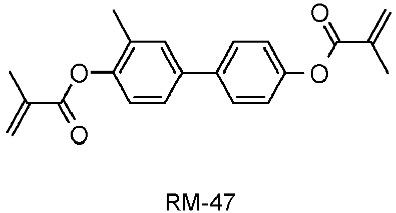 | 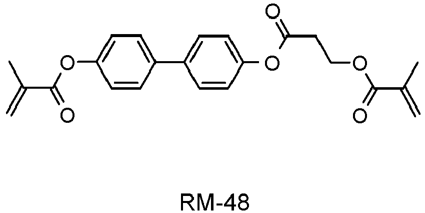 |
| 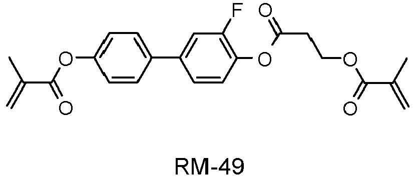 | |
| 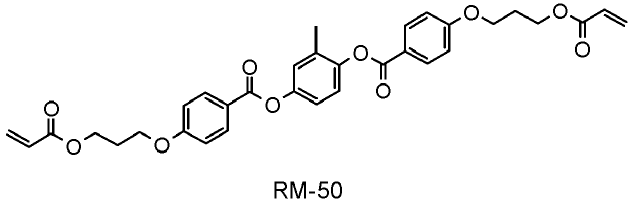 | |
| 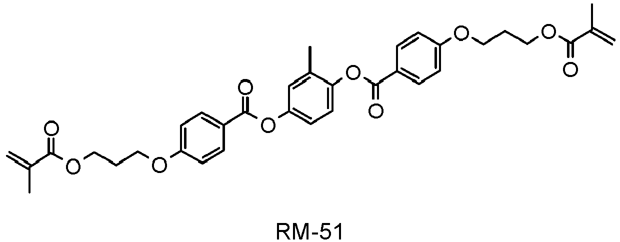 | |
| 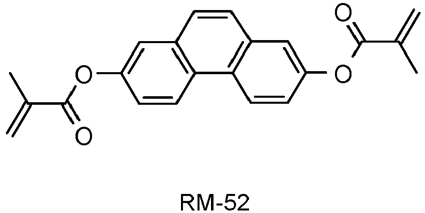 | 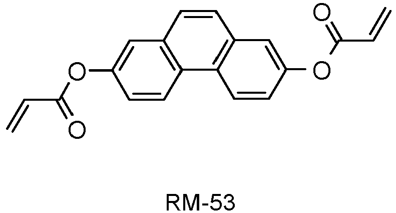 |
| 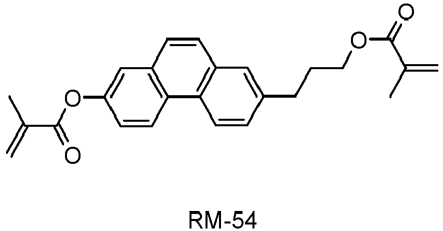 | 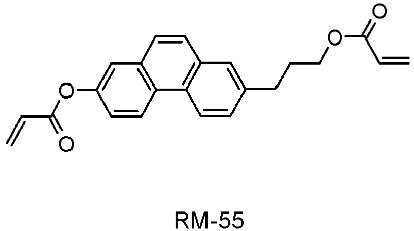 |
| 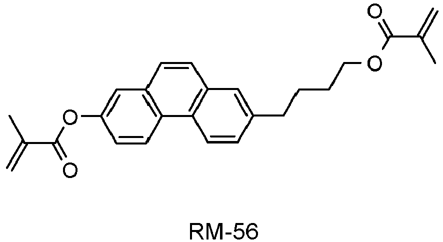 | 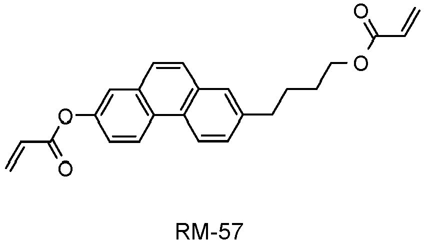 |
| 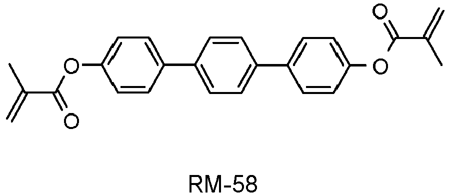 | 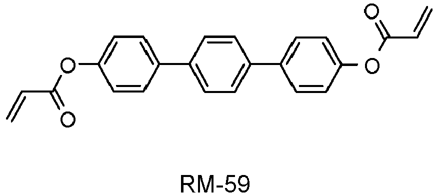 |
| 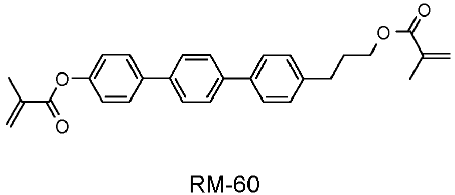 | 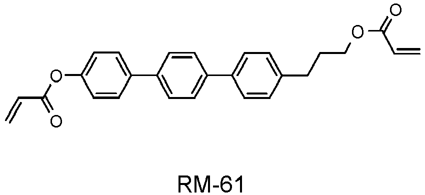 |
| 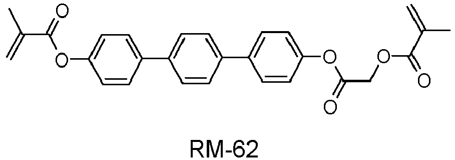 | 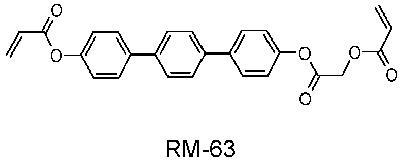 |
| 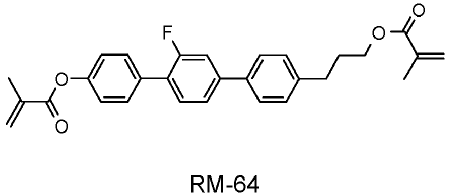 | 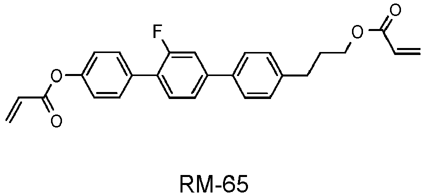 |
| 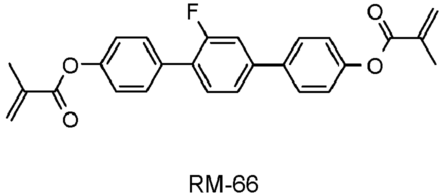 | 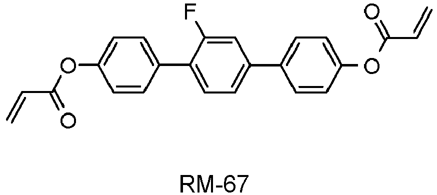 |
| 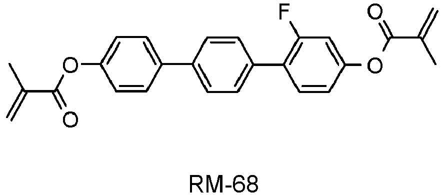 | 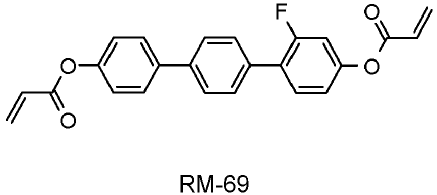 |
| 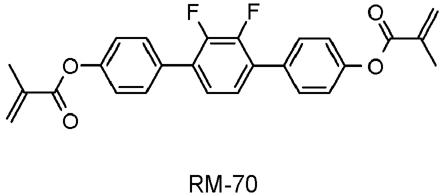 | 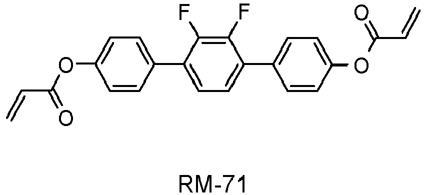 |
| 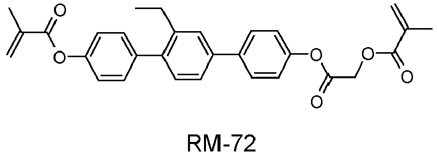 | 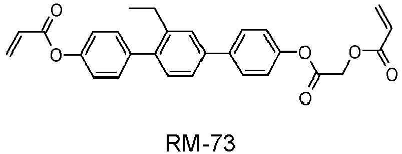 |
| 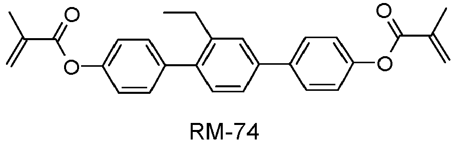 | 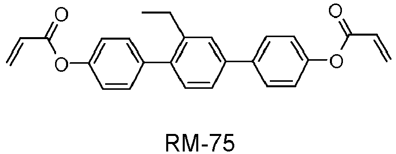 |
| 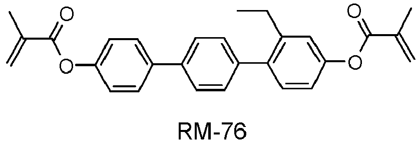 | 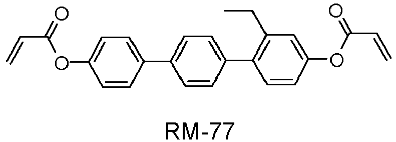 |
| 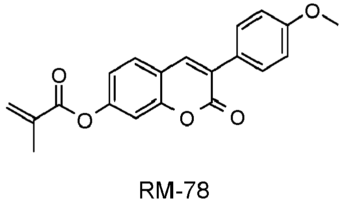 | 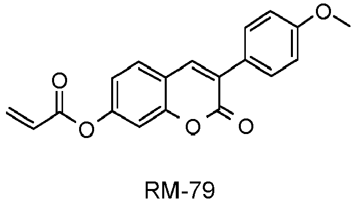 |
| 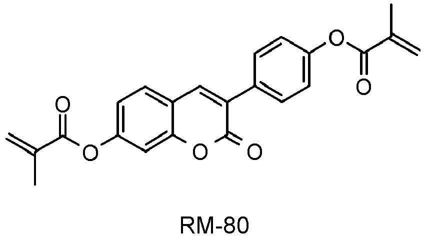 | 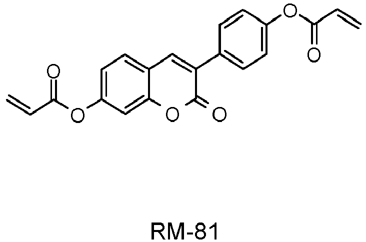 |
| 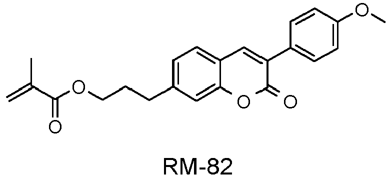 | 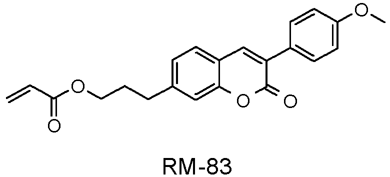 |
| 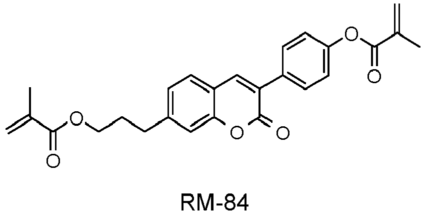 | 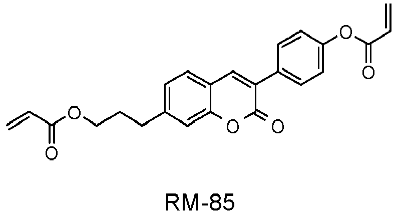 |
| 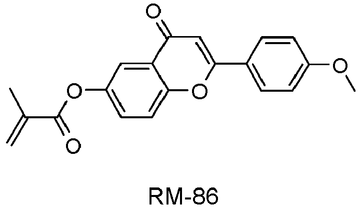 | 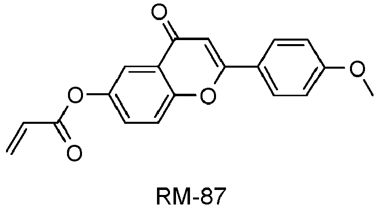 |
| 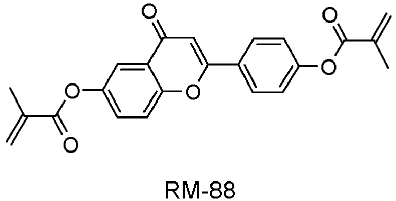 | 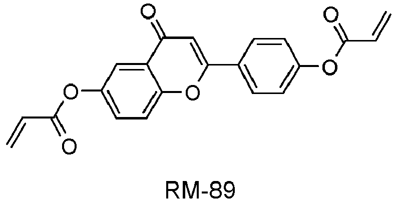 |
| 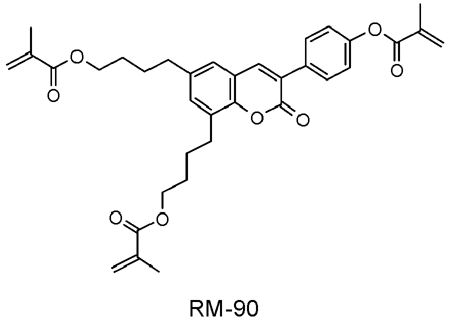 | 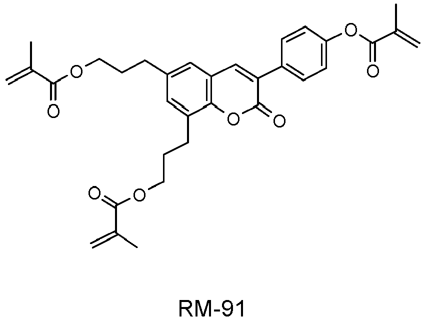 |
| 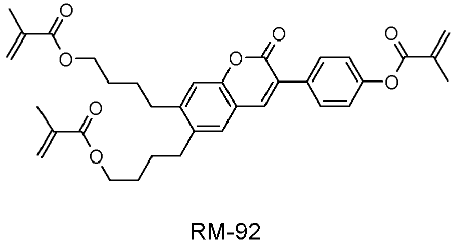 | 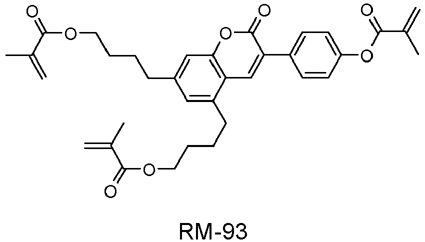 |
| 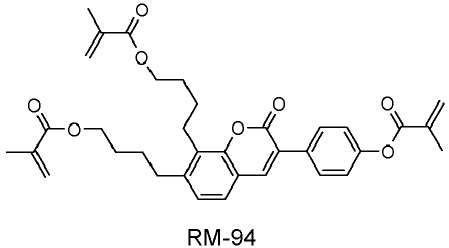 | 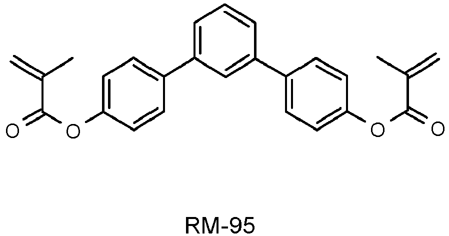 |
| 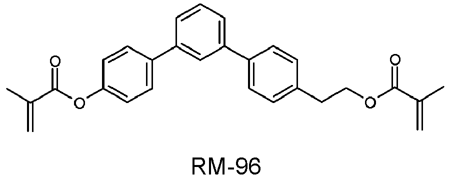 | 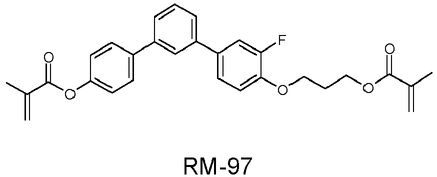 |
| 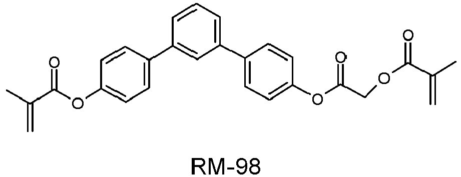 | 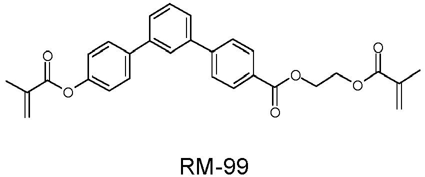 |
| 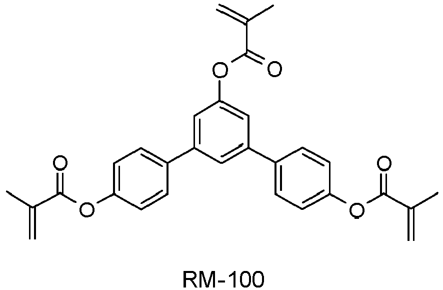 | |
| 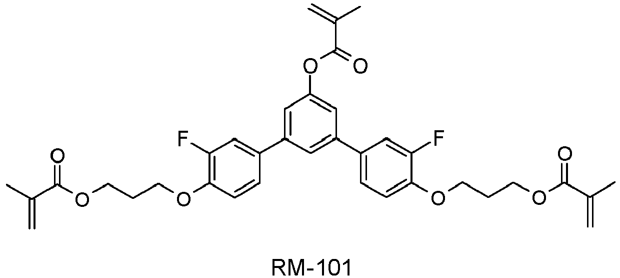 | |
| 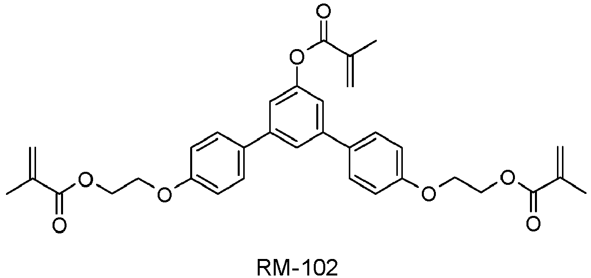 | |
| 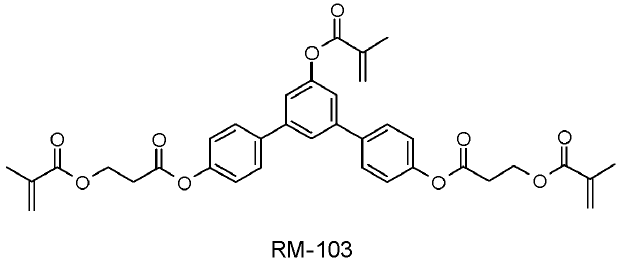 | |
| 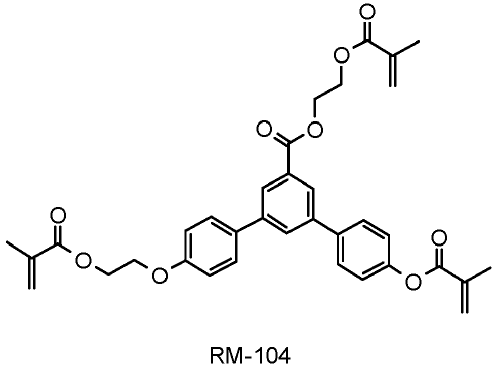 | |
| 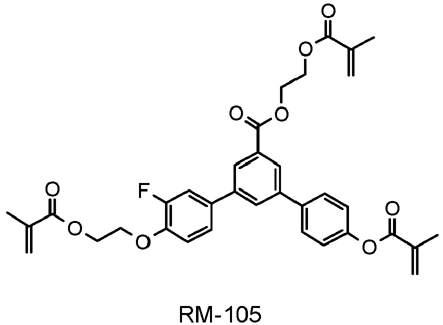 | 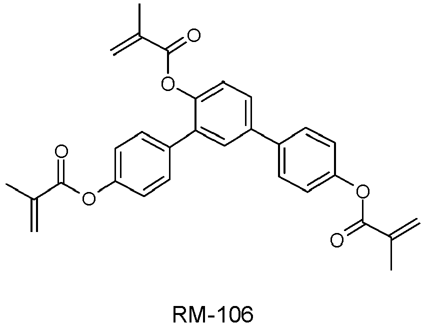 |
| 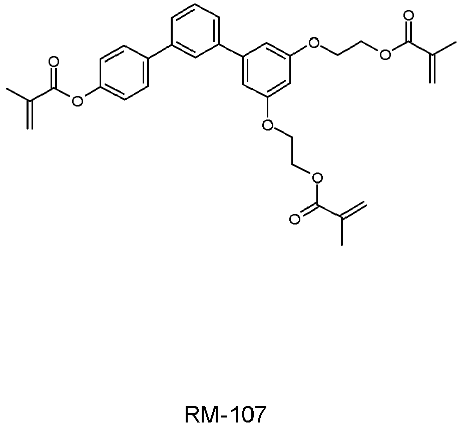 | 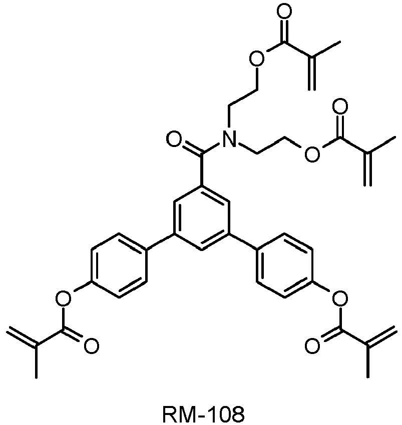 |
| 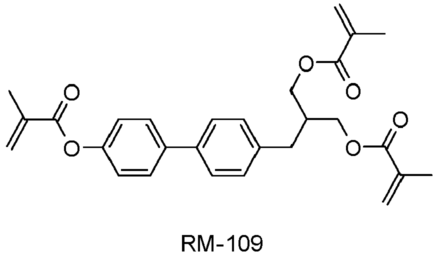 | 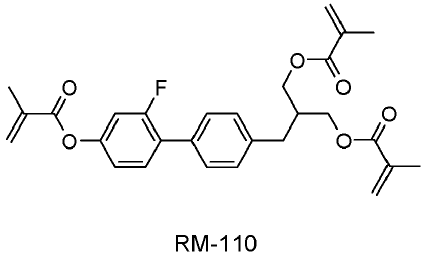 |
| 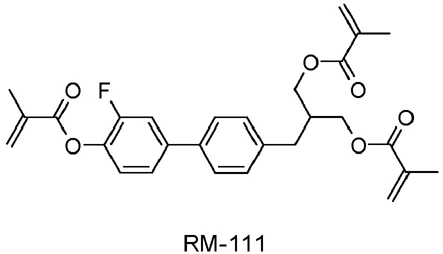 | 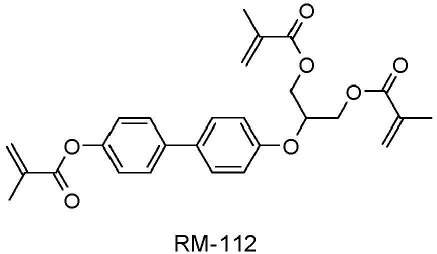 |
| 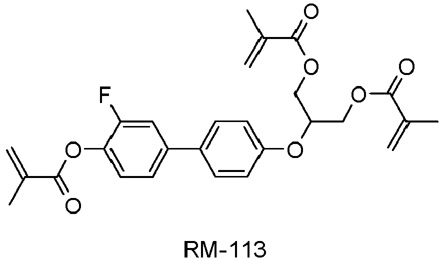 | 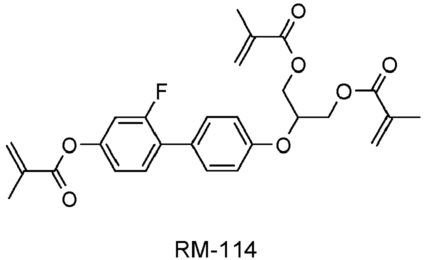 |
| 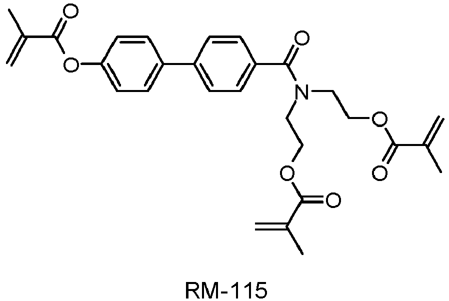 | 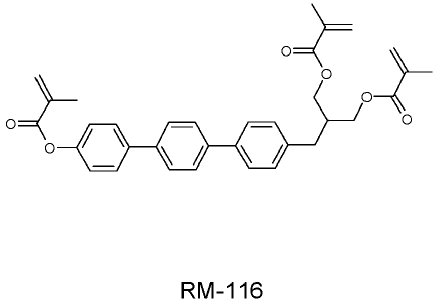 |
| 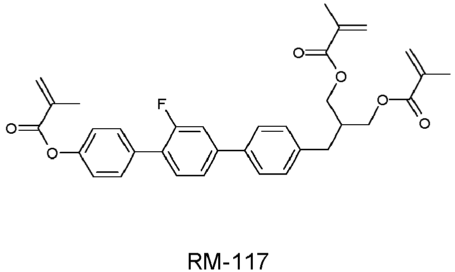 | 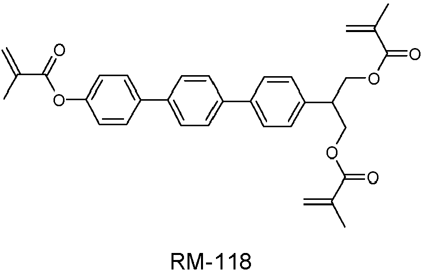 |
| 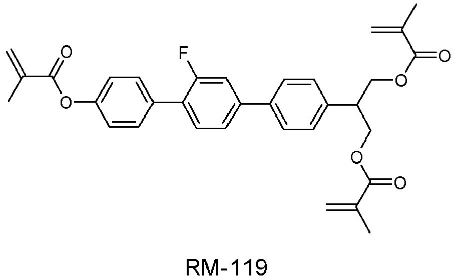 | 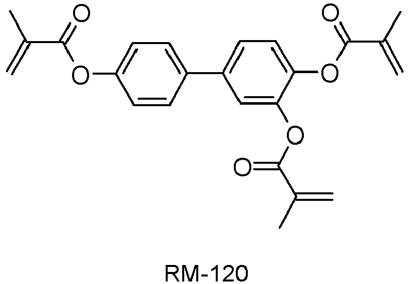 |
| 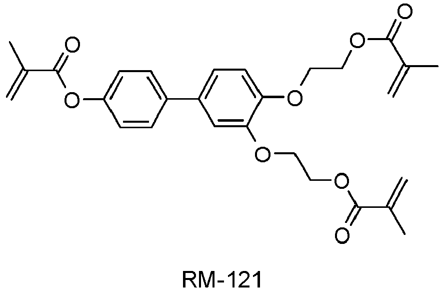 | 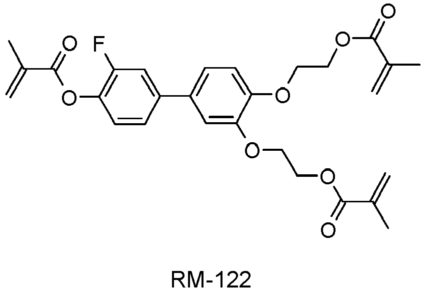 |
| 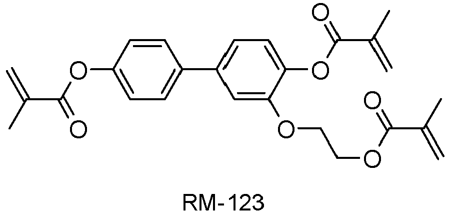 | 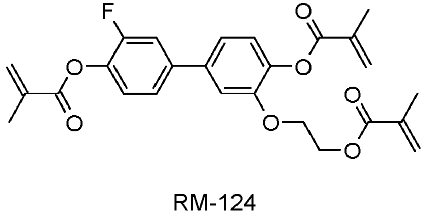 |
| 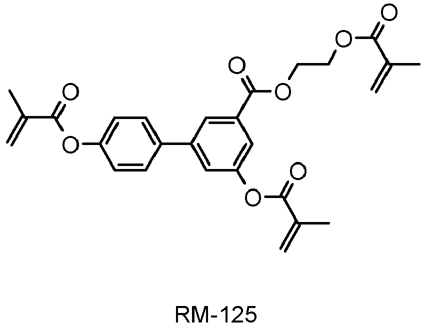 | 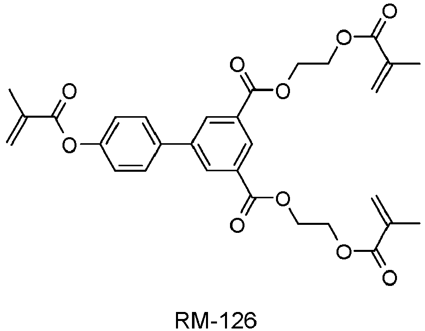 |
| 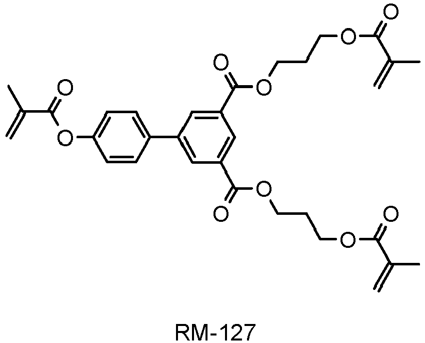 | 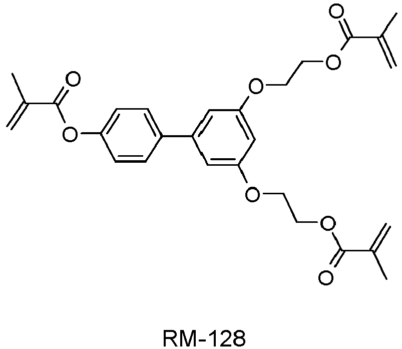 |
| 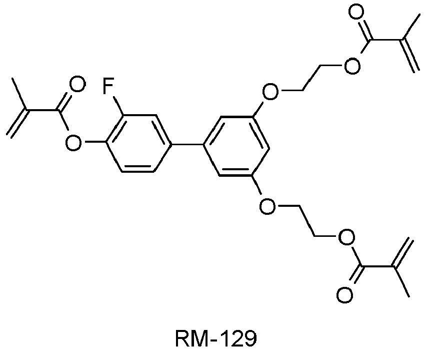 | 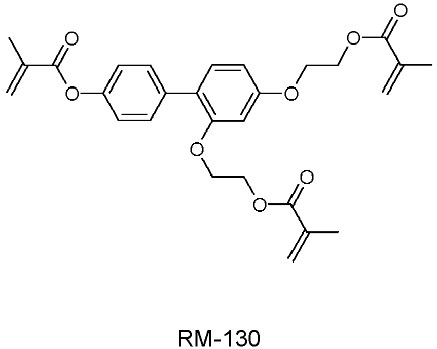 |
| 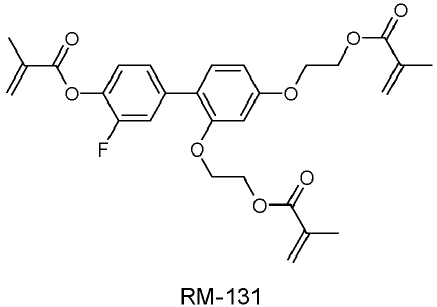 | 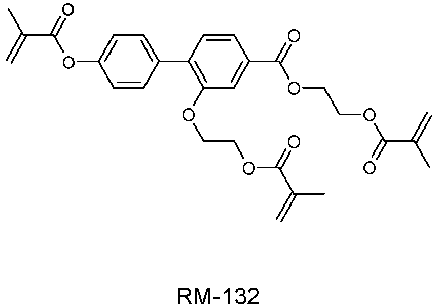 |
| 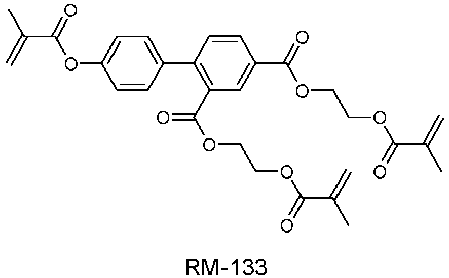 | 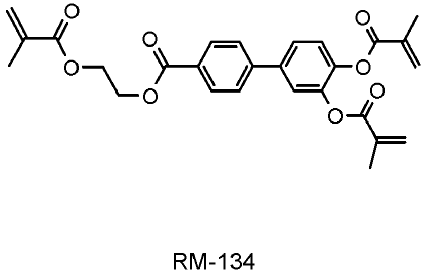 |
| 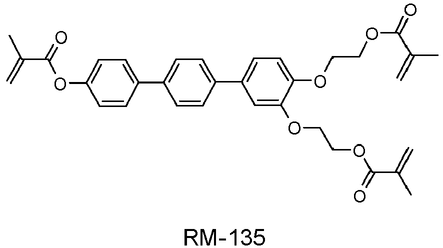 | 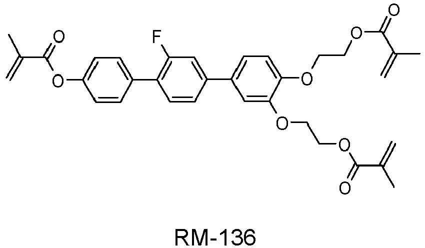 |
| 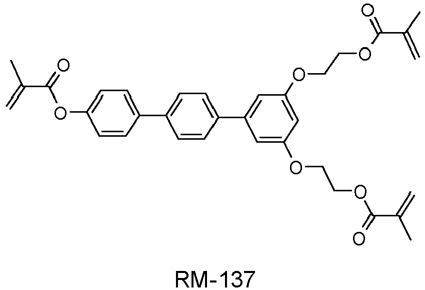 | 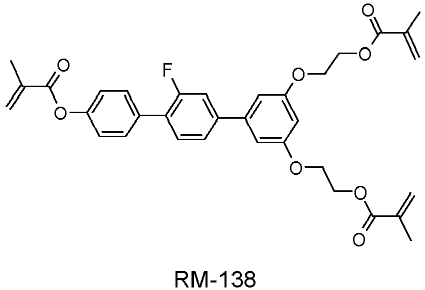 |
| 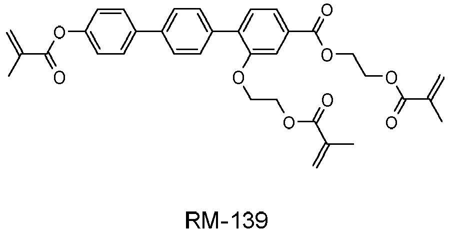 | 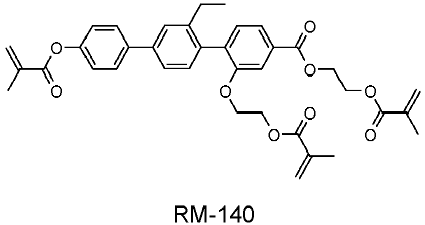 |
| 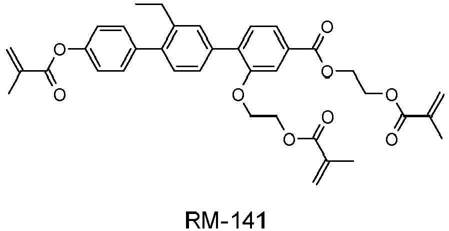 | 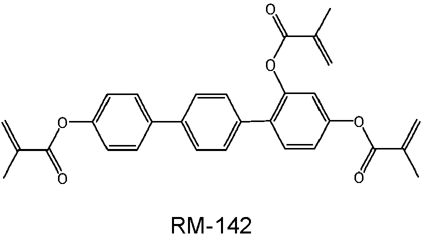 |
| 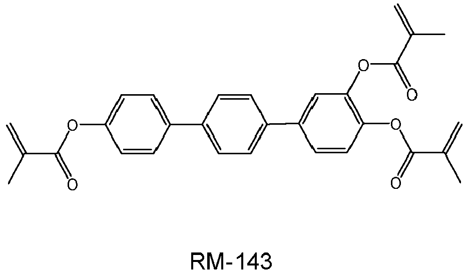 | 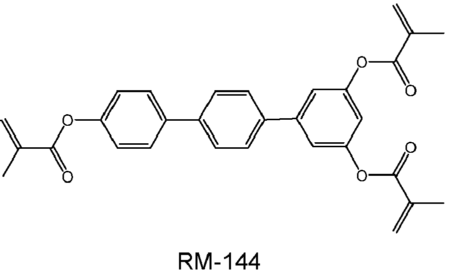 |
| 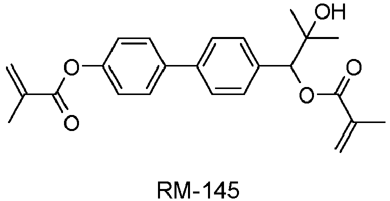 | 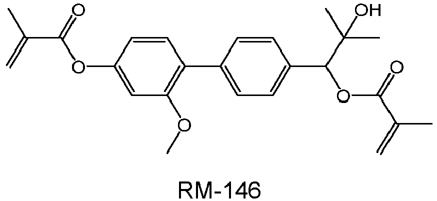 |
| 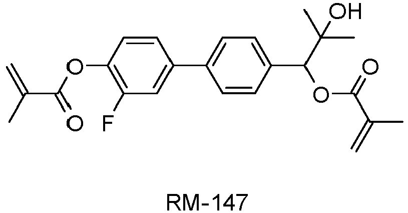 | 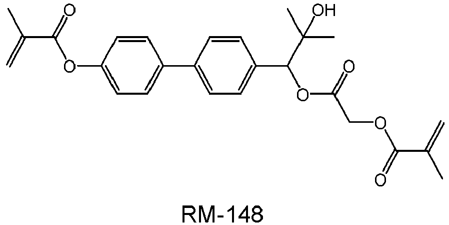 |
| 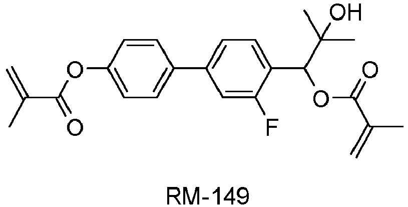 | 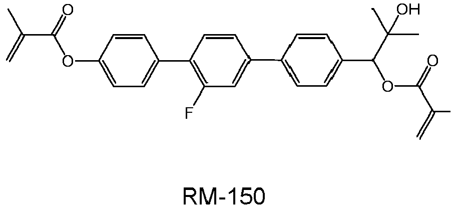 |
| 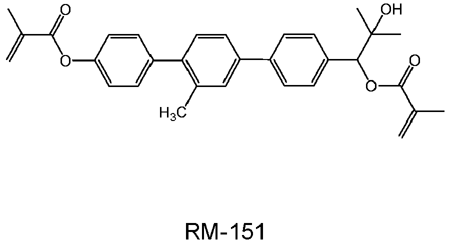 | 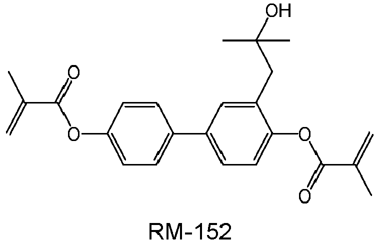 |
| 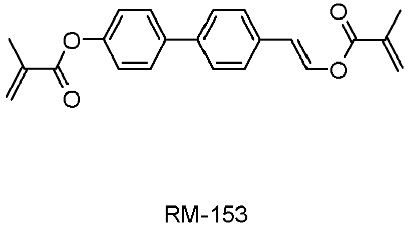 | 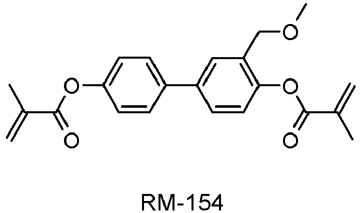 |
| 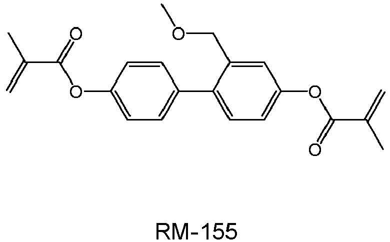 | 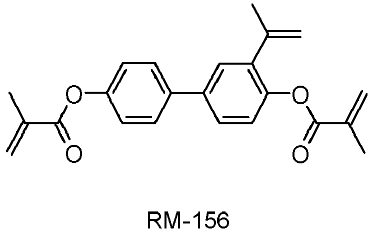 |
| 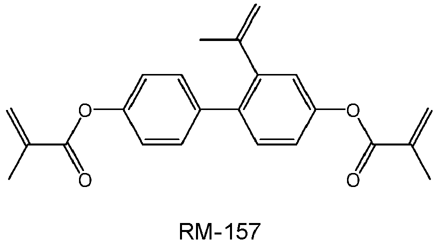 | 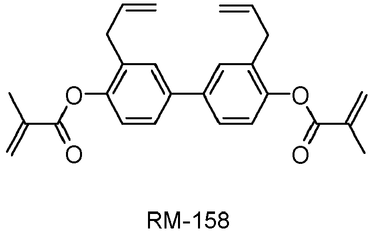 |
| 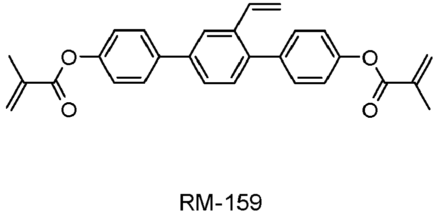 | 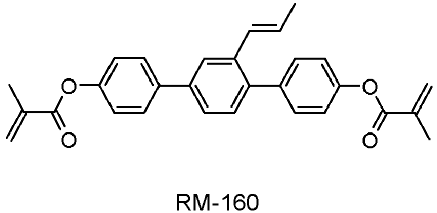 |
| 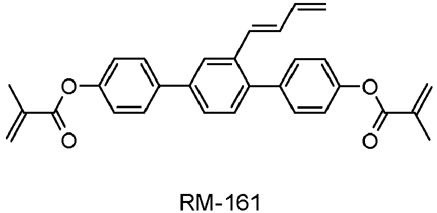 | 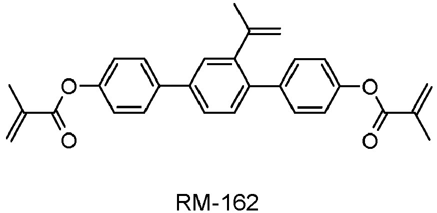 |
| 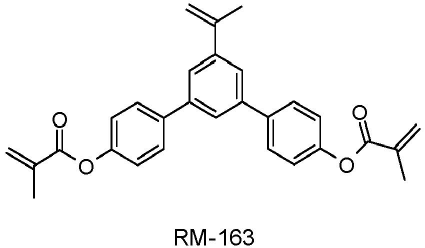 | 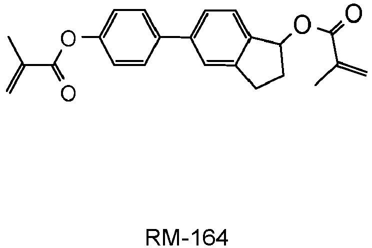 |
| 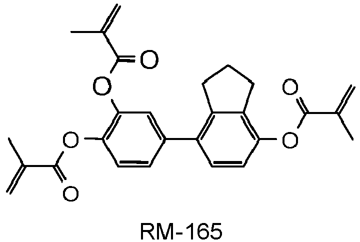 | 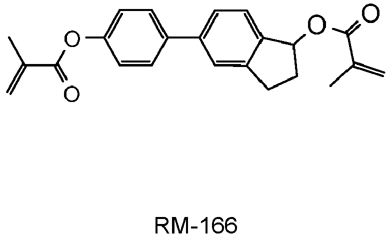 |
| 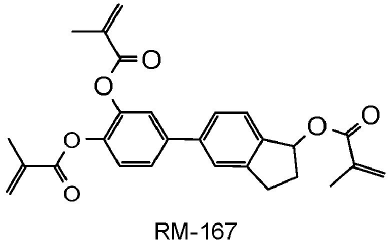 | 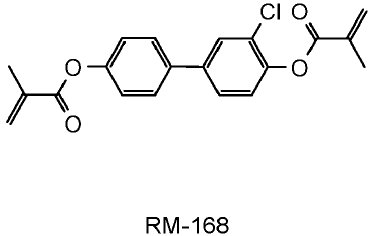 |
| 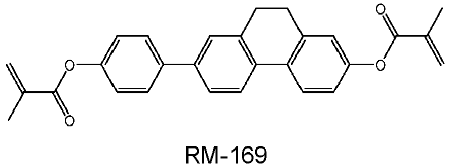 | 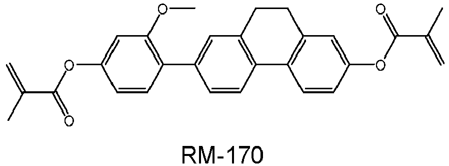 |
| 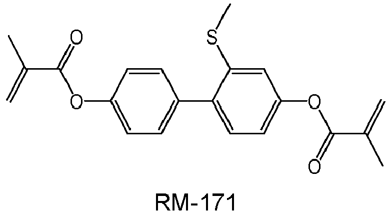 | 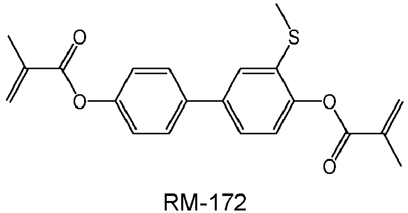 |
| 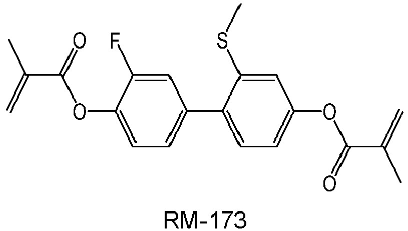 | 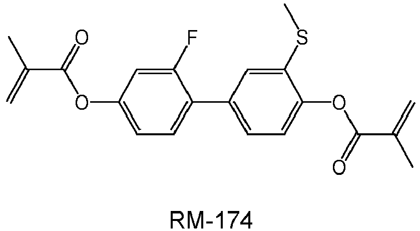 |
| 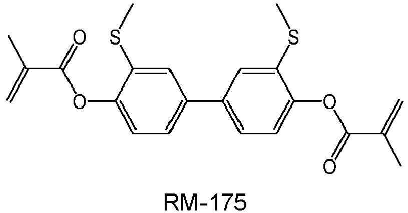 | 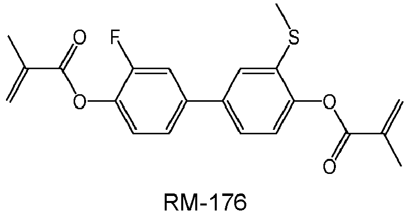 |
| 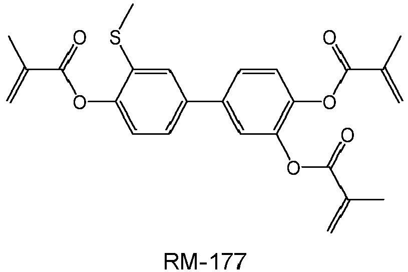 | 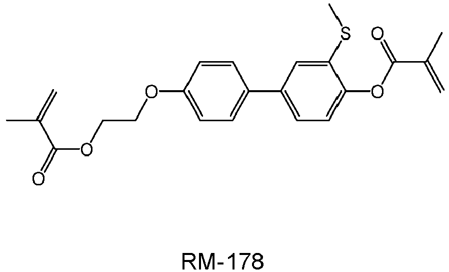 |
| 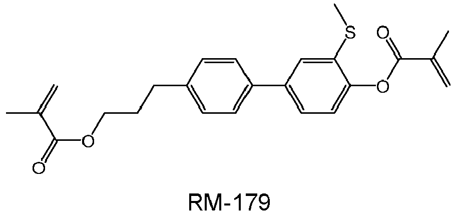 | 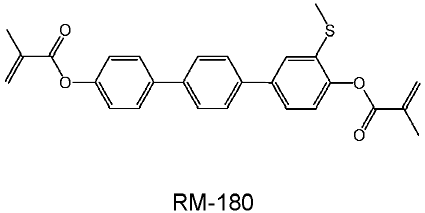 |
| 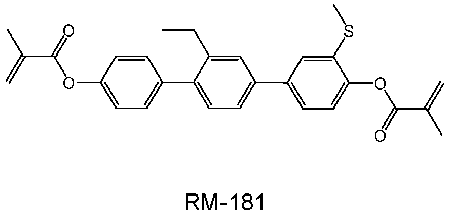 | 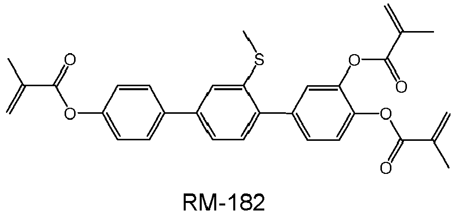 |
| 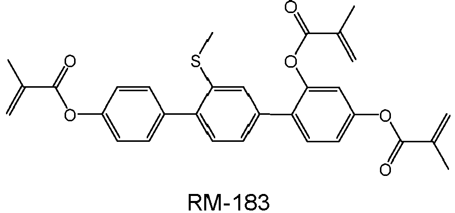 | |

In a preferred embodiment, the mixtures according to the invention comprise one or more polymerizable compounds, preferably selected from the polymerizable compounds of the Formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

**Table I**

| Table I shows self-alignment additives for vertical alignment which can be used in LC media for SA-FFS, SA-HB-FFS and SA-XB-FFS displays according to the present invention: |
|---|
| 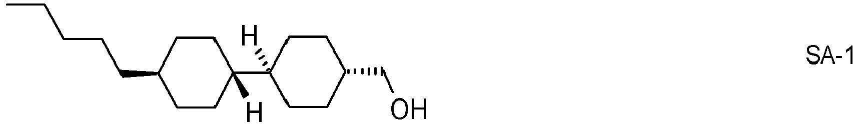 |
| 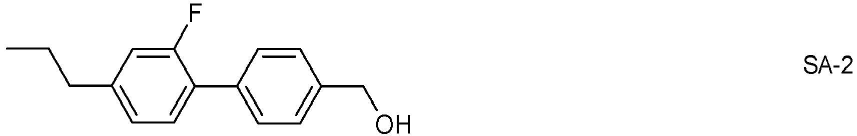 |
| 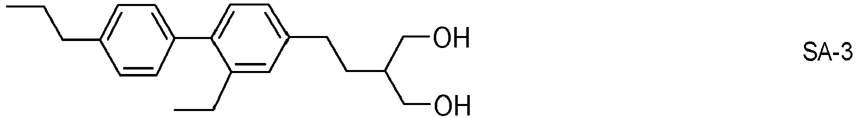 |
| 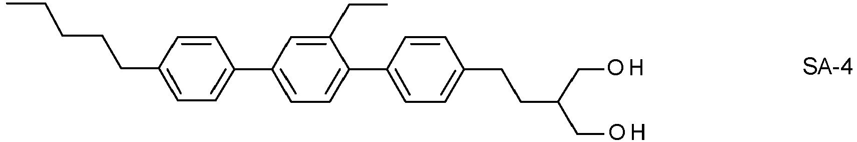 |
| 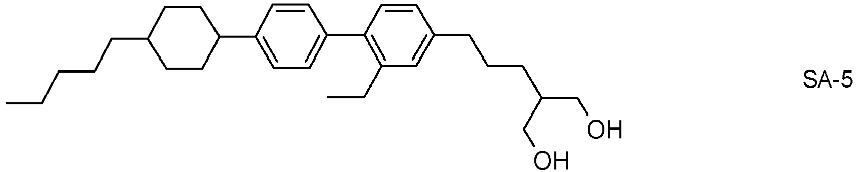 |
| 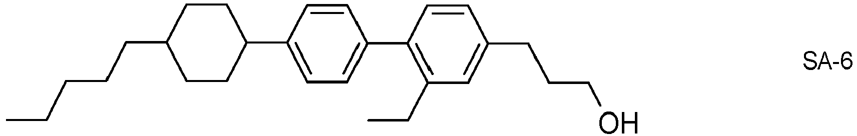 |
| 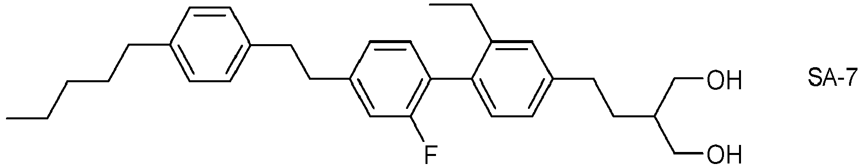 |
| 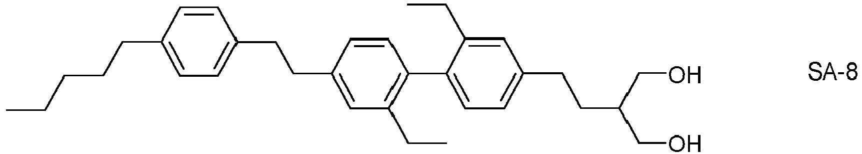 |
| 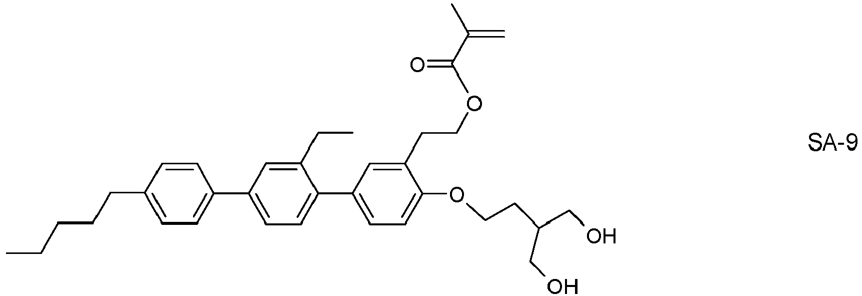 |
| 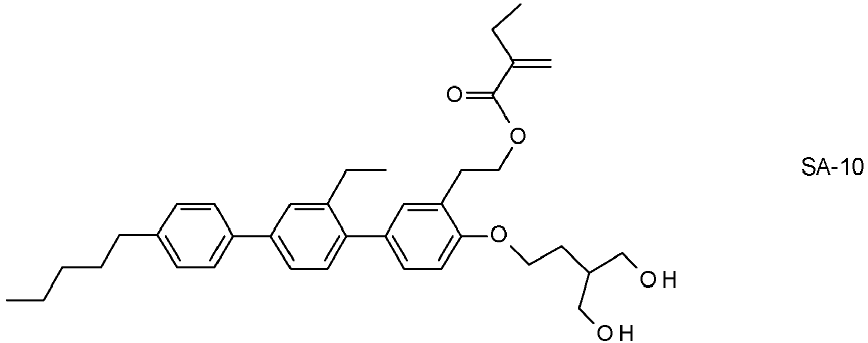 |
| 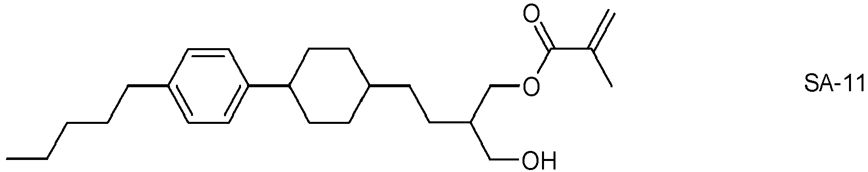 |
| 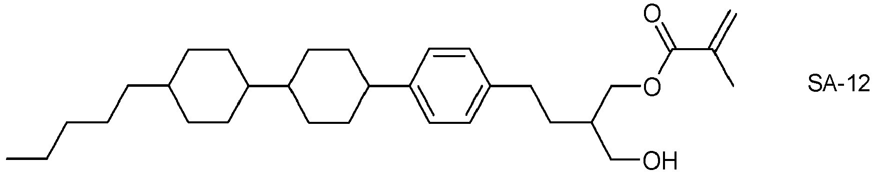 |
| 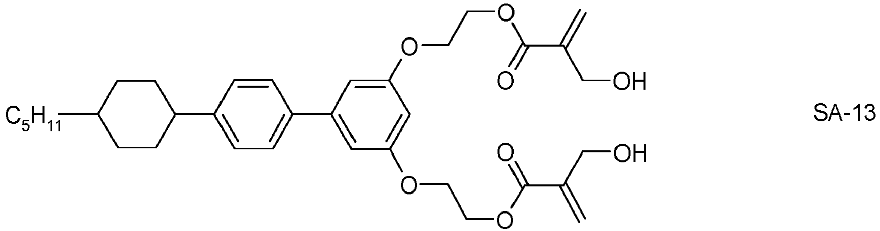 |
| 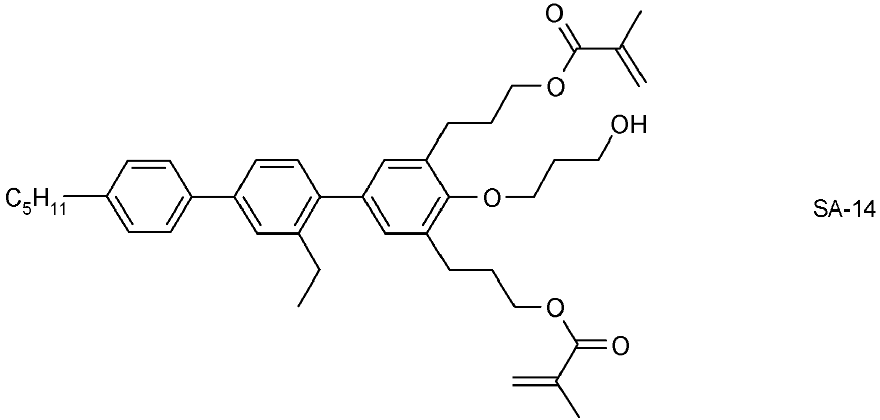 |
| 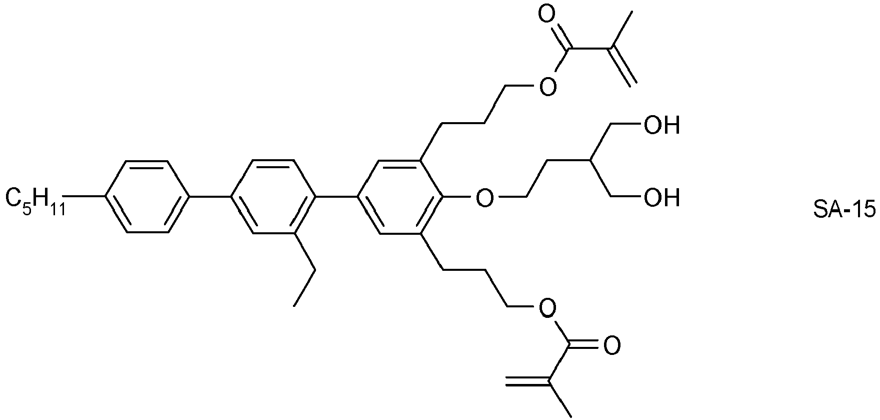 |
| 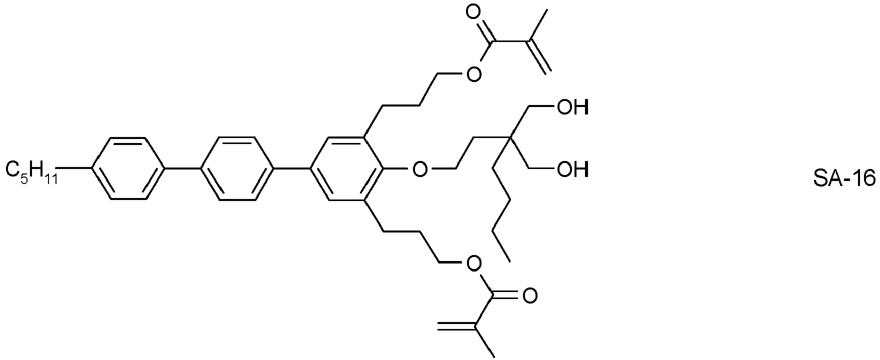 |
| 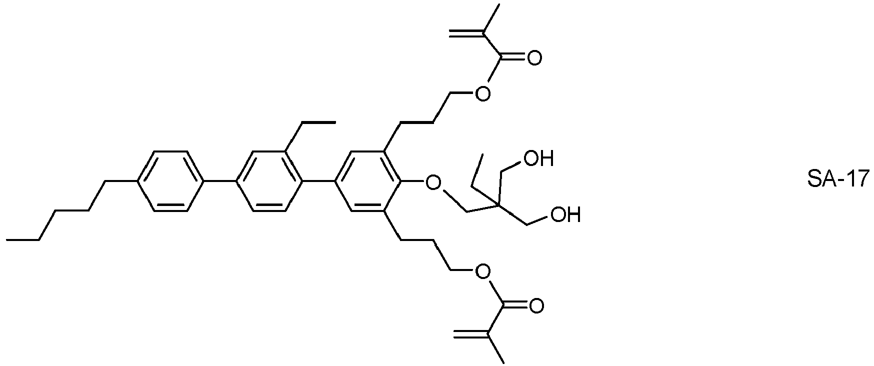 |
| 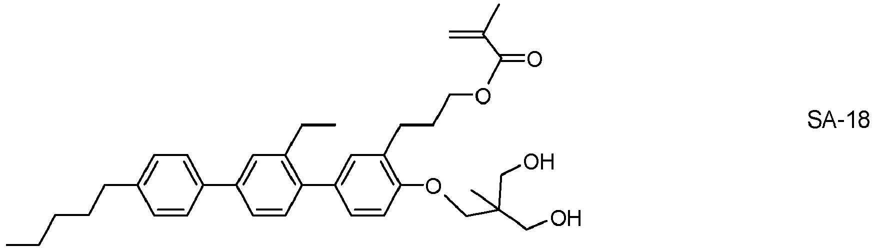 |
| 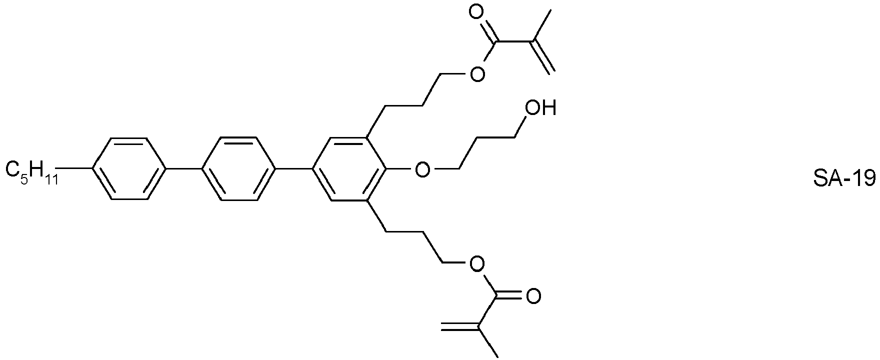 |
| 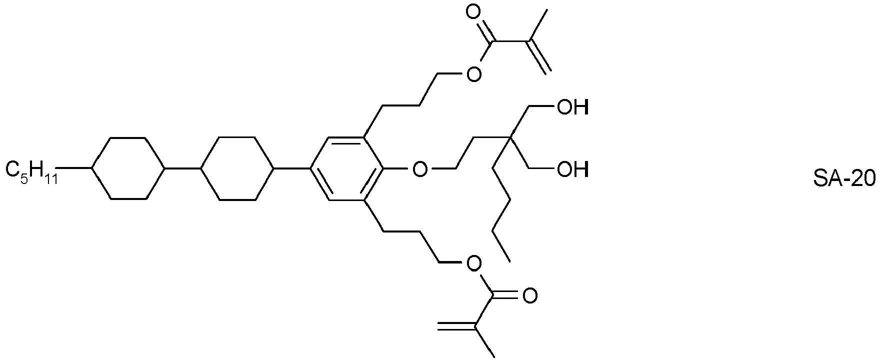 |
| 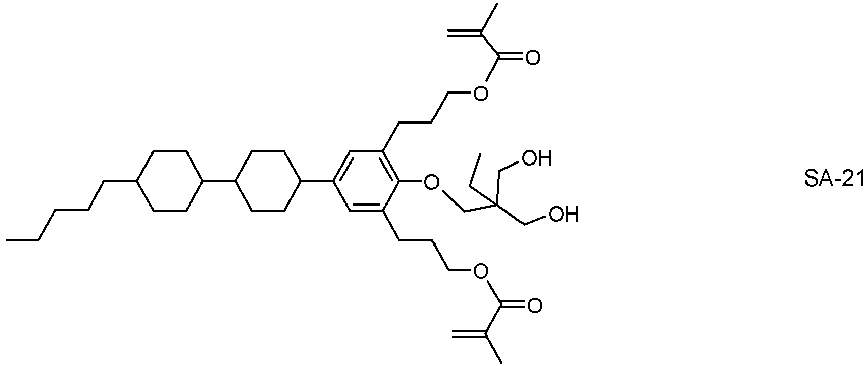 |
| 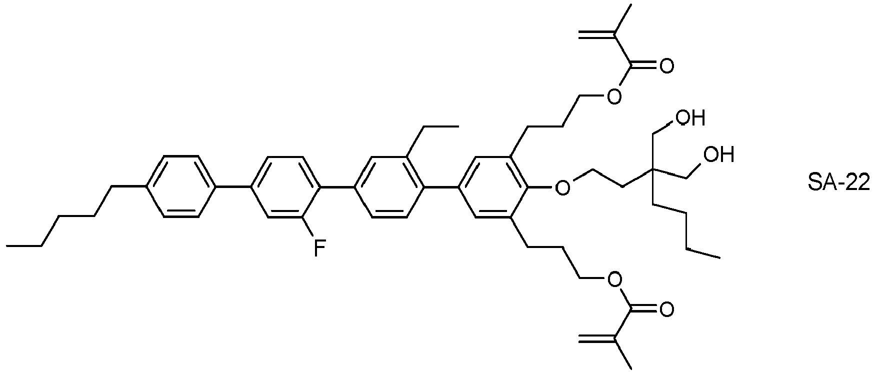 |
| 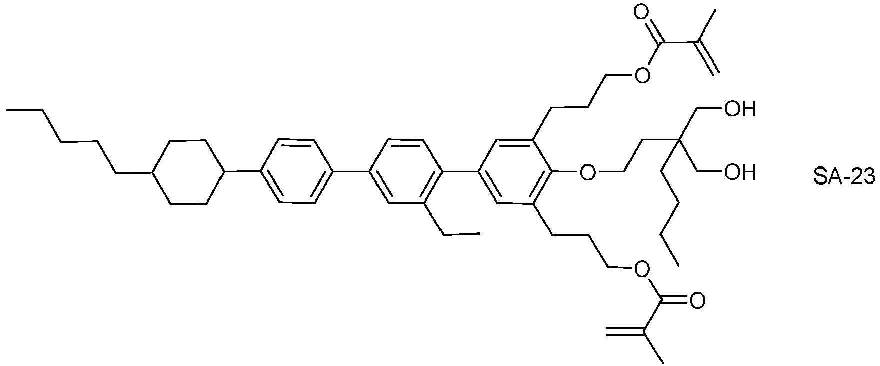 |
| 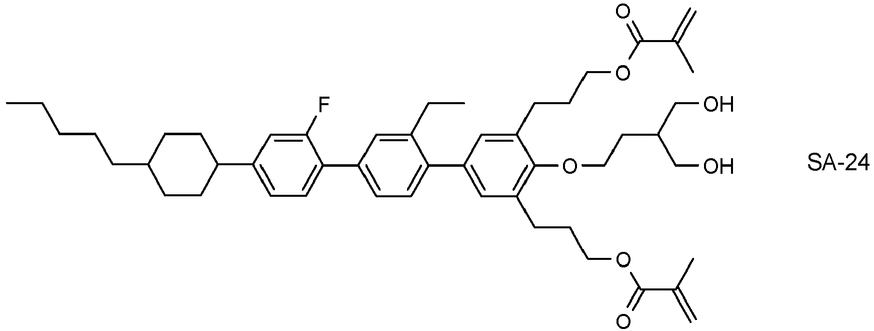 |
| 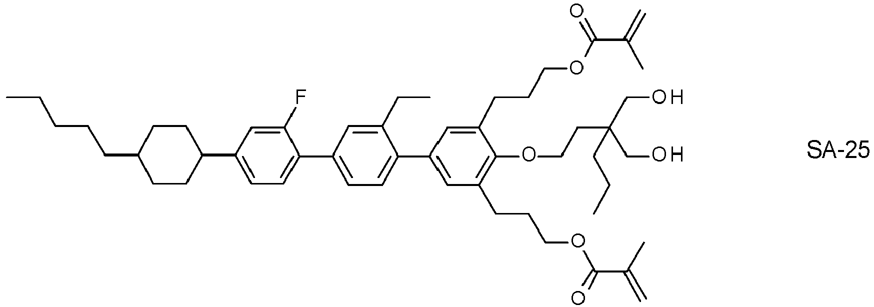 |
| 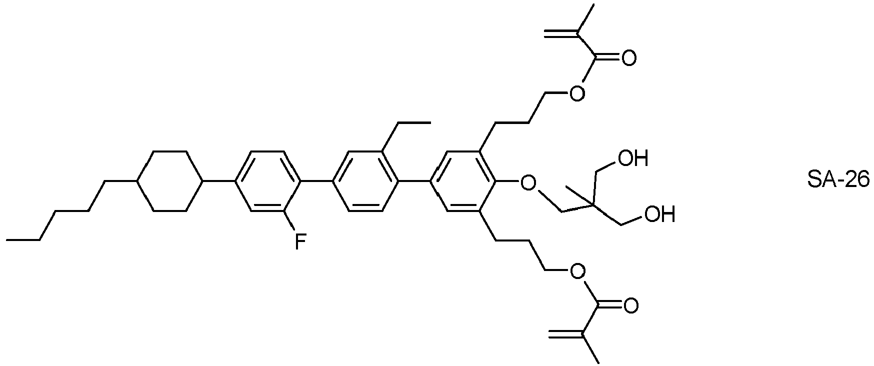 |
| 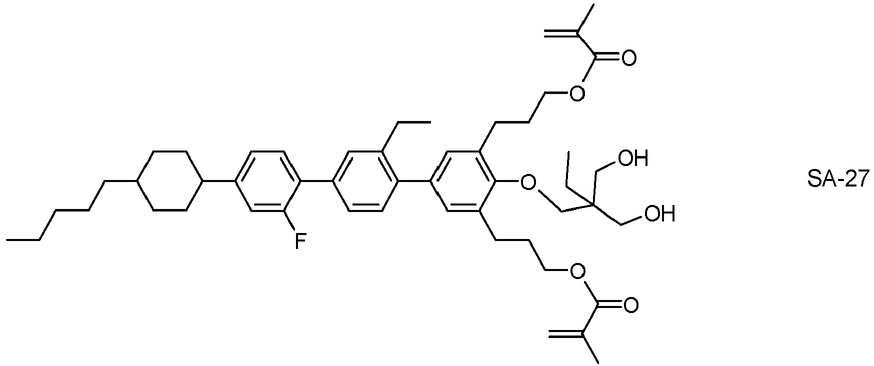 |
| 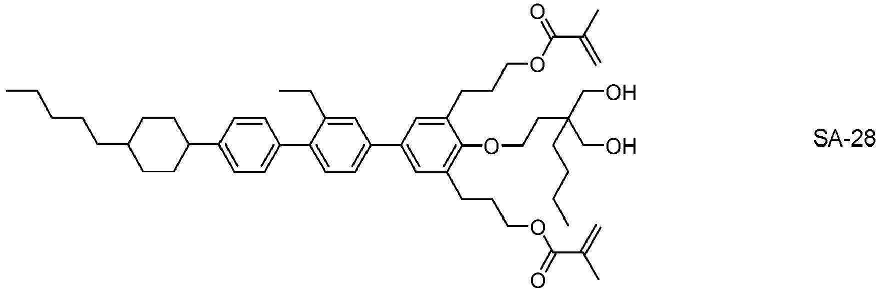 |
| 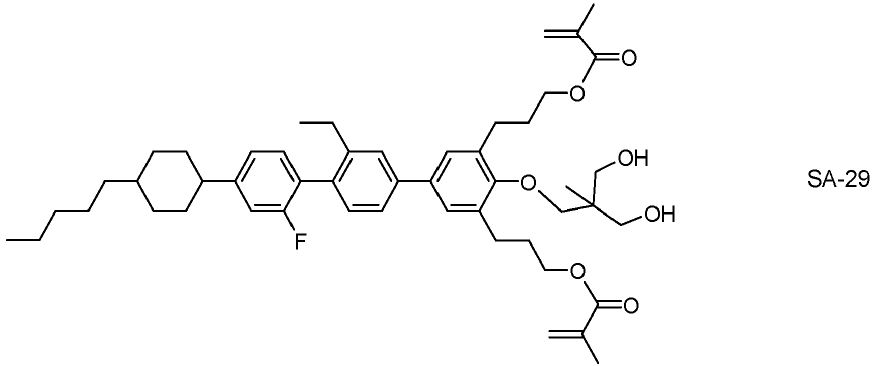 |
| 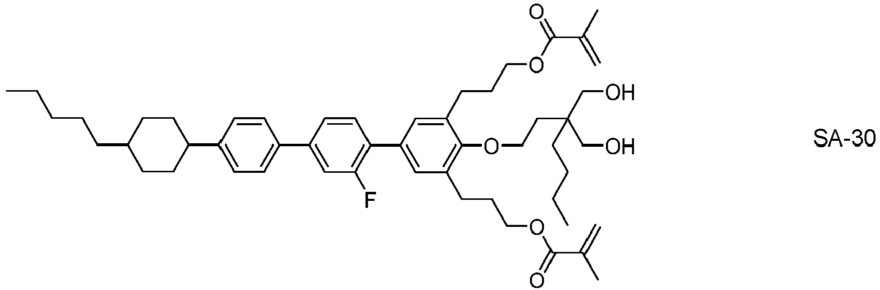 |
| 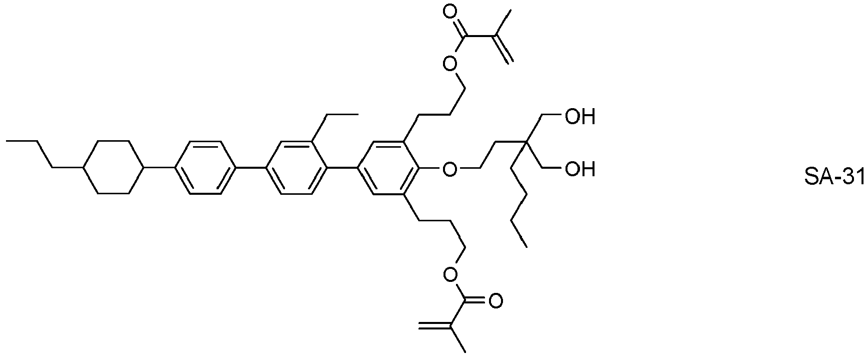 |
| 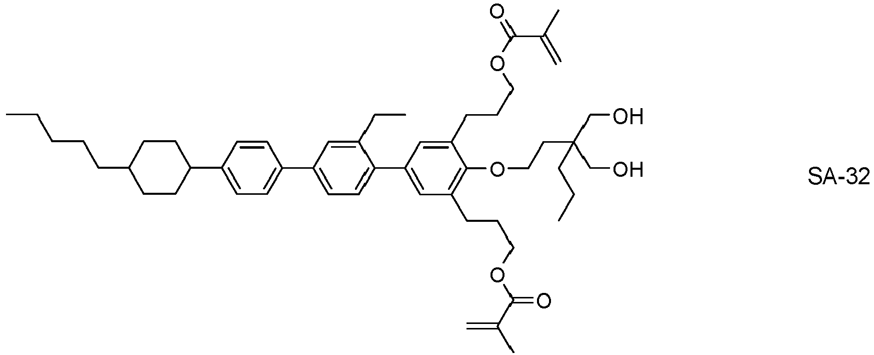 |
| 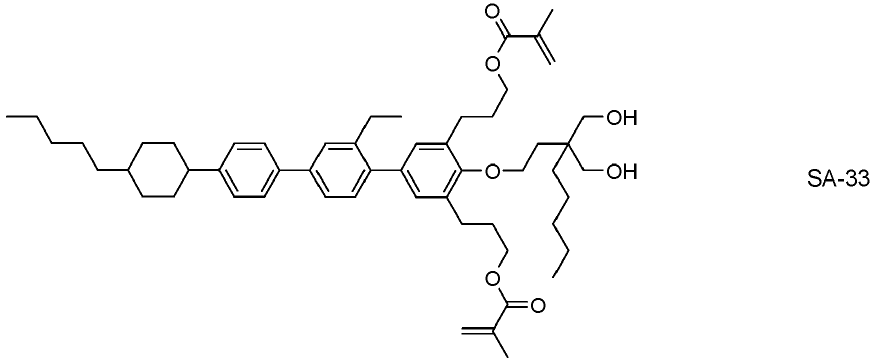 |
| 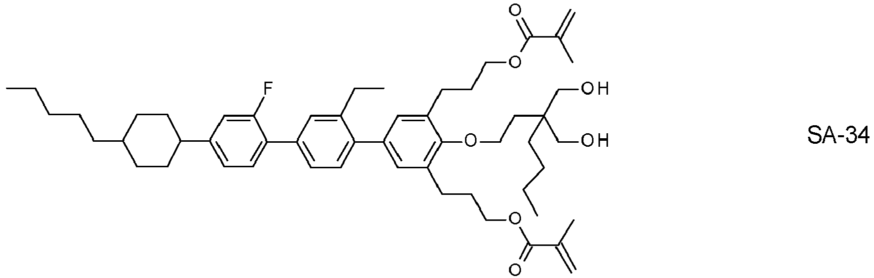 |
| 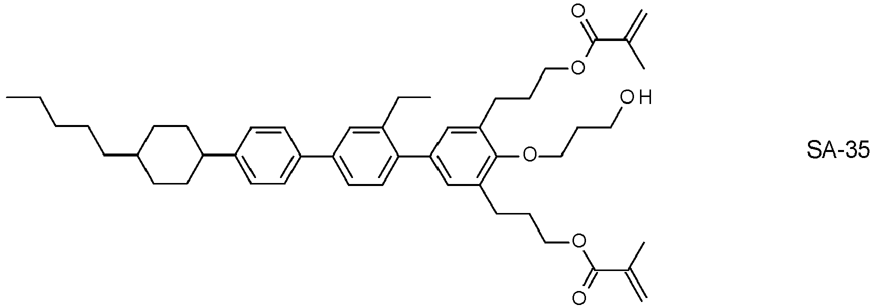 |
| 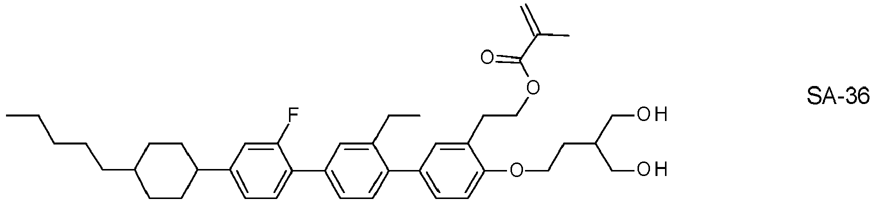 |
| 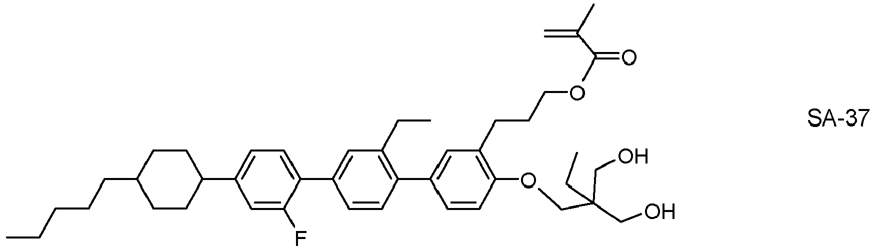 |
| 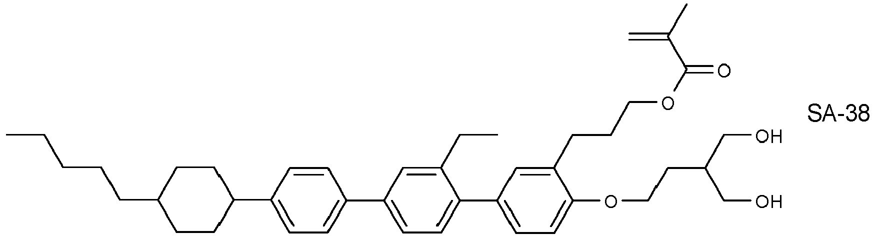 |
| 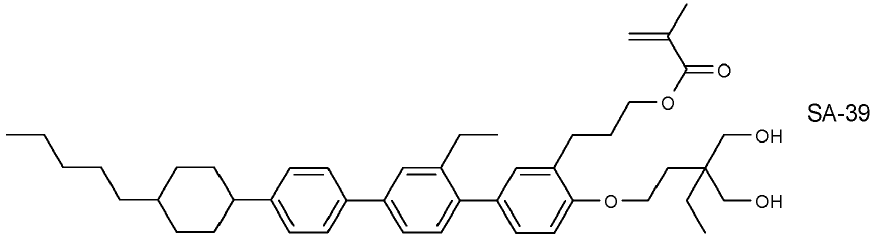 |
| 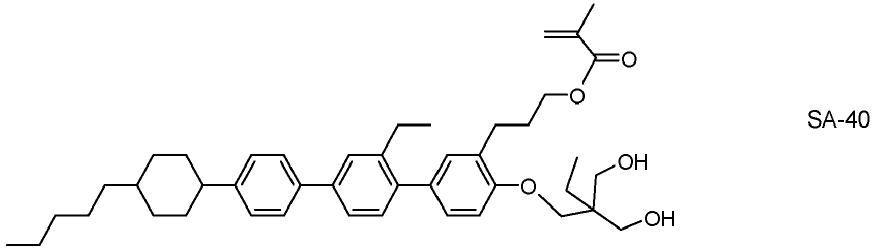 |
| 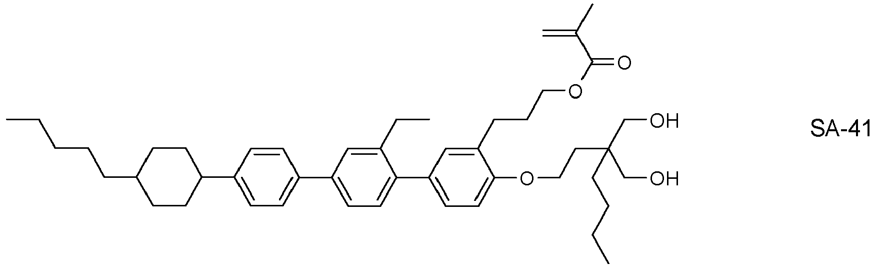 |
| 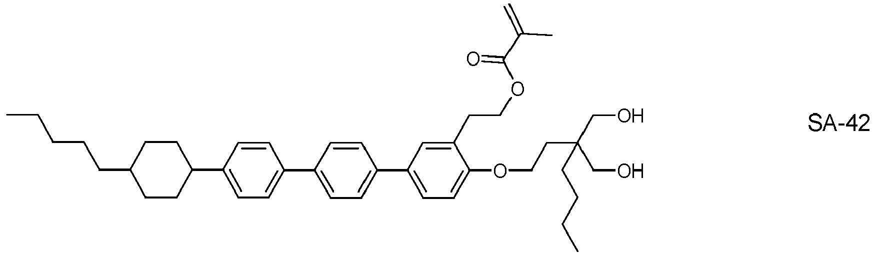 |
| 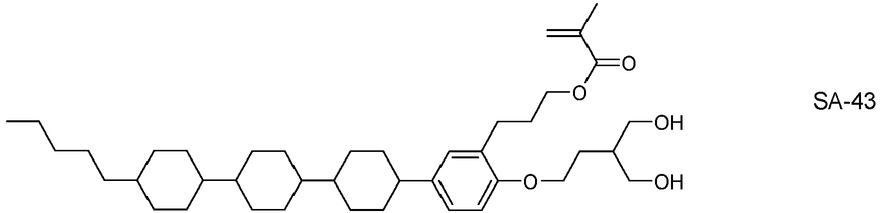 |
| 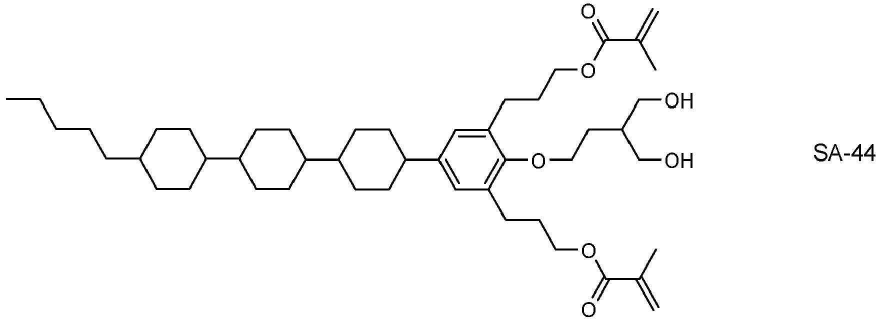 |
| 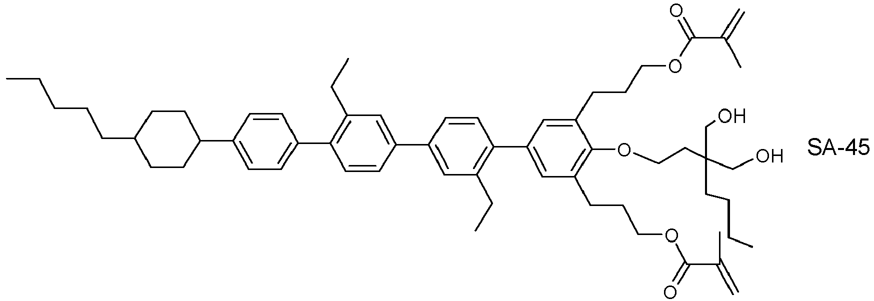 |
| 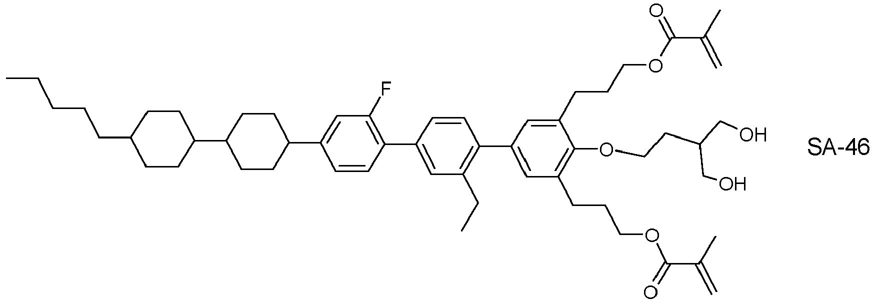 |
| 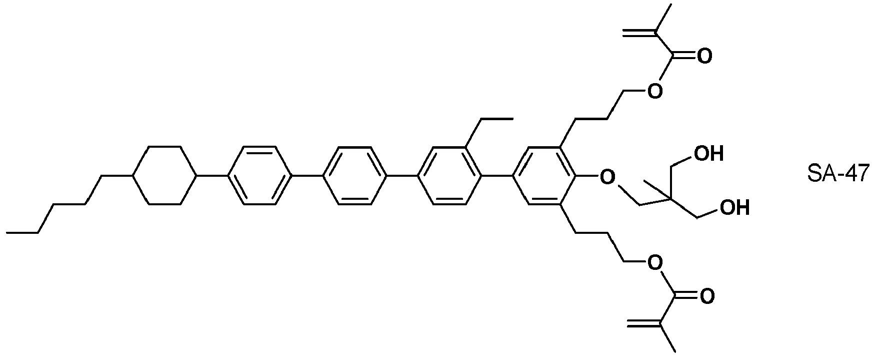 |
| 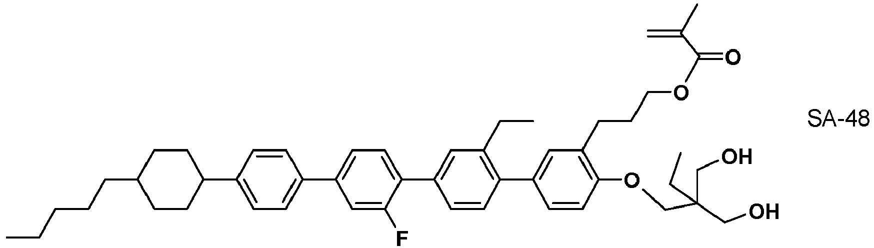 |

In a preferred embodiment, the LC media, SA-VA and SA-FFS displays according to the present invention com¬prise one or more SA additives selected from Formulae SA-1 to SA-48, preferably from Formulae SA-14 to SA-48, very preferably from Formulae SA-20 to SA-34 and SA-44, in combination with one or more RMs.

In a preferred embodiment, the LC media, SA-FFS, SA-HB-FFS and SA-XB-FFS displays according to the present invention comprise one or more SA additives selected from Formulae SA-1 to SA-34, preferably from Formulae SA-14 to SA-34, very preferably from Formulae SA-20 to SA-28, most preferably of the Formula SA-20, in combination with one or more RMs of the Formula LP1 and/or LP2. Very preferred is a combination of polymerizable compound 1, 2 or 3 of Example 1 below, very preferably of polymerizable compound 3 of Example 1, with an SA additive of the Formula SA-20 to SA-28, very preferably of the Formula SA-20.

The following mixture examples are intended to explain the invention without limiting it.

Above and below, percentage data denote per cent by weight. All temperatures are indicated in degrees Celsius. m.p. denotes melting point, cl.p. = clearing point. Furthermore, C = crystalline state, N = nematic phase, S = smectic phase and I = isotropic phase. The data between these symbols represent the transition temperatures. Furthermore, the following symbols are used
- V₀: Freedericks threshold voltage, capacitive [V] at 20 °C,
- V₁₀: voltage [V] for 10% transmission,
- nₑ: extraordinary refractive index measured at 20 °C and 589 nm,
- n₀: ordinary refractive index measured at 20 °C and 589 nm,
- Δn: optical anisotropy measured at 20 °C and 589 nm,
- ε_{⊥}: dielectric susceptibility (or "dielectric constant") perpendicular to the to the longitudinal axes of the molecules at 20 °C and 1 kHz,
- ε_{∥}: dielectric susceptibility (or "dielectric constant") parallel to the to the longitudinal axes of the molecules at 20 °C and 1 kHz,
- Δε: dielectric anisotropy at 20 °C and 1 kHz,
- cl.p. or T(N,I): clearing point [°C],
- v: flow viscosity measured at 20 °C [mm²·s⁻¹],
- γ₁: rotational viscosity measured at 20 °C [mPa.s],
- K₁: elastic constant, "splay" deformation at 20 °C [pN],
- K₂: elastic constant, "twist" deformation at 20 °C [pN],
- K₃: elastic constant, "bend" deformation at 20 °C [pN], and
- VHR: voltage holding ratio.

All physical properties are determined in accordance with "Merck Liquid Crystals, Physical Properties of Liquid Crystals", status Nov. 1997, Merck KGaA, Germany, and apply for a temperature of 20 °C, unless explicitly indicated otherwise.

### Examples

### Base Mixture M1

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 6.0 | T(N, I) | = | 110.1 °C |
| 2 | DPGU-4-F | 3.0 | Δn [589 nm, 20°C]: | = | 0.1108 |
| 3 | PGUQU-4-F | 7.0 | ε_{∥} [1 kHz, 20°C]: | = | 8.9 |
| 4 | CCP-30CF3 | 8.0 | ε_{⊥} [1 kHz, 20°C]: | = | 3.1 |
| 5 | CCP-40CF3 | 4.0 | Δε [1 kHz, 20°C]: | = | 5.8 |
| 6 | CCP-50CF3 | 3.0 | K₁ [pN, 20°C]: | = | 17.7 |
| 7 | CCP-V-1 | 18.0 | K₃ [pN, 20°C]: | = | 18.7 |
| 8 | CCP-V2-1 | 9.0 | V₀ [V, 20°C]: | = | 1.84 |
| 9 | CLP-3-T | 4.5 | γ₁ [mPa s, 20°C]: | = | 112 |
| 10 | PGP-2-2V | 6.5 | LTS bulk [h, -20°C]: | = | 1 000 |
| 11 | CC-3-V1 | 8.0 | | | |
| 12 | CCH-301 | 10.0 | | | |
| 13 | CCH-303 | 3.0 | | | |
| 14 | PCH-301 | 10.0 | | | |

### Mixture Example S1

A nematic LC mixture according to the invention is formulated as follows:

| Mixture M1 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

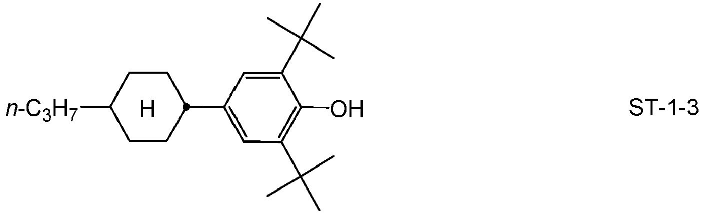

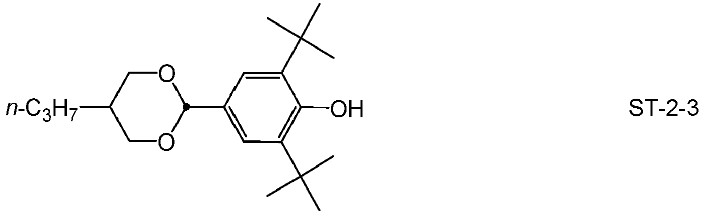

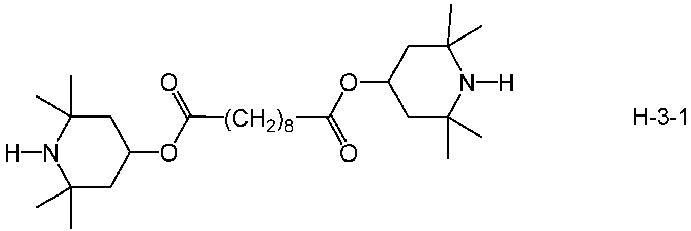

Addition of the above listed stabilizing compounds significantly improves the VHR₁₀₀ after UV exposure compared to the non-stabilized mixture M1 without affecting the remaining physical properties of the mixture M1.

### Mixture Example S1a (Reference Example)

A nematic LC mixture according to the invention is formulated as follows:

| Mixture M1 | 99.84 wt.-% |
|---|---|
| Compound of the Formula BHT-1 | 100 ppm |
| Compound of the Formula ST-2-3 | 500 ppm |
| Compound of the Formula H-3-1 | 1 000 ppm |

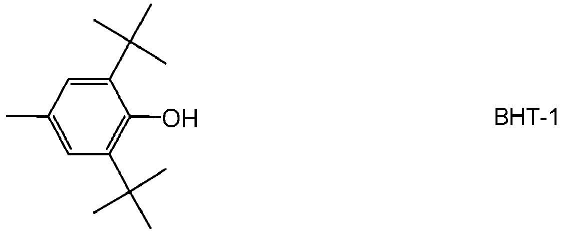

Addition of the above listed stabilizing compounds improves the VHR₁₀₀ after UV exposure compared to the non-stabilized mixture M1 to a lesser extent in comparison to Mixture Example S1.

### Mixture Example S1b (Reference Example)

A nematic LC mixture according to the invention is formulated as follows:

| Mixture M1 | 99.84 wt.-% |
|---|---|
| Compound of the Formula BHT-6 | 100 ppm |
| Compound of the Formula ST-2-3 | 500 ppm |
| Compound of the Formula H-3-1 | 1 000 ppm |

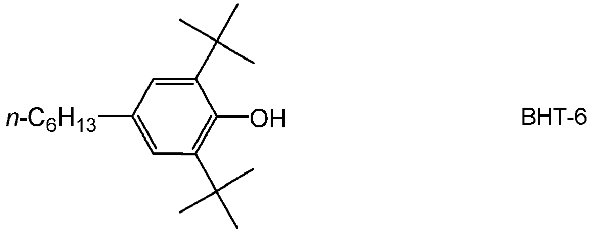

Addition of the above listed stabilizing compounds improves the VHR₁₀₀ after UV exposure compared to the non-stabilized mixture M1 to a lesser extent in comparison to Mixture Example S1.

### Mixture Example S1c (Reference Example)

A nematic LC mixture according to the invention is formulated as follows:

| Mixture M1 | 99.84 wt.-% |
|---|---|
| Compound of the Formula BHT-7 | 100 ppm |
| Compound of the Formula ST-2-3 | 500 ppm |
| Compound of the Formula H-3-1 | 1 000 ppm |

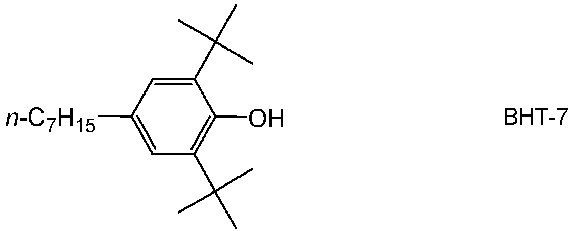

Addition of the above listed stabilizing compounds improves the VHR₁₀₀ after UV exposure compared to the non-stabilized mixture M1 to a lesser extent in comparison to Mixture Example S1.

### Base Mixture M2

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 4.0 | T(N, I) | = | 109.1 °C |
| 2 | CDUQU-3-F | 7.0 | Δn [589 nm, 20°C]: | = | 0.1242 |
| 3 | CPGP-5-2 | 2.0 | ε_{∥} [1 kHz, 20°C]: | = | 9.4 |
| 4 | PGUQU-3-F | 2.0 | ε_{⊥} [1 kHz, 20°C]: | = | 3.2 |
| 5 | PGUQU-4-F | 6.0 | Δε [1 kHz, 20°C]: | = | 6.2 |
| 6 | CCP-30CF3 | 5.0 | K₁ [pN, 20°C]: | = | 17.5 |
| 7 | CCP-40CF3 | 4.0 | K₃ [pN, 20°C]: | = | 18.8 |
| 8 | CCP-V-1 | 14.0 | V₀ [V, 20°C]: | = | 1.76 |
| 9 | CCP-V2-1 | 8.0 | γ₁ [mPa s, 20°C]: | = | |
| 10 | CCQU-3-F | 3.0 | LTS bulk [h, -20°C]: | = | |
| 11 | CLP-3-T | 3.0 | | | |
| 12 | PGP-2-2V | 6.5 | | | |
| 13 | PGP-3-2V | 3.0 | | | |
| 14 | CC-3-V1 | 8.5 | | | |
| 15 | CCH-301 | 10.0 | | | |
| 16 | PCH-301 | 10.0 | | | |
| 17 | PP-1-2V1 | 4.0 | | | |

### Mixture Example S2

A nematic LC mixture according to the invention is formulated as follows:

| Mixture M2 | 99.83 wt.-% |
|---|---|
| Compound of the Formula ST-1-3 | 200 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M2 without affecting the remaining physical properties of the mixture M2.

### Base Mixture M3

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 5.5 | T(N, I) | = | 114.9 °C |
| 2 | CPGP-5-2 | 1.5 | Δn [589 nm, 20°C]: | = | 0.1201 |
| 3 | CPGU-3-OT | 5.5 | ε_{∥} [1 kHz, 20°C]: | = | 9.8 |
| 4 | DGUQU-4-F | 3.0 | ε_{⊥} [1 kHz, 20°C]: | = | 3.0 |
| 5 | PGUQU-3-F | 3.0 | Δε [1 kHz, 20°C]: | = | 6.8 |
| 6 | PGUQU-4-F | 5.5 | K₁ [pN, 20°C]: | = | 19.1 |
| 7 | CCP-30CF3 | 4.5 | K₃ [pN, 20°C]: | = | 20.3 |
| 8 | CCP-V-1 | 13.0 | V₀ [V, 20°C]: | = | 1.76 |
| 9 | CCP-V2-1 | 9.0 | γ₁ [mPa s, 20°C]: | = | |
| 10 | CLP-3-T | 3.5 | LTS bulk [h, -20°C]: | = | |
| 11 | PGP-1-2V | 3.0 | | | |
| 12 | PGP-2-2V | 6.0 | | | |
| 13 | CC-3-2V1 | 3.0 | | | |
| 14 | CC-3-V | 24.5 | | | |
| 15 | CC-3-V1 | 9.5 | | | |

### Mixture Example S3

A nematic LC mixture according to the invention is formulated as follows:

| Mixture M3 | 99.83 wt.-% |
|---|---|
| Compound of the Formula ST-1-3 | 200 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M3 without affecting the remaining physical properties of the mixture M3.

### Base Mixture M4

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 2.5 | T(N, I) | = | 114 °C |
| 2 | CPGP-5-2 | 1.5 | Δn [589 nm, 20°C]: | = | 0.1198 |
| 3 | CPGU-3-OT | 6.0 | ε_{∥} [1 kHz, 20°C]: | = | 9.9 |
| 4 | DGUQU-4-F | 4.5 | ε_{⊥} [1 kHz, 20°C]: | = | 2.9 |
| 5 | PGUQU-3-F | 4.0 | Δε [1 kHz, 20°C]: | = | 6.9 |
| 6 | PGUQU-4-F | 5.0 | K₁ [pN, 20°C]: | = | 19.6 |
| 7 | CCP-30CF3 | 5.0 | K₃ [pN, 20°C]: | = | 20.4 |
| 8 | CCP-V-1 | 11.5 | V₀ [V, 20°C]: | = | 1.77 |
| 9 | CCP-V2-1 | 9.0 | γ₁ [mPa s, 20°C]: | = | |
| 10 | CLP-3-T | 5.0 | LTS bulk [h, -20°C]: | = | |
| 11 | PGP-1-2V | 4.0 | | | |
| 12 | PGP-2-2V | 4.0 | | | |
| 13 | CC-3-2V1 | 5.0 | | | |
| 14 | CC-3-V | 25.0 | | | |
| 15 | CC-3-V1 | 8.0 | | | |

### Mixture Example S4

A nematic LC mixture according to the invention is formulated as follows:

| Mixture M4 | 99.83 wt.-% |
|---|---|
| Compound of the Formula ST-1-3 | 200 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M4 without affecting the remaining physical properties of the mixture M4.

### Base Mixture M5

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V1 | 11.0 | T(N, I) | = | 95.5 °C |
| 2 | CCH-301 | 7.5 | Δn [589 nm, 20°C]: | = | 0.1118 |
| 3 | CCH-34 | 5.0 | ε_{∥} [1 kHz, 20°C]: | = | 8.9 |
| 4 | CCP-3-1 | 5.0 | ε_{⊥} [1 kHz, 20°C]: | = | 3.0 |
| 5 | CCP-3F. F. F | 7.0 | Δε [1 kHz, 20°C]: | = | 5.9 |
| 6 | CCP-30CF3 | 8.0 | K₁ [pN, 20°C]: | = | 18.6 |
| 7 | CCP-50CF3 | 5.0 | K₃ [pN, 20°C]: | = | 18.3 |
| 8 | CCP-V-1 | 12.5 | V₀ [V, 20°C]: | = | 1.87 |
| 9 | CLP-3-T | 8.0 | γ₁ [mPa s, 20°C]: | = | 105 |
| 10 | PCH-302 | 10.0 | LTS bulk [h, -20°C]: | = | |
| 11 | PGP-2-3 | 3.5 | | | |
| 12 | PGUQU-3-F | 5.0 | | | |
| 13 | PGUQU-4-F | 7.5 | | | |
| 14 | PP-1-3 | 5.0 | | | |

### Mixture Example S5

A nematic LC mixture according to the invention is formulated as follows:

| Mixture M5 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M5 without affecting the remaining physical properties of the mixture M5.

### Base Mixture M6

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V1 | 11.0 | T(N, I) | = | 94.4 °C |
| 2 | CCH-301 | 8.0 | Δn [589 nm, 20°C]: | = | 0.1110 |
| 3 | CCH-34 | 5.0 | ε_{∥} [1 kHz, 20°C]: | = | 8.9 |
| 4 | CCP-3-1 | 5.0 | ε_{⊥} [1 kHz, 20°C]: | = | 3.0 |
| 5 | CCP-3F. F. F | 7.5 | Δε [1 kHz, 20°C]: | = | 5.9 |
| 6 | CCP-30CF3 | 8.0 | K₁ [pN, 20°C]: | = | 18.3 |
| 7 | CCP-50CF3 | 5.0 | K₃ [pN, 20°C]: | = | 18.0 |
| 8 | CCP-V-1 | 12.0 | V₀ [V, 20°C]: | = | 1.86 |
| 9 | CLP-3-T | 7.5 | γ₁ [mPa s, 20°C]: | = | 103 |
| 10 | PCH-302 | 10.0 | LTS bulk [h, -20°C]: | = | |
| 11 | PGP-2-3 | 3.5 | | | |
| 12 | PGUQU-3-F | 5.0 | | | |
| 13 | PGUQU-4-F | 7.5 | | | |
| 14 | PP-1-3 | 5.0 | | | |

### Mixture Example S6

A nematic LC mixture according to the invention is formulated as follows:

| Mixture M6 | 99.845 wt.-% |
|---|---|
| Compound of the Formula ST-1-3 | 50 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M6 without affecting the remaining physical properties of the mixture M6.

### Base Mixture M7

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 97.3 °C |
| 2 | CC-3-V1 | 7.5 | Δn [589 nm, 20°C]: | = | 0.1113 |
| 3 | CCP-3-1 | 6.0 | ε_{∥} [1 kHz, 20°C]: | = | 8.7 |
| 4 | CCP-30CF3 | 8.0 | ε_{⊥} [1 kHz, 20°C]: | = | 2.9 |
| 5 | CCP-50CF3 | 5.0 | Δε [1 kHz, 20°C]: | = | 5.9 |
| 6 | CCP-V-1 | 10.5 | K₁ [pN, 20°C]: | = | 18.0 |
| 7 | CLP-3-T | 8.5 | K₃ [pN, 20°C]: | = | 18.5 |
| 8 | PCH-302 | 7.5 | V0 [V, 20°C]: | = | 1.84 |
| 9 | PGP-2-3 | 5.0 | γ₁ [mPa s, 20°C]: | = | gg |
| 10 | PGUQU-3-F | 8.5 | LTS bulk [h, -20°C]: | = | |
| 11 | PGUQU-4-F | 7.0 | | | |
| 12 | PP-1-3 | 1.5 | | | |

### Mixture Example S7

A nematic LC mixture according to the invention is formulated as follows:

| Mixture M7 | 99.845 wt.-% |
|---|---|
| Compound of the Formula ST-1-3 | 50 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M7 without affecting the remaining physical properties of the mixture M7.

### Base Mixture M8

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 99.3 °C |
| 2 | CC-3-V1 | 7.5 | Δn [589 nm, 20°C]: | = | 0.1119 |
| 3 | CCGU-3-F | 2.0 | ε_{∥} [1 kHz, 20°C]: | = | 8.8 |
| 4 | CCP-3-1 | 6.0 | ε_{⊥} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.9 |
| 7 | CCP-V-1 | 9.0 | K₃ [pN, 20°C]: | = | 18.6 |
| 8 | CLP-3-T | 7.5 | V₀ [V, 20°C]: | = | 1.83 |
| 9 | PCH-302 | 9.0 | γ₁ [mPa s, 20°C]: | = | 93 |
| 10 | PGP-2-3 | 6.0 | LTS bulk [h, -20°C]: | = | 1 000 |
| 11 | PGUQU-3-F | 8.0 | | | |
| 12 | PGUQU-4-F | 7.0 | | | |

### Mixture Example S8

A nematic LC mixture according to the invention is formulated as follows:

| Mixture M8 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M8 without affecting the remaining physical properties of the mixture M8.

### Base Mixture M9

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.5 | T(N, I) | = | 98.5 °C |
| 2 | CC-3-V1 | 5.0 | Δn [589 nm, 20°C]: | = | 0.1114 |
| 3 | CCP-3-1 | 5.5 | ε_{∥} [1 kHz, 20°C]: | = | 8.8 |
| 4 | CCP-30CF3 | 8.0 | ε_{⊥} [1 kHz, 20°C]: | = | 2.9 |
| 5 | CCP-50CF3 | 5.0 | Δε [1 kHz, 20°C]: | = | 5.9 |
| 6 | CCP-V-1 | 11.5 | K₁ [pN, 20°C]: | = | 17.9 |
| 7 | CLP-3-T | 9.0 | K₃ [pN, 20°C]: | = | 18.6 |
| 8 | PCH-302 | 9.5 | V₀ [V, 20°C]: | = | 1.83 |
| 9 | PGP-2-3 | 5.5 | γ₁ [mPa s, 20°C]: | = | 92 |
| 10 | PGUQU-3-F | 8.5 | LTS bulk [h, -20°C]: | = | |
| 11 | PGUQU-4-F | 7.0 | | | |

### Mixture Example S9

A nematic LC mixture according to the invention is formulated as follows:

| Mixture M9 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M9 without affecting the remaining physical properties of the mixture M9.

### Base Mixture M10

A nematic LC mixture is formulated as follows:

| | **Composition** | | **Properties** | | |
|---|---|---|---|---|---|
| **Nr.** | **Comp.** | **Conc., wt.-%** | | | |
| 1 | APUQU-2-F | 6.0 | T(N, I) | = | 77 °C |
| 2 | APUQU-3-F | 7.5 | Δn [589 nm, 20°C]: | = | 0.1108 |
| 3 | PGUQU-3-F | 7.5 | ε_{∥} [1 kHz, 20°C]: | = | 16.7 |
| 4 | PGUQU-4-F | 6.5 | ε_{⊥} [1 kHz, 20°C]: | = | 3.6 |
| 5 | PGUQU-5-F | 5.0 | Δε [1 kHz, 20°C]: | = | 13.1 |
| 6 | CCP-30CF3 | 4.5 | K₁ [pN, 20°C]: | = | 12.5 |
| 7 | CCP-3F.F.F | 4.5 | K₃ [pN, 20°C]: | = | 13.4 |
| 8 | CCQU-3-F | 1.5 | V₀ [V, 20°C]: | = | 1.03 |
| 9 | CLP-3-T | 4.5 | γ₁ [mPa s, 20°C]: | = | 81 |
| 10 | PGP-2-4 | 3.0 | LTS bulk [h, -20°C]: | = | |
| 11 | PUQU-3-F | 5.5 | | | |
| 12 | CC-3-V | 36.0 | | | |
| 13 | CC-3-V1 | 8.0 | | | |

### Mixture Example S10

A nematic LC mixture according to the invention is formulated as follows:

| Mixture M10 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M10 without affecting the remaining physical properties of the mixture M10.

### Base Mixture M11

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-2-F | 6.0 | T(N, I) | = | 76 °C |
| 2 | APUQU-3-F | 2.5 | Δn [589 nm, 20°C]: | = | 0.1112 |
| 3 | PGUQU-3-F | 8.0 | ε_{∥} [1 kHz, 20°C]: | = | 16.6 |
| 4 | PGUQU-4-F | 7.0 | ε_{⊥} [1 kHz, 20°C]: | = | 3.6 |
| 5 | PGUQU-5-F | 5.5 | Δε [1 kHz, 20°C]: | = | 12.9 |
| 6 | CCP-30CF3 | 5.5 | K₁ [pN, 20°C]: | = | 12.3 |
| 7 | CCP-3F. F. F | 4.5 | K₃ [pN, 20°C]: | = | 13.2 |
| 8 | CCQU-3-F | 4.0 | V₀ [V, 20°C]: | = | 1.02 |
| 9 | CLP-3-T | 6.5 | γ₁ [mPa s, 20°C]: | = | 81 |
| 10 | PGP-2-4 | 2.5 | LTS bulk [h, -20°C]: | = | |
| 11 | PUQU-3-F | 7.0 | | | |
| 12 | CC-3-V | 36.0 | | | |
| 13 | CC-3-V1 | 5.0 | | | |

### Mixture Example S11

A nematic LC mixture according to the invention is formulated as follows:

| Mixture M11 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M11 without affecting the remaining physical properties of the mixture M11.

### Base Mixture M12

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 3.5 | T(N, I) | = | 106.7 °C |
| 2 | PGUQU-3-F | 6.5 | Δn [589 nm, 20°C]: | = | 0.1105 |
| 3 | PGUQU-4-F | 6.5 | ε_{∥} [1 kHz, 20°C]: | = | 9.5 |
| 4 | PGUQU-5-F | 3.0 | ε_{⊥} [1 kHz, 20°C]: | = | 2.8 |
| 5 | CCP-30CF3 | 6.0 | Δε [1 kHz, 20°C]: | = | 6.6 |
| 6 | CCP-40CF3 | 5.0 | K₁ [pN, 20°C]: | = | 18.5 |
| 7 | CCP-V-1 | 11.0 | K₃ [pN, 20°C]: | = | 19.6 |
| 8 | CCP-V2-1 | 6.5 | V₀ [V, 20°C]: | = | 1.76 |
| 9 | CCQU-3-F | 2.5 | γ₁ [mPa s, 20°C]: | = | 101 |
| 10 | CLP-3-T | 7.0 | LTS bulk [h, -20°C]: | = | |
| 11 | PGP-2-3 | 4.5 | | | |
| 12 | CC-3-2V1 | 1.5 | | | |
| 13 | CC-3-V | 21.0 | | | |
| 14 | CC-3-V1 | 10.5 | | | |
| 15 | CCH-23 | 5.0 | | | |

### Mixture Example S12

A nematic LC mixture according to the invention is formulated as follows:

| Mixture M12 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M12 without affecting the remaining physical properties of the mixture M12.

### Base Mixture M13

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 5.0 | T(N, I) | = | 110.1 °C |
| 2 | CPGP-5-2 | 1.5 | Δn [589 nm, 20°C]: | = | 0.1095 |
| 3 | DGUQU-4-F | 5.0 | ε_{∥} [1 kHz, 20°C]: | = | 9.4 |
| 4 | PGUQU-3-F | 1.5 | ε_{⊥} [1 kHz, 20°C]: | = | 2.9 |
| 5 | PGUQU-4-F | 7.0 | Δε [1 kHz, 20°C]: | = | 6.5 |
| 6 | CCP-30CF3 | 6.0 | K₁ [pN, 20°C]: | = | 18.8 |
| 7 | CCP-40CF3 | 5.0 | K₃ [pN, 20°C]: | = | 19.7 |
| 8 | CCP-V-1 | 11.0 | V₀ [V, 20°C]: | = | 1.78 |
| 9 | CCP-V2-1 | 5.5 | γ₁ [mPa s, 20°C]: | = | 104 |
| 10 | CCQU-3-F | 2.5 | LTS bulk [h, -20°C]: | = | |
| 11 | CLP-3-T | 7.0 | | | |
| 12 | PGP-2-3 | 6.0 | | | |
| 13 | CC-3-V | 26.0 | | | |
| 14 | CC-3-V1 | 11.0 | | | |

### Mixture Example S13

A nematic LC mixture according to the invention is formulated as follows:

| Mixture M13 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M13 without affecting the remaining physical properties of the mixture M13.

### Base Mixture M14

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 4.0 | T(N, I) | = | 106.9 °C |
| 2 | CPGP-5-2 | 1.5 | Δn [589 nm, 20°C]: | = | 0.1083 |
| 3 | DGUQU-4-F | 2.0 | ε_{∥} [1 kHz, 20°C]: | = | 9.4 |
| 4 | PGUQU-3-F | 8.0 | ε_{⊥} [1 kHz, 20°C]: | = | 2.8 |
| 5 | PGUQU-4-F | 7.0 | Δε [1 kHz, 20°C]: | = | 6.6 |
| 6 | CCP-30CF3 | 5.5 | K₁ [pN, 20°C]: | = | 18.3 |
| 7 | CCP-V-1 | 11.0 | K₃ [pN, 20°C]: | = | 20.3 |
| 8 | CCP-V2-1 | 9.0 | V₀ [V, 20°C]: | = | 1.76 |
| 9 | CLP-3-T | 8.0 | γ₁ [mPa s, 20°C]: | = | 101 |
| 10 | PGP-2-3 | 2.5 | LTS bulk [h, -20°C]: | = | |
| 11 | CC-3-2V1 | 1.5 | | | |
| 12 | CC-3-V | 25.0 | | | |
| 13 | CC-3-V1 | 11.0 | | | |
| 14 | CCH-23 | 4.0 | | | |

### Mixture Example S14

A nematic LC mixture according to the invention is formulated as follows:

| Mixture M14 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M14 without affecting the remaining physical properties of the mixture M14.

### Base Mixture M15

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 5.5 | T(N, I) | = | 95.2 °C |
| 2 | CPGP-5-2 | 1.5 | Δn [589 nm, 20°C]: | = | 0.1115 |
| 3 | DGUQU-4-F | 3.0 | ε_{∥} [1 kHz, 20°C]: | = | 8.6 |
| 4 | PGUQU-3-F | 7.5 | ε_{⊥} [1 kHz, 20°C]: | = | 2.9 |
| 5 | CCP-30CF3 | 6.0 | Δε [1 kHz, 20°C]: | = | 5.8 |
| 6 | CCP-40CF3 | 5.0 | K₁ [pN, 20°C]: | = | 18.1 |
| 7 | CCP-V-1 | 13.0 | K₃ [pN, 20°C]: | = | 18.4 |
| 8 | CLP-3-T | 5.0 | V₀ [V, 20°C]: | = | 1.86 |
| 9 | PGP-2-2V | 5.5 | γ₁ [mPa s, 20°C]: | = | 80 |
| 10 | CC-3-2V1 | 4.0 | LTS bulk [h, -20°C]: | = | |
| 11 | CC-3-V | 26.0 | | | |
| 12 | CC-3-V1 | 10.0 | | | |
| 13 | PP-1-2V1 | 8.0 | | | |

### Mixture Example S15

A nematic LC mixture according to the invention is formulated as follows:

| Mixture M15 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M15 without affecting the remaining physical properties of the mixture M15.

### Base Mixture M16

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 3.5 | T(N, I) | = | 99.5 °C |
| 2 | CDUQU-3-F | 2.0 | Δn [589 nm, 20°C]: | = | 0.1107 |
| 3 | PGUQU-3-F | 4.5 | ε_{∥} [1 kHz, 20°C]: | = | 8.7 |
| 4 | PGUQU-4-F | 5.5 | ε_{⊥} [1 kHz, 20°C]: | = | 2.8 |
| 5 | CCP-30CF3 | 6.5 | Δε [1 kHz, 20°C]: | = | 5.9 |
| 6 | CCP-40CF3 | 1.5 | K₁ [pN, 20°C]: | = | 18.0 |
| 7 | CCP-V-1 | 14.5 | K₃ [pN, 20°C]: | = | 19.3 |
| 8 | CCP-V2-1 | 5.5 | V₀ [V, 20°C]: | = | 1.85 |
| 9 | CCQU-3-F | 8.0 | γ₁ [mPa s, 20°C]: | = | |
| 10 | CLP-3-T | 6.0 | LTS bulk [h, -20°C]: | = | |
| 11 | PGP-2-3 | 3.0 | | | |
| 12 | CC-3-V | 26.0 | | | |
| 13 | CC-3-V1 | 5.0 | | | |
| 14 | PP-1-2V1 | 8.5 | | | |

### Mixture Example S16

A nematic LC mixture according to the invention is formulated as follows:

| Mixture M16 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M16 without affecting the remaining physical properties of the mixture M16.

### Base Mixture M17

A nematic LC mixture is formulated as follows:

| **Composition** | | | **Properties** | | |
|---|---|---|---|---|---|
| **Nr.** | **Comp.** | **Conc., wt.-%** | | | |
| 1 | PGUQU-3-F | 8.0 | T(N, I) | = | 94.4 °C |
| 2 | PGUQU-4-F | 6.0 | Δn [589 nm, 20°C]: | = | 0.1115 |
| 3 | CCP-30CF3 | 6.0 | ε_{∥} [1 kHz, 20°C]: | = | 8.6 |
| 4 | CCP-40CF3 | 4.5 | ε_{⊥} [1 kHz, 20°C]: | = | 2.8 |
| 5 | CCP-50CF3 | 5.0 | Δε [1 kHz, 20°C]: | = | 5.9 |
| 6 | CCP-V-1 | 13.0 | K₁ [pN, 20°C]: | = | 18.2 |
| 7 | CCQU-3-F | 3.0 | K₃ [pN, 20°C]: | = | 18.3 |
| 8 | CLP-3-T | 7.5 | V₀ [V, 20°C]: | = | 1.85 |
| 9 | PGP-2-3 | 3.0 | γ₁ [mPa s, 20°C]: | = | 79 |
| 10 | CC-3-V | 26.0 | LTS bulk [h, -20°C]: | = | |
| 11 | CC-3-V1 | 10.0 | | | |
| 12 | PP-1-2V1 | 8.0 | | | |

### Mixture Example S17

A nematic LC mixture according to the invention is formulated as follows:

| Mixture M17 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M17 without affecting the remaining physical properties of the mixture M17.

### Base Mixture M18

A nematic LC mixture is formulated as follows:

| **Composition** | | | **Properties** | | |
|---|---|---|---|---|---|
| **Nr.** | **Comp.** | **Conc., wt.-%** | | | |
| 1 | CPGP-5-2 | 1.5 | T(N, I) | = | 101.4 °C |
| 2 | PGUQU-3-F | 8.0 | Δn [589 nm, 20°C]: | = | 0.1114 |
| 3 | PGUQU-4-F | 5.5 | ε_{∥} [1 kHz, 20°C]: | = | 8.7 |
| 4 | CCP-30CF3 | 6.0 | ε_{⊥} [1 kHz, 20°C]: | = | 2.8 |
| 5 | CCP-40CF3 | 5.0 | Δε [1 kHz, 20°C]: | = | 5.9 |
| 6 | CCP-50CF3 | 5.0 | K₁ [pN, 20°C]: | = | 18.1 |
| 7 | CCP-V-1 | 13.0 | K₃ [pN, 20°C]: | = | 18.1 |
| 8 | CCQU-3-F | 5.0 | V₀ [V, 20°C]: | = | 1.84 |
| 9 | CLP-3-T | 6.5 | γ₁ [mPa s, 20°C]: | = | 88 |
| 10 | PGP-2-3 | 6.0 | LTS bulk [h, -20°C]: | = | |
| 11 | CC-3-V | 26.0 | | | |
| 12 | CC-3-V1 | 10.0 | | | |
| 13 | PP-1-3 | 2.5 | | | |

### Mixture Example S18

A nematic LC mixture according to the invention is formulated as follows:

| Mixture M18 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M18 without affecting the remaining physical properties of the mixture M18.

### Base Mixture M19

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 3.5 | T(N, I) | = | 101.7 °C |
| 2 | CDUQU-3-F | 1.5 | Δn [589 nm, 20°C]: | = | 0.1111 |
| 3 | PGUQU-3-F | 7.0 | ε_{∥} [1 kHz, 20°C]: | = | 8.7 |
| 4 | PGUQU-4-F | 5.0 | ε_{⊥} [1 kHz, 20°C]: | = | 2.8 |
| 5 | CCP-30CF3 | 6.0 | Δε [1 kHz, 20°C]: | = | 5.9 |
| 6 | CCP-40CF3 | 5.0 | K₁ [pN, 20°C]: | = | 17.5 |
| 7 | CCP-V-1 | 13.0 | K₃ [pN, 20°C]: | = | 18.8 |
| 8 | CCP-V2-1 | 4.5 | V₀ [V, 20°C]: | = | 1.81 |
| 9 | CCQU-3-F | 6.0 | γ₁ [mPa s, 20°C]: | = | 87 |
| 10 | CLP-3-T | 3.0 | LTS bulk [h, -20°C]: | = | 1 000 |
| 11 | PGP-2-3 | 5.5 | | | |
| 12 | CC-3-V | 26.0 | | | |
| 13 | CC-3-V1 | 9.5 | | | |
| 14 | PP-1-2V1 | 4.5 | | | |

### Mixture Example S19

A nematic LC mixture according to the invention is formulated as follows:

| Mixture M19 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M19 without affecting the remaining physical properties of the mixture M19.

### Base Mixture M20

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 5.5 | T(N, I) | = | 110.6 °C |
| 2 | CPGP-5-2 | 2.0 | Δn [589 nm, 20°C]: | = | 0.1102 |
| 3 | DGUQU-4-F | 5.0 | ε_{∥} [1 kHz, 20°C]: | = | 9.5 |
| 4 | PGUQU-3-F | 2.5 | ε_{⊥} [1 kHz, 20°C]: | = | 2.9 |
| 5 | PGUQU-4-F | 7.0 | Δε [1 kHz, 20°C]: | = | 6.6 |
| 6 | CCP-30CF3 | 6.0 | K₁ [pN, 20°C]: | = | 18.8 |
| 7 | CCP-40CF3 | 5.0 | K₃ [pN, 20°C]: | = | 19.8 |
| 8 | CCP-V-1 | 10.5 | V₀ [V, 20°C]: | = | 1.78 |
| 9 | CCP-V2-1 | 6.0 | γ₁ [mPa s, 20°C]: | = | 106 |
| 10 | CLP-3-T | 7.0 | LTS bulk [h, -20°C]: | = | |
| 11 | PGP-2-3 | 5.5 | | | |
| 12 | CC-3-V | 25.5 | | | |
| 13 | CC-3-V1 | 11.0 | | | |
| 14 | CCH-23 | 1.5 | | | |

### Mixture Example S20

A nematic LC mixture according to the invention is formulated as follows:

| Mixture M20 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M20 without affecting the remaining physical properties of the mixture M20.

### Base Mixture M21

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 3.0 | T(N, I) | = | 106.7 °C |
| 2 | CPGP-5-2 | 1.5 | Δn [589 nm, 20°C]: | = | 0.1093 |
| 3 | PGUQU-3-F | 8.0 | ε_{∥} [1 kHz, 20°C]: | = | 9.5 |
| 4 | PGUQU-4-F | 7.0 | ε_{⊥} [1 kHz, 20°C]: | = | 2.8 |
| 5 | PGUQU-5-F | 3.5 | Δε [1 kHz, 20°C]: | = | 6.7 |
| 6 | CCP-30CF3 | 6.0 | K₁ [pN, 20°C]: | = | 18.6 |
| 7 | CCP-V-1 | 11.0 | K₃ [pN, 20°C]: | = | 20.5 |
| 8 | CCP-V2-1 | 9.0 | V₀ [V, 20°C]: | = | 1.75 |
| 9 | CLP-3-T | 8.0 | γ₁ [mPa s, 20°C]: | = | 103 |
| 10 | PGP-2-3 | 1.5 | LTS bulk [h, -20°C]: | = | |
| 11 | CC-3-2V1 | 2.5 | | | |
| 12 | CC-3-V | 21.5 | | | |
| 13 | CC-3-V1 | 11.0 | | | |
| 14 | CCH-23 | 6.5 | | | |

### Mixture Example S21

A nematic LC mixture according to the invention is formulated as follows:

| Mixture M21 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M21 without affecting the remaining physical properties of the mixture M21.

### Base Mixture M22

A nematic LC mixture is formulated as follows:

| **Composition** | | | **Properties** | | |
|---|---|---|---|---|---|
| **Nr.** | **Comp.** | **Conc., wt.-%** | | | |
| 1 | CCGU-3-F | 2.5 | T(N, I) | = | 107.5 °C |
| 2 | CPGP-5-2 | 1.5 | Δn [589 nm, 20°C]: | = | 0.1103 |
| 3 | DGUQU-4-F | 2.0 | ε_{∥} [1 kHz, 20°C]: | = | 9.5 |
| 4 | PGUQU-3-F | 5.5 | ε_{⊥} [1 kHz, 20°C]: | = | 2.9 |
| 5 | PGUQU-4-F | 5.5 | Δε [1 kHz, 20°C]: | = | 6.6 |
| 6 | PGUQU-5-F | 2.5 | K₁ [pN, 20°C]: | = | 19.1 |
| 7 | CCP-30CF3 | 6.0 | K₃ [pN, 20°C]: | = | 19.3 |
| 8 | CCP-40CF3 | 4.5 | V₀ [V, 20°C]: | = | 1.79 |
| 9 | CCP-V-1 | 10.0 | γ₁ [mPa s, 20°C]: | = | 103 |
| 10 | CCP-V2-1 | 7.0 | LTS bulk [h, -20°C]: | = | |
| 11 | CCQU-3-F | 3.0 | | | |
| 12 | CLP-3-T | 8.0 | | | |
| 13 | PGP-2-3 | 5.0 | | | |
| 14 | CC-3-V | 19.5 | | | |
| 15 | CC-3-V1 | 10.0 | | | |
| 16 | CCH-23 | 7.5 | | | |

### Mixture Example S22

A nematic LC mixture according to the invention is formulated as follows:

| Mixture M22 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M22 without affecting the remaining physical properties of the mixture M22.

### Base Mixture M23

A nematic LC mixture is formulated as follows:

| **Composition** | | | **Properties** | | |
|---|---|---|---|---|---|
| **Nr.** | **Comp.** | **Conc., wt.-%** | | | |
| 1 | PGUQU-3-F | 6.0 | T(N, I) | = | 96.5 °C |
| 2 | PGUQU-4-F | 8.0 | Δn [589 nm, 20°C]: | = | 0.1105 |
| 3 | PGUQU-5-F | 5.5 | ε_{∥} [1 kHz, 20°C]: | = | 9.9 |
| 4 | CCP-30CF3 | 6.0 | ε_{⊥} [1 kHz, 20°C]: | = | 4.0 |
| 5 | CCP-V-1 | 11.0 | Δε [1 kHz, 20°C]: | = | 6.0 |
| 6 | CLP-3-T | 8.0 | K₁ [pN, 20°C]: | = | 18.1 |
| 7 | PGP-2-3 | 1.5 | K₃ [pN, 20°C]: | = | 17.9 |
| 8 | CC-3-2V1 | 5.0 | V₀ [V, 20°C]: | = | 1.83 |
| 9 | CC-3-V | 17.0 | γ₁ [mPa s, 20°C]: | = | 105 |
| 10 | CC-3-V1 | 8.0 | LTS bulk [h, -20°C]: | = | |
| 11 | CCH-23 | 10.0 | | | |
| 12 | B(S)-2O-O5 | 2.0 | | | |
| 13 | CCY-3-O2 | 5.5 | | | |
| 14 | CPY-3-O2 | 4.5 | | | |
| 15 | Y-4O-O4 | 2.0 | | | |

### Mixture Example S23

A nematic LC mixture according to the invention is formulated as follows:

| Mixture M23 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M23 without affecting the remaining physical properties of the mixture M23.

### Base Mixture M24

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 98.4 °C |
| 2 | CC-3-V1 | 7.5 | Δn [589 nm, 20°C]: | = | 0.1108 |
| 3 | CCGU-3-F | 2.0 | ε_{∥} [1 kHz, 20°C]: | = | 8.8 |
| 4 | CCP-3-1 | 6.0 | ε_{⊥} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.5 |
| 7 | CCP-V-1 | 9.0 | K₃ [pN, 20°C]: | = | 18.1 |
| 8 | CLP-3-T | 7.5 | V₀ [V, 20°C]: | = | 1.87 |
| 9 | PCH-302 | 9.0 | γ₁ [mPa s, 20°C]: | = | 95 |
| 10 | PGP-2-3 | 6.0 | LTS bulk [h, -20°C]: | = | 1000 |
| 11 | PGUQU(1)-3-F | 8.0 | | | |
| 12 | PGUQU-4-F | 7.0 | | | |

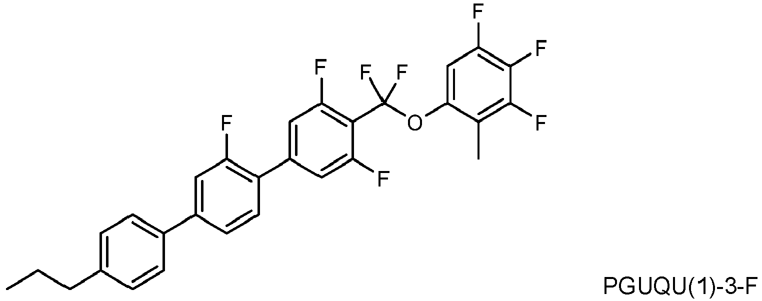

### Mixture Example S24

A nematic LC mixture according to the invention is formulated as follows:

| Mixture M24 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M24 without affecting the remaining physical properties of the mixture M24.

### Base Mixture M25

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 98.6 °C |
| 2 | CC-3-V1 | 7.5 | Δn [589 nm, 20°C]: | = | 0.1113 |
| 3 | CCGU-3-F | 2.0 | ε_{∥} [1 kHz, 20°C]: | = | 9.1 |
| 4 | CCP-3-1 | 6.0 | ε_{⊥} [1 kHz, 20°C]: | = | 2.9 |
| 5 | CCP-30CF3 | 8.0 | Δε [1 kHz, 20°C]: | = | 5.8 |
| 6 | CCP-50CF3 | 5.0 | K₁ [pN, 20°C]: | = | |
| 7 | CCP-V-1 | 9.0 | K₃ [pN, 20°C]: | = | |
| 8 | CLP-3-T | 7.5 | V₀ [V, 20°C]: | = | 1.88 |
| 9 | PCH-302 | 9.0 | γ₁ [mPa s, 20°C]: | = | 93 |
| 10 | PGP-2-3 | 6.0 | LTS bulk [h, -20°C]: | = | 1000 |
| 11 | PGUQU-3-F | 8.0 | | | |
| 12 | PGUQU-(c3)1-F | 7.0 | | | |

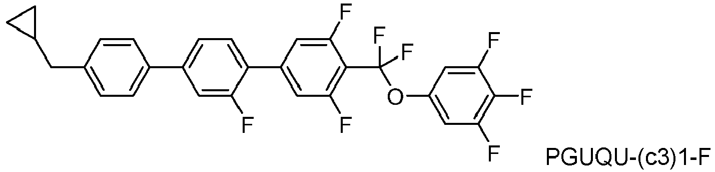

### Mixture Example S25

A nematic LC mixture according to the invention is formulated as follows:

| Mixture M25 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M25 without affecting the remaining physical properties of the mixture M25.

### Base Mixture M26

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 99.6 °C |
| 2 | CC-3-V1 | 7.5 | Δn [589 nm, 20°C]: | = | 0.1112 |
| 3 | CCGU-3-F | 2.0 | ε_{∥} [1 kHz, 20°C]: | = | 9.0 |
| 4 | CCP-3-1 | 6.0 | ε_{⊥} [1 kHz, 20°C]: | = | 3.0 |
| 5 | CCP-30CF3 | 8.0 | Δε [1 kHz, 20°C]: | = | 6.0 |
| 6 | CCP-50CF3 | 5.0 | K₁ [pN, 20°C]: | = | |
| 7 | CCP-V-1 | 9.0 | K₃ [pN, 20°C]: | = | |
| 8 | CLP-3-T | 7.5 | V₀ [V, 20°C]: | = | 1.86 |
| 9 | PCH-302 | 9.0 | γ₁ [mPa s, 20°C]: | = | 94 |
| 10 | PGP-2-3 | 6.0 | LTS bulk [h, -20°C]: | = | 1000 |
| 11 | PGUQU-3-F | 7.0 | | | |
| 12 | PGUQU-4-F | 3.0 | | | |
| 13 | PGUQU-(c5)-F | 5.0 | | | |

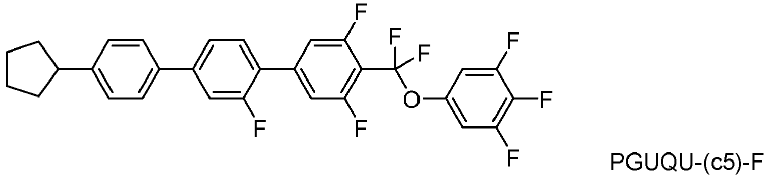

### Mixture Example S26

A nematic LC mixture according to the invention is formulated as follows:

| Mixture M26 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M26 without affecting the remaining physical properties of the mixture M26.

### Base Mixture M27

A nematic LC mixture is formulated as follows:

| **Composition** | | | **Properties** | | |
|---|---|---|---|---|---|
| **Nr.** | **Comp.** | **Conc., wt.-%** | | | |
| 1 | PGUQU-3-F | 6.0 | T(N, I) | = | 96.9 °C |
| 2 | PGUQU-4-F | 8.0 | Δn [589 nm, 20°C]: | = | 0.1102 |
| 3 | PGUQU-5-F | 5.5 | ε_{∥} [1 kHz, 20°C]: | = | 9.9 |
| 4 | CCP-30CF3 | 6.0 | ε_{⊥} [1 kHz, 20°C]: | = | 4.0 |
| 5 | CCP-V-1 | 11.0 | Δε [1 kHz, 20°C]: | = | 6.0 |
| 6 | CLP-3-T | 8.0 | K₁ [pN, 20°C]: | = | 17.9 |
| 7 | PGP-2-3 | 1.5 | K₃ [pN, 20°C]: | = | 17.7 |
| 8 | CC-3-2V1 | 5.0 | V₀ [V, 20°C]: | = | 1.83 |
| 9 | CC-3-V | 17.0 | γ₁ [mPa s, 20°C]: | = | 105 |
| 10 | CC-3-V1 | 8.0 | LTS bulk [h, -20°C]: | = | |
| 11 | CCH-23 | 10.0 | | | |
| 12 | B(S)-(c5)1O-O2 | 2.0 | | | |
| 13 | CCY-3-O2 | 5.5 | | | |
| 14 | CPY-3-O2 | 4.5 | | | |
| 15 | Y-4O-O4 | 2.0 | | | |

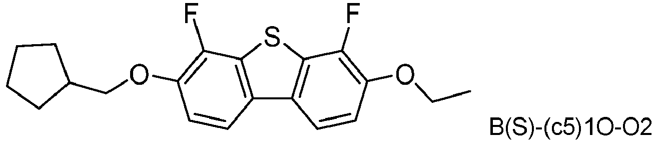

### Mixture Example S27

A nematic LC mixture according to the invention is formulated as follows:

| Mixture M27 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M27 without affecting the remaining physical properties of the mixture M27.

### Base Mixture M28

A nematic LC mixture is formulated as follows:

| **Composition** | | | **Properties** | | |
|---|---|---|---|---|---|
| **Nr.** | **Comp.** | **Conc., wt.-%** | | | |
| 1 | PGUQU-3-F | 6.0 | T(N, I) | = | 97.2 °C |
| 2 | PGUQU-4-F | 8.0 | Δn [589 nm, 20°C]: | = | 0.1103 |
| 3 | PGUQU-5-F | 5.5 | ε_{∥} [1 kHz, 20°C]: | = | 9.9 |
| 4 | CCP-30CF3 | 6.0 | ε_{⊥} [1 kHz, 20°C]: | = | 4.0 |
| 5 | CCP-V-1 | 11.0 | Δε [1 kHz, 20°C]: | = | 6.0 |
| 6 | CLP-3-T | 8.0 | K₁ [pN, 20°C]: | = | 17.7 |
| 7 | PGP-2-3 | 1.5 | K₃ [pN, 20°C]: | = | 17.6 |
| 8 | CC-3-2V1 | 5.0 | V₀ [V, 20°C]: | = | 1.83 |
| 9 | CC-3-V | 17.0 | γ₁ [mPa s, 20°C]: | = | 104 |
| 10 | CC-3-V1 | 8.0 | LTS bulk [h, -20°C]: | = | |
| 11 | CCH-23 | 10.0 | | | |
| 12 | B(S)-(c3)1O-O2 | 2.0 | | | |
| 13 | CCY-3-O2 | 5.5 | | | |
| 14 | CPY-3-O2 | 4.5 | | | |
| 15 | Y-4O-O4 | 2.0 | | | |

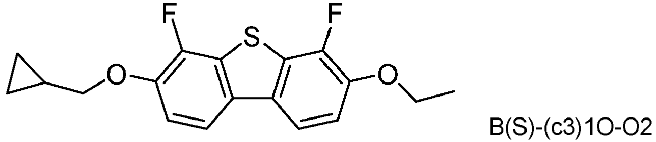

### Mixture Example S28

A nematic LC mixture according to the invention is formulated as follows:

| Mixture M28 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M28 without affecting the remaining physical properties of the mixture M28.

### Base Mixture M29

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 7.0 | T(N, I) | = | 93 °C |
| 2 | CPGP-4-3 | 1.5 | Δn [589 nm, 20°C]: | = | 0.1112 |
| 3 | DGUQU-4-F | 2.5 | ε_{∥} [1 kHz, 20°C]: | = | 9.9 |
| 4 | PGUQU-3-F | 4.0 | ε_{⊥} [1 kHz, 20°C]: | = | 4.0 |
| 5 | PGUQU-4-F | 5.0 | Δε [1 kHz, 20°C]: | = | 5.8 |
| 6 | CCP-30CF3 | 6.0 | K₁ [pN, 20°C]: | = | 18.4 |
| 7 | CCP-V-1 | 9.5 | K₃ [pN, 20°C]: | = | 18.0 |
| 8 | CLP-3-T | 8.0 | V₀ [V, 20°C]: | = | 1.87 |
| 9 | CC-3-V | 19.0 | γ₁ [mPa s, 20°C]: | = | 101 |
| 10 | CC-3-V1 | 8.5 | LTS bulk [h, -20°C]: | = | |
| 11 | CCH-23 | 7.5 | | | |
| 12 | PP-1-2V1 | 8.0 | | | |
| 13 | B(S)-2O-O5 | 2.0 | | | |
| 14 | CCY-3-O2 | 4.5 | | | |
| 15 | CPY-3-O2 | 5.5 | | | |
| 16 | Y-4O-O4 | 1.5 | | | |

### Mixture Example S29

A nematic LC mixture according to the invention is formulated as follows:

| Mixture M29 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M29 without affecting the remaining physical properties of the mixture M29.

### Base Mixture M30

A nematic LC mixture is formulated as follows:

| **Composition** | | | **Properties** | | |
|---|---|---|---|---|---|
| **Nr.** | **Comp.** | **Conc., wt.-%** | | | |
| 1 | DGUQU-4-F | 1.5 | T(N, I) | = | 98.6 °C |
| 2 | PGUQU-3-F | 6.0 | Δn [589 nm, 20°C]: | = | 0.1112 |
| 3 | PGUQU-4-F | 8.0 | ε_{∥} [1 kHz, 20°C]: | = | 10.0 |
| 4 | PGUQU-5-F | 3.0 | ε_{⊥} [1 kHz, 20°C]: | = | 4.1 |
| 5 | CCP-30CF3 | 6.0 | Δε [1 kHz, 20°C]: | = | 5.9 |
| 6 | CCP-V-1 | 10.5 | K₁ [pN, 20°C]: | = | 18.9 |
| 7 | CCP-V2-1 | 1.5 | K₃ [pN, 20°C]: | = | 17.8 |
| 8 | CLP-3-T | 8.0 | V₀ [V, 20°C]: | = | 1.87 |
| 9 | CC-3-2V1 | 3.5 | γ₁ [mPa s, 20°C]: | = | 104 |
| 10 | CC-3-V | 26.0 | LTS bulk [h, -20°C]: | = | |
| 11 | CC-3-V1 | 10.0 | | | |
| 12 | CCH-23 | 4.0 | | | |
| 13 | COB(S)-2-O4 | 8.0 | | | |
| 14 | LB-3-T | 4.0 | | | |

### Mixture Example S30

A nematic LC mixture according to the invention is formulated as follows:

| Mixture M30 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M30 without affecting the remaining physical properties of the mixture M30.

### Base Mixture M31

A nematic LC mixture is formulated as follows:

| **Composition** | | | **Properties** | | |
|---|---|---|---|---|---|
| **Nr.** | **Comp.** | **Conc., wt.-%** | | | |
| 1 | PGUQU-3-F | 6.0 | T(N, I) | = | 96.5 °C |
| 2 | PGUQU-5-F | 4.5 | Δn [589 nm, 20°C]: | = | 0.1127 |
| 3 | CCP-30CF3 | 6.0 | ε_{∥} [1 kHz, 20°C]: | = | 9.8 |
| 4 | CCP-40CF3 | 4.0 | ε_{⊥} [1 kHz, 20°C]: | = | 4.0 |
| 5 | CCP-50CF3 | 5.0 | Δε [1 kHz, 20°C]: | = | 5.8 |
| 6 | CCP-V-1 | 11.0 | K₁ [pN, 20°C]: | = | 18.8 |
| 7 | CCQU-3-F | 7.0 | K₃ [pN, 20°C]: | = | 17.3 |
| 8 | CLP-3-T | 8.0 | V₀ [V, 20°C]: | = | 1.89 |
| 9 | CC-3-V | 26.0 | γ₁ [mPa s, 20°C]: | = | 108 |
| 10 | CCH-23 | 4.5 | LTS bulk [h, -20°C]: | = | |
| 11 | PP-1-2V1 | 2.5 | | | |
| 12 | LB(S)-3-OT | 5.5 | | | |
| 13 | LB-3-T | 10.0 | | | |

### Mixture Example S31

A nematic LC mixture according to the invention is formulated as follows:

| Mixture M31 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M31 without affecting the remaining physical properties of the mixture M31.

### Base Mixture M32

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 10.0 | T(N, I) | = | 85.2 °C |
| 2 | CPGP-5-2 | 1.5 | Δn [589 nm, 20°C]: | = | 0.1116 |
| 3 | DGUQU-4-F | 5.0 | ε_{∥} [1 kHz, 20°C]: | = | 10.3 |
| 4 | PGUQU-4-F | 4.5 | ε_{⊥} [1 kHz, 20°C]: | = | 4.4 |
| 5 | CCP-V2-1 | 2.0 | Δε [1 kHz, 20°C]: | = | 5.8 |
| 6 | CLP-3-T | 8.0 | K₁ [pN, 20°C]: | = | 18.6 |
| 7 | CLP-V-1 | 8.0 | K₃ [pN, 20°C]: | = | 17.9 |
| 8 | CC-3-2V1 | 8.0 | V₀ [V, 20°C]: | = | 1.88 |
| 9 | CC-3-V | 19.0 | γ₁ [mPa s, 20°C]: | = | 85.2 |
| 10 | CC-3-V1 | 8.0 | LTS bulk [h, -20°C]: | = | |
| 11 | PP-1-2V1 | 10.0 | | | |
| 12 | CCY-3-O2 | 4.5 | | | |
| 13 | CPY-3-O2 | 5.5 | | | |
| 14 | Y-4O-O4 | 6.0 | | | |

### Mixture Example S32

A nematic LC mixture according to the invention is formulated as follows:

| Mixture M32 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M32 without affecting the remaining physical properties of the mixture M32.

### Base Mixture M33

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 10.0 | T(N, I) | = | 87.9 °C |
| 2 | CPGP-5-2 | 1.5 | Δn [589 nm, 20°C]: | = | 0.1107 |
| 3 | DGUQU-4-F | 5.0 | ε_{∥} [1 kHz, 20°C]: | = | 10.7 |
| 4 | PGUQU-3-F | 5.5 | ε_{┴} [1 kHz, 20°C]: | = | 4.9 |
| 5 | CCP-V2-1 | 2.5 | Δε [1 kHz, 20°C]: | = | 5.8 |
| 6 | CLP-3-T | 8.0 | K₁ [pN, 20°C]: | = | 18.8 |
| 7 | CLP-V-1 | 4.0 | K₃ [pN, 20°C]: | = | 17.5 |
| 8 | CC-3-2V1 | 8.0 | V₀ [V, 20°C]: | = | 1.89 |
| 9 | CC-3-V | 27.0 | γ₁ [mPa s, 20°C]: | = | |
| 10 | CC-3-V1 | 8.0 | LTS bulk [h, -20°C]: | = | |
| 11 | PP-1-2V1 | 4.5 | | | |
| 12 | Y-4O-O4 | 2.5 | | | |
| 13 | B(S)-2O-O4 | 4.0 | | | |
| 14 | B(S)-2O-O5 | 4.0 | | | |
| 15 | CPY-3-O2 | 5.5 | | | |

### Mixture Example S33

A nematic LC mixture according to the invention is formulated as follows:

| Mixture M33 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M33 without affecting the remaining physical properties of the mixture M33.

### Base Mixture M34

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 10.0 | T(N, I) | = | 84.8 °C |
| 2 | CPGP-5-2 | 1.5 | Δn [589 nm, 20°C]: | = | 0.1117 |
| 3 | DGUQU-4-F | 5.0 | ε_{∥} [1 kHz, 20°C]: | = | 10.4 |
| 4 | PGUQU-4-F | 5.0 | ε_{┴} [1 kHz, 20°C]: | = | 4.5 |
| 5 | CCP-V-1 | 3.5 | Δε [1 kHz, 20°C]: | = | 5.9 |
| 6 | CLP-3-T | 7.5 | K₁ [pN, 20°C]: | = | 18.4 |
| 7 | CLP-V-1 | 5.5 | K₃ [pN, 20°C]: | = | 17.8 |
| 8 | CC-3-2V1 | 8.0 | V₀ [V, 20°C]: | = | 1.85 |
| 9 | CC-3-V | 15.5 | γ₁ [mPa s, 20°C]: | = | |
| 10 | CC-3-V1 | 10.0 | LTS bulk [h, -20°C]: | = | |
| 11 | CCH-23 | 1.5 | | | |
| 12 | PP-1-2V1 | 10.0 | | | |
| 13 | CCY-3-O2 | 5.0 | | | |
| 14 | CPY-3-O2 | 6.0 | | | |

### Mixture Example S34

A nematic LC mixture according to the invention is formulated as follows:

| Mixture M34 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M34 without affecting the remaining physical properties of the mixture M34.

### Base Mixture M35

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 8.0 | T(N, I) | = | 87.8 °C |
| 2 | CPGP-5-2 | 1.5 | Δn [589 nm, 20°C]: | = | 0.1115 |
| 3 | DGUQU-4-F | 4.5 | ε_{∥} [1 kHz, 20°C]: | = | 10.3 |
| 4 | PGUQU-3-F | 4.0 | ε_{┴} [1 kHz, 20°C]: | = | 4.5 |
| 5 | PGUQU-4-F | 2.5 | Δε [1 kHz, 20°C]: | = | 5.8 |
| 6 | CCP-30CF3 | 6.0 | K₁ [pN, 20°C]: | = | 19.0 |
| 7 | CCP-V2-1 | 3.0 | K₃ [pN, 20°C]: | = | 18.1 |
| 8 | CLP-3-T | 6.0 | V₀ [V, 20°C]: | = | 1.91 |
| 9 | CLP-V-1 | 2.0 | γ₁ [mPa s, 20°C]: | = | |
| 10 | CC-3-2V1 | 8.0 | LTS bulk [h, -20°C]: | = | |
| 11 | CC-3-V | 15.5 | | | |
| 12 | CC-3-V1 | 8.0 | | | |
| 13 | CCH-23 | 4.5 | | | |
| 14 | PP-1-2V1 | 9.5 | | | |
| 15 | B(S)-2O-O5 | 2.0 | | | |
| 16 | CCY-3-O2 | 5.0 | | | |
| 17 | CPY-3-O2 | 6.0 | | | |
| 18 | Y-4O-O4 | 4.0 | | | |

### Mixture Example S35

A nematic LC mixture according to the invention is formulated as follows:

| Mixture M35 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M35 without affecting the remaining physical properties of the mixture M35.

### Base Mixture M36

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 8.0 | T(N, I) | = | 86.7 °C |
| 2 | CPGP-5-2 | 1.5 | Δn [589 nm, 20°C]: | = | 0.1120 |
| 3 | DGUQU-4-F | 5.0 | ε_{∥} [1 kHz, 20°C]: | = | 10.3 |
| 4 | PGUQU-3-F | 6.0 | ε_{┴} [1 kHz, 20°C]: | = | 4.5 |
| 5 | CCP-30CF3 | 5.0 | Δε [1 kHz, 20°C]: | = | 5.8 |
| 6 | CCP-V2-1 | 3.5 | K₁ [pN, 20°C]: | = | 18.7 |
| 7 | CLP-3-T | 6.0 | K₃ [pN, 20°C]: | = | 17.9 |
| 8 | CLP-V-1 | 2.0 | V₀ [V, 20°C]: | = | 1.89 |
| 9 | CC-3-2V1 | 7.0 | γ₁ [mPa s, 20°C]: | = | 99 |
| 10 | CC-3-V | 16.0 | LTS bulk [h, -20°C]: | = | 1 000 |
| 11 | CC-3-V1 | 8.0 | | | |
| 12 | CCH-23 | 5.0 | | | |
| 13 | PP-1-2V1 | 10.0 | | | |
| 14 | B(S)-2O-O5 | 2.0 | | | |
| 15 | CCY-3-O2 | 5.0 | | | |
| 16 | CPY-3-O2 | 6.0 | | | |
| 17 | Y-4O-O4 | 4.0 | | | |

### Mixture Example S36

A nematic LC mixture according to the invention is formulated as follows:

| Mixture M36 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M36 without affecting the remaining physical properties of the mixture M36.

### Base Mixture M37

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-2V1 | 3.0 | T(N, I) | = | 105.7 °C |
| 2 | CC-3-V | 26.0 | Δn [589 nm, 20°C]: | = | 0.1107 |
| 3 | CC-3-V1 | 11.0 | ε_{∥} [1 kHz, 20°C]: | = | 9.5 |
| 4 | CCP-30CF3 | 6.0 | ε_{┴} [1 kHz, 20°C]: | = | 2.9 |
| 5 | CCP-40CF3 | 4.0 | Δε [1 kHz, 20°C]: | = | 6.7 |
| 6 | CCP-V-1 | 11.0 | K₁ [pN, 20°C]: | = | 19.0 |
| 7 | CCP-V2-1 | 6.5 | K₃ [pN, 20°C]: | = | 19.8 |
| 8 | CLP-3-T | 9.0 | V₀ [V, 20°C]: | = | 1.78 |
| 9 | CPGP-5-2 | 1.5 | γ₁ [mPa s, 20°C]: | = | 98 |
| 10 | DGUQU-4-F | 3.5 | LTS bulk [h, -20°C]: | = | |
| 11 | PGP-2-3 | 4.5 | | | |
| 12 | PGUQU-3-F | 6.0 | | | |
| 13 | PGUQU-4-F | 8.0 | | | |

### Mixture Example S37

A nematic LC mixture according to the invention is formulated as follows:

| Mixture M37 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M37 without affecting the remaining physical properties of the mixture M37.

### Base Mixture M38

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 26.0 | T(N, I) | = | 98.9 °C |
| 2 | CC-3-V1 | 11.0 | Δn [589 nm, 20°C]: | = | 0.1107 |
| 3 | CCGU-3-F | 2.5 | ε_{∥} [1 kHz, 20°C]: | = | 8.7 |
| 4 | CCP-3F. F. F | 7.0 | ε_{┴} [1 kHz, 20°C]: | = | 2.8 |
| 5 | CCP-30CF3 | 6.0 | Δε [1 kHz, 20°C]: | = | 5.9 |
| 6 | CCP-40CF3 | 1.5 | K₁ [pN, 20°C]: | = | 17.7 |
| 7 | CCP-50CF3 | 5.0 | K₃ [pN, 20°C]: | = | 18.6 |
| 8 | CCP-V-1 | 12.0 | V₀ [V, 20°C]: | = | 1.83 |
| 9 | CLP-3-T | 7.0 | γ₁ [mPa s, 20°C]: | = | 89 |
| 10 | PGP-2-3 | 2.5 | LTS bulk [h, -20°C]: | = | 1 000 |
| 11 | PGP-2-5 | 4.0 | | | |
| 12 | PGUQU-3-F | 8.0 | | | |
| 13 | PGUQU-4-F | 4.0 | | | |
| 14 | PP-1-2V1 | 3.5 | | | |

### Mixture Example S38

A nematic LC mixture according to the invention is formulated as follows:

| Mixture M38 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M38 without affecting the remaining physical properties of the mixture M38.

### Base Mixture M39

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 47.0 | T(N, I) | = | 75 °C |
| 2 | CC-3-V1 | 4.5 | Δn [589 nm, 20°C]: | = | 0.1343 |
| 3 | CLP-3-T | 7.0 | ε_{∥} [1 kHz, 20°C]: | = | 5.7 |
| 4 | PGP-1-2V | 5.5 | ε_{┴} [1 kHz, 20°C]: | = | 2.7 |
| 5 | PGP-2-2V | 10.0 | Δε [1 kHz, 20°C]: | = | 3.0 |
| 6 | PGU-2-F | 1.0 | K₁ [pN, 20°C]: | = | 15.8 |
| 7 | PGUQU-3-F | 4.0 | K₃ [pN, 20°C]: | = | 13.5 |
| 8 | PGUQU-4-F | 2.5 | V₀ [V, 20°C]: | = | 2.43 |
| 9 | PP-1-2V1 | 7.5 | γ₁ [mPa s, 20°C]: | = | 49 |
| 10 | PPGU-3-F | 1.0 | LTS bulk [h, -20°C]: | = | 1 000 |
| 11 | PUS-3-2 | 10.0 | | | |

### Mixture Example S39

A nematic LC mixture according to the invention is formulated as follows:

| Mixture M39 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M39 without affecting the remaining physical properties of the mixture M39.

### Base Mixture M40

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 100.9 °C |
| 2 | CC-3-V1 | 3.0 | Δn [589 nm, 20°C]: | = | 0.1111 |
| 3 | CCP-3-1 | 6.0 | ε_{∥} [1 kHz, 20°C]: | = | 8.8 |
| 4 | CCP-3F. F. F | 2.0 | ε_{┴} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.7 |
| 7 | CCP-V-1 | 14.0 | K₃ [pN, 20°C]: | = | 18.9 |
| 8 | CLP-3-T | 8.0 | V₀ [V, 20°C]: | = | 1.81 |
| 9 | PCH-302 | 9.0 | γ₁ [mPa s, 20°C]: | = | 95 |
| 10 | PGP-2-3 | 5.0 | LTS bulk [h, -20°C]: | = | 1 000 |
| 11 | PGUQU-3-F | 8.0 | | | |
| 12 | PGUQU-4-F | 7.0 | | | |

### Mixture Example S40

A nematic LC mixture according to the invention is formulated as follows:

| Mixture M40 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M40 without affecting the remaining physical properties of the mixture M40.

### Base Mixture M41

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 24.5 | T(N, I) | = | 101.2 °C |
| 2 | CC-3-V1 | 3.5 | Δn [589 nm, 20°C]: | = | 0.1115 |
| 3 | CCP-3-1 | 5.5 | ε_{∥} [1 kHz, 20°C]: | = | 8.8 |
| 4 | CCP-3F. F. F | 6.5 | ε_{┴} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.9 |
| 7 | CCP-V-1 | 12.0 | K₃ [pN, 20°C]: | = | 18.5 |
| 8 | CLP-3-T | 8.0 | V₀ [V, 20°C]: | = | 1.83 |
| 9 | PCH-302 | 7.0 | γ₁ [mPa s, 20°C]: | = | |
| 10 | PGP-2-3 | 7.0 | LTS bulk [h, -20°C]: | = | |
| 11 | PGUQU-3-F | 6.0 | | | |
| 12 | PGUQU-4-F | 7.0 | | | |

### Mixture Example S41

A nematic LC mixture according to the invention is formulated as follows:

| Mixture M41 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M41 without affecting the remaining physical properties of the mixture M41.

### Base Mixture M42

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.5 | T(N, I) | = | 101.4 °C |
| 2 | BCH-3F.F | 5.0 | Δn [589 nm, 20°C]: | = | 0.1113 |
| 3 | CC-3-V | 31.0 | ε_{∥} [1 kHz, 20°C]: | = | 9.4 |
| 4 | CC-3-V1 | 8.0 | ε_{┴} [1 kHz, 20°C]: | = | 3.5 |
| 5 | CCP-3-1 | 7.0 | Δε [1 kHz, 20°C]: | = | 5.9 |
| 6 | CCP-3-3 | 6.5 | K₁ [pN, 20°C]: | = | 18.1 |
| 7 | CCP-30CF3 | 8.0 | K₃ [pN, 20°C]: | = | 18.8 |
| 8 | CLP-3-T | 5.5 | V₀ [V, 20°C]: | = | 1.85 |
| 9 | CPY-3-O2 | 10.0 | γ₁ [mPa s, 20°C]: | = | 99 |
| 10 | PGUQU-3-F | 8.0 | LTS bulk [h, -20°C]: | = | |
| 11 | PGUQU-4-F | 7.0 | | | |
| 12 | PP-1-2V1 | 1.5 | | | |

### Mixture Example S42

A nematic LC mixture according to the invention is formulated as follows:

| Mixture M42 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M42 without affecting the remaining physical properties of the mixture M42.

### Base Mixture M43

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-3F.F | 6.5 | T(N, I) | = | 100 °C |
| 2 | CC-3-V | 32.0 | Δn [589 nm, 20°C]: | = | 0.1114 |
| 3 | CC-3-V1 | 7.5 | ε_{∥} [1 kHz, 20°C]: | = | 9.3 |
| 4 | CCP-3-1 | 7.0 | ε_{┴} [1 kHz, 20°C]: | = | 3.5 |
| 5 | CCP-3-3 | 4.0 | Δε [1 kHz, 20°C]: | = | 5.8 |
| 6 | CCP-30CF3 | 8.0 | K₁ [pN, 20°C]: | = | 18.0 |
| 7 | CLP-3-T | 8.0 | K₃ [pN, 20°C]: | = | 18.9 |
| 8 | CPY-3-O2 | 10.0 | V₀ [V, 20°C]: | = | 1.85 |
| 9 | PGUQU-3-F | 6.5 | γ₁ [mPa s, 20°C]: | = | 97 |
| 10 | PGUQU-4-F | 8.0 | LTS bulk [h, -20°C]: | = | |
| 11 | PGUQU-5-F | 1.5 | | | |
| 12 | PP-1-2V1 | 1.0 | | | |

### Mixture Example S43

A nematic LC mixture according to the invention is formulated as follows:

| Mixture M38 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M43 without affecting the remaining physical properties of the mixture M43.

### Base Mixture M44

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 34.5 | T(N, I) | = | 102.3 °C |
| 2 | CC-3-V1 | 5.0 | Δn [589 nm, 20°C]: | = | 0.1118 |
| 3 | CCP-3-1 | 16.0 | ε_{∥} [1 kHz, 20°C]: | = | 8.9 |
| 4 | CCP-3-3 | 3.0 | ε_{┴} [1 kHz, 20°C]: | = | 3.1 |
| 5 | CCP-30CF3 | 8.0 | Δε [1 kHz, 20°C]: | = | 5.8 |
| 6 | CCY-3-O2 | 4.5 | K₁ [pN, 20°C]: | = | 18.0 |
| 7 | CLP-3-T | 3.5 | K₃ [pN, 20°C]: | = | 18.9 |
| 8 | PGP-2-3 | 5.0 | V₀ [V, 20°C]: | = | 1.84 |
| 9 | PGUQU-3-F | 6.0 | γ₁ [mPa s, 20°C]: | = | 92 |
| 10 | PGUQU-4-F | 8.0 | LTS bulk [h, -20°C]: | = | 1 000 |
| 11 | PGUQU-5-F | 5.0 | | | |
| 12 | PP-1-2V1 | 1.5 | | | |

### Mixture Example S44

A nematic LC mixture according to the invention is formulated as follows:

| Mixture M44 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M44 without affecting the remaining physical properties of the mixture M44.

### Base Mixture M45

A nematic LC mixture is formulated as follows:

| **Composition** | | | Properties | | |
|---|---|---|---|---|---|
| **Nr.** | **Comp.** | **Conc., wt.-%** | | | |
| 1 | CC-3-V | 35.0 | T(N, I) | = | 101.7 °C |
| 2 | CC-3-V1 | 3.5 | Δn [589 nm, 20°C]: | = | 0.1107 |
| 3 | CCH-301 | 2.0 | ε_{∥} [1 kHz, 20°C]: | = | 8.9 |
| 4 | CCP-3-1 | 15.0 | ε_{┴} [1 kHz, 20°C]: | = | 3.1 |
| 5 | CCP-3-3 | 4.5 | Δε [1 kHz, 20°C]: | = | 5.8 |
| 6 | CCP-30CF3 | 7.0 | K₁ [pN, 20°C]: | = | 18.1 |
| 7 | CLP-3-T | 6.0 | K₃ [pN, 20°C]: | = | 18.5 |
| 8 | CPY-3-O2 | 4.5 | V₀ [V, 20°C]: | = | 1.86 |
| 9 | PGP-2-3 | 4.5 | γ₁ [mPa s, 20°C]: | = | 92 |
| 10 | PGUQU-3-F | 6.0 | LTS bulk [h, -20°C]: | = | |
| 11 | PGUQU-4-F | 8.0 | | | |
| 12 | PGUQU-5-F | 4.0 | | | |

### Mixture Example S45

A nematic LC mixture according to the invention is formulated as follows:

| Mixture M45 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M45 without affecting the remaining physical properties of the mixture M45.

### Base Mixture M46

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 6.5 | T(N, I) | = | 99.7 °C |
| 2 | CC-3-V | 27.5 | Δn [589 nm, 20°C]: | = | 0.1090 |
| 3 | CC-3-V1 | 3.0 | ε_{∥} [1 kHz, 20°C]: | = | 8.7 |
| 4 | CCP-3-1 | 6.0 | ε_{┴} [1 kHz, 20°C]: | = | 2.9 |
| 5 | CCP-3-3 | 5.0 | Δε [1 kHz, 20°C]: | = | 5.9 |
| 6 | CCP-3F.F.F | 1.0 | K₁ [pN, 20°C]: | = | 17.5 |
| 7 | CCP-V-1 | 10.0 | K₃ [pN, 20°C]: | = | 18.4 |
| 8 | CCPC-33 | 2.0 | V₀ [V, 20°C]: | = | 1.82 |
| 9 | CLP-3-T | 8.0 | γ₁ [mPa s, 20°C]: | = | 99 |
| 10 | CLU-3-F | 5.0 | LTS bulk [h, -20°C]: | = | |
| 11 | PCH-302 | 10.0 | | | |
| 12 | PGUQU-3-F | 7.0 | | | |
| 13 | PGUQU-4-F | 7.0 | | | |
| 14 | PGUQU-5-F | 2.0 | | | |

### Mixture Example S46

A nematic LC mixture according to the invention is formulated as follows:

| Mixture M41 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M46 without affecting the remaining physical properties of the mixture M46.

### Base Mixture M47

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 3.0 | T(N, I) | = | 99.9 °C |
| 2 | BCH-3F.F | 8.0 | Δn [589 nm, 20°C]: | = | 0.1092 |
| 3 | CC-3-V | 25.0 | ε_{∥} [1 kHz, 20°C]: | = | 8.7 |
| 4 | CCP-3-1 | 6.0 | ε_{┴} [1 kHz, 20°C]: | = | 3.0 |
| 5 | CCP-3-3 | 5.0 | Δε [1 kHz, 20°C]: | = | 5.7 |
| 6 | CCP-V-1 | 7.5 | K₁ [pN, 20°C]: | = | 17.5 |
| 7 | CCPC-33 | 2.0 | K₃ [pN, 20°C]: | = | 18.5 |
| 8 | CCPC-34 | 2.0 | V₀ [V, 20°C]: | = | 1.84 |
| 9 | CLP-3-T | 8.0 | γ₁ [mPa s, 20°C]: | = | 112 |
| 10 | CLU-3-F | 11.5 | LTS bulk [h, -20°C]: | = | |
| 11 | PCH-302 | 10.0 | | | |
| 12 | PGUQU-3-F | 7.5 | | | |
| 13 | PGUQU-4-F | 3.0 | | | |
| 14 | PP-1-2V1 | 1.5 | | | |

### Mixture Example S47

A nematic LC mixture according to the invention is formulated as follows:

| Mixture M47 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M47 without affecting the remaining physical properties of the mixture M47.

### Base Mixture M48

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 4.5 | T(N, I) | = | 100.9 °C |
| 2 | BCH-3F.F | 10.0 | Δn [589 nm, 20°C]: | = | 0.1104 |
| 3 | CC-3-V | 24.0 | ε_{∥} [1 kHz, 20°C]: | = | 8.9 |
| 4 | CCH-35 | 4.0 | ε_{┴} [1 kHz, 20°C]: | = | 3.0 |
| 5 | CCP-3-1 | 6.0 | Δε [1 kHz, 20°C]: | = | 5.9 |
| 6 | CCP-3-3 | 5.0 | K₁ [pN, 20°C]: | = | 18.1 |
| 7 | CCP-V-1 | 5.0 | K₃ [pN, 20°C]: | = | 18.4 |
| 8 | CCPC-33 | 2.0 | V₀ [V, 20°C]: | = | 1.83 |
| 9 | CCPC-34 | 2.0 | γ₁ [mPa s, 20°C]: | = | 111 |
| 10 | CLP-3-T | 8.0 | LTS bulk [h, -20°C]: | = | |
| 11 | CLU-3-F | 6.0 | | | |
| 12 | PCH-302 | 10.0 | | | |
| 13 | PGUQU-3-F | 7.5 | | | |
| 14 | PGUQU-4-F | 5.5 | | | |
| 15 | PP-1-2V1 | 0.5 | | | |

### Mixture Example S48

A nematic LC mixture according to the invention is formulated as follows:

| Mixture M48 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M48 without affecting the remaining physical properties of the mixture M48.

### Base Mixture M49

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | CC-3-V | 24.5 | Δn [589 nm, 20°C]: | = | |
| 3 | CC-3-V1 | 7.0 | ε_{∥} [1 kHz, 20°C]: | = | |
| 4 | CCP-3-1 | 6.5 | ε_{┴} [1 kHz, 20°C]: | = | |
| 5 | CCP-3-3 | 5.0 | Δε [1 kHz, 20°C]: | = | |
| 6 | CCP-V-1 | 9.0 | K₁ [pN, 20°C]: | = | |
| 7 | CCPC-33 | 1.0 | K₃ [pN, 20°C]: | = | |
| 8 | CLP-3-T | 6.0 | V₀ [V, 20°C]: | = | |
| 9 | CLU-3-F | 6.5 | γ₁ [mPa s, 20°C]: | = | |
| 10 | PCH-302 | 9.0 | LTS bulk [h, -20°C]: | = | |
| 11 | PGUQU-3-F | 6.0 | | | |
| 12 | PGUQU-4-F | 7.0 | | | |
| 13 | PGUQU-5-F | 3.5 | | | |

### Mixture Example S49

A nematic LC mixture according to the invention is formulated as follows:

| Mixture M49 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M49 without affecting the remaining physical properties of the mixture M49.

### Base Mixture M50

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 7.0 | T(N, I) | = | 100.2 °C |
| 2 | CC-3-V | 22.0 | Δn [589 nm, 20°C]: | = | 0.1115 |
| 3 | CC-3-V1 | 8.0 | ε_{∥} [1 kHz, 20°C]: | = | 8.7 |
| 4 | CCP-3-1 | 7.0 | ε_{┴} [1 kHz, 20°C]: | = | 2.9 |
| 5 | CCP-3-3 | 5.0 | Δε [1 kHz, 20°C]: | = | 5.8 |
| 6 | CCP-V-1 | 13.0 | K₁ [pN, 20°C]: | = | 17.9 |
| 7 | CLP-3-T | 6.0 | K₃ [pN, 20°C]: | = | 18.8 |
| 8 | CLU-3-F | 5.0 | V₀ [V, 20°C]: | = | 1.84 |
| 9 | PCH-302 | 10.0 | γ₁ [mPa s, 20°C]: | = | 97 |
| 10 | PGUQU-3-F | 6.0 | LTS bulk [h, -20°C]: | = | |
| 11 | PGUQU-4-F | 7.0 | | | |
| 12 | PGUQU-5-F | 4.0 | | | |

### Mixture Example S50

A nematic LC mixture according to the invention is formulated as follows:

| Mixture M50 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M50 without affecting the remaining physical properties of the mixture M50.

### Base Mixture M51

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | BCH-3F.F | 2.0 | Δn [589 nm, 20°C]: | = | |
| 3 | CC-3-V | 28.0 | ε_{∥} [1 kHz, 20°C]: | = | |
| 4 | CCP-3-1 | 7.0 | ε_{┴} [1 kHz, 20°C]: | = | |
| 5 | CCP-3-3 | 3.5 | Δε [1 kHz, 20°C]: | = | |
| 6 | CCP-V-1 | 12.5 | K₁ [pN, 20°C]: | = | |
| 7 | CLP-3-T | 8.0 | K₃ [pN, 20°C]: | = | |
| 8 | CLU-3-F | 9.0 | V₀ [V, 20°C]: | = | |
| 9 | PCH-302 | 7.0 | γ₁ [mPa s, 20°C]: | = | |
| 10 | PGUQU-3-F | 6.0 | LTS bulk [h, -20°C]: | = | |
| 11 | PGUQU-4-F | 7.0 | | | |
| 12 | PGUQU-5-F | 1.0 | | | |

### Mixture Example S51

A nematic LC mixture according to the invention is formulated as follows:

| Mixture M51 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M51 without affecting the remaining physical properties of the mixture M51.

### Base Mixture M52

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 8.0 | T(N, I) | = | 100 °C |
| 2 | CC-3-V | 25.5 | Δn [589 nm, 20°C]: | = | 0.1101 |
| 3 | CC-3-V1 | 4.5 | ε_{∥} [1 kHz, 20°C]: | = | 8.7 |
| 4 | CCP-3-1 | 7.5 | ε_{┴} [1 kHz, 20°C]: | = | 2.9 |
| 5 | CCP-3-3 | 4.5 | Δε [1 kHz, 20°C]: | = | 5.9 |
| 6 | CCP-V-1 | 9.0 | K₁ [pN, 20°C]: | = | 17.7 |
| 7 | CCPC-33 | 1.5 | K₃ [pN, 20°C]: | = | 18.6 |
| 8 | CLP-3-T | 6.0 | V₀ [V, 20°C]: | = | 1.82 |
| 9 | CLU-3-F | 7.5 | γ₁ [mPa s, 20°C]: | = | 98 |
| 10 | PCH-302 | 10.0 | LTS bulk [h, -20°C]: | = | |
| 11 | PGUQU-3-F | 5.5 | | | |
| 12 | PGUQU-4-F | 7.0 | | | |
| 13 | PGUQU-5-F | 3.5 | | | |

### Mixture Example S52

A nematic LC mixture according to the invention is formulated as follows:

| Mixture M52 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M52 without affecting the remaining physical properties of the mixture M52.

### Base Mixture M53

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 8.0 | T(N, I) | = | °C |
| 2 | BCH-3F.F | 0.5 | Δn [589 nm, 20°C]: | = | |
| 3 | CC-3-V | 24.5 | ε_{∥} [1 kHz, 20°C]: | = | |
| 4 | CC-3-V1 | 6.5 | ε_{┴} [1 kHz, 20°C]: | = | |
| 5 | CCP-3-1 | 7.0 | Δε [1 kHz, 20°C]: | = | |
| 6 | CCP-3-3 | 5.0 | K₁ [pN, 20°C]: | = | |
| 7 | CCP-V-1 | 8.5 | K₃ [pN, 20°C]: | = | |
| 8 | CCPC-33 | 1.5 | V₀ [V, 20°C]: | = | |
| 9 | CLP-3-T | 6.0 | γ₁ [mPa s, 20°C]: | = | |
| 10 | CLU-3-F | 6.0 | LTS bulk [h, -20°C]: | = | |
| 11 | PCH-302 | 10.0 | | | |
| 12 | PGUQU-3-F | 4.0 | | | |
| 13 | PGUQU-4-F | 7.0 | | | |
| 14 | PGUQU-5-F | 5.5 | | | |

### Mixture Example S53

A nematic LC mixture according to the invention is formulated as follows:

| Mixture M53 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M53 without affecting the remaining physical properties of the mixture M53.

### Base Mixture M54

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 7.5 | T(N, I) | = | °C |
| 2 | BCH-3F.F | 0.5 | Δn [589 nm, 20°C]: | = | |
| 3 | CC-3-V | 24.5 | ε_{∥} [1 kHz, 20°C]: | = | |
| 4 | CC-3-V1 | 7.0 | ε_{┴} [1 kHz, 20°C]: | = | |
| 5 | CCP-3-1 | 7.0 | Δε [1 kHz, 20°C]: | = | |
| 6 | CCP-3-3 | 4.0 | K₁ [pN, 20°C]: | = | |
| 7 | CCP-V-1 | 9.0 | K₃ [pN, 20°C]: | = | |
| 8 | CCPC-33 | 2.0 | V₀ [V, 20°C]: | = | |
| 9 | CLP-3-T | 6.0 | γ₁ [mPa s, 20°C]: | = | |
| 10 | CLU-3-F | 6.0 | LTS bulk [h, -20°C]: | = | |
| 11 | PCH-302 | 10.0 | | | |
| 12 | PGUQU-3-F | 4.5 | | | |
| 13 | PGUQU-4-F | 7.0 | | | |
| 14 | PGUQU-5-F | 5.0 | | | |

### Mixture Example S54

A nematic LC mixture according to the invention is formulated as follows:

| Mixture M54 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M54 without affecting the remaining physical properties of the mixture M54.

### Base Mixture M55

A nematic LC mixture is formulated as follows:

| | **Composition** | | **Properties** | | |
|---|---|---|---|---|---|
| **Nr.** | **Comp.** | **Conc., wt.-%** | | | |
| 1 | BCH-32 | 6.5 | T(N, I) | = | 101 °C |
| 2 | CC-3-V | 26.5 | Δn [589 nm, 20°C]: | = | 0.1097 |
| 3 | CC-3-V1 | 3.0 | ε_{∥} [1 kHz, 20°C]: | = | 8.7 |
| 4 | CCP-3-1 | 6.0 | ε_{┴} [1 kHz, 20°C]: | = | 2.9 |
| 5 | CCP-3-3 | 5.0 | Δε [1 kHz, 20°C]: | = | 5.9 |
| 6 | CCP-3F.F.F | 1.0 | K₁ [pN, 20°C]: | = | 17.8 |
| 7 | CCP-V-1 | 11.0 | K₃ [pN, 20°C]: | = | 18.9 |
| 8 | CCPC-33 | 2.0 | V₀ [V, 20°C]: | = | 1.83 |
| 9 | CLP-3-T | 8.0 | γ₁ [mPa s, 20°C]: | = | 99 |
| 10 | CLU-3-F | 5.0 | LTS bulk [h, -20°C]: | = | |
| 11 | PCH-302 | 10.0 | | | |
| 12 | PGUQU-3-F | 7.0 | | | |
| 13 | PGUQU-4-F | 7.0 | | | |
| 14 | PGUQU-5-F | 2.0 | | | |

### Mixture Example S55

A nematic LC mixture according to the invention is formulated as follows:

| Mixture M55 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M55 without affecting the remaining physical properties of the mixture M55.

### Base Mixture M56

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 7.0 | T(N, I) | = | 100.4 °C |
| 2 | CC-3-V | 28.5 | Δn [589 nm, 20°C]: | = | 0.1109 |
| 3 | CC-3-V1 | 0.5 | ε_{∥} [1 kHz, 20°C]: | = | 8.8 |
| 4 | CCP-3-1 | 7.0 | ε_{┴} [1 kHz, 20°C]: | = | 2.9 |
| 5 | CCP-3-3 | 5.0 | Δε [1 kHz, 20°C]: | = | 5.9 |
| 6 | CCP-V-1 | 10.5 | K₁ [pN, 20°C]: | = | 18.0 |
| 7 | CCPC-33 | 2.0 | K₃ [pN, 20°C]: | = | 18.6 |
| 8 | CLP-3-T | 7.0 | V₀ [V, 20°C]: | = | 1.84 |
| 9 | CLU-3-F | 5.0 | γ₁ [mPa s, 20°C]: | = | 98 |
| 10 | PCH-302 | 10.5 | LTS bulk [h, -20°C]: | = | |
| 11 | PGUQU-3-F | 5.0 | | | |
| 12 | PGUQU-4-F | 7.0 | | | |
| 13 | PGUQU-5-F | 5.0 | | | |

### Mixture Example S56

A nematic LC mixture according to the invention is formulated as follows:

| Mixture M56 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M56 without affecting the remaining physical properties of the mixture M56.

### Base Mixture M57

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 101.1 °C |
| 2 | BCH-32 | 8.0 | Δn [589 nm, 20°C]: | = | 0.1110 |
| 3 | CC-3-V | 25.0 | ε_{∥} [1 kHz, 20°C]: | = | 8.7 |
| 4 | CCP-3-1 | 6.0 | ε_{┴} [1 kHz, 20°C]: | = | 2.9 |
| 5 | CCP-3-3 | 5.0 | Δε [1 kHz, 20°C]: | = | 5.8 |
| 6 | CCP-30CF3 | 5.5 | K₁ [pN, 20°C]: | = | 18.0 |
| 7 | CCP-V-1 | 12.5 | K₃ [pN, 20°C]: | = | 18.6 |
| 8 | CLP-3-T | 6.5 | V₀ [V, 20°C]: | = | 1.84 |
| 9 | CLU-3-F | 3.5 | γ₁ [mPa s, 20°C]: | = | 97 |
| 10 | PCH-302 | 11.5 | LTS bulk [h, -20°C]: | = | |
| 11 | PGUQU-3-F | 3.0 | | | |
| 12 | PGUQU-4-F | 6.0 | | | |
| 13 | PGUQU-5-F | 5.5 | | | |

### Mixture Example S57

A nematic LC mixture according to the invention is formulated as follows:

| Mixture M57 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M57 without affecting the remaining physical properties of the mixture M57.

### Base Mixture M58

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 8.5 | T(N, I) | = | 101.4 °C |
| 2 | CC-3-V | 25.0 | Δn [589 nm, 20°C]: | = | 0.1108 |
| 3 | CC-3-V1 | 0.5 | ε_{∥} [1 kHz, 20°C]: | = | 8.7 |
| 4 | CCP-3-1 | 7.0 | ε_{┴} [1 kHz, 20°C]: | = | 2.9 |
| 5 | CCP-3-3 | 2.0 | Δε [1 kHz, 20°C]: | = | 5.8 |
| 6 | CCP-30CF3 | 5.5 | K₁ [pN, 20°C]: | = | 17.8 |
| 7 | CCP-V-1 | 14.0 | K₃ [pN, 20°C]: | = | 18.5 |
| 8 | CLP-3-T | 6.5 | V₀ [V, 20°C]: | = | 1.83 |
| 9 | CLU-3-F | 5.0 | γ₁ [mPa s, 20°C]: | = | 97 |
| 10 | DGUQU-4-F | 1.0 | LTS bulk [h, -20°C]: | = | |
| 11 | PCH-302 | 10.5 | | | |
| 12 | PGUQU-3-F | 3.0 | | | |
| 13 | PGUQU-4-F | 6.0 | | | |
| 14 | PGUQU-5-F | 5.5 | | | |

### Mixture Example S58

A nematic LC mixture according to the invention is formulated as follows:

| Mixture M58 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M58 without affecting the remaining physical properties of the mixture M58.

### Base Mixture M59

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 100.4 °C |
| 2 | CCP-3-1 | 7.0 | Δn [589 nm, 20°C]: | = | 0.1107 |
| 3 | CCP-3-3 | 3.0 | ε_{∥} [1 kHz, 20°C]: | = | 8.7 |
| 4 | CCP-30CF3 | 8.0 | ε_{┴} [1 kHz, 20°C]: | = | 2.9 |
| 5 | CCP-3F.F.F | 4.5 | Δε [1 kHz, 20°C]: | = | 5.8 |
| 6 | CCP-50CF3 | 1.0 | K₁ [pN, 20°C]: | = | 17.4 |
| 7 | CCP-V-1 | 14.0 | K₃ [pN, 20°C]: | = | 18.8 |
| 8 | CLP-3-T | 8.0 | V₀ [V, 20°C]: | = | 1.81 |
| 9 | PCH-302 | 10.5 | γ₁ [mPa s, 20°C]: | = | 96 |
| 10 | PGP-2-3 | 4.5 | LTS bulk [h, -20°C]: | = | |
| 11 | PGUQU-3-F | 8.0 | | | |
| 12 | PGUQU-4-F | 6.5 | | | |

### Mixture Example S59

A nematic LC mixture according to the invention is formulated as follows:

| Mixture M59 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M59 without affecting the remaining physical properties of the mixture M59.

### Base Mixture M60

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 24.0 | T(N, I) | = | 100.4 °C |
| 2 | CCP-3-1 | 7.0 | Δn [589 nm, 20°C]: | = | 0.1110 |
| 3 | CCP-3-3 | 3.0 | ε_{∥} [1 kHz, 20°C]: | = | 8.8 |
| 4 | CCP-30CF3 | 8.0 | ε_{┴} [1 kHz, 20°C]: | = | 2.9 |
| 5 | CCP-3F.F.F | 3.0 | Δε [1 kHz, 20°C]: | = | 5.9 |
| 6 | CCP-50CF3 | 1.5 | K₁ [pN, 20°C]: | = | 17.5 |
| 7 | CCP-V-1 | 13.5 | K₃ [pN, 20°C]: | = | 18.7 |
| 8 | CLP-3-T | 7.5 | V₀ [V, 20°C]: | = | 1.81 |
| 9 | CLU-3-F | 3.0 | γ₁ [mPa s, 20°C]: | = | 98 |
| 10 | PCH-302 | 11.0 | LTS bulk [h, -20°C]: | = | |
| 11 | PGP-2-3 | 4.5 | | | |
| 12 | PGUQU-3-F | 8.0 | | | |
| 13 | PGUQU-4-F | 6.0 | | | |

### Mixture Example S60

A nematic LC mixture according to the invention is formulated as follows:

| | |
|---|---|
| Mixture M60 | 99.84 wt.-% |
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M60 without affecting the remaining physical properties of the mixture M60.

### Base Mixture M61

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 4.0 | T(N, I) | = | 100.5 °C |
| 2 | CC-3-V | 26.0 | Δn [589 nm, 20°C]: | = | 0.1109 |
| 3 | CC-3-V1 | 4.5 | ε_{∥} [1 kHz, 20°C]: | = | 8.7 |
| 4 | CCP-3-1 | 4.5 | ε_{┴} [1 kHz, 20°C]: | = | 2.9 |
| 5 | CCP-3-3 | 5.0 | Δε [1 kHz, 20°C]: | = | 5.8 |
| 6 | CCP-3F.F.F | 3.0 | K₁ [pN, 20°C]: | = | 17.3 |
| 7 | CCP-V-1 | 11.0 | K₃ [pN, 20°C]: | = | 18.5 |
| 8 | CCPC-33 | 3.0 | V₀ [V, 20°C]: | = | 1.80 |
| 9 | CLP-3-T | 6.0 | γ₁ [mPa s, 20°C]: | = | 99 |
| 10 | CLU-3-F | 4.5 | LTS bulk [h, -20°C]: | = | |
| 11 | PCH-302 | 10.0 | | | |
| 12 | PGP-2-3 | 2.5 | | | |
| 13 | PGUQU-3-F | 7.0 | | | |
| 14 | PGUQU-4-F | 7.0 | | | |
| 15 | PGUQU-5-F | 2.0 | | | |

### Mixture Example S61

A nematic LC mixture according to the invention is formulated as follows:

| Mixture M61 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M61 without affecting the remaining physical properties of the mixture M61.

### Base Mixture M62

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.5 | T(N, I) | = | 100.3 °C |
| 2 | BCH-32 | 8.0 | Δn [589 nm, 20°C]: | = | 0.1105 |
| 3 | CC-3-V | 19.5 | ε_{∥} [1 kHz, 20°C]: | = | 8.7 |
| 4 | CC-3-V1 | 8.0 | ε_{┴} [1 kHz, 20°C]: | = | 2.9 |
| 5 | CCP-3-1 | 6.0 | Δε [1 kHz, 20°C]: | = | 5.8 |
| 6 | CCP-3-3 | 5.0 | K₁ [pN, 20°C]: | = | 17.7 |
| 7 | CCP-3F.F.F | 3.5 | K₃ [pN, 20°C]: | = | 18.7 |
| 8 | CCP-V-1 | 13.0 | V₀ [V, 20°C]: | = | 1.83 |
| 9 | CLP-3-T | 4.5 | γ₁ [mPa s, 20°C]: | = | 98 |
| 10 | CLU-3-F | 5.0 | LTS bulk [h, -20°C]: | = | |
| 11 | PCH-302 | 11.0 | | | |
| 12 | PGP-2-3 | 0.5 | | | |
| 13 | PGUQU-3-F | 5.5 | | | |
| 14 | PGUQU-4-F | 6.0 | | | |
| 15 | PGUQU-5-F | 2.0 | | | |

### Mixture Example S62

A nematic LC mixture according to the invention is formulated as follows:

| Mixture M62 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M62 without affecting the remaining physical properties of the mixture M62.

### Base Mixture M63

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 100.7 °C |
| 2 | BCH-32 | 7.0 | Δn [589 nm, 20°C]: | = | 0.1097 |
| 3 | CC-3-V | 26.5 | ε_{∥} [1 kHz, 20°C]: | = | 8.7 |
| 4 | CC-3-V1 | 1.0 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 5.0 | K₁ [pN, 20°C]: | = | 18.0 |
| 7 | CCP-V-1 | 13.0 | K₃ [pN, 20°C]: | = | 18.7 |
| 8 | CCPC-33 | 0.5 | V₀ [V, 20°C]: | = | 1.84 |
| 9 | CLP-3-T | 8.0 | γ₁ [mPa s, 20°C]: | = | 100 |
| 10 | CLU-3-F | 6.0 | LTS bulk [h, -20°C]: | = | |
| 11 | PCH-302 | 10.0 | | | |
| 12 | PGUQU-3-F | 3.0 | | | |
| 13 | PGUQU-4-F | 5.0 | | | |
| 14 | PGUQU-5-F | 6.0 | | | |

### Mixture Example S63

A nematic LC mixture according to the invention is formulated as follows:

| Mixture M63 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M63 without affecting the remaining physical properties of the mixture M63.

### Base Mixture M64

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 3.0 | T(N, I) | = | °C |
| 2 | BCH-32 | 9.0 | Δn [589 nm, 20°C]: | - | |
| 3 | CC-3-V | 25.5 | ε_{∥} [1 kHz, 20°C]: | = | |
| 4 | CCP-3-1 | 6.0 | ε_{┴} [1 kHz, 20°C]: | = | |
| 5 | CCP-3-3 | 3.0 | Δε [1 kHz, 20°C]: | = | |
| 6 | CCP-30CF3 | 2.5 | K₁ [pN, 20°C]: | = | |
| 7 | CCP-3F. F. F | 0.5 | K₃ [pN, 20°C]: | = | |
| 8 | CCP-V-1 | 14.0 | V₀ [V, 20°C]: | = | |
| 9 | CCP-V2-1 | 1.0 | γ₁ [mPa s, 20°C]: | = | |
| 10 | CLP-3-T | 6.5 | LTS bulk [h, -20°C]: | = | |
| 11 | CLU-3-F | 6.0 | | | |
| 12 | PCH-302 | 10.0 | | | |
| 13 | PGUQU-3-F | 3.0 | | | |
| 14 | PGUQU-4-F | 5.0 | | | |
| 15 | PGUQU-5-F | 5.0 | | | |

### Mixture Example S64

A nematic LC mixture according to the invention is formulated as follows:

| Mixture M64 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M64 without affecting the remaining physical properties of the mixture M64.

### Base Mixture M65

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | CC-3-V | 20.5 | Δn [589 nm, 20°C]: | - | |
| 3 | CC-3-V1 | 7.0 | ε_{∥} [1 kHz, 20°C]: | = | |
| 4 | CCP-3-1 | 6.0 | ε_{┴} [1 kHz, 20°C]: | = | |
| 5 | CCP-3-3 | 5.0 | Δε [1 kHz, 20°C]: | = | |
| 6 | CCP-30CF3 | 2.5 | K₁ [pN, 20°C]: | = | |
| 7 | CCP-V-1 | 11.5 | K₃ [pN, 20°C]: | = | |
| 8 | CLP-3-T | 0.5 | V₀ [V, 20°C]: | = | |
| 9 | CLU-3-F | 13.5 | γ₁ [mPa s, 20°C]: | = | |
| 10 | DGUQU-4-F | 1.0 | LTS bulk [h, -20°C]: | = | |
| 11 | PCH-302 | 10.0 | | | |
| 12 | PGU-2-F | 0.5 | | | |
| 13 | PGUQU-3-F | 3.0 | | | |
| 14 | PGUQU-4-F | 5.0 | | | |
| 15 | PGUQU-5-F | 4.0 | | | |
| 16 | PPGU-3-F | 1.0 | | | |

### Mixture Example S65

A nematic LC mixture according to the invention is formulated as follows:

| Mixture M65 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M65 without affecting the remaining physical properties of the mixture M65.

### Base Mixture M66

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 100.4 °C |
| 2 | BCH-32 | 4.0 | Δn [589 nm, 20°C]: | = | 0.1113 |
| 3 | CC-3-V | 18.5 | ε_{∥} [1 kHz, 20°C]: | = | 8.6 |
| 4 | CC-3-V1 | 8.5 | ε_{┴} [1 kHz, 20°C]: | = | 2.9 |
| 5 | CCP-3-1 | 5.0 | Δε [1 kHz, 20°C]: | = | 5.7 |
| 6 | CCP-3-3 | 5.0 | K₁ [pN, 20°C]: | = | 16.8 |
| 7 | CCP-V-1 | 20.0 | K₃ [pN, 20°C]: | = | 18.8 |
| 8 | CCPC-33 | 0.5 | V₀ [V, 20°C]: | = | 1.80 |
| 9 | CLP-3-T | 1.5 | γ₁ [mPa s, 20°C]: | = | 99 |
| 10 | CLU-3-F | 9.0 | LTS bulk [h, -20°C]: | = | |
| 11 | PCH-302 | 10.0 | | | |
| 12 | PGU-3-F | 4.0 | | | |
| 13 | PGUQU-3-F | 2.0 | | | |
| 14 | PGUQU-4-F | 4.0 | | | |
| 15 | PGUQU-5-F | 6.0 | | | |

### Mixture Example S66

A nematic LC mixture according to the invention is formulated as follows:

| Mixture M66 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M66 without affecting the remaining physical properties of the mixture M66.

### Base Mixture M67

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 101.2 °C |
| 2 | BCH-32 | 9.0 | Δn [589 nm, 20°C]: | = | 0.1106 |
| 3 | CC-3-V | 25.5 | ε_{∥} [1 kHz, 20°C]: | = | 8.7 |
| 4 | CC-3-V1 | 3.5 | ε_{┴} [1 kHz, 20°C]: | = | 2.9 |
| 5 | CCP-3-1 | 5.5 | Δε [1 kHz, 20°C]: | = | 5.8 |
| 6 | CCP-V-1 | 14.5 | K₁ [pN, 20°C]: | = | 17.6 |
| 7 | CCPC-33 | 2.0 | K₃ [pN, 20°C]: | = | 18.6 |
| 8 | CLP-3-T | 7.0 | V₀ [V, 20°C]: | = | 1.82 |
| 9 | CLU-3-F | 7.0 | γ₁ [mPa s, 20°C]: | = | 99 |
| 10 | PCH-302 | 10.0 | LTS bulk [h, -20°C]: | = | |
| 11 | PGUQU-3-F | 3.0 | | | |
| 12 | PGUQU-4-F | 5.0 | | | |
| 13 | PGUQU-5-F | 6.0 | | | |

### Mixture Example S67

A nematic LC mixture according to the invention is formulated as follows:

| Mixture M67 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M67 without affecting the remaining physical properties of the mixture M67.

### Base Mixture M68

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 101.3 °C |
| 2 | BCH-32 | 9.0 | Δn [589 nm, 20°C]: | = | |
| 3 | CC-3-V | 19.5 | ε_{∥} [1 kHz, 20°C]: | = | 8.7 |
| 4 | CC-3-V1 | 8.5 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 1.5 | K₁ [pN, 20°C]: | = | 18.1 |
| 7 | CCP-3F. F. F | 4.0 | K₃ [pN, 20°C]: | = | 19.0 |
| 8 | CCP-V-1 | 14.0 | V₀ [V, 20°C]: | = | 1.85 |
| 9 | CLP-3-T | 6.5 | γ₁ [mPa s, 20°C]: | = | 100 |
| 10 | CLU-3-F | 4.5 | LTS bulk [h, -20°C]: | = | |
| 11 | PCH-302 | 10.0 | | | |
| 12 | PGUQU-3-F | 3.0 | | | |
| 13 | PGUQU-4-F | 5.0 | | | |
| 14 | PGUQU-5-F | 5.5 | | | |

### Mixture Example S68

A nematic LC mixture according to the invention is formulated as follows:

| Mixture M68 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M68 without affecting the remaining physical properties of the mixture M68.

### Base Mixture M69

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 101 °C |
| 2 | BCH-32 | 5.0 | Δn [589 nm, 20°C]: | = | 0.1114 |
| 3 | CC-3-V | 21.5 | ε_{∥} [1 kHz, 20°C]: | = | 8.7 |
| 4 | CC-3-V1 | 8.0 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 4.5 | K₁ [pN, 20°C]: | = | 18.0 |
| 7 | CCP-V-1 | 13.5 | K₃ [pN, 20°C]: | = | 18.9 |
| 8 | CCPC-33 | 1.5 | V₀ [V, 20°C]: | = | 1.85 |
| 9 | CLP-3-T | 6.5 | γ₁ [mPa s, 20°C]: | = | 100 |
| 10 | CLU-3-F | 4.0 | LTS bulk [h, -20°C]: | = | |
| 11 | PCH-302 | 10.0 | | | |
| 12 | PGU-3-F | 4.0 | | | |
| 13 | PGUQU-3-F | 3.0 | | | |
| 14 | PGUQU-4-F | 5.0 | | | |
| 15 | PGUQU-5-F | 4.5 | | | |

### Mixture Example S69

A nematic LC mixture according to the invention is formulated as follows:

| Mixture M69 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M69 without affecting the remaining physical properties of the mixture M69.

### Base Mixture M70

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 100.6 °C |
| 2 | BCH-32 | 9.0 | Δn [589 nm, 20°C]: | = | 0.1107 |
| 3 | CC-3-V | 19.5 | ε_{∥} [1 kHz, 20°C]: | = | 8.7 |
| 4 | CC-3-V1 | 10.0 | ε_{┴} [1 kHz, 20°C]: | = | 2.9 |
| 5 | CCP-3-1 | 7.0 | Δε [1 kHz, 20°C]: | = | 5.8 |
| 6 | CCP-V-1 | 14.0 | K₁ [pN, 20°C]: | = | 17.5 |
| 7 | CCPC-33 | 1.0 | K₃ [pN, 20°C]: | = | 18.8 |
| 8 | CLP-3-T | 2.5 | V₀ [V, 20°C]: | = | 1.81 |
| 9 | CLU-3-F | 11.5 | γ₁ [mPa s, 20°C]: | = | 98 |
| 10 | PCH-302 | 10.0 | LTS bulk [h, -20°C]: | = | |
| 11 | PGUQU-3-F | 3.0 | | | |
| 12 | PGUQU-4-F | 4.5 | | | |
| 13 | PGUQU-5-F | 6.0 | | | |

### Mixture Example S70

A nematic LC mixture according to the invention is formulated as follows:

| Mixture M70 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M70 without affecting the remaining physical properties of the mixture M70.

### Base Mixture M71

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 101 °C |
| 2 | BCH-32 | 2.5 | Δn [589 nm, 20°C]: | = | 0.1108 |
| 3 | CC-3-V | 22.5 | ε_{∥} [1 kHz, 20°C]: | = | 8.7 |
| 4 | CC-3-V1 | 6.5 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 4.0 | K₁ [pN, 20°C]: | = | 17.5 |
| 7 | CCP-V-1 | 13.0 | K₃ [pN, 20°C]: | = | 18.9 |
| 8 | CCP-V2-1 | 1.5 | V₀ [V, 20°C]: | = | 1.83 |
| 9 | CCPC-33 | 3.0 | γ₁ [mPa s, 20°C]: | = | 103 |
| 10 | CLP-3-T | 6.5 | LTS bulk [h, -20°C]: | = | |
| 11 | CLU-3-F | 4.5 | | | |
| 12 | PCH-302 | 10.0 | | | |
| 13 | PGU-2-F | 3.5 | | | |
| 14 | PGU-3-F | 3.5 | | | |
| 15 | PGUQU-3-F | 3.0 | | | |
| 16 | PGUQU-4-F | 4.0 | | | |
| 17 | PGUQU-5-F | 3.0 | | | |

### Mixture Example S71

A nematic LC mixture according to the invention is formulated as follows:

| Mixture M71 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M71 without affecting the remaining physical properties of the mixture M71.

### Base Mixture M72

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 100.7 °C |
| 2 | BCH-32 | 2.5 | Δn [589 nm, 20°C]: | = | 0.1108 |
| 3 | CC-3-V | 22.0 | ε_{∥} [1 kHz, 20°C]: | = | 8.7 |
| 4 | CC-3-V1 | 7.0 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 5.0 | K₁ [pN, 20°C]: | = | 17.5 |
| 7 | CCP-V-1 | 13.0 | K₃ [pN, 20°C]: | = | 18.8 |
| 8 | CCP-V2-1 | 0.5 | V₀ [V, 20°C]: | = | 1.83 |
| 9 | CCPC-33 | 3.0 | γ₁ [mPa s, 20°C]: | = | 104 |
| 10 | CLP-3-T | 6.5 | LTS bulk [h, -20°C]: | = | |
| 11 | CLU-3-F | 4.0 | | | |
| 12 | PCH-302 | 10.0 | | | |
| 13 | PGU-2-F | 5.0 | | | |
| 14 | PGU-3-F | 2.5 | | | |
| 15 | PGUQU-4-F | 5.0 | | | |
| 16 | PGUQU-5-F | 5.0 | | | |

### Mixture Example S72

A nematic LC mixture according to the invention is formulated as follows:

| Mixture M72 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M72 without affecting the remaining physical properties of the mixture M72.

### Base Mixture M73

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 3.0 | T(N, I) | = | 100.8 °C |
| 2 | BCH-32 | 4.0 | Δn [589 nm, 20°C]: | = | 0.1115 |
| 3 | CC-3-V | 21.0 | ε_{∥} [1 kHz, 20°C]: | = | 8.8 |
| 4 | CC-3-V1 | 9.5 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 4.5 | K₁ [pN, 20°C]: | = | 17.6 |
| 7 | CCP-V-1 | 13.0 | K₃ [pN, 20°C]: | = | 18.7 |
| 8 | CCP-V2-1 | 2.0 | V₀ [V, 20°C]: | = | 1.82 |
| 9 | CCPC-33 | 2.0 | γ₁ [mPa s, 20°C]: | = | 98 |
| 10 | CLP-3-T | 6.0 | LTS bulk [h, -20°C]: | = | |
| 11 | DGUQU-4-F | 1.0 | | | |
| 12 | PCH-302 | 10.0 | | | |
| 13 | PGU-2-F | 7.0 | | | |
| 14 | PGUQU-3-F | 3.0 | | | |
| 15 | PGUQU-4-F | 4.0 | | | |
| 16 | PGUQU-5-F | 3.0 | | | |

### Mixture Example S73

A nematic LC mixture according to the invention is formulated as follows:

| Mixture M73 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M73 without affecting the remaining physical properties of the mixture M73.

### Base Mixture M74

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 4.0 | T(N, I) | = | 100.3 °C |
| 2 | BCH-32 | 4.0 | Δn [589 nm, 20°C]: | = | 0.1115 |
| 3 | CC-3-V | 19.5 | ε_{∥} [1 kHz, 20°C]: | = | 8.7 |
| 4 | CC-3-V1 | 10.0 | ε_{┴} [1 kHz, 20°C]: | = | 2.9 |
| 5 | CCP-3-1 | 7.5 | Δε [1 kHz, 20°C]: | = | 5.8 |
| 6 | CCP-3-3 | 5.0 | K₁ [pN, 20°C]: | = | 17.5 |
| 7 | CCP-V-1 | 13.0 | K₃ [pN, 20°C]: | = | 18.8 |
| 8 | CCP-V2-1 | 5.0 | V₀ [V, 20°C]: | = | 1.82 |
| 9 | CLP-3-T | 4.5 | γ₁ [mPa s, 20°C]: | = | 96 |
| 10 | DGUQU-4-F | 1.0 | LTS bulk [h, -20°C]: | = | |
| 11 | PCH-302 | 10.0 | | | |
| 12 | PGU-2-F | 6.5 | | | |
| 13 | PGUQU-4-F | 5.0 | | | |
| 14 | PGUQU-5-F | 5.0 | | | |

### Mixture Example S74

A nematic LC mixture according to the invention is formulated as follows:

| Mixture M74 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M74 without affecting the remaining physical properties of the mixture M74.

### Base Mixture M75

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.5 | T(N, I) | = | 100.3 °C |
| 2 | BCH-32 | 4.0 | Δn [589 nm, 20°C]: | = | 0.1119 |
| 3 | CC-3-V | 22.0 | ε_{∥} [1 kHz, 20°C]: | = | 8.8 |
| 4 | CC-3-V1 | 8.0 | ε_{┴} [1 kHz, 20°C]: | = | 3.0 |
| 5 | CCP-3-1 | 7.0 | Δε [1 kHz, 20°C]: | = | 5.9 |
| 6 | CCP-3-3 | 5.0 | K₁ [pN, 20°C]: | = | 17.7 |
| 7 | CCP-V-1 | 12.0 | K₃ [pN, 20°C]: | = | 18.6 |
| 8 | CCP-V2-1 | 1.0 | V₀ [V, 20°C]: | = | 1.81 |
| 9 | CCPC-33 | 2.5 | γ₁ [mPa s, 20°C]: | = | 99 |
| 10 | CLP-3-T | 6.0 | LTS bulk [h, -20°C]: | = | |
| 11 | CLU-3-F | 2.0 | | | |
| 12 | PCH-302 | 10.0 | | | |
| 13 | PGU-2-F | 7.0 | | | |
| 14 | PGUQU-3-F | 3.0 | | | |
| 15 | PGUQU-4-F | 5.0 | | | |
| 16 | PGUQU-5-F | 3.0 | | | |

### Mixture Example S75

A nematic LC mixture according to the invention is formulated as follows:

| Mixture M75 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M75 without affecting the remaining physical properties of the mixture M75.

### Base Mixture M76

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | 100.4 °C |
| 2 | BCH-32 | 4.0 | Δn [589 nm, 20°C]: | = | 0.1113 |
| 3 | CC-3-V | 22.5 | ε_{∥} [1 kHz, 20°C]: | = | 8.8 |
| 4 | CC-3-V1 | 8.0 | ε_{┴} [1 kHz, 20°C]: | = | 2.9 |
| 5 | CCP-3-1 | 7.0 | Δε [1 kHz, 20°C]: | = | 5.8 |
| 6 | CCP-3-3 | 5.0 | K₁ [pN, 20°C]: | = | 17.6 |
| 7 | CCP-V-1 | 12.0 | K₃ [pN, 20°C]: | = | 18.7 |
| 8 | CCP-V2-1 | 0.5 | V₀ [V, 20°C]: | = | 1.82 |
| 9 | CCPC-33 | 2.5 | γ₁ [mPa s, 20°C]: | = | 99 |
| 10 | CLP-3-T | 6.5 | LTS bulk [h, -20°C]: | = | |
| 11 | CLU-3-F | 2.0 | | | |
| 12 | PCH-302 | 10.0 | | | |
| 13 | PGU-2-F | 6.0 | | | |
| 14 | PGUQU-3-F | 3.0 | | | |
| 15 | PGUQU-4-F | 5.0 | | | |
| 16 | PGUQU-5-F | 4.0 | | | |

### Mixture Example S76

A nematic LC mixture according to the invention is formulated as follows:

| Mixture M76 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M76 without affecting the remaining physical properties of the mixture M76.

### Base Mixture M77

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 6.0 | T(N, I) | = | °C |
| 2 | CC-3-V | 17.5 | Δn [589 nm, 20°C]: | = | |
| 3 | CC-3-V1 | 8.0 | ε_{∥} [1 kHz, 20°C]: | = | |
| 4 | CCH-301 | 8.0 | ε_{┴} [1 kHz, 20°C]: | = | |
| 5 | CCP-3-1 | 6.0 | Δε [1 kHz, 20°C]: | = | |
| 6 | CCP-30CF3 | 7.5 | K₁ [pN, 20°C]: | = | |
| 7 | CCP-V-1 | 13.0 | K₃ [pN, 20°C]: | = | |
| 8 | CLP-3-T | 5.0 | V₀ [V, 20°C]: | = | |
| 9 | CLU-3-F | 13.5 | γ₁ [mPa s, 20°C]: | = | |
| 10 | PGP-2-4 | 3.5 | LTS bulk [h, -20°C]: | = | |
| 11 | PGU-2-F | 1.5 | | | |
| 12 | PGUQU-3-F | 5.0 | | | |
| 13 | PGUQU-4-F | 4.5 | | | |
| 14 | PPGU-3-F | 1.0 | | | |

### Mixture Example S77

A nematic LC mixture according to the invention is formulated as follows:

| Mixture M77 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M77 without affecting the remaining physical properties of the mixture M77.

### Base Mixture M78

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | CC-3-V | 14.0 | Δn [589 nm, 20°C]: | = | |
| 3 | CC-3-V1 | 8.0 | ε_{∥} [1 kHz, 20°C]: | = | |
| 4 | CCH-301 | 8.0 | ε_{┴} [1 kHz, 20°C]: | = | |
| 5 | CCH-35 | 5.0 | Δε [1 kHz, 20°C]: | = | |
| 6 | CCP-3-1 | 7.0 | K₁ [pN, 20°C]: | = | |
| 7 | CCP-30CF3 | 8.0 | K₃ [pN, 20°C]: | = | |
| 8 | CCP-V-1 | 13.0 | V₀ [V, 20°C]: | = | |
| 9 | CLP-3-T | 5.5 | γ₁ [mPa s, 20°C]: | = | |
| 10 | CLU-3-F | 5.0 | LTS bulk [h, -20°C]: | = | |
| 11 | PGP-2-4 | 0.5 | | | |
| 12 | PGU-2-F | 6.0 | | | |
| 13 | PGUQU-3-F | 5.0 | | | |
| 14 | PGUQU-4-F | 5.0 | | | |
| 15 | PPGU-3-F | 1.0 | | | |

### Mixture Example S78

A nematic LC mixture according to the invention is formulated as follows:

| Mixture M78 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M78 without affecting the remaining physical properties of the mixture M78.

### Base Mixture M79

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | CC-3-V | 19.5 | Δn [589 nm, 20°C]: | = | |
| 3 | CC-3-V1 | 5.0 | ε_{∥} [1 kHz, 20°C]: | = | |
| 4 | CCH-23 | 5.0 | ε_{┴} [1 kHz, 20°C]: | _ | |
| 5 | CCH-34 | 2.0 | Δε [1 kHz, 20°C]: | = | |
| 6 | CCH-35 | 1.0 | K₁ [pN, 20°C]: | = | |
| 7 | CCP-3-1 | 7.0 | K₃ [pN, 20°C]: | = | |
| 8 | CCP-30CF3 | 3.0 | V₀ [V, 20°C]: | = | |
| 9 | CCP-V-1 | 10.0 | γ₁ [mPa s, 20°C]: | = | |
| 10 | CCPC-33 | 2.0 | LTS bulk [h, -20°C]: | = | |
| 11 | CDUQU-3-F | 7.0 | | | |
| 12 | CLP-3-T | 5.0 | | | |
| 13 | CLU-3-F | 10.0 | | | |
| 14 | PGP-2-4 | 5.5 | | | |
| 15 | PGU-2-F | 6.5 | | | |
| 16 | PGUQU-3-F | 2.5 | | | |

### Mixture Example S79

A nematic LC mixture according to the invention is formulated as follows:

| Mixture M79 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M79 without affecting the remaining physical properties of the mixture M79.

### Base Mixture M80

A nematic LC mixture is formulated as follows:

| **Composition** | | | **Properties** | | |
|---|---|---|---|---|---|
| **Nr.** | **Comp.** | **Conc., wt.-%** | | | |
| 1 | BCH-32 | 9.0 | T(N, I) | = | °C |
| 2 | CC-3-V | 25.0 | Δn [589 nm, 20°C]: | = | |
| 3 | CCP-3-1 | 4.5 | ε_{∥} [1 kHz, 20°C]: | = | |
| 4 | CCP-3-3 | 4.0 | ε_{┴} [1 kHz, 20°C]: | = | |
| 5 | CCP-V-1 | 13.0 | Δε [1 kHz, 20°C]: | = | |
| 6 | CCPC-33 | 1.0 | K₁ [pN, 20°C]: | = | |
| 7 | CDUQU-3-F | 7.0 | K₃ [pN, 20°C]: | = | |
| 8 | CLP-3-T | 5.0 | V₀ [V, 20°C]: | = | |
| 9 | CLU-3-F | 13.0 | γ₁ [mPa s, 20°C]: | = | |
| 10 | PCH-302 | 7.0 | LTS bulk [h, -20°C]: | = | |
| 11 | PGP-2-3 | 3.0 | | | |
| 12 | PGU-2-F | 1.5 | | | |
| 13 | PGUQU-3-F | 2.5 | | | |
| 14 | PGUQU-4-F | 2.5 | | | |
| 15 | PP-1-2V1 | 2.0 | | | |

### Mixture Example S80

A nematic LC mixture according to the invention is formulated as follows:

| Mixture M80 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M80 without affecting the remaining physical properties of the mixture M80.

### Base Mixture M81

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 2.0 | T(N, I) | = | °C |
| 2 | BCH-32 | 9.0 | Δn [589 nm, 20°C]: | = | |
| 3 | CC-3-V | 19.5 | ε_{∥} [1 kHz, 20°C]: | = | |
| 4 | CC-3-V1 | 10.0 | ε_{┴} [1 kHz, 20°C]: | = | |
| 5 | CCP-3-1 | 7.0 | Δε [1 kHz, 20°C]: | = | |
| 6 | CCP-V-1 | 14.0 | K₁ [pN, 20°C]: | = | |
| 7 | CCPC-33 | 1.0 | K₃ [pN, 20°C]: | = | |
| 8 | CLP-3-T | 2.5 | V₀ [V, 20°C]: | = | |
| 9 | CLU-3-F | 11.5 | γ₁ [mPa s, 20°C]: | = | |
| 10 | PCH-302 | 10.0 | LTS bulk [h, -20°C]: | = | |
| 11 | PGUQU-3-F | 3.0 | | | |
| 12 | PGUQU-4-F | 4.5 | | | |
| 13 | PGUQU-5-F | 6.0 | | | |

### Mixture Example S81

A nematic LC mixture according to the invention is formulated as follows:

| Mixture M81 | 99.84 wt.-% |
|---|---|
| Compound of the Formula ST-1-3 | 100 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M81 without affecting the remaining physical properties of the mixture M81.

### Base Mixture M82

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 4.0 | T(N, I) | = | 99.5 °C |
| 2 | CPGP-5-2 | 1.5 | n_{∥} [589 nm, 20°C]: | = | 1.5961 |
| 3 | DGUQU-4-F | 4.5 | n_{┴} [589 nm, 20°C]: | = | 1.4860 |
| 4 | PGUQU-3-F | 3.0 | Δn [589 nm, 20°C]: | = | 0.1101 |
| 5 | PGUQU-4-F | 7.0 | ε_{∥} [1 kHz, 20°C]: | = | 8.7 |
| 6 | CCP-3OCF3 | 8.0 | ε_{┴} [1 kHz, 20°C]: | = | 2.9 |
| 7 | CCP-V-1 | 10.5 | Δε [1 kHz, 20°C]: | = | 5.8 |
| 8 | CCP-V2-1 | 9.0 | K₁ [pN, 20°C]: | = | 17.5 |
| 9 | PGP-2-2V | 6.5 | K₃ [pN, 20°C]: | = | 19.1 |
| 10 | CC-3-2V1 | 8.0 | V₀ [V, 20°C]: | = | |
| 11 | CC-3-V | 26.0 | γ₁ [mPa s, 20°C]: | = | 85 |
| 12 | CC-3-V1 | 10.0 | LTS bulk [h, -20°C]: | = | 1 000 |
| 13 | PP-1-2V1 | 4.0 | | | |

### Mixture Example S82

A nematic LC mixture according to the invention is formulated as follows:

| Mixture M82 | 99.845 wt.-% |
|---|---|
| Compound of the Formula ST-1-3 | 50 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M82 without affecting the remaining physical properties of the mixture M82.

### Base Mixture M83

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 98.9 °C |
| 2 | CC-3-V1 | 7.5 | n_{∥} [589 nm, 20°C]: | = | 1.5965 |
| 3 | CCGU-3-F | 2.0 | n_{┴} [589 nm, 20°C]: | _ | 1.4846 |
| 4 | CCP-3-1 | 6.0 | Δn [589 nm, 20°C]: | = | 0.1119 |
| 5 | CCP-3OCF3 | 8.0 | ε_{∥} [1 kHz, 20°C]: | = | 8.8 |
| 6 | CCP-3OCF3 | 5.0 | ε_{┴} [1 kHz, 20°C]: | = | 2.9 |
| 7 | CCP-V-1 | 9.0 | Δε [1 kHz, 20°C]: | = | 5.9 |
| 8 | CLP-3-T | 7.5 | K₁ [pN, 20°C]: | = | 17.9 |
| 9 | PCH-3O2 | 9.0 | K₃ [pN, 20°C]: | = | 18.6 |
| 10 | PGP-2-3 | 6.0 | V₀ [V, 20°C]: | = | |
| 11 | PGUQU-3-F | 8.0 | γ₁ [mPa s, 20°C]: | = | 93 |
| 12 | PGUQU-4-F | 7.0 | LTS bulk [h, -20°C]: | = | 1 000 |

### Mixture Example S83

A nematic LC mixture according to the invention is formulated as follows:

| Mixture M83 | 99.845 wt.-% |
|---|---|
| Compound of the Formula ST-1-3 | 50 ppm |
| Compound of the Formula ST-2-3 | 500 ppm |
| Compound of the Formula H-3-1 | 1 000 ppm |

Addition of the above listed stabilizing compounds significantly improves the VHR₁₀₀ after UV exposure compared to the non-stabilized mixture M83 without affecting the remaining physical properties of the mixture M83.

### Base Mixture M84

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-2-F | 4.0 | T(N, I) | = | °C |
| 2 | APUQU-3-F | 4.0 | Δn [589 nm, 20°C]: | = | |
| 3 | B(S)-2O-O4 | 2.25 | ε_{∥} [1 kHz, 20°C]: | = | |
| 4 | B(S)-2O-O5 | 4.0 | ε_{┴} [1 kHz, 20°C]: | = | |
| 5 | CC-3-V | 25.5 | Δε [1 kHz, 20°C]: | = | |
| 6 | CCY-3-O1 | 6.0 | K₁ [pN, 20°C]: | = | |
| 7 | CCY-3-O2 | 6.0 | K₃ [pN, 20°C]: | = | |
| 8 | CCY-3-O3 | 6.0 | V₀ [V, 20°C]: | = | |
| 9 | CDUQU-3-F | 4.0 | γ₁ [mPa s, 20°C]: | = | |
| 10 | CLP-3-T | 4.0 | LTS bulk [h, -20°C]: | = | 1 000 |
| 11 | CY-3-O2 | 8.0 | | | |
| 12 | CY-3-O4 | 4.5 | | | |
| 13 | DGUQU-4-F | 4.0 | | | |
| 14 | DPGU-4-F | 4.0 | | | |
| 15 | LB-3-T | 5.0 | | | |
| 16 | PGUQU-4-F | 0.5 | | | |
| 17 | PPGU-3-F | 0.5 | | | |
| 18 | PUQU-3-F | 7.75 | | | |

### Mixture Example S84

A nematic LC mixture according to the invention is formulated as follows:

| Mixture M84 | 99.945 wt.-% |
|---|---|
| Compound of the Formula ST-1-3 | 100 ppm |
| Compound of the Formula ST-2-3 | 400 ppm |
| Compound of the Formula H-3-5 | 50 ppm |

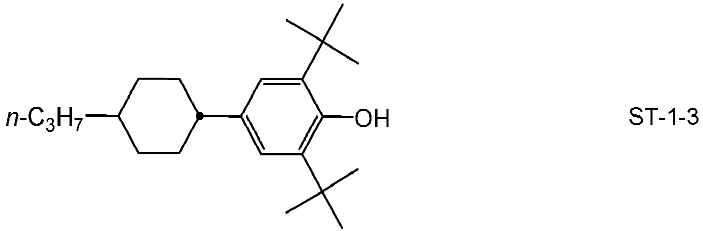

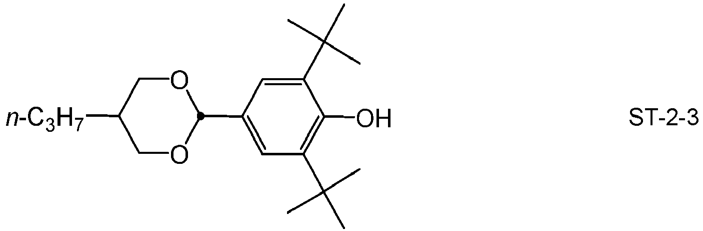

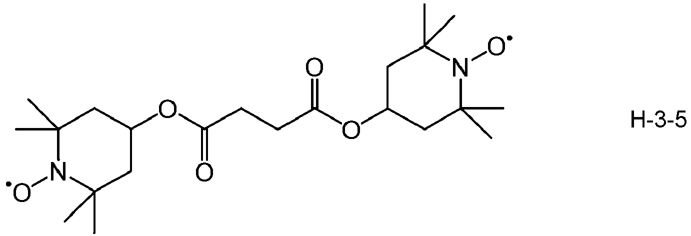

Addition of the above listed stabilizing compounds significantly improves the VHR₁₀₀ after UV exposure compared to the non-stabilized mixture M84 without affecting the remaining physical properties of the mixture M84.

### Base Mixture M85

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 3.5 | T(N, I) | = | 100.9 °C |
| 2 | DGUQU-4-F | 2.5 | Δn [589 nm, 20°C]: | = | 0.1218 |
| 3 | PGUQU-3-F | 4.0 | ε_{∥} [1 kHz, 20°C]: | = | 6.5 |
| 4 | CCZU-3-F | 3.0 | ε_{┴} [1 kHz, 20°C]: | = | 2.8 |
| 5 | CC-3-V | 32.5 | Δε [1 kHz, 20°C]: | = | 3.7 |
| 6 | CC-3-V1 | 5.0 | K₁ [pN, 20°C]: | = | 17.6 |
| 7 | CCP-V-1 | 13.0 | K₃ [pN, 20°C]: | = | 18.3 |
| 8 | CCP-V2-1 | 4.0 | V₀ [V, 20°C]: | = | 2.30 |
| 9 | CCVC-3-V | 5.0 | γ₁ [mPa s, 20°C]: | = | 84 |
| 10 | PP-1-2V1 | 7.0 | LTS bulk [h, -20°C]: | = | |
| 11 | PGP-1-2V | 7.0 | | | |
| 12 | PGP-2-2V | 8.0 | | | |
| 13 | CLP-3-T | 3.0 | | | |
| 14 | CLP-V-1 | 2.0 | | | |
| 15 | PPGU-3-F | 0.5 | | | |

### Mixture Example S85

A nematic LC mixture according to the invention is formulated as follows:

| Mixture M85 | 99.94 wt.-% |
|---|---|
| Compound of the Formula ST-1-3 | 100 ppm |
| Compound of the Formula ST-2-3 | 500 ppm |
| Compound of the Formula H-3-3 | 150 ppm |

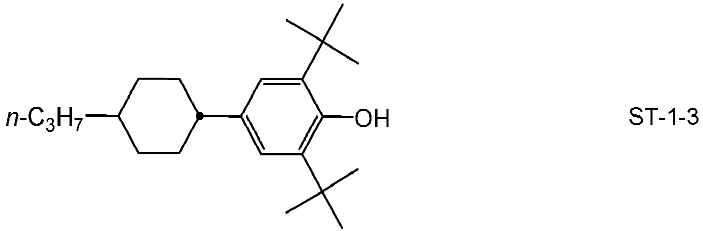

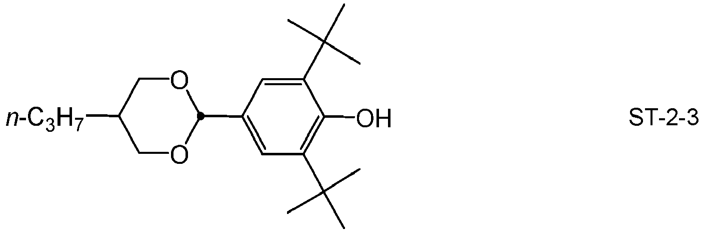

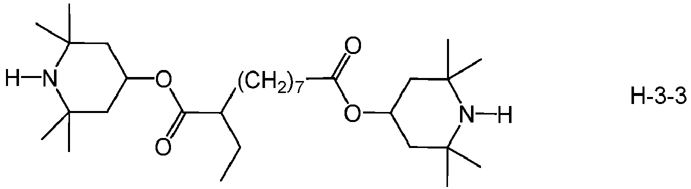

Addition of the above listed stabilizing compounds significantly improves the VHR₁₀₀ after UV exposure compared to the non-stabilized mixture M85 without affecting the remaining physical properties of the mixture M85.

### Base Mixture M86

A nematic LC mixture is formulated as follows:

| **Composition** | | | **Properties** | | |
|---|---|---|---|---|---|
| **Nr.** | **Comp.** | **Conc., wt.-%** | | | |
| 1 | CDUQU-3-F | 3.5 | T(N, I) | = | 100.9 °C |
| 2 | DGUQU-4-F | 2.5 | Δn [589 nm, 20°C]: | = | 0.1218 |
| 3 | PGUQU-3-F | 4.0 | ε_{∥} [1 kHz, 20°C]: | = | 6.5 |
| 4 | CCZU-3-F | 3.0 | ε_{┴} [1 kHz, 20°C]: | = | 2.8 |
| 5 | CC-3-V | 32.5 | Δε [1 kHz, 20°C]: | = | 3.7 |
| 6 | CC-3-V1 | 5.0 | K₁ [pN, 20°C]: | = | 17.6 |
| 7 | CCP-V-1 | 13.0 | K₃ [pN, 20°C]: | = | 18.3 |
| 8 | CCP-V2-1 | 4.0 | V₀ [V, 20°C]: | = | 2.30 |
| 9 | CCVC-3-V | 5.0 | γ₁ [mPa s, 20°C]: | = | 84 |
| 10 | PP-1-2V1 | 7.0 | LTS bulk [h, -20°C]: | = | |
| 11 | PGP-1-2V | 7.0 | | | |
| 12 | PGP-2-2V | 8.0 | | | |
| 13 | CLP-3-T | 3.0 | | | |
| 14 | CLP-V-1 | 2.0 | | | |
| 15 | PPGU-3-F | 0.5 | | | |

### Mixture Example S86

A nematic LC mixture according to the invention is formulated as follows:

| Mixture M86 | 99.94 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M86 without affecting the remaining physical properties of the mixture M86.

### Base Mixture M87

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 37.0 | T(N, I) | = | 100.9 °C |
| 2 | CC-3-V1 | 3.0 | Δn [589 nm, 20°C]: | = | 0.1098 |
| 3 | CCGU-3-F | 2.5 | ε_{∥} [1 kHz, 20°C]: | = | 8.5 |
| 4 | CCP-3-1 | 6.0 | ε_{┴} [1 kHz, 20°C]: | = | 2.8 |
| 5 | CCP-30CF3 | 7.0 | Δε [1 kHz, 20°C]: | = | 5.7 |
| 6 | CCP-50CF3 | 5.0 | K₁ [pN, 20°C]: | = | 17.2 |
| 7 | CCP-V-1 | 11.0 | K₃ [pN, 20°C]: | = | 18.3 |
| 8 | CLP-3-T | 6.0 | V₀ [V, 20°C]: | = | 1.83 |
| 9 | PGP-2-3 | 7.5 | γ₁ [mPa s, 20°C]: | = | 84 |
| 10 | PGUQU-3-F | 5.0 | LTS bulk [h, -20°C]: | = | 1 000 |
| 11 | PGUQU-4-F | 8.0 | | | |
| 12 | PGUQU-5-F | 2.0 | | | |

### Mixture Example S87

A nematic LC mixture according to the invention is formulated as follows:

| Mixture M87 | 99.94 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M87 without affecting the remaining physical properties of the mixture M87.

### Base Mixture M88

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 8.0 | T(N, I) | = | 91.3 °C |
| 2 | CC-3-V | 18.5 | Δn [589 nm, 20°C]: | = | 0.1101 |
| 3 | CC-3-V1 | 8.0 | ε_{∥} [1 kHz, 20°C]: | = | 16.4 |
| 4 | CCH-34 | 4.0 | ε_{┴} [1 kHz, 20°C]: | = | 3.9 |
| 5 | CCP-3-1 | 14.0 | Δε [1 kHz, 20°C]: | = | 12.6 |
| 6 | CCP-3F.F.F | 10.0 | K₁ [pN, 20°C]: | = | 15.5 |
| 7 | CLP-3-T | 5.0 | K₃ [pN, 20°C]: | = | 16.7 |
| 8 | CLY-3-O2 | 6.0 | V₀ [V, 20°C]: | = | 1.18 |
| 9 | PGUQU-3-F | 6.0 | γ₁ [mPa s, 20°C]: | = | 111 |
| 10 | PGUQU-4-F | 5.5 | LTS bulk [h, -20°C]: | = | |
| 11 | PUQU-3-F | 15.0 | | | |

### Mixture Example S88

A nematic LC mixture according to the invention is formulated as follows:

| Mixture M88 | 99.91 wt.-% |
|---|---|
| Compound of the Formula ST-1-3 | 100 ppm |
| Compound of the Formula ST-2-3 | 500 ppm |
| Compound of the Formula H-3-3 | 300 ppm |

Addition of the above listed stabilizing compounds significantly improves the VHR₁₀₀ after UV exposure compared to the non-stabilized mixture M88 without affecting the remaining physical properties of the mixture M88.

### Base Mixture M89

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 3.0 | T(N, I) | = | 93.4 °C |
| 2 | CC-3-V | 28.0 | Δn [589 nm, 20°C]: | = | 0.1086 |
| 3 | CCP-3-1 | 10.0 | ε_{∥} [1 kHz, 20°C]: | = | 14.6 |
| 4 | CCP-3-3 | 10.0 | ε_{┴} [1 kHz, 20°C]: | = | 3.6 |
| 5 | CCP-3F.F.F | 10.0 | Δε [1 kHz, 20°C]: | = | 11.0 |
| 6 | CLP-3-T | 5.0 | K₁ [pN, 20°C]: | = | 15.1 |
| 7 | CCY-3-O2 | 1.5 | K₃ [pN, 20°C]: | = | 16.4 |
| 8 | PGUQU-3-F | 6.0 | V₀ [V, 20°C]: | = | 1.23 |
| 9 | PGUQU-4-F | 7.0 | γ₁ [mPa s, 20°C]: | = | 109 |
| 10 | PUQU-3-F | 15.0 | LTS bulk [h, -20°C]: | = | |
| 11 | CCPC-33 | 3.0 | | | |
| 12 | B(S)-2O-O5 | 1.5 | | | |

### Mixture Example S89

A nematic LC mixture according to the invention is formulated as follows:

| Mixture M89 | 99.91 wt.-% |
|---|---|
| Compound of the Formula ST-1-3 | 100 ppm |
| Compound of the Formula ST-2-3 | 500 ppm |
| Compound of the Formula H-3-3 | 300 ppm |

Addition of the above listed stabilizing compounds significantly improves the VHR₁₀₀ after UV exposure compared to the non-stabilized mixture M89 without affecting the remaining physical properties of the mixture M89.

### Base Mixture M90

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 36.0 | T(N, I) | = | 82.9 °C |
| 2 | CC-3-V1 | 10.0 | Δn [589 nm, 20°C]: | = | |
| 3 | PP-1-2V1 | 10.0 | ε_{∥} [1 kHz, 20°C]: | = | |
| 4 | CCP-30CF3 | 4.0 | ε_{┴} [1 kHz, 20°C]: | = | |
| 5 | CCP-V-1 | 3.0 | Δε [1 kHz, 20°C]: | = | |
| 6 | CLP-3-T | 5.0 | K₁ [pN, 20°C]: | = | |
| 7 | CLP-V-1 | 4.0 | K₃ [pN, 20°C]: | = | |
| 8 | PGP-2-3 | 5.0 | V₀ [V, 20°C]: | = | |
| 9 | PGP-2-2V | 13.0 | γ₁ [mPa s, 20°C]: | = | |
| 10 | PGUQU-3-F | 5.0 | LTS bulk [h, -20°C]: | = | |
| 11 | PGUQU-4-F | 5.0 | | | |

### Mixture Example S90

A nematic LC mixture according to the invention is formulated as follows:

| Mixture M90 | 99.9325 wt.-% |
|---|---|
| Compound of the Formula ST-1-3 | 100 ppm |
| Compound of the Formula ST-2-3 | 500 ppm |
| Compound of the Formula H-3-3 | 75 ppm |

Addition of the above listed stabilizing compounds significantly improves the VHR₁₀₀ after UV exposure compared to the non-stabilized mixture M90 without affecting the remaining physical properties of the mixture M90.

### Base Mixture M91

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 33.0 | T(N, I) | = | 78.3 °C |
| 2 | CC-3-V1 | 10.0 | Δn [589 nm, 20°C]: | = | 0.1279 |
| 3 | CC-3-2V1 | 6.0 | ε_{∥} [1 kHz, 20°C]: | = | 6.4 |
| 4 | PP-1-2V1 | 13.0 | ε_{┴} [1 kHz, 20°C]: | = | 2.8 |
| 5 | CCP-30CF3 | 5.0 | Δε [1 kHz, 20°C]: | = | 3.6 |
| 6 | CLP-3-T | 3.0 | K₁ [pN, 20°C]: | = | 16.9 |
| 7 | PGP-2-3 | 5.0 | K₃ [pN, 20°C]: | = | 15.2 |
| 8 | PGP-2-2V | 15.0 | V₀ [V, 20°C]: | = | 2.28 |
| 9 | PGUQU-3-F | 3.0 | γ₁ [mPa s, 20°C]: | = | 61 |
| 10 | DGUQU-4-F | 5.0 | LTS bulk [h, -20°C]: | = | |
| 11 | DPGU-4-F | 2.0 | | | |

### Mixture Example S91

A nematic LC mixture according to the invention is formulated as follows:

| Mixture M91 | 99.9325 wt.-% |
|---|---|
| Compound of the Formula ST-1-3 | 100 ppm |
| Compound of the Formula ST-2-3 | 500 ppm |
| Compound of the Formula H-3-3 | 75 ppm |

Addition of the above listed stabilizing compounds significantly improves the VHR₁₀₀ after UV exposure compared to the non-stabilized mixture M91 without affecting the remaining physical properties of the mixture M91.

### Base Mixture M92

A nematic LC mixture is formulated as follows:

| **Composition** | | | **Properties** | | |
|---|---|---|---|---|---|
| **Nr.** | **Comp.** | **Conc., wt.-%** | | | |
| 1 | DGUQU-4-F | 3.0 | T(N, I) | = | 76.9 °C |
| 2 | PGUQU-3-F | 4.0 | Δn [589 nm, 20°C]: | = | 0.1293 |
| 3 | CLP-3-T | 6.0 | ε_{∥} [1 kHz, 20°C]: | = | 5.5 |
| 4 | CLP-V-1 | 5.0 | ε_{┴} [1 kHz, 20°C]: | = | 2.7 |
| 5 | PGP-3-2V | 7.0 | Δε [1 kHz, 20°C]: | = | 2.8 |
| 6 | PGP-2-2V | 12.0 | K₁ [pN, 20°C]: | = | 16.9 |
| 7 | CC-3-V | 38.0 | K₃ [pN, 20°C]: | = | 15.3 |
| 8 | CC-3-V1 | 10.0 | V₀ [V, 20°C]: | = | 2.60 |
| 9 | PP-1-2V1 | 15.0 | γ₁ [mPa s, 20°C]: | = | 58 |
| | | | LTS bulk [h, -20°C]: | = | |

### Mixture Example S92

A nematic LC mixture according to the invention is formulated as follows:

| Mixture M92 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M92 without affecting the remaining physical properties of the mixture M92.

### Base Mixture M93

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 35.0 | T(N, I) | = | 78 °C |
| 2 | CC-3-V1 | 10.0 | Δn [589 nm, 20°C]: | = | |
| 3 | CC-3-2V1 | 6.0 | ε_{∥} [1 kHz, 20°C]: | = | 6.1 |
| 4 | PP-1-2V1 | 12.0 | ε_{┴} [1 kHz, 20°C]: | = | 2.9 |
| 5 | CCP-30CF3 | 1.5 | Δε [1 kHz, 20°C]: | = | 3.2 |
| 6 | CLP-3-T | 3.0 | K₁ [pN, 20°C]: | = | 16.9 |
| 7 | PGP-2-3 | 6.0 | K₃ [pN, 20°C]: | = | 15.1 |
| 8 | PGP-2-2V | 15.0 | V₀ [V, 20°C]: | = | 2.45 |
| 9 | PGUQU-3-F | 3.0 | γ₁ [mPa s, 20°C]: | = | 58 |
| 10 | DGUQU-4-F | 4.0 | LTS bulk [h, -20°C]: | = | |
| 11 | DPGU-4-F | 2.0 | | | |
| 12 | LB(S)-3-OT | 2.5 | | | |

### Mixture Example S93

A nematic LC mixture according to the invention is formulated as follows:

| Mixture M93 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M93 without affecting the remaining physical properties of the mixture M93.

### Base Mixture M94

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 1.0 | T(N, I) | = | 79.8 °C |
| 2 | CC-3-2V1 | 6.0 | Δn [589 nm, 20°C]: | = | 0.1265 |
| 3 | CC-3-V | 34.5 | ε_{∥} [1 kHz, 20°C]: | = | 6.8 |
| 4 | CC-3-V1 | 10.0 | ε_{┴} [1 kHz, 20°C]: | = | 2.8 |
| 5 | CCP-30CF3 | 5.0 | Δε [1 kHz, 20°C]: | = | 4.0 |
| 6 | CLP-3-T | 4.0 | K₁ [pN, 20°C]: | = | 16.7 |
| 7 | DGUQU-4-F | 3.5 | K₃ [pN, 20°C]: | = | 15.7 |
| 8 | PGP-1-2V | 3.5 | V₀ [V, 20°C]: | = | 2.15 |
| 9 | PGP-2-2V | 15.0 | γ₁ [mPa s, 20°C]: | = | 60 |
| 10 | PGUQU-3-F | 4.0 | LTS bulk [h, -20°C]: | = | |
| 11 | PP-1-2V1 | 10.5 | | | |
| 12 | PPGU-3-F | 0.5 | | | |
| 13 | PGUQU-4-F | 2.5 | | | |

### Mixture Example S94

A nematic LC mixture according to the invention is formulated as follows:

| Mixture M94 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M94 without affecting the remaining physical properties of the mixture M94.

### Base Mixture M95

A nematic LC mixture is formulated as follows:

| **Composition** | | | **Properties** | | |
|---|---|---|---|---|---|
| **Nr.** | **Comp.** | **Conc., wt.-%** | | | |
| 1 | DGUQU-4-F | 3.0 | T(N, I) | = | 77.9 °C |
| 2 | PGUQU-3-F | 4.5 | Δn [589 nm, 20°C]: | = | 0.1293 |
| 3 | CLP-3-T | 4.5 | ε_{∥} [1 kHz, 20°C]: | = | 5.6 |
| 4 | CLP-V-1 | 5.0 | ε_{┴} [1 kHz, 20°C]: | = | 2.7 |
| 5 | PGP-1-2V | 4.5 | Δε [1 kHz, 20°C]: | = | 2.8 |
| 6 | PGP-2-2V | 15.0 | K₁ [pN, 20°C]: | = | 16.5 |
| 7 | CC-3-V | 37.0 | K₃ [pN, 20°C]: | = | 15.2 |
| 8 | CC-3-V1 | 10.0 | V₀ [V, 20°C]: | = | 2.54 |
| 9 | CC-4-V1 | 3.0 | γ₁ [mPa s, 20°C]: | = | 57 |
| 10 | PP-1-2V1 | 13.0 | LTS bulk [h, -20°C]: | = | |
| 11 | PPGU-3-F | 0.5 | | | |

### Mixture Example S95

A nematic LC mixture according to the invention is formulated as follows:

| Mixture M95 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M95 without affecting the remaining physical properties of the mixture M95.

### Base Mixture M96

A nematic LC mixture is formulated as follows:

| **Composition** | | | **Properties** | | |
|---|---|---|---|---|---|
| **Nr.** | **Comp.** | **Conc., wt.-%** | | | |
| 1 | DGUQU-4-F | 4.0 | T(N, I) | = | 75.1 °C |
| 2 | PGUQU-3-F | 6.0 | Δn [589 nm, 20°C]: | = | 0.1292 |
| 3 | PGUQU-4-F | 3.0 | ε_{∥} [1 kHz, 20°C]: | = | 7.2 |
| 4 | CCP-V-1 | 2.5 | ε_{┴} [1 kHz, 20°C]: | = | 2.8 |
| 5 | CLP-3-T | 6.0 | Δε [1 kHz, 20°C]: | = | 4.4 |
| 6 | PGP-1-2V | 5.0 | K₁ [pN, 20°C]: | = | 15.7 |
| 7 | PGP-2-2V | 12.0 | K₃ [pN, 20°C]: | = | 15.2 |
| 8 | CC-3-V | 37.5 | V₀ [V, 20°C]: | = | 1.99 |
| 9 | CC-3-V1 | 10.0 | γ₁ [mPa s, 20°C]: | = | 62 |
| 10 | PP-1-2V1 | 14.0 | LTS bulk [h, -20°C]: | = | |

### Mixture Example S96

A nematic LC mixture according to the invention is formulated as follows:

| Mixture M96 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M96 without affecting the remaining physical properties of the mixture M96.

### Base Mixture M97

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 7.5 | T(N, I) | = | 94.8 °C |
| 2 | CC-3-V | 27.0 | Δn [589 nm, 20°C]: | = | 0.1097 |
| 3 | CCH-34 | 4.0 | ε_{∥} [1 kHz, 20°C]: | = | 15.1 |
| 4 | CCP-3-1 | 14.0 | ε_{┴} [1 kHz, 20°C]: | = | 3.9 |
| 5 | CCP-3F. F. F | 10.0 | Δε [1 kHz, 20°C]: | = | 11.2 |
| 6 | CLP-3-T | 4.5 | K₁ [pN, 20°C]: | = | 15.5 |
| 7 | CLY-3-O2 | 9.0 | K₃ [pN, 20°C]: | = | 16.5 |
| 8 | PGUQU-3-F | 6.0 | V₀ [V, 20°C]: | = | 1.24 |
| 9 | PGUQU-4-F | 8.0 | γ₁ [mPa s, 20°C]: | = | 113 |
| 10 | PUQU-3-F | 10.0 | LTS bulk [h, -20°C]: | = | |

### Mixture Example S97

A nematic LC mixture according to the invention is formulated as follows:

| Mixture M97 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M97 without affecting the remaining physical properties of the mixture M97.

### Base Mixture M98

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 5.0 | T(N, I) | = | 92.1 °C |
| 2 | B(S)-2O-O5 | 1.5 | Δn [589 nm, 20°C]: | = | 0.1098 |
| 3 | BCH-3F.F | 4.0 | ε_{∥} [1 kHz, 20°C]: | = | 14.2 |
| 4 | CC-3-V | 28.5 | ε_{┴} [1 kHz, 20°C]: | = | 3.5 |
| 5 | CCP-3-1 | 14.0 | Δε [1 kHz, 20°C]: | = | 10.8 |
| 6 | CCP-3-3 | 5.5 | K₁ [pN, 20°C]: | = | 15.3 |
| 7 | CCP-3F. F. F | 11.0 | K₃ [pN, 20°C]: | = | 16.6 |
| 8 | CLP-3-T | 8.0 | V₀ [V, 20°C]: | = | 1.26 |
| 9 | PGUQU-3-F | 6.0 | γ₁ [mPa s, 20°C]: | = | 106 |
| 10 | PGUQU-4-F | 7.5 | LTS bulk [h, -20°C]: | = | |
| 11 | PUQU-3-F | 9.0 | | | |

### Mixture Example S98

A nematic LC mixture according to the invention is formulated as follows:

| Mixture M98 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M98 without affecting the remaining physical properties of the mixture M98.

### Base Mixture M99

A nematic LC mixture is formulated as follows:

| **Composition** | | | **Properties** | | |
|---|---|---|---|---|---|
| **Nr.** | **Comp.** | **Conc., wt.-%** | | | |
| 1 | DGUQU-4-F | 4.0 | T(N, I) | = | 75.8 °C |
| 2 | PGUQU-3-F | 6.0 | Δn [589 nm, 20°C]: | = | 0.1293 |
| 3 | PGUQU-4-F | 3.0 | ε_{∥} [1 kHz, 20°C]: | = | 7.2 |
| 4 | CLP-V-1 | 1.5 | ε_{┴} [1 kHz, 20°C]: | = | 2.8 |
| 5 | CLP-3-T | 5.0 | Δε [1 kHz, 20°C]: | = | 4.4 |
| 6 | PGP-1-2V | 5.0 | K₁ [pN, 20°C]: | = | 15.6 |
| 7 | PGP-2-2V | 13.0 | K₃ [pN, 20°C]: | = | 14.8 |
| 8 | CC-3-V | 38.0 | V₀ [V, 20°C]: | = | 1.99 |
| 9 | CC-4-V1 | 2.0 | γ₁ [mPa s, 20°C]: | = | 57 |
| 10 | CC-3-V1 | 10.0 | LTS bulk [h, -20°C]: | = | |
| 11 | PP-1-2V1 | 12.0 | | | |
| 12 | PPGU-3-F | 0.5 | | | |

### Mixture Example S99

A nematic LC mixture according to the invention is formulated as follows:

| Mixture M99 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M99 without affecting the remaining physical properties of the mixture M99.

### Base Mixture M100

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 32.9 | T(N, I) | = | °C |
| 2 | CC-3-V1 | 4.7 | Δn [589 nm, 20°C]: | = | |
| 3 | CCGU-3-F | 5.0 | ε_{∥} [1 kHz, 20°C]: | = | |
| 4 | CCP-V-1 | 15.1 | ε_{┴} [1 kHz, 20°C]: | = | |
| 5 | CCP-V2-1 | 4.0 | Δε [1 kHz, 20°C]: | = | |
| 6 | CCVC-3-V | 3.3 | K₁ [pN, 20°C]: | = | |
| 7 | CDUQU-3-F | 5.5 | K₃ [pN, 20°C]: | = | |
| 8 | CLP-3-T | 4.0 | V₀ [V, 20°C]: | = | |
| 9 | CLP-V-1 | 7.0 | γ₁ [mPa s, 20°C]: | = | |
| 10 | CPGP-5-2 | 4.5 | LTS bulk [h, -20°C]: | = | |
| 11 | PGP-3-2V | 4.5 | | | |
| 12 | PP-1-2V1 | 4.5 | | | |
| 13 | PPGU-3-F | 1.0 | | | |
| 14 | PUQU-3-F | 4.0 | | | |

### Mixture Example S100

A nematic LC mixture according to the invention is formulated as follows:

| Mixture M100 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M100 without affecting the remaining physical properties of the mixture M100.

### Base Mixture M101

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 31.4 | T(N, I) | = | °C |
| 2 | CC-3-V1 | 6.0 | Δn [589 nm, 20°C]: | = | |
| 3 | CCGU-3-F | 5.0 | ε_{∥} [1 kHz, 20°C]: | = | |
| 4 | CCP-V-1 | 15.0 | ε_{┴} [1 kHz, 20°C]: | = | |
| 5 | CCP-V2-1 | 4.0 | Δε [1 kHz, 20°C]: | = | |
| 6 | CCVC-3-V | 3.2 | K₁ [pN, 20°C]: | = | |
| 7 | CDUQU-3-F | 5.5 | K₃ [pN, 20°C]: | = | |
| 8 | CLP-3-T | 2.5 | V₀ [V, 20°C]: | = | |
| 9 | CLP-V-1 | 5.0 | γ₁ [mPa s, 20°C]: | = | |
| 10 | CPGP-5-2 | 4.5 | LTS bulk [h, -20°C]: | = | |
| 11 | DGUQU-4-F | 3.0 | | | |
| 12 | PCH-302 | 4.0 | | | |
| 13 | PGP-2-2V | 2.8 | | | |
| 14 | PGP-3-2V | 4.5 | | | |
| 15 | PP-1-2V1 | 3.1 | | | |
| 16 | PPGU-3-F | 0.5 | | | |

### Mixture Example S101

A nematic LC mixture according to the invention is formulated as follows:

| Mixture M101 | 99.925 wt.-% |
|---|---|
| Compound of the Formula ST-1-3 | 100 ppm |
| Compound of the Formula ST-2-3 | 500 ppm |
| Compound of the Formula H-3-3 | 150 ppm |

Addition of the above listed stabilizing compounds significantly improves the VHR₁₀₀ after UV exposure compared to the non-stabilized mixture M101 without affecting the remaining physical properties of the mixture M101.

### Base Mixture M102

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-3-F | 5.0 | T(N, I) | = | 106 °C |
| 2 | CCGU-3-F | 7.5 | Δn [589 nm, 20°C]: | = | 0.1096 |
| 3 | CPGP-4-3 | 2.0 | ε_{∥} [1 kHz, 20°C]: | = | 8.3 |
| 4 | CPGP-5-2 | 2.0 | ε_{┴} [1 kHz, 20°C]: | = | 2.8 |
| 5 | CPGU-3-OT | 5.0 | Δε [1 kHz, 20°C]: | = | 5.5 |
| 6 | PGUQU-5-F | 4.5 | K₁ [pN, 20°C]: | = | 18.7 |
| 7 | CCP-30CF3 | 6.0 | K₃ [pN, 20°C]: | = | 19.6 |
| 8 | CCP-50CF3 | 4.0 | V₀ [V, 20°C]: | = | 1.05 |
| 9 | CLP-3-T | 5.0 | γ₁ [mPa s, 20°C]: | = | 92 |
| 10 | PGP-2-2V | 7.0 | LTS bulk [h, -20°C]: | = | |
| 11 | CC-3-2V1 | 8.0 | | | |
| 12 | CC-3-V | 34.0 | | | |
| 13 | CC-3-V1 | 10.0 | | | |

### Mixture Example S102

A nematic LC mixture according to the invention is formulated as follows:

| Mixture M102 | 99.93 wt.-% |
|---|---|
| Compound of the Formula ST-1-3 | 100 ppm |
| Compound of the Formula ST-2-3 | 500 ppm |
| Compound of the Formula H-3-3 | 100 ppm |

Addition of the above listed stabilizing compounds significantly improves the VHR₁₀₀ after UV exposure compared to the non-stabilized mixture M102 without affecting the remaining physical properties of the mixture M102.

### Base Mixture M103

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-2V1 | 3.0 | T(N, I) | = | °C |
| 2 | CC-3-V | 51.0 | Δn [589 nm, 20°C]: | = | |
| 3 | CC-3-V1 | 5.0 | ε_{∥} [1 kHz, 20°C]: | = | |
| 4 | CLP-3-T | 4.75 | ε_{┴} [1 kHz, 20°C]: | = | |
| 5 | PGP-1-2V | 6.0 | Δε [1 kHz, 20°C]: | = | |
| 6 | PGP-2-2V | 11.5 | K₁ [pN, 20°C]: | = | |
| 7 | PGP-3-2V | 4.75 | K₃ [pN, 20°C]: | = | |
| 8 | PGU-2-F | 8.0 | V₀ [V, 20°C]: | = | |
| 9 | PGUQU-3-F | 0.75 | γ₁ [mPa s, 20°C]: | = | |
| 10 | PGUQU-4-F | 3.75 | LTS bulk [h, -20°C]: | = | |
| 11 | PP-1-2V1 | 1.0 | | | |
| 12 | PPGU-3-F | 0.5 | | | |

### Mixture Example S103

A nematic LC mixture according to the invention is formulated as follows:

| Mixture M103 | 99.94 wt.-% |
|---|---|
| Compound of the Formula ST-1-3 | 100 ppm |
| Compound of the Formula ST-2-3 | 400 ppm |
| Compound of the Formula H-3-11 | 100 ppm |

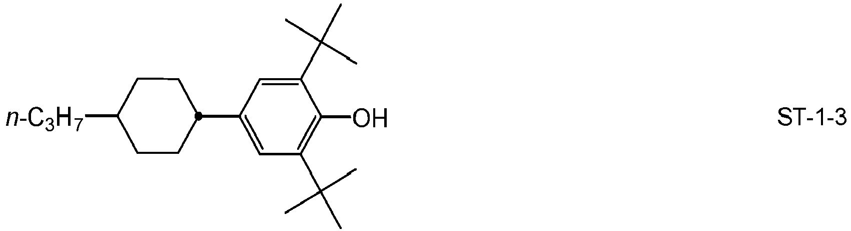

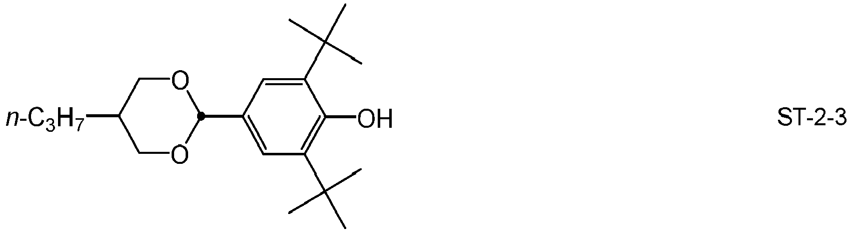

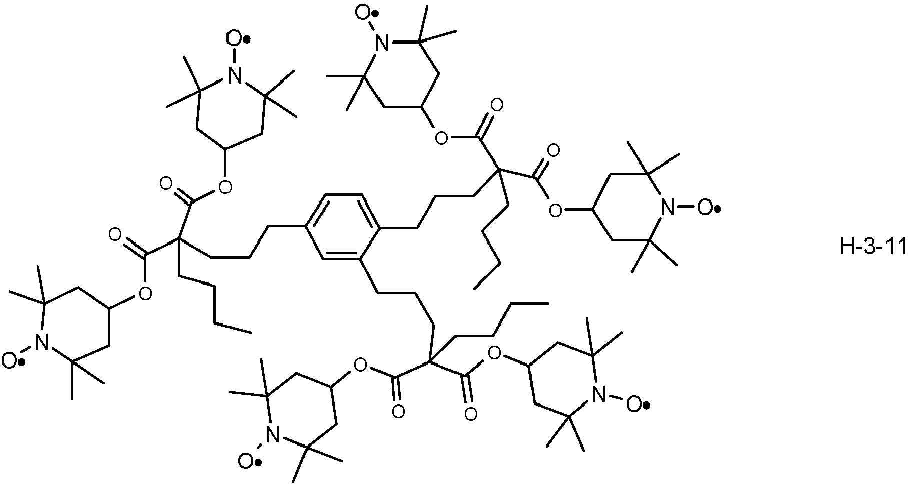

Addition of the above listed stabilizing compounds significantly improves the VHR₁₀₀ after UV exposure compared to the non-stabilized mixture M103 without affecting the remaining physical properties of the mixture M103.

### Base Mixture M104

A nematic LC mixture is formulated as follows:

| **Composition** | | | **Properties** | | |
|---|---|---|---|---|---|
| **Nr.** | **Comp.** | **Conc., wt.-%** | | | |
| 1 | B(S)-2O-O4 | 1.7 | T(N, I) | = | °C |
| 2 | B(S)-2O-O5 | 5.0 | Δn [589 nm, 20°C]: | = | |
| 3 | CC-3-2V1 | 9.0 | ε_{∥} [1 kHz, 20°C]: | = | |
| 4 | CC-3-V | 29.3 | ε_{┴} [1 kHz, 20°C]: | = | |
| 5 | CC-3-V1 | 8.0 | Δε [1 kHz, 20°C]: | = | |
| 6 | CCP-3-1 | 5.5 | K₁ [pN, 20°C]: | = | |
| 7 | CCP-30CF3 | 6.0 | K₃ [pN, 20°C]: | = | |
| 8 | CDUQU-3-F | 8.5 | V₀ [V, 20°C]: | = | |
| 9 | CLP-3-T | 10.0 | γ₁ [mPa s, 20°C]: | = | |
| 10 | CLY-3-O2 | 3.0 | LTS bulk [h, -20°C]: | = | |
| 11 | PP-1-2V1 | 5.0 | | | |
| 12 | CCH-35 | 5.0 | | | |
| 13 | DGUQU-4-F | 2.0 | | | |
| 14 | LB(S)-3-OT | 2.0 | | | |

### Mixture Example S104

A nematic LC mixture according to the invention is formulated as follows:

| Mixture M104 | 99.945 wt.-% |
|---|---|
| Compound of the Formula ST-1-3 | 100 ppm |
| Compound of the Formula ST-2-3 | 400 ppm |
| Compound of the Formula H-3-11 | 50 ppm |

Addition of the above listed stabilizing compounds significantly improves the VHR₁₀₀ after UV exposure compared to the non-stabilized mixture M104 without affecting the remaining physical properties of the mixture M104.

### Base Mixture M105

A nematic LC mixture is formulated as follows:

| **Composition** | | | **Properties** | | |
|---|---|---|---|---|---|
| **Nr.** | **Comp.** | **Conc., wt.-%** | | | |
| 1 | APUQU-2-F | 4.5 | T(N, I) | = | °C |
| 2 | CC-3-V | 45.5 | Δn [589 nm, 20°C]: | = | |
| 3 | CC-3-V1 | 5.0 | ε_{∥} [1 kHz, 20°C]: | = | |
| 4 | CLP-3-T | 5.0 | ε_{┴} [1 kHz, 20°C]: | = | |
| 5 | PCH-302 | 2.0 | Δε [1 kHz, 20°C]: | = | |
| 6 | PGP-1-2V | 3.5 | K₁ [pN, 20°C]: | = | |
| 7 | PGP-2-2V | 8.0 | K₃ [pN, 20°C]: | = | |
| 8 | PGU-2-F | 5.0 | V₀ [V, 20°C]: | = | |
| 9 | PGUQU-3-F | 3.0 | γ₁ [mPa s, 20°C]: | = | |
| 10 | PGUQU-4-F | 4.0 | LTS bulk [h, -20°C]: | = | |
| 11 | PP-1-2V1 | 3.5 | | | |
| 12 | PPGU-3-F | 1.0 | | | |
| 13 | PUS-3-2 | 10.0 | | | |

### Mixture Example S105

A nematic LC mixture according to the invention is formulated as follows:

| Mixture M105 | 99.825 wt.-% |
|---|---|
| Compound of the Formula ST-1-3 | 350 ppm |
| Compound of the Formula ST-2-3 | 400 ppm |
| Compound of the Formula H-3-7 | 1 000 ppm |

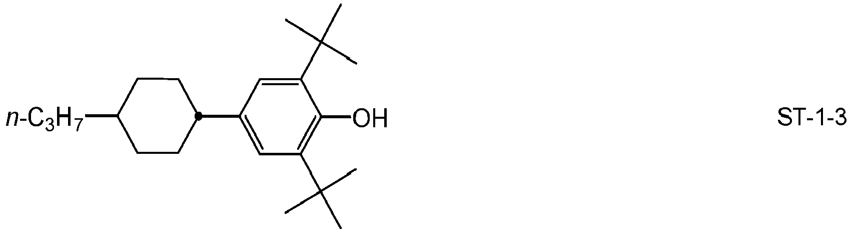

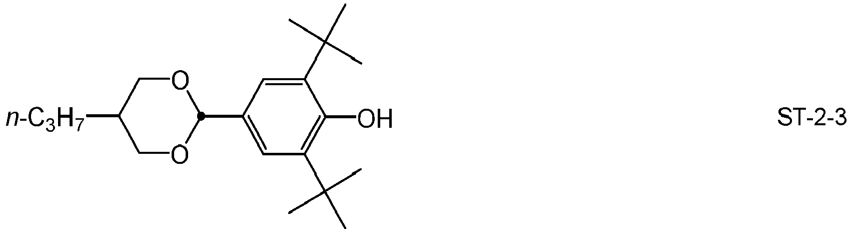

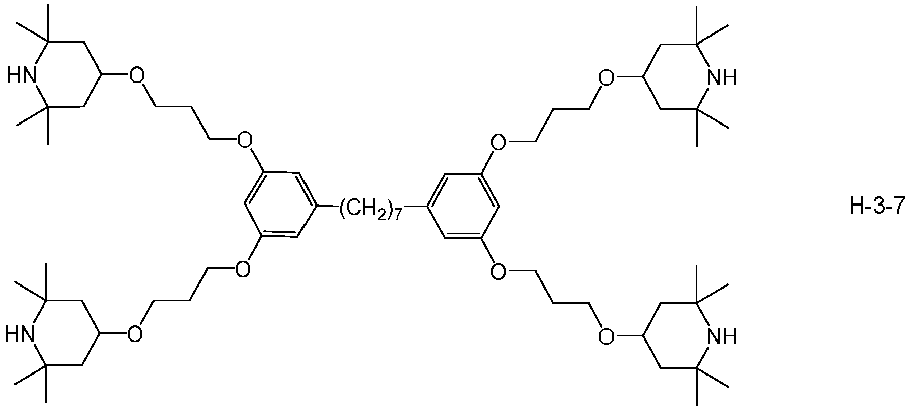

Addition of the above listed stabilizing compounds significantly improves the VHR₁₀₀ after UV exposure compared to the non-stabilized mixture M105 without affecting the remaining physical properties of the mixture M105.

### Base Mixture M106

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 99.3 °C |
| 2 | CC-3-V1 | 7.5 | Δn [589 nm, 20°C]: | = | 0.1119 |
| 3 | CCGU-3-F | 2.0 | ε_{∥} [1 kHz, 20°C]: | = | 8.8 |
| 4 | CCP-3-1 | 6.0 | ε_{┴} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.9 |
| 7 | CCP-V-1 | 9.0 | K₃ [pN, 20°C]: | = | 18.6 |
| 8 | CLP-3-T | 7.5 | V₀ [V, 20°C]: | = | 1.83 |
| 9 | PCH-302 | 9.0 | γ₁ [mPa s, 20°C]: | = | 93 |
| 10 | PGP-2-3 | 6.0 | LTS bulk [h, -20°C]: | = | 1 000 |
| 11 | PGUQU-3-F | 8.0 | | | |
| 12 | PGUQU-4-F | 7.0 | | | |

### Mixture Example S106

A nematic LC mixture according to the invention is formulated as follows:

| Mixture M106 | 99.84 wt.-% |
|---|---|
| Compound of the Formula ST-1-3 | 100 ppm |
| Compound of the Formula ST-2-3 | 500 ppm |
| Compound of the Formula H-3-7 | 1 000 ppm |

Addition of the above listed stabilizing compounds significantly improves the VHR₁₀₀ after UV exposure compared to the non-stabilized mixture M106 without affecting the remaining physical properties of the mixture M106.

### Base Mixture M107

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V1 | 8.0 | T(N, I) | = | 100.8 °C |
| 2 | CCG-V-F | 1.5 | Δn [589 nm, 20°C]: | = | 0.1116 |
| 3 | CCH-301 | 10.0 | ε_{∥} [1 kHz, 20°C]: | = | 9.0 |
| 4 | CCH-303 | 10.5 | ε_{┴} [1 kHz, 20°C]: | = | 3.2 |
| 5 | CCP-30CF3 | 6.0 | Δε [1 kHz, 20°C]: | = | 5.8 |
| 6 | CCP-40CF3 | 4.0 | K₁ [pN, 20°C]: | = | 18.6 |
| 7 | CCP-50CF3 | 4.0 | K₃ [pN, 20°C]: | = | 18.0 |
| 8 | CCP-V-1 | 15.0 | V₀ [V, 20°C]: | = | 1.89 |
| 9 | CDUQU-3-F | 3.0 | γ₁ [mPa s, 20°C]: | = | 118 |
| 10 | CLP-3-T | 8.0 | LTS bulk [h, -20°C]: | = | |
| 11 | CPGP-4-3 | 3.0 | | | |
| 12 | PCH-302 | 10.0 | | | |
| 13 | PGP-2-3 | 5.5 | | | |
| 14 | PGUQU-3-F | 4.5 | | | |
| 15 | PGUQU-4-F | 7.0 | | | |

### Mixture Example S107

A nematic LC mixture according to the invention is formulated as follows:

| Mixture M107 | 99.84 wt.-% |
|---|---|
| Compound of the Formula ST-1-3 | 100 ppm |
| Compound of the Formula ST-2-3 | 500 ppm |
| Compound of the Formula H-3-7 | 1 000 ppm |

Addition of the above listed stabilizing compounds significantly improves the VHR₁₀₀ after UV exposure compared to the non-stabilized mixture M107 without affecting the remaining physical properties of the mixture M107.

### Base Mixture M108

A nematic LC mixture is formulated as follows:

| **Composition** | | | **Properties** | | |
|---|---|---|---|---|---|
| **Nr.** | **Comp.** | **Conc., wt.-%** | | | |
| 1 | CC-3-V | 25.0 | T(N, I) | = | 100.9 °C |
| 2 | CC-3-V1 | 3.0 | Δn [589 nm, 20°C]: | = | 0.1111 |
| 3 | CCP-3-1 | 6.0 | ε_{∥} [1 kHz, 20°C]: | = | 8.8 |
| 4 | CCP-3F. F. F | 2.0 | ε_{┴} [1 kHz, 20°C]: | = | 2.9 |
| 5 | CCP-30CF3 | 8.0 | Δε [1 kHz, 20°C]: | = | 5.9 |
| 6 | CCP-50CF3 | 5.0 | K₁ [pN, 20°C]: | = | 17.7 |
| 7 | CCP-V-1 | 14.0 | K₃ [pN, 20°C]: | = | 18.9 |
| 8 | CLP-3-T | 8.0 | V₀ [V, 20°C]: | = | 1.81 |
| 9 | PCH-302 | 9.0 | γ₁ [mPa s, 20°C]: | = | 95 |
| 10 | PGP-2-3 | 5.0 | LTS bulk [h, -20°C]: | = | 1 000 |
| 11 | PGUQU-3-F | 8.0 | | | |
| 12 | PGUQU-4-F | 7.0 | | | |

### Mixture Example S108

A nematic LC mixture according to the invention is formulated as follows:

| Mixture M108 | 99.84 wt.-% |
|---|---|
| Compound of the Formula ST-1-3 | 100 ppm |
| Compound of the Formula ST-2-3 | 500 ppm |
| Compound of the Formula H-3-7 | 1 000 ppm |

Addition of the above listed stabilizing compounds significantly improves the VHR₁₀₀ after UV exposure compared to the non-stabilized mixture M108 without affecting the remaining physical properties of the mixture M108.

## Claims

1. Liquid-crystalline medium, **characterised in that** it comprises one or more compounds selected from LP1 and LP2: 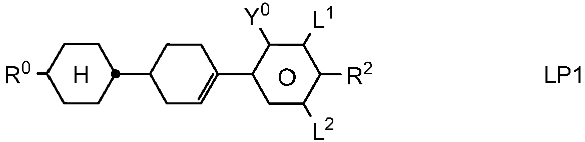 in which the individual radicals, on each occurrence identically or differently, and each, independently of one another, have the following meaning:
R⁰ an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 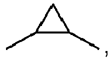 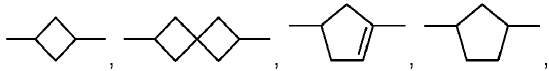 -O-, -CO-O-or -O-CO- in such a way that O atoms are not linked directly to one another, and in which one or more H atoms may be replaced by a halogen atom,
R² an alkyl group having 1 to 6 C atoms, in which one or more CH₂ groups are optionally substituted by -C≡C-, -CF₂O-, -OCF₂-, -CH=CH-, 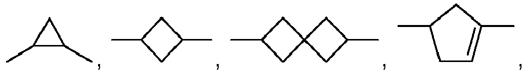 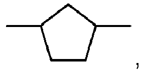 -O-, -CO-O- or -O-CO- in such a way that O atoms are not linked directly to one another, and in which one or more H atoms may be replaced by a halogen atom;
L¹ and L² H, F or Cl,
Y⁰ H or CH₃ ; 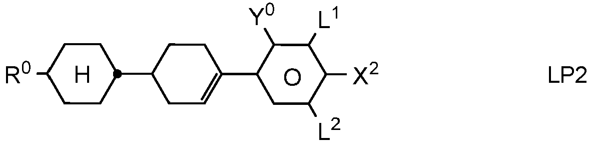 in which the individual radicals, on each occurrence identically or differently, and each, independently of one another, have the following meaning:
R⁰ an alkyl group having 1 to 12 C atoms or an alkenyl group having 2 to 12 C atoms in which one or more CH₂ groups are optionally substituted by -C≡C-, -CF₂O-, -OCF₂-, -CH=CH-, 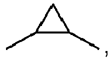 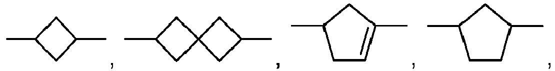 -O-, -CO-O-or -O-CO- in such a way that O atoms are not linked directly to one another, and in which one or more H atoms may be replaced by a halogen atom,
X² a F atom or an alkyl or an alkoxy group having 1 to 6 C atoms or an alkenyl or an alkenyloxy group having 2 to 6 C atoms in which one or more H atoms are replaced by a F atom,
L¹ and L² H, F or Cl,
γ0 H or CH₃ ; and
two or more compounds of the Formula ST 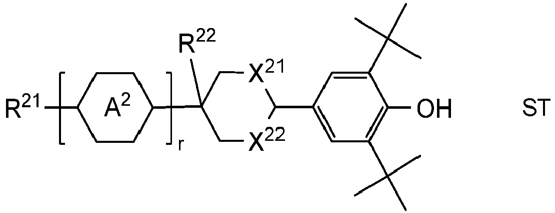 in which the individual substituents have the following meanings: 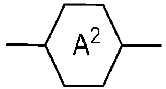 denotes 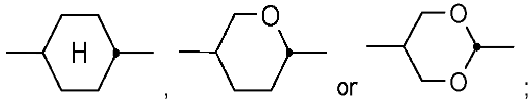
X²¹, X²² each, independently of one another, -O-, -CH₂-, -CHR²³- or -N-R23- ,
R²¹ and R²² each, independently of one another, a H atom or an alkyl- or alkoxy group having 1 to 12 C atoms, an alkenyl, alkinyl, alkenyloxy or alkoxyalkyl group having 2 to 12 C atoms or a cycloalkyl group having 3 to 12 C atoms, in which one or more non-adjacent CH₂ groups are optionally substituted by -C≡C-, -CF₂O-, -OCF₂-, -CH=CH-, 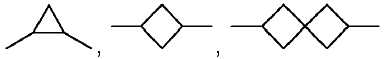 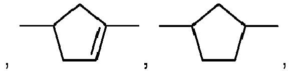 -O-, -CO-O- or -O-CO- in such a way that O atoms are not linked directly to one another, and in which one or more H atoms may be replaced by a halogen atom or a cycloalkyl or a cycloalkoxy group having 3 to 12 C atoms, in which one or more H atoms may be replaced by a halogen atom,
R²³ denotes a H atom, an alkyl or alkoxy group having 1 to 10 C atoms, and
r denotes 0 or 1.

2. Liquid-crystalline medium according to Claim 1, **characterized in that** the one or more compounds of the Formulae LP1 and LP2 are described by the Formulae LP1-1 and LP2-1: 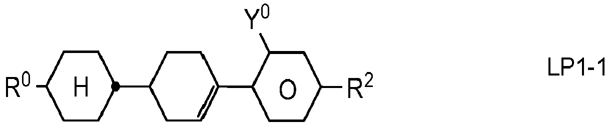 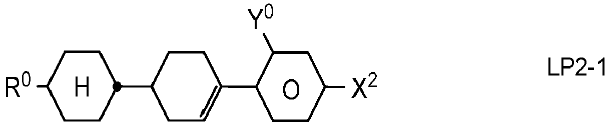 in which
R⁰ an alkyl group having 1 to 6 C atoms or an alkenyl group having 2 to 6 C atoms in which one or more CH₂ groups are optionally substituted by -C≡C-, -CF₂O-, -OCF₂-, -CH=CH-, 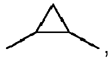 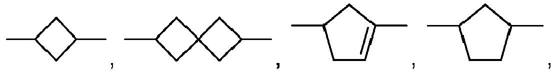 -O-, -CO-O-or -O-CO- in such a way that O atoms are not linked directly to one another, and in which one or more H atoms may be replaced by a halogen atom,
R² an alkyl group having 1 to 6 C atoms, in which one or more CH₂ groups are optionally substituted by -C≡C-, -CF₂O-, -OCF₂-, -CH=CH-, 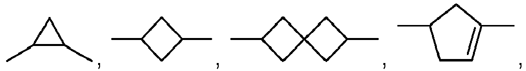 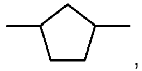 -O-, -CO-O- or -O-CO- in such a way that O atoms are not linked directly to one another, and in which one or more H atoms may be replaced by a halogen atom,
X² a F atom or an alkyl or an alkoxy group having 1 to 3 C atoms or an alkenyl or an alkenyloxy group having 2 or 3 C atoms in which one or more H atoms are replaced by a F atom, and
Y⁰ H or CH₃.

3. Medium according to Claim 1 or 2, **characterised in that** the two or more compounds of the Formula ST are selected from the following Formulae: ST-1 to ST-3: 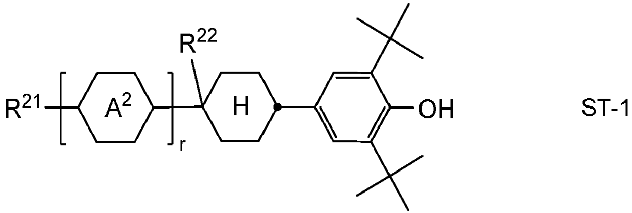 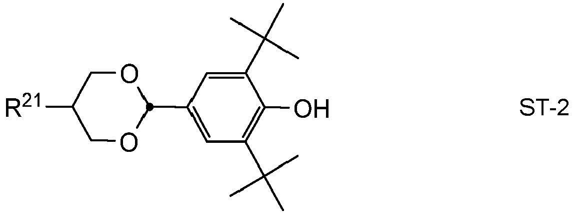 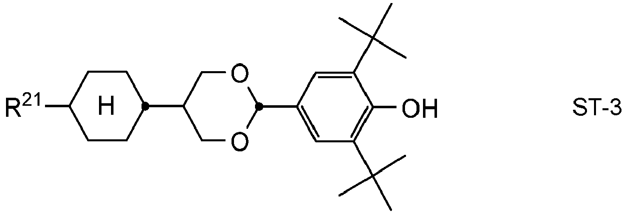 in which the individual substituents have the following meanings: 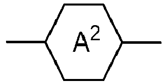 denotes 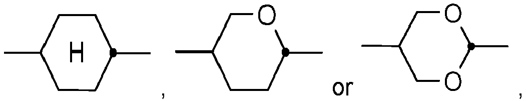
R21 and R²² each, independently of one another, denote a H atom or an alkyl or alkoxy group having 1 to 7 C atoms, and
r denotes 0 or 1.

4. Liquid-crystalline medium according to one or more of Claims 1 to 3, **characterized in that** it comprises one or more compounds selected from the following formulae: 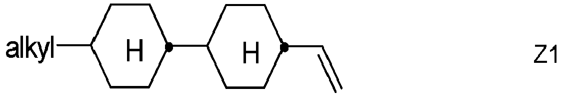 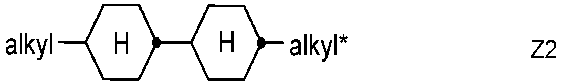 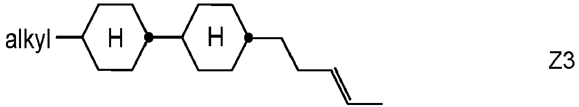 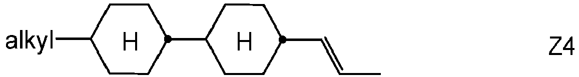 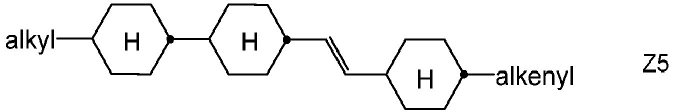 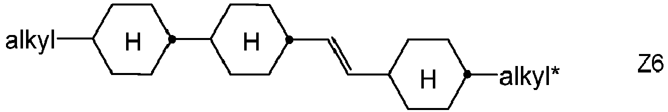 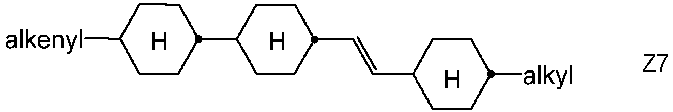 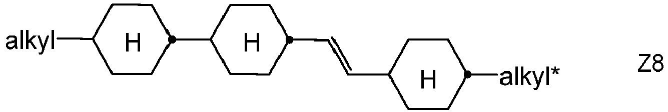 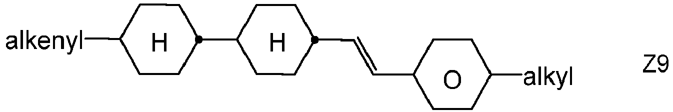 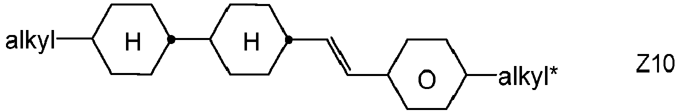 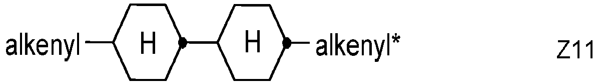
wherein "*alkyl*" and "*alkyl***"* denote C₁₋₆-alkyl, and
"*alkenyl*" and "*alkenyl**" denote C₂₋₆-alkenyl; and
wherein the medium preferably comprises more that 45% by weight of the compounds of the Formulae Z-1 and Z-4 in total.

5. Liquid-crystalline medium according to one or more of Claims 1 to 4, **characterised in that** the medium comprises one or more compounds selected from the group consisting of the following formulae: 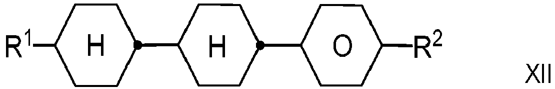 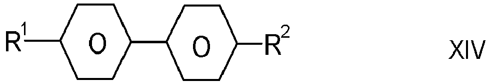 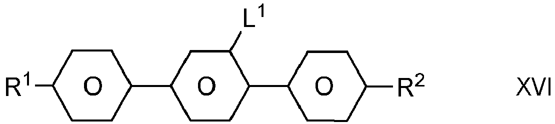 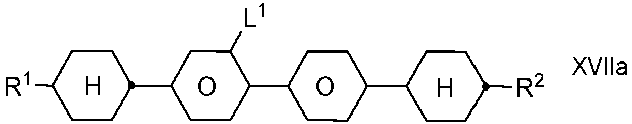 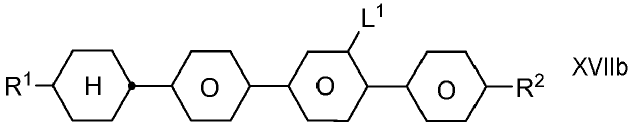 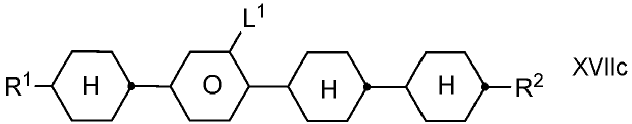 in which R¹ and R² each, independently of one another, denote n-alkyl, alkoxy, oxaalkyl, fluoroalkyl or alkenyl, each having up to 6 C atoms, and L¹ has the meanings indicated in Claim 1.

6. Liquid-crystalline medium according to one or more of Claims 1 to 5, **characterized in that** the medium comprises one or more compounds selected from the group consisting of the following formulae: 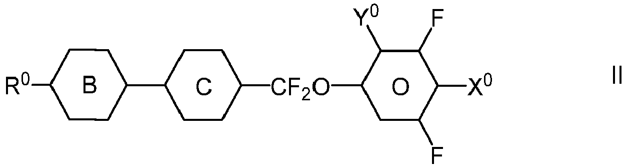 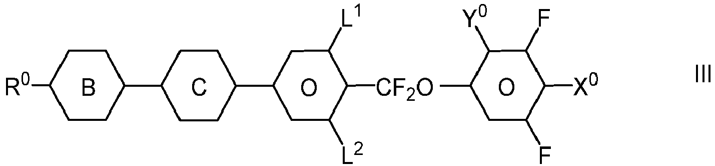 wherein the individual radicals, independently of each other and on each occurrence identically or differently, have the following meanings: 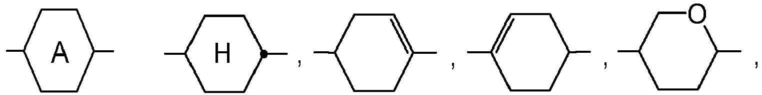 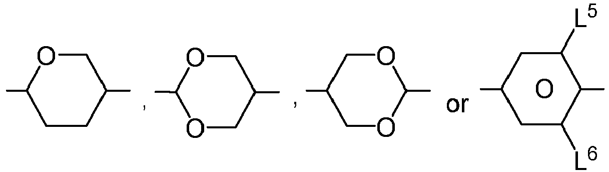 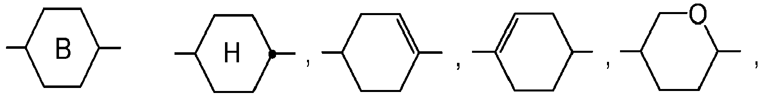 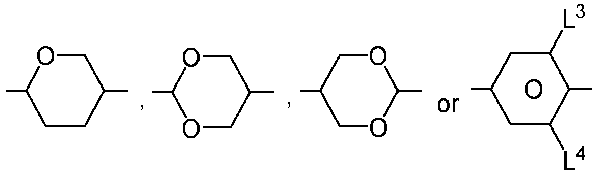
R⁰ one of the meanings given in Claim 1,
X⁰ F, CI, CN, SF₅, SCN, NCS, a halogenated alkyl radical, a halogenated alkenyl radical, a halogenated alkoxy radical or a halogenated alkenyloxy radical having up to 6 C atoms,
L¹⁻⁶ H or F, and
Y⁰ H or CH₃.

7. Liquid-crystalline medium according to Claim 6, wherein the one or more compounds of the Formula II are selected from the following subformulae: 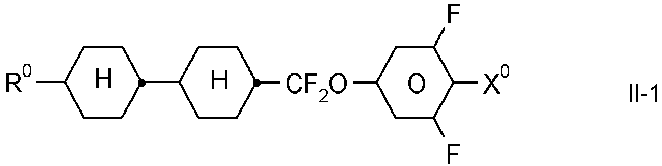 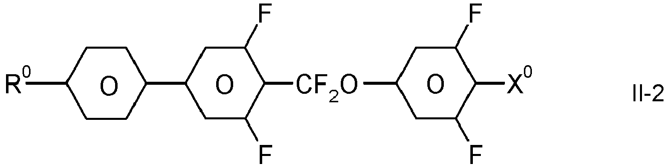 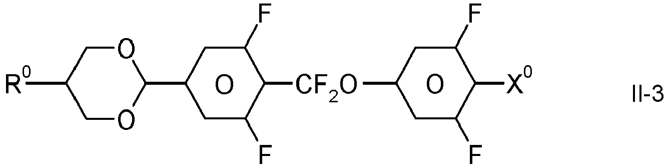 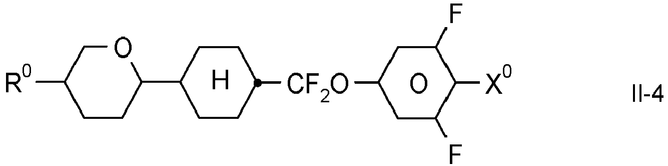 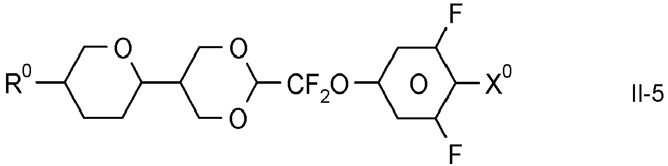 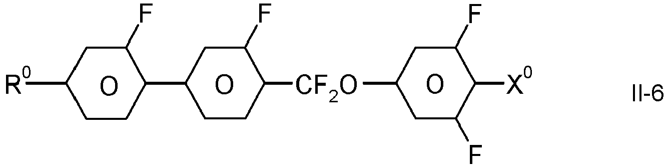 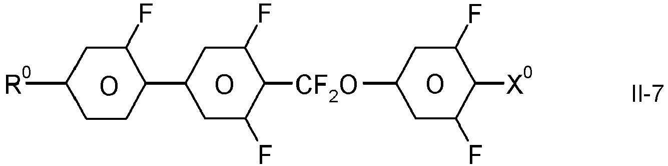 in which R⁰ and X⁰ have the meanings given in Formula II.

8. Liquid-crystalline medium according to Claim 6, wherein the one or more compounds of the Formula III are selected from the following subformulae: 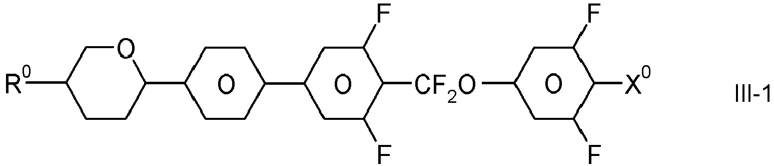 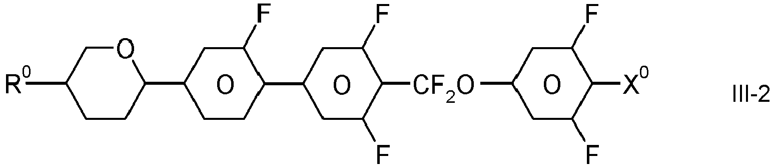 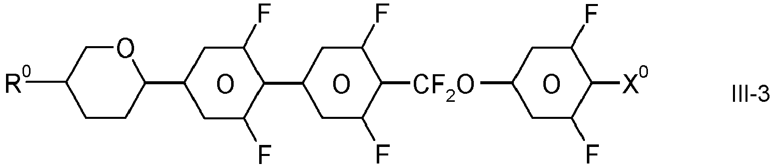 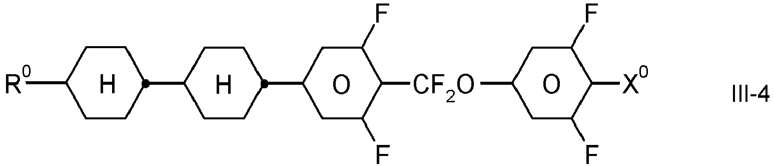 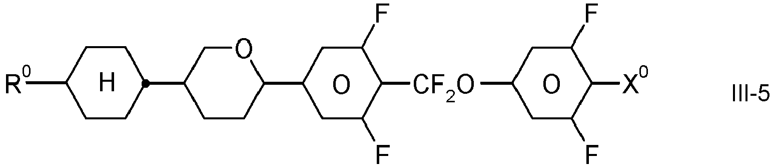 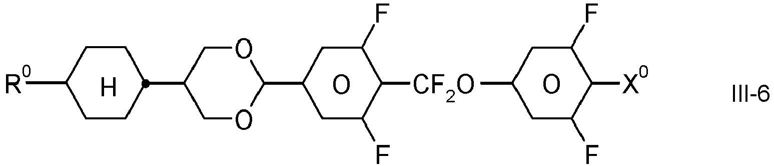 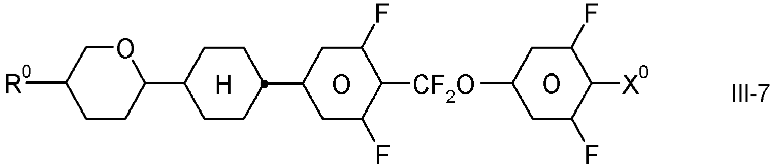 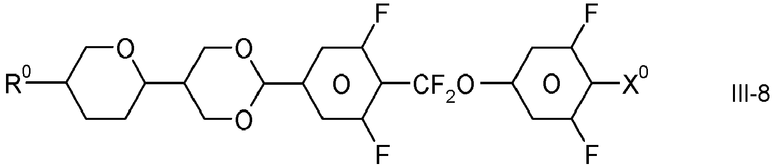 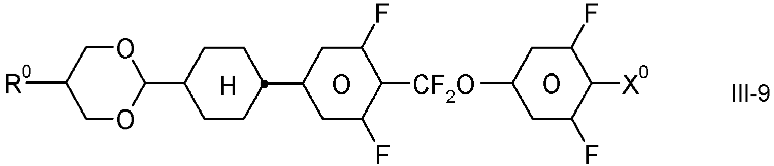 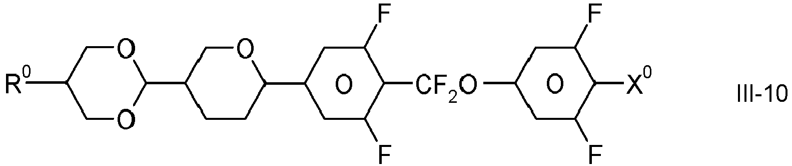 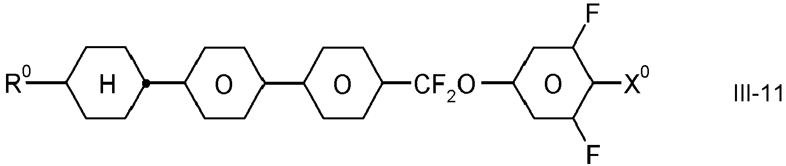 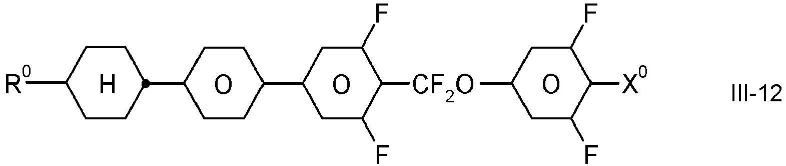 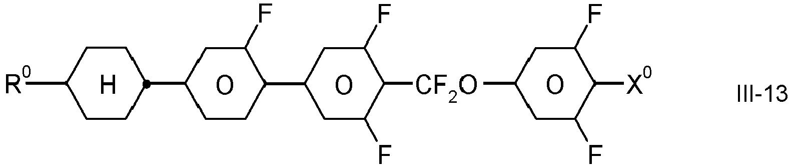 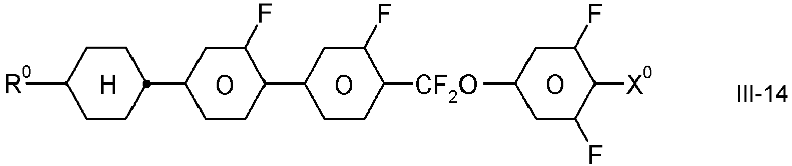 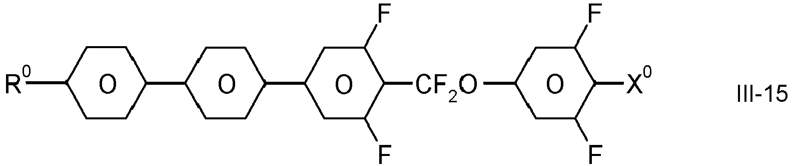 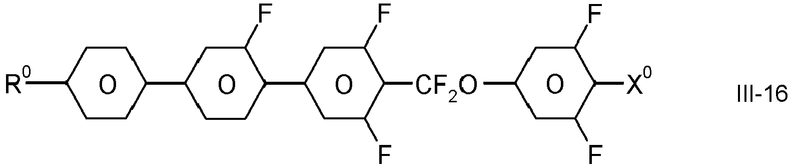 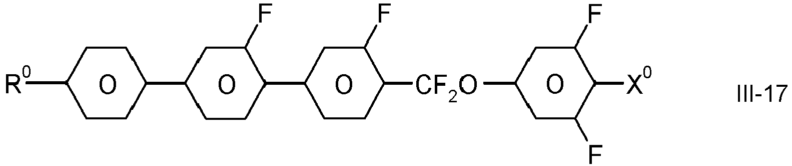 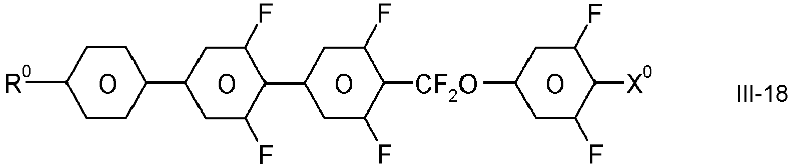 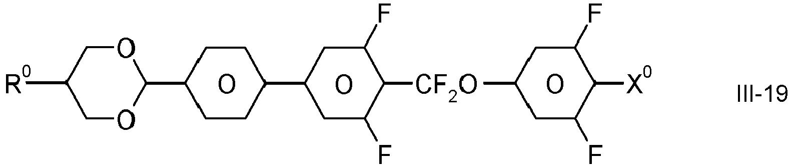 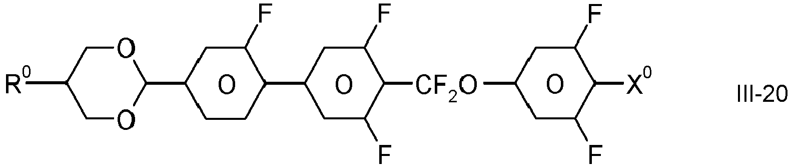 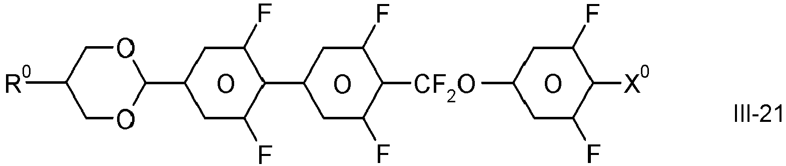 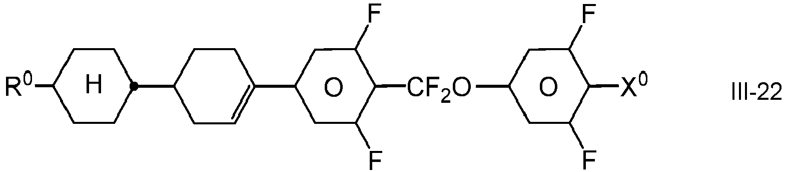 in which R⁰ and X⁰ have the meanings given in Formula II.

9. Liquid-crystalline medium according to one or more of Claims 1 to 8, **characterised in that** it additionally comprises one or more compounds selected from the group consisting of the following formulae: 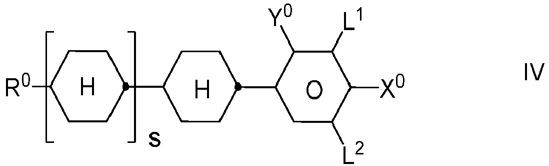 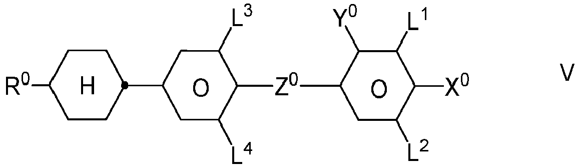 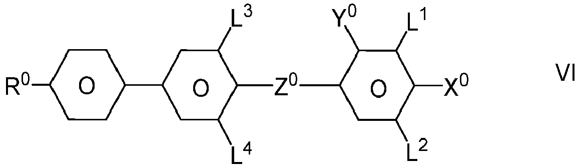 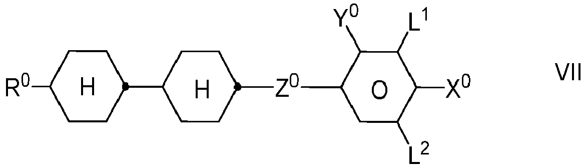 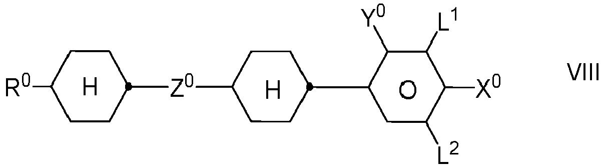 in which R⁰, X⁰, L¹, L² and Y⁰ have the meanings given in Claim 1 for R⁰, X², L¹, L² and Y⁰, respectively, L³ and L⁴ have independently of each other one of the meanings given for L¹, and
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in Formulae V and VI also a single bond, in Formulae V and VIII also -CF₂O-, and
s denotes 0 or 1.

10. Liquid-crystalline medium according to one or more of Claims 1 to 9, **characterised in that** it comprises one or more compounds selected from the group consisting of the following formulae: 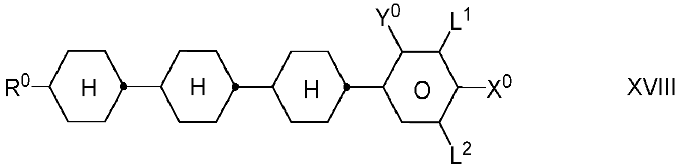 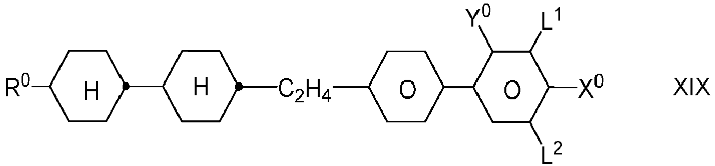 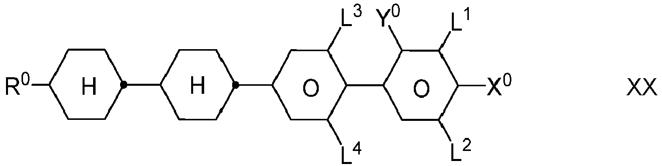 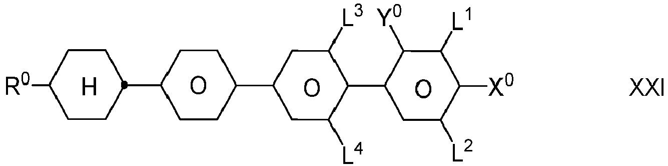 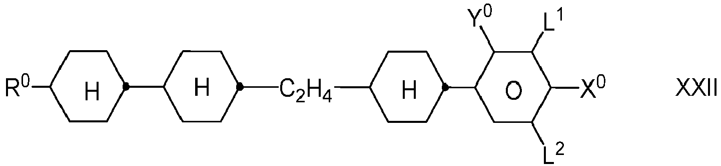 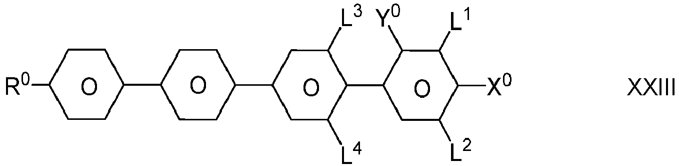 in which R⁰, X⁰, L¹, L² and Y⁰ have the meanings given in Claim 1 for R⁰, X², L¹, L² and Y⁰, respectively, L³ and L⁴ have independently of each other one of the meanings given for L¹.

11. Liquid-crystalline medium according to one or more of Claims 1 to 10, **characterized in that** it comprises one or more compounds selected from the group consisting of the following formulae: 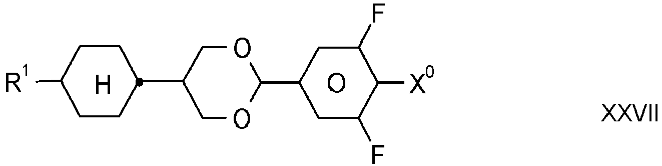 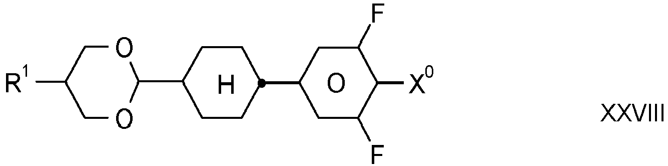 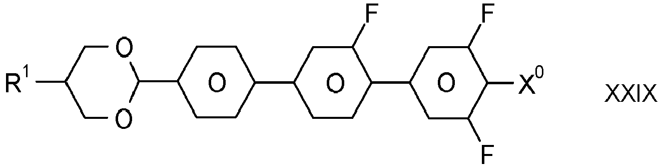 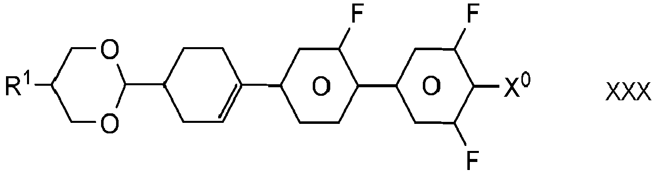 in which R¹ and X⁰ have the meanings indicated in Claim 6 for R⁰ and X⁰, respectively.

12. Liquid-crystalline medium according to one or more of Claims 1 to 11, **characterised in that** it comprises one or more compounds of the Formulae LP1, LP2 and ST, and one or more compounds selected from the group consisting of the Formulae Z1, Z2, Z3, Z4, Z5, II, III, IV, VI, XIV, XX, XII, XXIII, XXIX, XVI, XVIIa, XVIIb, XVIIc.

13. Liquid-crystalline medium according to one or more of Claims 1 to 12, **characterized in that** it additionally comprises one or more polymerizable compounds.

14. Process for the preparation of a liquid-crystalline medium according to one or more of Claims 1 to 13, **characterised in that** one or more compounds of the Formula LP1 and/or LP2 and two or more compounds of the Formula ST are mixed with one or more mesogenic compounds and optionally one or more polymerizable compounds and/or one or more additives.

15. Use of a liquid-crystalline medium according to one or more of Claims 1 to 14 for electro-optical purposes.

16. Electro-optical liquid-crystal display containing a liquid-crystalline medium according to one or more of Claims 1 to 13.

17. Electro-optical liquid-crystal display according to Claim 16, **characterized in that** it is a TN, PS-TN, STN, TN-TFT, OCB, IPS, PS-IPS, FFS, HB-FFS, XB-FFS, PS-HB-FFS, PS-XB-FFS, SA-HB-FFS, SA-XB-FS, polymer stabilised SA-HB-FFS, polymer stabilised SA-XB-FFS, positive VA or positive PS-VA display.

18. Electro-optical liquid-crystal display according to Claim 16, **characterized in that** it is an FFS, HB-FFS, XB-FFS, PS-HB-FFS, PS-XB-FFS, IPS or PS-IPS display.
